# EUROPEAN PATENT APPLICATION

(11) **EP 4 257 537 A1**
(43) Date of publication of application: **11.10.2023**
(21) Application number: 20964334.5
(22) Date of filing: 14.12.2020
(51) Int. Cl.: B67D 1/08, A47J 31/00

(54) **COFFEE BEVERAGE PRODUCTION DEVICE**

(30) Priority: 03.12.2020 JP 2020201273
(71) Applicant: Daito Giken, Inc., Taito-ku, Tokyo, 110-0015 (JP)
(72) Inventor: TORIZU Taisuke, Tokyo 104-0031 (JP); TOGASHI Kazuki, Tokyo 104-0031 (JP); TOMIZAWA Takayuki, Tokyo 104-0031 (JP); KASHIMA Masaki, Tokyo 104-0031 (JP); AIZAKI Kuniaki, Tokyo 104-0031 (JP)
(74) Representative: dompatent von Kreisler Selting Werner - Partnerschaft von Patent- und Rechtsanwälten mbB
(86) International application number: PCT/JP2020/046461
(87) International publication number: WO 2022/118483

(57) **Abstract**

Provided is a coffee beverage production device capable of using various information related to coffee beverage production. A coffee beverage production device for producing a coffee beverage by acquiring recipe information used for a part or all of steps of coffee beverage production and referring to parameters included in the recipe information, the coffee beverage production device including a storage part configured to store comments related to the parameters.

## Description

### Technical Field

The present invention relates to a technique for producing a coffee beverage.

### Background Art

A beverage production device that produces a coffee beverage has been proposed (for example, Patent Literature 1) .

### Citation List

### Patent Literature

Patent Literature 1: Japanese Patent Laid-Open No. 2019-30433

### Summary of Invention

### Technical Problem

Some coffee beverage production devices produce a beverage according to various production conditions (recipes) for producing a beverage. With such a coffee beverage production device, the same beverage can be produced by anyone as long as a recipe is obtained.

On the other hand, the recipe is created by know-how of a recipe creator, by a unique idea of the recipe creator, or by trial and error of the recipe creator. Thus, the recipe is important information for coffee beverage production. However, even information that is not directly related to the recipe, such as a background of recipe creation or failure experience in recipe creation, may be useful for coffee beverage production.

In view of the above circumstances, an object of the present invention is to provide a coffee beverage production device capable of using various kinds of information related to coffee beverage production.

### Solution to Problem

A coffee beverage production device for solving the above object is a coffee beverage production device for producing a coffee beverage by acquiring recipe information used for a part or all of steps of coffee beverage production and referring to parameters included in the recipe information, the coffee beverage production device including a storage part configured to store comments related to the parameters.

With the coffee beverage production device, in addition to a recipe used for production of a coffee beverage, useful information related to the production of the coffee beverage can be provided as comments.

The coffee beverage production device may set display ranges of the comments stored in the storage part.

With the coffee beverage production device, both confidentiality and provision of useful information related to production of a coffee beverage can be achieved.

The coffee beverage production device may acquire the recipe information from the storage part.

With the coffee beverage production device, both recipes and comments can be handled in the storage part to make processing more efficient.

In the coffee beverage production device, the recipe information may be subject to restrictions in use.

With the coffee beverage production device, both protection and use of the recipe information can be achieved.

The coffee beverage production device may not produce a coffee beverage using the recipe information with a restriction that is to prohibit production of a coffee beverage.

The coffee beverage production device may restrict display of information beyond a range of a restriction on display content among the recipe information with the restriction.

The coffee beverage production device may not duplicate information beyond a range of a restriction on duplication among the recipe information with the restriction.

The coffee beverage production device may not alter recipe information beyond a range of a restriction on alteration among the recipe information with the restriction.

The coffee beverage production device may release restrictions on the recipe information by charging.

The coffee beverage production device may adjust the parameters according to an installation environment.

With the coffee beverage production device, an influence of the installation environment on a taste of a coffee beverage can be reduced.

The coffee beverage production device may encrypt the recipe information.

With the coffee beverage production device, the recipe information can be protected.

In addition, provided is a coffee production system including an external device capable of communicating with the coffee beverage production device.

### Advantageous Effects of Invention

An object of the present invention is to provide a coffee beverage production device capable of using various kinds of information related to coffee production.

### Brief Description of Drawings

[Figure 1] Figure 1 is an external view of a beverage production device.
[Figure 2] Figure 2 is a partial front view of the beverage production device in Figure 1.
[Figure 3] Figure 3 is a schematic diagram of functions of the beverage production device in Figure 1.
[Figure 4] Figure 4 is a partially cutaway perspective view of a separation device.
[Figure 5] Figure 5 is a perspective view of a drive unit and an extraction container.
[Figure 6] Figure 6 shows a closed state and an open state of the extraction container in Figure 5.
[Figure 7] Figure 7 is a front view showing a configuration of a part of an upper unit and a lower unit.
[Figure 8] Figure 8 is a longitudinal cross-sectional view of Figure 7.
[Figure 9] Figure 9 is a schematic diagram of a middle unit.
[Figure 10] Figure 10 is a block diagram of a control device of the beverage production device in Figure 1.
[Figure 11] (A) and (B) of Figure 11 are flowcharts showing a control example executed by the control device.
[Figure 12] Figure 12 shows a communication system including a beverage production device, an information display device, and a server according to an embodiment.
[Figure 13] Figure 13 is a block diagram of the server.
[Figure 14] Figure 14 is a block diagram of the information display device.
[Figure 15] Figure 15 shows an example of data stored in the server.
[Figure 16] Figure 16 is a flowchart showing a control example of the information display device.
[Figure 17] Figure 17 is a flowchart showing a control example of the server.
[Figure 18] Figure 18 shows an example of a screen displayed on a display part of the information display device.
[Figure 19] Figure 19 shows an example of a screen displayed on the display part of the information display device.
[Figure 20] Figure 20 shows an example of a screen displayed on the display part of the information display device.
[Figure 21] Figure 21 is a block diagram of the beverage production device 1.
[Figure 22] Figure 22 shows an information display device 12 displaying a recipe list.
[Figure 23] Figure 23 shows a screen displayed when a recipe Re1 of "Daito Blend" on the left side of a display screen shown in Figure 22 is tapped.
[Figure 24] Figure 24 shows the information display device 12 displaying a recipe management application list.
[Figure 25] Figure 25 shows a startup screen of a recipe management application of a tour.
[Figure 26] Figure 26 shows an explanatory screen for setting of an extraction method in a first stage.
[Figure 27] Figure 27 shows a screen for inputting a grind size of beans, which is one of parameters for grinding.
[Figure 28] Figure 28 shows a screen for input of bean information in a second stage.
[Figure 29] Figure 29 shows a screen for selection of the bean information in the second stage.
[Figure 30] Figure 30 shows a screen for input of barista information in a third stage.
[Figure 31] (A) of Figure 31 is a flowchart showing a recipe creation method in the screen for the input of the barista information shown in Figure 30, and (B) of Figure 31 is a schematic diagram showing an outline of a recipe creation program.
[Figure 32] Figure 32 shows a screen for selection of the barista information in the third stage.
[Figure 33] Figure 33 shows a start screen for recipe card creation in a fourth stage.
[Figure 34] Figure 34 shows an input screen of a recipe card.
[Figure 35] Figure 35 shows a confirmation screen of registration contents.
[Figure 36] Figure 36 shows a detailed display screen displayed by tapping a bean information icon Ci2 shown in Figure 35.
[Figure 37] Figure 37 shows a recipe registration completion screen.
[Figure 38] (A) of Figure 38 is a flowchart showing a characteristic recipe creation method in a tour, and (B) of Figure 38 is a schematic diagram showing an outline of a recipe creation program.
[Figure 39] Figure 39 shows parameter names that can be input in recipe creation of an expert.
[Figure 40] Figure 40 shows a display screen on which five recipes are ranked.
[Figure 41] Figure 41 shows a display screen displayed when a simple display 1806d of "recommendation for August #1" in the third place shown in Figure 40 is tapped.
[Figure 42] Figure 42 shows a display screen displayed when an icon I5 of an amount of first main hot water supply is tapped.
[Figure 43] Figure 43 shows data for managing recipe restrictions, which is stored in a storage part 1303 of a server 1201.
[Figure 44] Figure 44 shows a display screen displayed when a simple display 1805d of "original recipe 004" in the second place shown in Figure 40 is tapped.
[Figure 45] Figure 45 shows a screen when the icon I5 of the first main hot water supply amount of a recipe with a restriction of alteration prohibition is tapped.
[Figure 46] Figure 46 shows a state in which menu items are expanded by tapping a menu button 120m provided on the upper right of the display screen shown in Figure 23.
[Figure 47] Figure 47 shows a display screen for correcting a parameter of delivery pressure by air pressure from a compressor 70.
[Figure 48] (A) of Figure 48 shows an example of a state in which a comment is displayed on the display screen of a recipe shown in Figure 41, and (B) of Figure 48 shows an example of a state in which a comment is displayed on the display screen of a recipe shown in Figure 44.
[Figure 49] (A) of Figure 49 shows an example of a state in which a part of a comment is displayed on the display screen of the recipe shown in Figure 41, and (B) of Figure 49 shows an example of a state in which a part of a comment is displayed on the display screen of the recipe shown in Figure 44.
[Figure 50] (A) of Figure 50 shows a display screen displayed on the information display device 12 during execution of a grinding process (step S2) shown in Figure 11, and (B) of Figure 50 shows a table of reference values for error determination stored in a control part 121 of the information display device 12 shown in Figure 21.
[Figure 51] Figure 51 shows an example of an error display displayed on the information display device 12 during execution of the grinding process.
[Figure 52] Figure 52 shows a display screen displayed on the information display device 12 during execution of a hot water pouring process for steaming (step S11) shown in Figure 11.
[Figure 53] (A) of Figure 53 shows a display screen displayed on the information display device 12 during execution of a permeation-type extraction process (step S17) shown in Figure 11, and (B) of Figure 53 shows a display screen displayed on the information display device 12 when the permeation-type extraction process (step S17) shown in Figure 11 is completed.
[Figure 54] Figure 54 shows a state in which a correction report window MW1 is displayed on the display screen of the recipe list shown in Figure 22.
[Figure 55] Figure 55 shows a display screen displayed when a confirmation icon W7 shown in Figure 54 is tapped.
[Figure 56] Figure 56 shows a state in which a correction report window MW1 different from the correction report window MW1 shown in Figure 54 is displayed on the display screen of the recipe list.
[Figure 57] Figure 57 shows a display screen displayed when a confirmation icon W7 shown in Figure 55 is tapped.
[Figure 58] Figure 58 shows an example in which a correction report window notifying that the parameter of the delivery pressure has been changed is displayed.
[Figure 59] Figure 59 shows a display screen displayed when a confirmation icon W7 shown in Figure 58 is tapped.
[Figure 60] Figure 60 is a flowchart showing a display process of a recipe chart.
[Figure 61] Figure 61 shows a screen for displaying the recipe chart.
[Figure 62] Figure 62 is a diagram in which parameters of a recipe are displayed in a table format.
[Figure 63] Figure 63 shows a screen of the recipe chart.
[Figure 64] Figure 64 shows a general configuration of a system including the beverage production device.
[Figure 65] Figure 65 shows a configuration of the server.
[Figure 66] Figure 66 shows a configuration of a mobile terminal.
[Figure 67] Figure 67 shows a configuration of the information display device.
[Figure 68] Figure 68 is a diagram for illustrating a flow of a process up to brewing of coffee.
[Figure 69] Figure 69 is a diagram for illustrating a flow of a process up to brewing of coffee.
[Figure 70] Figure 70 shows a TOP screen of an application displayed on the mobile terminal.
[Figure 71] Figure 71 shows a service screen.
[Figure 72] Figure 72 shows a service screen.
[Figure 73] Figure 73 shows an example of a service screen.
[Figure 74] Figure 74 is a flowchart showing an example of processing for searching with taste executed on a setting screen.
[Figure 75] Figure 75 shows an example of a setting screen according to a first aspect.
[Figure 76] Figure 76 shows an example of the setting screen according to the first aspect.
[Figure 77] Figure 77 shows an example of the setting screen according to the first aspect.
[Figure 78] Figure 78 shows an example of the setting screen according to the first aspect.
[Figure 79] Figure 79 is a flowchart showing an example of processing for displaying a setting screen according to a second aspect.
[Figure 80] Figure 80 shows an example of the setting screen according to the second aspect.
[Figure 81] Figure 81 is a flowchart showing an example of processing for displaying a setting screen according to a third aspect.
[Figure 82] Figure 82 shows an example of the setting screen according to the third aspect.
[Figure 83] Figure 83 is a flowchart showing an example of processing for displaying a setting screen according to a fourth aspect.
[Figure 84] Figure 84 shows an example of the setting screen according to the fourth aspect.
[Figure 85] Figure 85 shows an example of the setting screen according to the fourth aspect.
[Figure 86] Figure 86 shows an example of the setting screen according to the fourth aspect.
[Figure 87] Figure 87 shows an example of the setting screen according to the fourth aspect.
[Figure 88] Figure 88 shows an example of the setting screen according to the fourth aspect.
[Figure 89] Figure 89 is a flowchart showing an example of processing for displaying a setting screen according to a fifth aspect.
[Figure 90] Figure 90 is a diagram for illustrating a flow of a process up to brewing of coffee and obtaining of history information.
[Figure 91] Figure 91 is a flowchart showing an example of processing for acquiring a property and a level of the property from a comment on a beverage.
[Figure 92] Figure 92 shows an example of the setting screen according to the fifth aspect.
[Figure 93] Figure 93 shows an example of data held by a database 1309 of the server 1201.
[Figure 94] Figure 94 is a flowchart showing an example of processing for displaying a setting screen according to a sixth aspect.
[Figure 95] Figure 95 shows an example of the setting screen according to the sixth aspect.
[Figure 96] Figure 96 shows an example of the setting screen according to the sixth aspect.
[Figure 97] Figure 97 shows an example of the setting screen according to the sixth aspect.
[Figure 98] Figure 98 is a flowchart showing an example of processing for acquiring and displaying preference information according to a seventh aspect.
[Figure 99] Figure 99 shows an example of the setting screen according to the seventh aspect.
[Figure 100] Figure 100 is a flowchart showing an example of processing for acquiring and displaying preference information according to an eighth aspect.
[Figure 101] Figure 101 shows an example of the setting screen according to the eighth aspect.
[Figure 102] Figure 102 is a flowchart showing an example of processing for displaying a setting screen according to a ninth aspect.
[Figure 103] Figure 103 shows an example of the setting screen according to the ninth aspect.
[Figure 104] Figure 104 is a flowchart showing an example of processing for acquiring and displaying preference information according to a tenth aspect.
[Figure 105] Figure 105 shows an example of the setting screen according to the tenth aspect.
[Figure 106] Figure 106 shows an example of the setting screen according to the tenth aspect.

### Description of Embodiments

An embodiment of the present invention will be described with reference to the drawings.

### <1. Overview of Beverage Production Device>

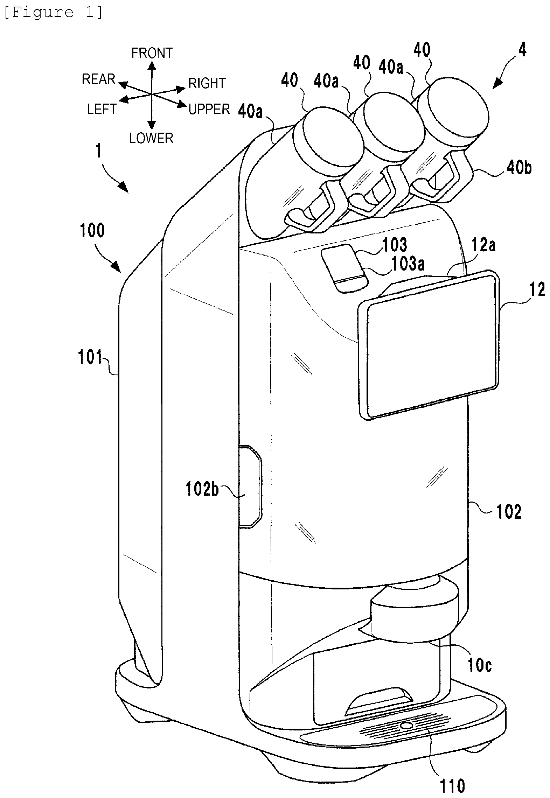

Figure 1 is an external view of a beverage production device 1. The beverage production device 1 according to the present embodiment is a device for automatically producing a coffee beverage from roasted coffee beans and a liquid (here, water), and can produce a coffee beverage for one cup per one production operation. Roasted coffee beans as a raw material can be accommodated in canisters 40. A cup placing portion 110 is provided in a lower portion of the beverage production device 1, and a produced coffee beverage is poured into a cup from a pouring part 10c.

The beverage production device 1 includes a housing 100 that forms an exterior of the beverage production device 1 and encloses an internal mechanism. The housing 100 is roughly divided into a main body part 101 and a cover part 102 that covers a part of a front surface and a part of a side surface of the beverage production device 1. The cover part 102 is provided with an information display device 12. The information display device 12 of the present embodiment is a touch panel type display, and is capable of receiving an input from an administrator of the device or a beverage consumer in addition to displaying various types of information. The information display device 12 is attached to the cover part 102 via a moving mechanism 12a, and can be moved in a predetermined range in an upper-lower direction by the moving mechanism 12a.

The cover part 102 is provided with a bean inlet 103 and an opening and closing door 103a that opens and closes the bean inlet 103. Roasted coffee beans different from the roasted coffee beans accommodated in the canister 40 can be input to the bean inlet 103 by opening the opening and closing door 103a. As a result, it is possible to provide a cup of special beverage to a beverage consumer.

The cover part 102 of the present embodiment is made of a translucent material such as acrylic or glass, and constitutes a transparent cover whose entire body is a transmissive portion. Therefore, an inner mechanism covered by the cover part 102 can be visually recognized from the outside. In the present embodiment, a part of a production part for producing a coffee beverage can be visually recognized through the cover part 102. The main body part 101 of the present embodiment is entirely a non-transmissive portion, and it is difficult to visually recognize the inside of the main body part 101 from the outside.

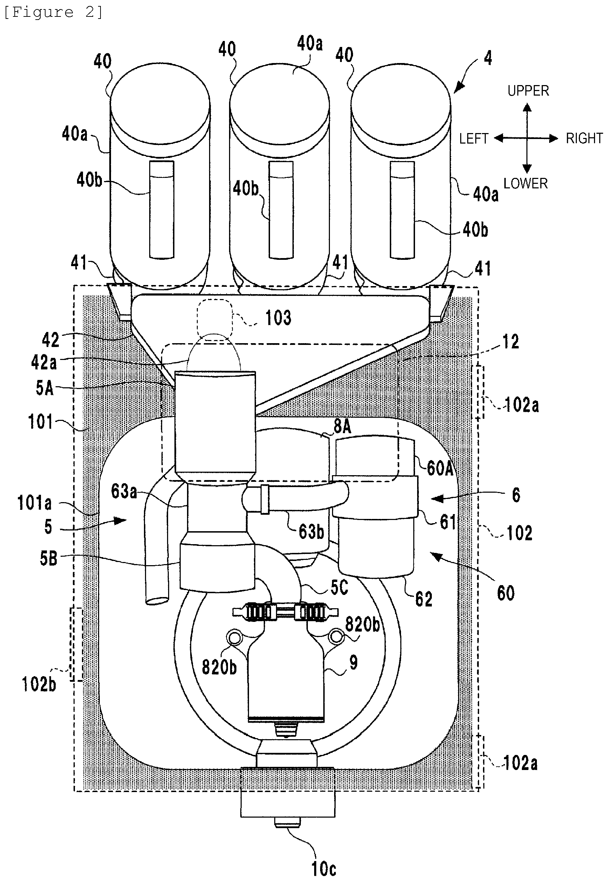

Figure 2 is a partial front view of the beverage production device 1, and shows a part of the production part that can be visually recognized by a user in a front view of the beverage production device 1. The cover part 102 and the information display device 12 are shown by imaginary lines.

The housing 100 in a front portion of the beverage production device 1 has a double structure of the main body part 101 and the cover part 102 on an outer side (front side) of the main body part 101. A part of mechanisms of the production part are disposed between the main body part 101 and the cover part 102 in a front-rear direction, and can be visually recognized by a user through the cover part 102.

A part of the mechanisms of the production part that can be visually recognized by a user through the cover part 102 in the present embodiment include a collective conveying portion 42, grinders 5A and 5B, a separation device 6, an extraction container 9, and the like. A rectangular concave portion 101a recessed in a rear side is formed in a front portion of the main body part 101, and the extraction container 9 and the like are positioned in a rear side of the concave portion 101a.

Since these mechanisms can be visually recognized from the outside through the cover part 102, an administrator may easily inspect or check the operation. In addition, a beverage consumer may enjoy a process of producing a coffee beverage.

A right end portion of the cover part 102 is supported by the main body part 101 via a hinge 102a so as to be freely opened and closed horizontally. An engaging portion 102b is provided at a left end portion of the cover part 102 to maintain the main body part 101 and the cover part 102 in a closed state. The engaging portion 102b is, for example, a combination of a magnet and iron. By opening the cover part 102, an administrator can inspect a part of the production part described above on an inner side of the cover part 102.

In the present embodiment, the cover part 102 is of a horizontal opening type, but may be of a vertical opening type or a slide type. In addition, the cover part 102 may be configured such that the cover part 102 cannot be opened or closed.

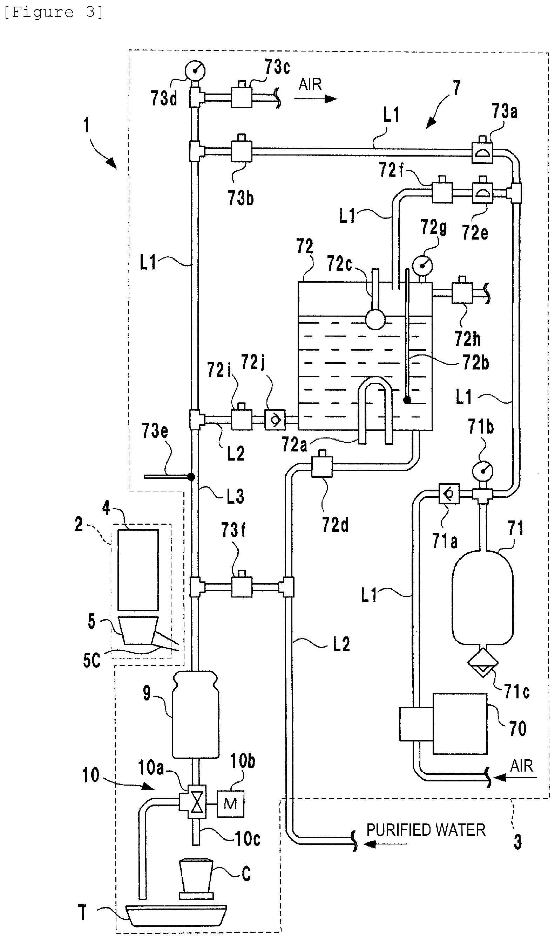

Figure 3 is a schematic diagram of functions of the beverage production device 1. The beverage production device 1 includes a bean processing device 2 and an extraction device 3 as the production part of a coffee beverage.

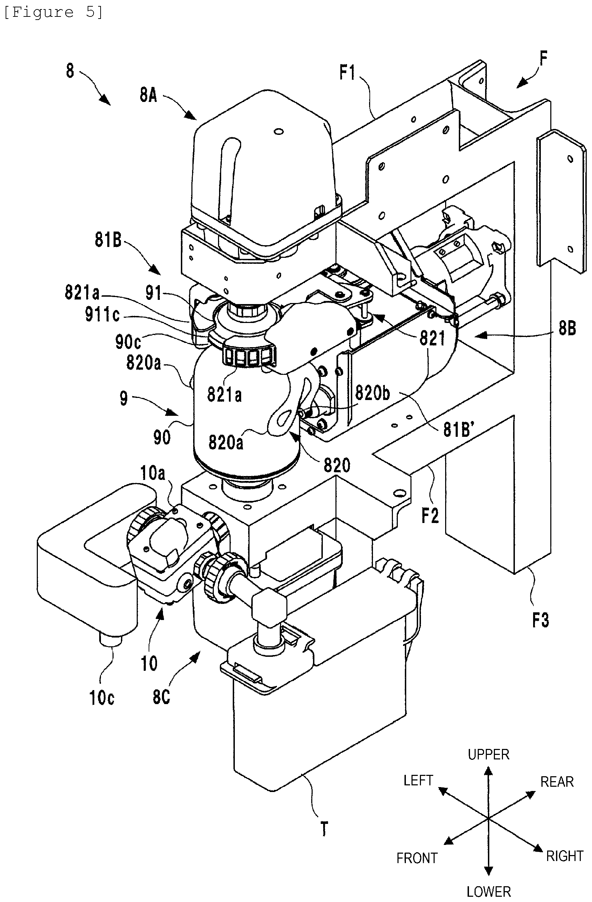

The bean processing device 2 produces ground beans from roasted coffee beans. The extraction device 3 extracts a coffee liquid from the ground beans supplied from the bean processing device 2. The extraction device 3 includes a fluid supply unit 7, a drive unit 8 (see Figure 5) to be described later, the extraction container 9, and a switching unit 10. The ground beans supplied from the bean processing device 2 are put into the extraction container 9. The fluid supply unit 7 introduces hot water into the extraction container 9. A coffee liquid is extracted from the ground beans in the extraction container 9. The hot water containing the extracted coffee liquid is delivered into a cup C as a coffee beverage through the switching unit 10.

### <2. Fluid Supply Unit and Switching Unit>

Configurations of the fluid supply unit 7 and the switching unit 10 will be described with reference to Figure 3. First, the fluid supply unit 7 will be described. The fluid supply unit 7 supplies hot water to the extraction container 9 and controls an atmospheric pressure in the extraction container 9. In the present specification, when the atmospheric pressure is indicated by a numeral, it means an absolute pressure unless otherwise specified, and a gauge pressure means an atmospheric pressure at which the atmospheric pressure is 0 atm. The atmospheric pressure refers to an atmospheric pressure around the extraction container 9 or an atmospheric pressure of the beverage production device 1. For example, when the beverage production device 1 is disposed at a point of 0 meter above sea level, the atmospheric pressure is a standard atmosphere (1013.25 hPa) at 0 meter above sea level of the international standard atmosphere ([abbreviation] ISA) established in 1976 by the international civil aviation organization ([abbreviation] ICAO]).

The fluid supply unit 7 includes pipes L1 to L3. The pipe L1 is a pipe through which air flows, and the pipe L2 is a pipe through which water flows. The pipe L3 is a pipe through which both air and water can flow.

The fluid supply unit 7 includes a compressor 70 as a pressure source. The compressor 70 compresses and sends out the air. The compressor 70 is driven by, for example, a motor (not shown) as a drive source. The compressed air sent out from the compressor 70 is supplied to a reserve tank (accumulator) 71 via a check valve 71a. An atmospheric pressure in the reserve tank 71 is monitored by a pressure sensor 71b, and the compressor 70 is driven such that the atmospheric pressure is maintained at a predetermined atmospheric pressure (in the present embodiment, 7 atm (6 atm in gauge pressure)). A drain 71c for draining water is provided in the reserve tank 71, and water generated by the compression of air can be drained.

Hot water (water) constituting a coffee beverage is stored in a water tank 72. The water tank 72 is provided with a heater 72a for heating the water in the water tank 72 and a temperature sensor 72b for measuring a temperature of the water. The heater 72a maintains a temperature of the accumulated hot water at a predetermined temperature (in the present embodiment, 120°C) based on a detection result of the temperature sensor 72b. For example, the heater 72a is turned on when the temperature of the hot water is 118°C, and is turned off when the temperature of the hot water is 120°C.

The water tank 72 is also provided with a water level sensor 72c. The water level sensor 72c detects a water level of the hot water in the water tank 72. When the water level sensor 72c detects that the water level is lower than a predetermined water level, water is supplied to the water tank 72. In the present embodiment, water is supplied via a water purifier (not shown). An electromagnetic valve 72d is provided in the middle of the pipe L2 from the water purifier, and when a decrease in the water level is detected by the water level sensor 72c, the electromagnetic valve 72d is opened to supply water, and when the water level reaches a predetermined water level, the electromagnetic valve 72d is closed to cut off the supply of water. In this way, the hot water in the water tank 72 is maintained at a constant water level. The water may be supplied to the water tank 72 every time the hot water used for producing one coffee beverage is discharged.

The water tank 72 is also provided with a pressure sensor 72g. The pressure sensor 72g detects an atmospheric pressure in the water tank 72. The air in the reserve tank 71 is supplied to the water tank 72 via a pressure regulating valve 72e and an electromagnetic valve 72f. The pressure regulating valve 72e reduces the atmospheric pressure of the air supplied from the reserve tank 71 to a predetermined atmospheric pressure. In the present embodiment, the atmospheric pressure is reduced to 3 atm (2 atm in gauge pressure). The electromagnetic valve 72f switches between supplying and cutting off the air regulated by the pressure regulating valve 72e to the water tank 72. The electromagnetic valve 72f is controlled to open and close so that the atmospheric pressure in the water tank 72 is maintained at 3 atm except when the water is supplied to the water tank 72. When the water is supplied to the water tank 72, the atmospheric pressure in the water tank 72 is reduced to a pressure lower than a water pressure of the supplied water (for example, less than 2.5 atm) by an electromagnetic valve 72h so that the water is smoothly supplied to the water tank 72. The electromagnetic valve 72h switches whether to open the water tank 72 to the atmosphere, and opens the water tank 72 to the atmosphere when the atmospheric pressure is reduced. In addition, the electromagnetic valve 72h opens the water tank 72 to the atmosphere when the atmospheric pressure in the water tank 72 exceeds 3 atm and maintains the inside of the water tank 72 at 3 atm, except when the water is supplied to the water tank 72.

The hot water in the water tank 72 is supplied to the extraction container 9 via a check valve 72j, an electromagnetic valve 72i, and the pipe L3. The hot water is supplied to the extraction container 9 by opening the electromagnetic valve 72i, and the supply of the hot water is cut off by closing the electromagnetic valve 72i. An amount of the hot water to be supplied to the extraction container 9 can be controlled by an open time of the electromagnetic valve 72i. However, the opening and closing of the electromagnetic valve 72i may be controlled by measuring the supply amount. A temperature sensor 73e for measuring a temperature of the hot water is provided in the pipe L3, and the temperature of the hot water supplied to the extraction container 9 is monitored.

The air of the reserve tank 71 is also supplied to the extraction container 9 via a pressure regulating valve 73a and an electromagnetic valve 73b. The pressure regulating valve 73a reduces the atmospheric pressure of the air supplied from the reserve tank 71 to a predetermined atmospheric pressure. In the present embodiment, the atmospheric pressure is reduced to 5 atm (4 atm in gauge pressure). The electromagnetic valve 73b switches between supplying and cutting off the atmospheric pressure regulated by the pressure regulating valve 73a to the extraction container 9. The atmospheric pressure in the extraction container 9 is detected by a pressure sensor 73d. When the extraction container 9 is pressurized, the electromagnetic valve 73b is opened based on a detection result of the pressure sensor 73d, and the inside of the extraction container 9 is pressurized to a predetermined atmospheric pressure (in the present embodiment, a maximum of 5 atm (4 atm in gauge pressure)). The atmospheric pressure in the extraction container 9 can be reduced by an electromagnetic valve 73c. The electromagnetic valve 73c switches whether to open the extraction container 9 to the atmosphere, and opens the extraction container 9 to the atmosphere when the pressure is abnormal (for example, when the inside of the extraction container 9 exceeds 5 atm).

In the present embodiment, when the production of one coffee beverage is completed, the inside of the extraction container 9 is washed with water. The electromagnetic valve 73f is opened at the time of washing, and supplies the water to the extraction container 9.

Next, the switching unit 10 will be described. The switching unit 10 is a unit that switches a feed-out destination of a liquid fed out from the extraction container 9 to either the pouring part 10c or a waste tank T. The switching unit 10 includes a switching valve 10a and a motor 10b that drives the switching valve 10a. When a coffee beverage in the extraction container 9 is to be feeding out, the switching valve 10a switches a flow path to the pouring part 10c. The coffee beverage is poured into the cup C from the pouring part 10c. When a waste liquid (water) and a residue (ground beans) at the time of washing are to be discharged, the flow path is switched to the waste tank T. In the present embodiment, the switching valve 10a is a three-port ball valve. Since the residue passes through the switching valve 10a at the time of washing, the switching valve 10a is preferably a ball valve, and the motor 10b switches the flow path by rotating a rotation shaft thereof.

### <3. Bean Processing Device>

The bean processing device 2 will be described with reference to Figures 1 and 2. The bean processing device 2 includes a reservoir device 4 and a pulverizing device 5.

### <3-1. Reservoir Device>

The reservoir device 4 includes the plurality of canisters 40 in which roasted coffee beans are accommodated. In the present embodiment, three canisters 40 are provided. Each of the canisters 40 includes a cylindrical main body 40a for accommodating roasted coffee beans, and a handle 40b provided on the main body 40a, and is configured to be detachably attached to the beverage production device 1.

Each of the canisters 40 may accommodate different types of roasted coffee beans, and may be configured such that a type of roasted coffee beans used for producing a coffee beverage can be selected according to an operation input to the information display device 12. The roasted coffee beans of different types are, for example, roasted coffee beans of different coffee bean varieties. The roasted coffee beans of different types are coffee beans of the same type, but may be roasted coffee beans of different roasting degrees. The roasted coffee beans of different types may be roasted coffee beans of different varieties and degrees of roasting. In addition, roasted coffee beans in which roasted coffee beans of a plurality of types and varieties are mixed may be accommodated in at least one of the three canisters 40. In this case, roasted coffee beans of each variety may have the same roasting degree.

Although a plurality of canisters 40 are provided in the present embodiment, only one canister 40 may be provided. When a plurality of canisters 40 are provided, roasted coffee beans of the same type may be accommodated in all or a plurality of canisters 40.

Each of the canisters 40 is detachably attached to a conveyor 41, which is a weighing conveying device. The conveyor 41 is, for example, an electric screw conveyor, and automatically measures a predetermined amount of roasted coffee beans accommodated in the canister 40 and feeds out the roasted coffee beans to a downstream side.

Each of the conveyors 41 discharges the roasted coffee beans to the collective conveying portion 42 on the downstream side. The collective conveying portion 42 is formed of a hollow member, and forms a conveying passage for roasted coffee beans from each of the conveyors 41 to the pulverizing device 5 (in particular, the grinder 5A). The roasted coffee beans discharged from each of the conveyors 41 move inside the collective conveying portion 42 by an own weight thereof, and flow down to the pulverizing device 5.

A guide portion 42a is formed in the collective conveying portion 42 at a position corresponding to the bean inlet 103. The guide portion 42a forms a passage for guiding roasted coffee beans put from the bean inlet 103 to the pulverizing device 5 (in particular, the grinder 5A). As a result, in addition to the roasted coffee beans accommodated in the canister 40, a coffee beverage made from roasted coffee beans put from the bean inlet 103 can be produced.

### <3-2. Pulverizing Device>

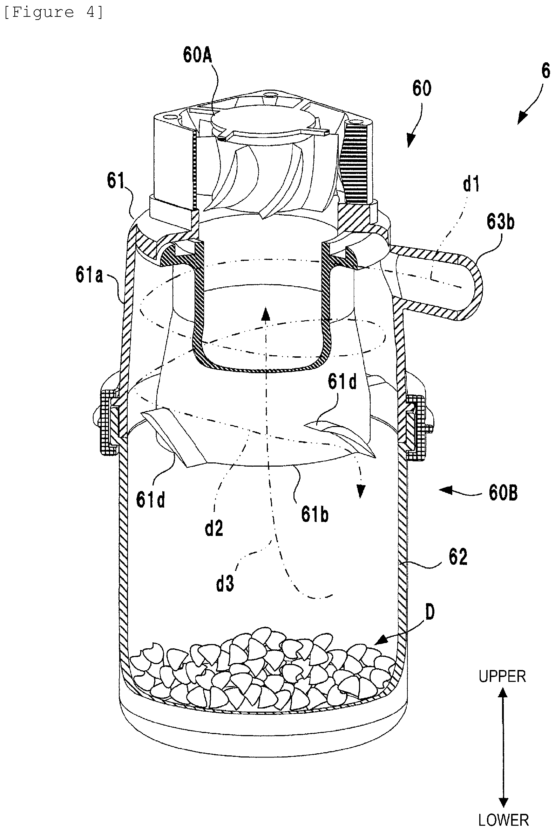

The pulverizing device 5 will be described with reference to Figures 2 and 4. Figure 4 is a partially cutaway perspective view of the separation device 6. The pulverizing device 5 includes the grinders 5A and 5B, and the separation device 6. The grinders 5A and 5B are mechanisms for grinding roasted coffee beans supplied from the reservoir device 4. The roasted coffee beans supplied from the reservoir device 4 are ground by the grinder 5A, then further ground by the grinder 5B into powder, and are put into the extraction container 9 from a discharge pipe 5C.

The grinders 5A and 5B have different particle sizes for grinding beans. The grinder 5A is a grinder for coarse grinding, and the grinder 5B is a grinder for fine grinding. The grinders 5A and 5B are electric grinders, and include a motor as a drive source, a rotary blade driven by the motor, and the like. A size (particle size) of roasted coffee beans to be ground can be changed by changing the number of rotations of the rotary blade.

The separation device 6 is a mechanism for separating wastes from ground beans. The separation device 6 includes a passage portion 63a disposed between the grinder 5A and the grinder 5B. The passage portion 63a is a hollow body that forms a separation chamber through which ground beans falling freely from the grinder 5A pass. A passage portion 63b extending in a direction (in the present embodiment, a left-right direction) intersecting a passing direction (in the present embodiment, the upper-lower direction) of the ground beans is connected to the passage portion 63a, and a suction unit 60 is connected to the passage portion 63b. By the suction unit 60 suctioning the air in the passage portion 63a, lightweight objects such as chaff and fine powder are suctioned. As a result, the wastes can be separated from the ground beans.

The suction unit 60 is a mechanism of a centrifugal separation type. The suction unit 60 includes an air blowing unit 60A and a collection container 60B. The air blowing unit 60A in the present embodiment is a fan motor, and exhausts the air in the collection container 60B upward.

The collection container 60B includes an upper portion 61 and a lower portion 62 that are separably engaged with each other. The lower portion 62 has a bottomed cylindrical shape with an open upper side, and forms a space for accumulating wastes. The upper portion 61 constitutes a lid portion to be attached to the opening of the lower portion 62. The upper portion 61 includes a cylindrical outer circumferential wall 61a and an exhaust pipe 61b formed coaxially with the outer circumferential wall 61a. The air blowing unit 60A is fixed to the upper portion 61 above the exhaust pipe 61b so as to suction the air in the exhaust pipe 61b. The passage portion 63b is connected to the upper portion 61. The passage portion 63b is open to the side of the exhaust pipe 61b.

As the air blowing unit 60A is driven, air flows indicated by arrows d1 to d3 in Figure 4 are generated. Due to the air flows, the air containing wastes is suctioned into the collection container 60B from the passage portion 63a through the passage portion 63b. Since the passage portion 63b is open to the side of the exhaust pipe 61b, the air containing wastes swirls around the exhaust pipe 61b. A waste D in the air falls by a weight thereof and is collected in a part of the collection container 60B (accumulates on a bottom surface of the lower portion 62). The air is exhausted upward through the inside of the exhaust pipe 61b.

A plurality of fins 61d are integrally formed on a circumferential surface of the exhaust pipe 61b. The plurality of fins 61d are disposed in a circumferential direction of the exhaust pipe 61b. Each of the fins 61d is inclined obliquely with respect to an axial direction of the exhaust pipe 61b. The provision of such fins 61d facilitates the swirling of the air containing the waste D around the exhaust pipe 61b.

The lower portion 62 in the present embodiment is made of a translucent material such as acrylic or glass, and constitutes a transparent container whose entire body is a transmissive portion. The lower portion 62 is a portion covered by the cover part 102 (Figure 2). An administrator or a beverage consumer can visually recognize the waste D accumulated in the lower portion 62 through the cover part 102 and a circumferential wall of the lower portion 62. The administrator may easily determine the cleaning timing of the lower portion 62, and since the beverage consumer can visually recognize that the waste D is removed, the expectation of the quality of a coffee beverage being produced may be increased.

As described above, in the first embodiment, roasted coffee beans supplied from the reservoir device 4 are first coarsely ground by the grinder 5A, and wastes are separated by the separation device 6 when the coarsely ground beans pass through the passage portion 63a. The coarsely ground beans from which the waste is separated are finely ground by the grinder 5B. The wastes to be separated by the separation device 6 are typically chaff and fine powder. These may impair the taste of a coffee beverage, and the quality of the coffee beverage can be improved by removing chaff and the like from ground beans.

The roasted coffee beans may be pulverized by one grinder (one-stage pulverizing). However, as in the present embodiment, performing two-stage pulverizing by the two grinders 5A and 5B makes it easier for ground beans to have a uniform particle size and makes it possible to have a constant degree of extraction of a coffee liquid. At the time of pulverization of beans, heat may be generated due to friction between a cutter and the beans. By performing two-stage pulverizing, heat generation due to friction during pulverizing can be prevented, and deterioration of ground beans (for example, deterioration of flavor) can be prevented.

Through steps of coarse grinding, separation of wastes, and fine grinding, it is possible to increase a mass difference between the wastes such as chaff and ground beans (necessary part) when the wastes are separated. This makes it possible to improve a separation efficiency of wastes, and to prevent ground beans (necessary part) from being separated as wastes. In addition, since a waste separation process using air suction is interposed between the coarse grinding and the fine grinding, heat generation of ground beans can be prevented by air cooling.

### <4. Drive Unit and Extraction Container>

### <4-1. Overview>

The drive unit 8 and the extraction container 9 of the extraction device 3 will be described with reference to Figure 5. Figure 5 is a perspective view of the drive unit 8 and the extraction container 9. Most of the drive unit 8 is enclosed by the main body part 101.

The drive unit 8 is supported by a frame F. The frame F includes upper and lower beam portions F1 and F2 and a column portion F3 that supports the beam portions F1 and F2. The drive unit 8 is roughly divided into three units: an upper unit 8A, a middle unit 8B, and a lower unit 8C. The upper unit 8A is supported by the beam portion F1. The middle unit 8B is supported by the beam portion F1 and the column portion F3 between the beam portion F1 and the beam portion F2. The lower unit 8C is supported by the beam portion F2.

The extraction container 9 is a chamber including a container main body 90 and a lid unit 91. The extraction container 9 may be referred to as a chamber. The middle unit 8B includes an arm member 820 that detachably holds the container main body 90. The arm member 820 includes a holding member 820a and a pair of shaft members 820b spaced apart from each other in the left-right direction. The holding member 820a is an elastic member such as a resin formed in a C-shaped clip shape, and holds the container main body 90 by its elastic force. The holding member 820a holds left and right side portions of the container main body 90, and a front side of the container main body 90 is exposed. This makes it easier to visually recognize the inside of the container main body 90 in a front view.

The container main body 90 is attached to and detached from the holding member 820a by manual operation, and the container main body 90 is attached to the holding member 820a by pressing the container main body 90 rearward in the front-rear direction against the holding member 820a. The container main body 90 can be separated from the holding member 820a by pulling out the container main body 90 forward in the front-rear direction from the holding member 820a.

Each of the pair of shaft members 820b is a rod extending in the front-rear direction and is a member that supports the holding member 820a. Although the number of the shaft members 820b is two in the present embodiment, the number of the shaft members 820b may be one or three or more. The holding member 820a is fixed to front end portions of the pair of shaft members 820b. With a mechanism to be described later, the pair of shaft members 820b are advanced and retracted in the front-rear direction, whereby the holding member 820a is advanced and retracted in the front-rear direction, and a moving operation of moving the container main body 90 in parallel in the front-rear direction can be performed. The middle unit 8B can also perform a pivoting operation of turning the extraction container 9 upside down, as will be described later.

### <4-2. Extraction Container>

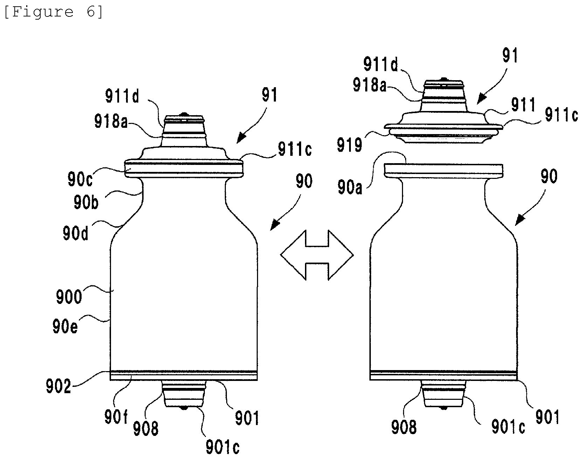

The extraction container 9 will be described with reference to Figure 6. Figure 6 shows a closed state and an open state of the extraction container 9. As described above, the extraction container 9 is turned upside down by the middle unit 8B. The extraction container 9 in Figure 6 shows a basic posture in which the lid unit 91 is positioned on an upper side. In the following description, when describing an upper-lower positional relation, the upper-lower positional relation means an upper-lower positional relation in the basic posture unless otherwise specified.

The container main body 90 is a bottomed container and has a bottle shape including a neck portion 90b, a shoulder portion 90d, a body portion 90e, and a bottom portion 90f. A flange portion 90c defining an opening 90a communicating with an internal space of the container main body 90 is formed at an end portion (an upper end portion of the container main body 90) of the neck portion 90b.

Both the neck portion 90b and the body portion 90e have a cylindrical shape. The shoulder portion 90d is a portion between the neck portion 90b and the body portion 90e, and has a tapered shape such that a cross-sectional area of an internal space thereof gradually decreases from the body portion 90e side toward the neck portion 90b side.

The lid unit 91 is a unit that opens and closes the opening 90a. The opening and closing operation (raising and lowering operation) of the lid unit 91 is performed by the upper unit 8A.

The container main body 90 includes a main body member 900 and a bottom member 901. The main body member 900 is a cylindrical member that forms the neck portion 90b, the shoulder portion 90d, and the body portion 90e and is open at the top and bottom. The bottom member 901 is a member that forms the bottom portion 90f, and is inserted into and fixed to a lower portion of the main body member 900. A seal member 902 is interposed between the main body member 900 and the bottom member 901 to improve the airtightness in the container main body 90.

In the present embodiment, the main body member 900 is made of a translucent material such as acrylic or glass, and constitutes a transparent container whose entire body is a transmissive portion. An administrator or a beverage consumer can visually recognize an extraction state of a coffee beverage in the container main body 90 through the cover part 102 and the main body member 900 of the container main body 90. The administrator may easily check an extraction operation, and the beverage consumer may enjoy the extraction state.

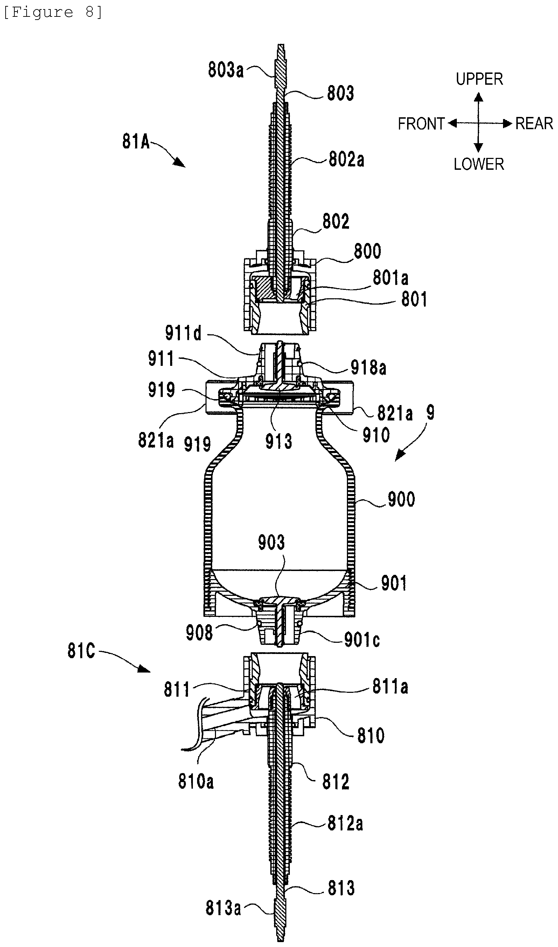

A convex portion 901c is provided in a central portion of the bottom member 901, and the convex portion 901c is provided with a communication hole that allows the inside of the container main body 90 to communicate with the outside and a valve (a valve 903 in Figure 8) that opens and closes the communication hole. The communication hole is used for discharging a waste liquid and a residue when cleaning the inside of the container main body 90. A seal member 908 is provided on the convex portion 901c, and the seal member 908 is a member for maintaining the airtightness between the upper unit 8A or the lower unit 8C and the bottom member 901.

The lid unit 91 includes a base member 911 having a hat shape. The base member 911 includes a convex portion 911d and a flange portion 911c that overlaps the flange portion 90c when the lid unit 91 is closed. The convex portion 911d has the same structure as that of the convex portion 901c of the container main body 90, and is provided with a communication hole that allows the inside of the container main body 90 to communicate with the outside, and a valve (a valve 913 in Figure 8) that opens and closes the communication hole. The communication hole of the convex portion 911d is mainly used for pouring hot water into the container main body 90 and feeding out a coffee beverage. A seal member 918a is provided on the convex portion 911d. The seal member 918a is a member for maintaining the airtightness between the upper unit 8A or the lower unit 8C and the base member 911. The lid unit 91 is also provided with a seal member 919. The seal member 919 improves the airtightness between the lid unit 91 and the container main body 90 when the lid unit 91 is closed. A filter for filtration is held in the lid unit 91.

### <4-3. Upper Unit and Lower Unit>

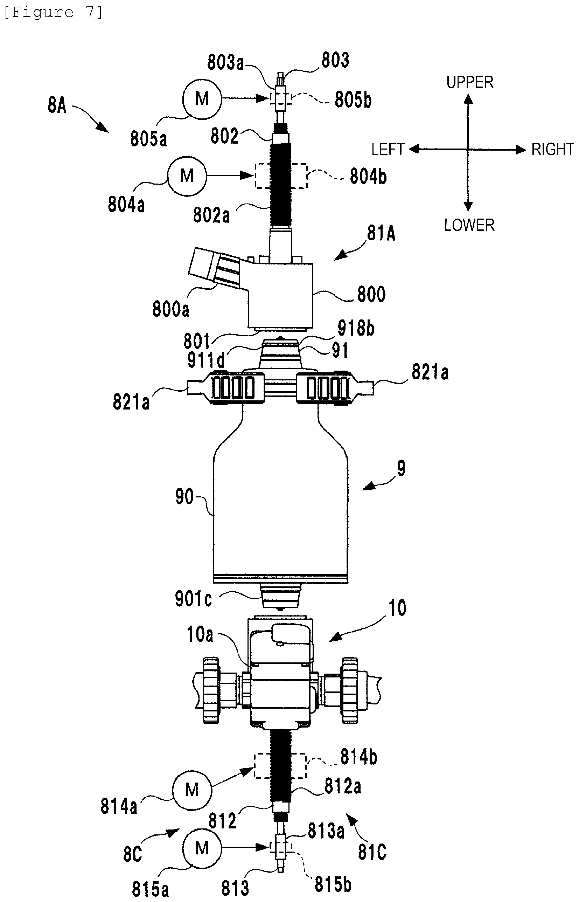

The upper unit 8A and the lower unit 8C will be described with reference to Figures 7 and 8. Figure 7 is a front view showing a configuration of a part of the upper unit 8A and the lower unit 8C, and Figure 8 is a longitudinal cross-sectional view of Figure 7.

The upper unit 8A includes an operation unit 81A. The operation unit 81A performs the opening and closing operation (lifting and lowering) of the lid unit 91 with respect to the container main body 90 and an opening and closing operation of the valves of the convex portions 901c and 911d. The operation unit 81A includes a support member 800, a holding member 801, a lifting and lowering shaft 802, and a probe 803.

The support member 800 is fixed such that a relative position with respect to the frame F does not change, and accommodates the holding member 801. The support member 800 also includes a communication portion 800a that allows the pipe L3 to communicate with the inside of the support member 800. Hot water, water, and air supplied from the pipe L3 are introduced into the support member 800 via the communication portion 800a.

The holding member 801 is a member capable of detachably holding the lid unit 91. The holding member 801 has a cylindrical space into which the convex portion 911d of the lid unit 91 or the convex portion 901c of the bottom member 901 is inserted, and includes a mechanism that detachably holds the convex portion 911d and the convex portion 901c. The mechanism is, for example, a snap ring mechanism, and is engaged by a constant pressing force, and is disengaged by a constant separating force. The hot water, water, and air supplied from the pipe L3 can be supplied into the extraction container 9 via the communication portion 800a and the communication hole 801a of the holding member 801.

The holding member 801 is also a movable member provided slidably in the upper-lower direction in the support member 800. The lifting and lowering shaft 802 is provided such that its axial direction is in the upper-lower direction. The lifting and lowering shaft 802 airtightly penetrates a top portion of the support member 800 in the upper-lower direction, and is provided so as to be vertically lifted and lowered with respect to the support member 800.

A top portion of the holding member 801 is fixed to a lower end portion of the lifting and lowering shaft 802. By the lifting and lowering of the lifting and lowering shaft 802, the holding member 801 slides in the upper-lower direction, and the holding member 801 can be attached to and separated from the convex portion 911d and the convex portion 901c. In addition, the lid unit 91 can be opened and closed with respect to the container main body 90.

A screw 802a constituting a lead screw mechanism is formed on an outer circumferential surface of the lifting and lowering shaft 802. A nut 804b is screwed to the screw 802a. The upper unit 8A includes a motor 804a, and the nut 804b is rotated on the spot by a driving force of the motor 804a (without moving up and down). The lifting and lowering shaft 802 is lifted and lowered by the rotation of the nut 804b.

The lifting and lowering shaft 802 is a tubular shaft having a through hole in its central axis, and the probe 803 is inserted into the through hole in a vertically slidable manner. The probe 803 airtightly penetrates the top portion of the holding member 801 in the upper-lower direction, and is provided so as to be vertically lifted and lowered with respect to the support member 800 and the holding member 801.

The probe 803 is an operator that opens and closes the valves 913 and 903 provided inside the convex portions 911d and 901c, and the valves 913 and 903 can be changed from a closed state to an open state by lowering the probe 803, and can be changed from the open state to the closed state (due to the action of a return spring (not shown)) by lifting the probe 803.

A screw 803a constituting a lead screw mechanism is formed on an outer circumferential surface of the probe 803. A nut 805b is screwed to the screw 803a. The upper unit 8A includes a motor 805a, and the nut 805b is rotated on the spot by a driving force of the motor 805a (without moving up and down). The probe 803 is lifted and lowered by the rotation of the nut 805b.

The lower unit 8C includes an operation unit 81C. The operation unit 81C has a configuration obtained by vertically turning the operation unit 81A upside down, and performs the opening and closing operation of the valves 913 and 903 provided inside the convex portions 911d and 901c. Although the operation unit 81C is also configured to be capable of opening and closing the lid unit 91, the operation unit 81C is not used to open and close the lid unit 91 in the present embodiment.

Hereinafter, although the description of the operation unit 81C is substantially the same as the description of the operation unit 81A, the operation unit 81C will be described below. The operation unit 81C includes a support member 810, a holding member 811, a lifting and lowering shaft 812, and a probe 813.

The support member 810 is fixed such that a relative position with respect to the frame F does not change, and accommodates the holding member 811. The support member 810 also includes a communication portion 810a that allows the switching valve 10a of the switching unit 10 to communicate with the inside of the support member 810. Residues of a coffee beverage, tap water, and ground beans in the container main body 90 are introduced into the switching valve 10a via the communication portion 810a.

The holding member 811 has a cylindrical space into which the convex portion 911d of the lid unit 91 or the convex portion 901c of the bottom member 901 is inserted, and includes a mechanism that detachably holds the convex portion 911d and the convex portion 901c. The mechanism is, for example, a snap ring mechanism, and is engaged by a constant pressing force, and is disengaged by a constant separating force. Residues of a coffee beverage, tap water, and ground beans in the container main body 90 are introduced into the switching valve 10a via the communication portion 810a and a communication hole 811a of the holding member 811.

The holding member 811 is also a movable member provided slidably in the upper-lower direction in the support member 810. The lifting and lowering shaft 812 is provided such that its axial direction is in the upper-lower direction. The lifting and lowering shaft 812 airtightly penetrates a bottom portion of the support member 800 in the upper-lower direction, and is provided so as to be vertically lifted and lowered with respect to the support member 810.

A bottom portion of the holding member 811 is fixed to a lower end portion of the lifting and lowering shaft 812. By the lifting and lowering of the lifting and lowering shaft 812, the holding member 811 slides in the upper-lower direction, and the holding member 811 can be attached to and separated from the convex portion 901c and the convex portion 911d.

A screw 812a constituting a lead screw mechanism is formed on an outer circumferential surface of the lifting and lowering shaft 812. A nut 814b is screwed to the screw 812a. The lower unit 8C includes a motor 814a, and the nut 814b is rotated on the spot by a driving force of the motor 814a (without moving up and down). The lifting and lowering shaft 812 is lifted and lowered by the rotation of the nut 814b.

The lifting and lowering shaft 812 is a tubular shaft having a through hole in its central axis, and the probe 813 is inserted into the through hole in a vertically slidable manner. The probe 813 airtightly penetrates the bottom portion of the holding member 811 in the upper-lower direction, and is provided so as to be vertically lifted and lowered with respect to the support member 810 and the holding member 811.

The probe 813 is an operator that opens and closes the valves 913 and 903 provided inside the convex portions 911d and 901c, and the valves 913 and 903 can be changed from the closed state to the open state by lifting the probe 813, and can be changed from the open state to the closed state (due to the action of a return spring (not shown)) by lowering the probe 813.

A screw 813a constituting a lead screw mechanism is formed on an outer circumferential surface of the probe 813. A nut 815b is screwed to the screw 813a. The lower unit 8C includes a motor 815a, and the nut 815b is provided so as to rotate on the spot by a driving force of the motor 815a (without moving up and down). The probe 813 is lifted and lowered by the rotation of the nut 815b.

### <4-4. Middle Unit>

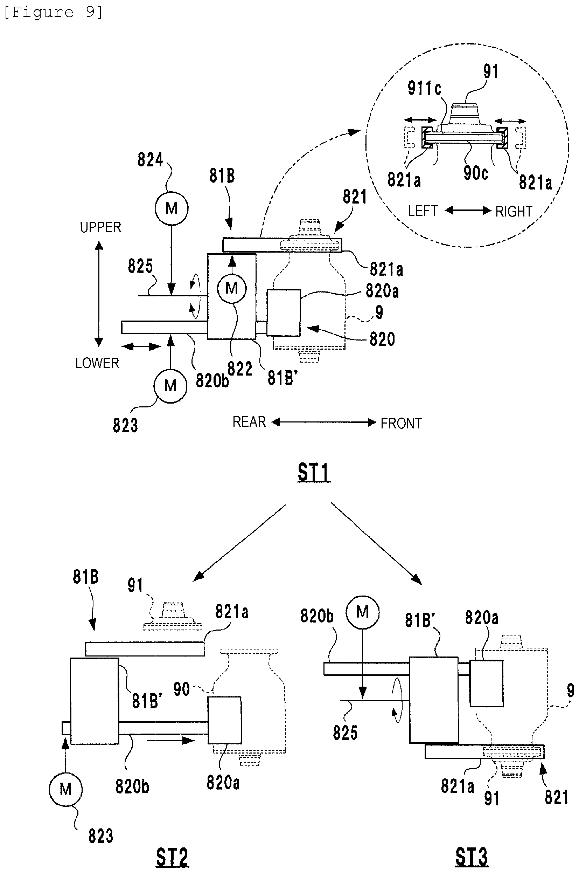

The middle unit 8B will be described with reference to Figures 5 and 9. Figure 9 is a schematic view of the middle unit 8B. The middle unit 8B includes a support unit 81B that supports the extraction container 9. The support unit 81B includes a unit main body 81B' that supports a lock mechanism 821 in addition to the arm member 820 described above.

The lock mechanism 821 is a mechanism for maintaining the lid unit 91 in a closed state with respect to the container main body 90. The lock mechanism 821 includes a pair of gripping members 821a that vertically sandwich the flange portion 911c of the lid unit 91 and the flange portion 90c of the container main body 90. The pair of gripping members 821a have a C-shaped cross section in which the flange portion 911c and the flange portion 90c are sandwiched therebetween and fitted to each other, and are opened and closed in the left-right direction by a driving force of a motor 822. When the pair of gripping members 821a are in a closed state, the gripping members 821a are fitted into the flange portion 911c and the flange portion 90c so as to vertically sandwich the flange portion 911c and the flange portion 90c, and the lid unit 91 is airtightly locked with respect to the container main body 90, as indicated by a solid line in an enclosing diagram of Figure 9. In this locked state, even if the holding member 801 is lifted by the lifting and lowering shaft 802 to open the lid unit 91, the lid unit 91 does not move (the lock is not released). That is, a locking force by the lock mechanism 821 is set stronger than a force to open the lid unit 91 using the holding member 801. As a result, it is possible to prevent the lid unit 91 from being opened with respect to the container main body 90 on abnormal occasions.

When the pair of gripping members 821a are in an open state, the gripping members 821a are separated from the flange portion 911c and the flange portion 90c, and the lid unit 91 and the container main body 90 are unlocked, as indicated by a broken line in the enclosing diagram of Figure 9.

In a case where the holding member 801 holds the lid unit 91 and the holding member 801 is lifted from a lowered position to a lifted position, the lid unit 91 is separated from the container main body 90 when the pair of gripping members 821a are in the open state. Conversely, when the pair of gripping members 821a are in the closed state, the engagement of the holding member 801 with respect to the lid unit 91 is released, and only the holding member 801 is lifted.

The middle unit 8B also includes a mechanism that horizontally moves the arm member 820 in the front-rear direction using a motor 823 as a drive source. As a result, the container main body 90 supported by the arm member 820 can be moved between a rear-side extraction position (state ST1) and a front-side bean input position (state ST2). The bean input position is a position at which ground beans are put into the container main body 90, and ground beans ground by the grinder 5B are put into the opening 90a of the container main body 90 from which the lid unit 91 is separated, from the discharge pipe 5C shown in Figure 2. In other words, a position of the discharge pipe 5C is above the container main body 90 positioned at the bean input position.

The extraction position is a position at which the container main body 90 can be operated by the operation unit 81A and the operation unit 81C, is a position coaxial with the probes 803 and 813, and is a position at which a coffee liquid is extracted. The extraction position is a position on the rear side of the bean input position. Figures 5, 7, and 8 show the case where the container main body 90 is positioned at the extraction position. In this way, by changing a position of container main body 90 according to the input of ground beans, the extraction of a coffee liquid, and the supply of water, it is possible to prevent the steam generated when extracting a coffee liquid from adhering to the discharge pipe 5C which is a supply portion of ground beans.

The middle unit 8B also includes a mechanism that rotates the support unit 81B about a shaft 825 in the front-rear direction using a motor 824 as a drive source. Accordingly, it is possible to change a posture of the container main body 90 (the extraction container 9) from an upright posture (state ST1) in which the neck portion 90b is on an upper side to an inverted posture (state ST3) in which the neck portion 90b is on a lower side. During the rotation of the extraction container 9, the lock mechanism 821 maintains a state in which the lid unit 91 is locked to the container main body 90. The extraction container 9 is turned upside down between the upright posture and the inverted posture. In the inverted posture, the convex portion 911d is positioned at the position of the convex portion 901c in the upright posture. In the inverted posture, the convex portion 901c is positioned at the position of the convex portion 911d in the upright posture. Therefore, in the inverted posture, the opening and closing operation with respect to the valve 903 can be performed by the operation unit 81A, and the opening and closing operation with respect to the valve 913 can be performed by the operation unit 81C.

### <5. Control Device>

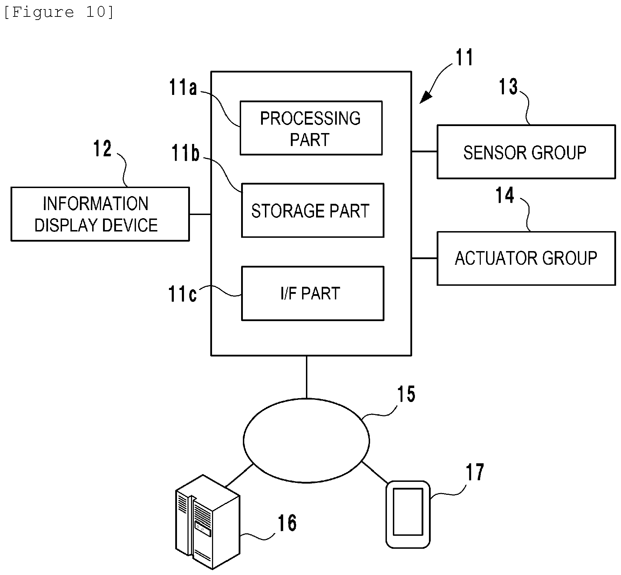

A control device 11 of the beverage production device 1 will be described with reference to Figure 10. Figure 10 is a block diagram of the control device 11.

The control device 11 controls the entire beverage production device 1. The control device 11 includes a processing part 11a, a storage part 11b, and an interface (I/F) part 11c. The processing part 11a is, for example, a processor such as a CPU. The storage part 11b is, for example, a RAM or a ROM. The I/F part 11c includes an input and output interface that inputs and outputs a signal between an external device and the processing part 11a. The I/F part 11c also includes a communication interface capable of performing data communication with a server 16 via a communication network 15 such as the Internet. The server 16 can communicate with a mobile terminal 17 such as a smartphone via the communication network 15, and can receive, for example, information such as a reservation for beverage production or an impression from the mobile terminal 17 of a beverage consumer.

The processing part 11a executes a program stored in the storage part 11b, and controls an actuator group 14 based on an instruction from the information display device 12, a detection result of a sensor group 13, or an instruction from the server 16. The sensor group 13 includes various sensors (for example, a hot water temperature sensor, an operation position detection sensor of a mechanism, a pressure sensor) provided in the beverage production device 1. The actuator group 14 includes various actuators (for example, a motor, an electromagnetic valve, a heater, and the like) provided in the beverage production device 1.

### <6. Operation Control Example>

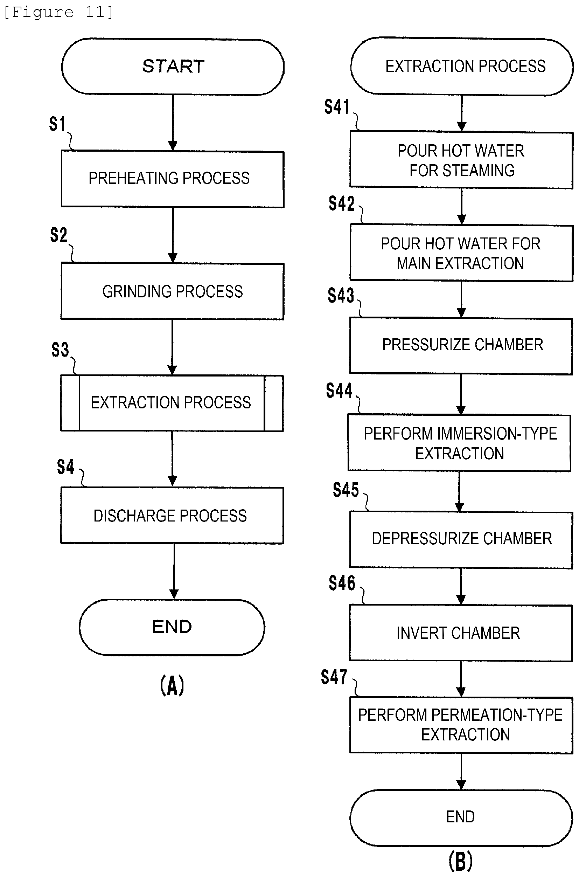

A control process example of the beverage production device 1 executed by the processing part 11a will be described with reference to (A) and (B) of Figure 11. (A) of Figure 11 shows a control example related to a single coffee beverage production operation. A state of the beverage production device 1 before a production instruction is referred to as a standby state. A state of each mechanism in the standby state is as follows.

The extraction device 3 is in the state of Figure 5. The extraction container 9 is in the upright posture and is positioned at the extraction position. The lock mechanism 821 is in the closed state, and the lid unit 91 closes the opening 90a of the container main body 90. The holding member 801 is at the lowered position and is attached to the convex portion 911d. The holding member 811 is at the lifted position and is attached to the convex portion 901c. The valves 903 and 913 are in the closed state. The switching valve 10a allows the communication portion 810a of the operation unit 81C to communicate with the waste tank T.

When there is a coffee beverage production instruction in the standby state, a process of (A) of Figure 11 is executed. In S1, a preheating process is executed. The process is a process of pouring hot water into the container main body 90 and heating the container main body 90 in advance. First, the valves 903 and 913 are opened. Thereby, the pipe L3, the extraction container 9, and the waste tank T communicate with one another.

The electromagnetic valve 72i is opened for a predetermined time (for example, 1500 ms) and then closed. Thereby, hot water is poured into the extraction container 9 from the water tank 72. Next, the electromagnetic valve 73b is opened for a predetermined time (for example, 500 milliseconds) and then closed. Thereby, the air in the extraction container 9 is pressurized, and the discharge of hot water to the waste tank T is facilitated. Through the above process, the inside of the extraction container 9 and the pipe L2 are preheated, and hot water can be less cooled in the subsequent production of a coffee beverage.

In S2, a grinding process is performed. Here, roasted coffee beans are pulverized, and the ground beans are put into the container main body 90. First, the lock mechanism 821 is opened to lift the holding member 801 to the lifted position. The lid unit 91 is held by the holding member 801 and is lifted together with the holding member 801. As a result, the lid unit 91 is separated from the container main body 90. The holding member 811 is lowered to the lowered position. The container main body 90 is moved to the bean input position. Next, the reservoir device 4 and the pulverizing device 5 are operated. Thus, one cup of roasted coffee beans is supplied from the reservoir device 4 to the first grinder 5A. The roasted coffee beans are ground in two stages by the grinders 5A and 5B, and wastes are separated by the separation device 6. The ground beans are put into the container main body 90.

The container main body 90 is returned to the extraction position. The holding member 801 is lowered to the lowered position, and the lid unit 91 is attached to the container main body 90. The lock mechanism 821 is closed, and the lid unit 91 is airtightly locked to the container main body 90. The holding member 811 is lifted to the lifted position. Of the valves 903 and 913, the valve 903 is in the closed state, and the valve 913 is in the open state.

In S3, an extraction process is performed. Here, a coffee liquid is extracted from the ground beans in the container main body 90. (B) of Figure 11 is a flowchart of the extraction process of S3.

In S11, in order to steam the ground beans in the extraction container 9, hot water in an amount less than one cup is poured into the extraction container 9. Here, the electromagnetic valve 72i is opened for a predetermined time (for example, 500 ms) and then closed. Thereby, hot water is poured into the extraction container 9 from the water tank 72. Thereafter, the process of S11 ends after waiting for a predetermined time (for example, 5000 ms). By this process, the ground beans can be steamed. By steaming the ground beans, carbon dioxide gas contained in the ground beans can be released, and a subsequent extraction effect can be enhanced.

In S12, hot water is poured into the extraction container 9 in an amount to add up to one cup of hot water so that the extraction container 9 accommodates one cup of hot water. Here, the electromagnetic valve 72i is opened for a predetermined time (for example, 7000 ms) and then closed. Thereby, hot water is poured into the extraction container 9 from the water tank 72.

By the process of S12, the inside of the extraction container 9 can be brought into a state of a temperature exceeding 100°C at 1 atm (for example, about 110°C). Next, the inside of the extraction container 9 is pressurized in S13. Here, the electromagnetic valve 73b is opened for a predetermined time (for example, 1000 ms) and then closed, and the inside of the extraction container 9 is pressurized to an atmospheric pressure at which hot water does not boil (for example, about 4 atm (about 3 atm in gauge pressure)). Thereafter, the valve 913 is brought into the closed state.

Next, this state is maintained for a predetermined time (for example, 7000 ms) to perform immersion-type coffee liquid extraction (S14). As a result, immersion-type coffee liquid extraction is performed under a high temperature and high pressure. In the immersion-type extraction under a high temperature and high pressure, the following effects can be expected. First, by setting a high pressure, hot water can be easily permeated into the ground beans, and extraction of a coffee liquid can be facilitated. Second, by setting a high temperature, the extraction of the coffee liquid is facilitated. Third, by setting a high temperature, the viscosity of an oil contained in the ground beans decreases, and the extraction of the oil is facilitated. As a result, a coffee beverage with high aroma can be produced.

A temperature of hot water (high temperature water) may be higher than 100°C, but a higher temperature is more advantageous in terms of the extraction of the coffee liquid. On the other hand, increasing the temperature of the hot water generally results in an increase in cost. Therefore, the temperature of the hot water may be, for example, 105°C or more, or 110°C or more, or 115°C or more, and may be, for example, 130°C or less, or 120°C or less. The atmospheric pressure may be any atmospheric pressure at which the hot water does not boil.

In S15, the inside of the extraction container 9 is depressurized. Here, the atmospheric pressure in the extraction container 9 is switched to an atmospheric pressure at which the hot water boils. Specifically, the valve 913 is brought into the open state, and the electromagnetic valve 73c is opened for a predetermined time (for example, 1000 ms) and then closed. The inside of the extraction container 9 is open to the atmosphere. Thereafter, the valve 913 is brought into the closed state again.

The inside of the extraction container 9 is rapidly depressurized to an atmospheric pressure lower than the boiling point pressure, and the hot water in the extraction container 9 boils at once. The hot water and ground beans in the extraction container 9 are explosively scattered in the extraction container 9. As a result, the hot water can evenly boil. The destruction of cell walls of the ground beans can be facilitated, and the subsequent extraction of the coffee liquid can be further facilitated. In addition, since the ground beans and the hot water can be stirred by this boiling, the extraction of the coffee liquid can be facilitated. In this way, in the present embodiment, the extraction efficiency of the coffee liquid can be improved.

In S16, the extraction container 9 is inverted from the upright posture to the inverted posture. Here, the holding member 801 is moved to the lifted position and the holding member 811 is moved to the lowered position. Then, the support unit 81B is rotated. Thereafter, the holding member 801 is returned to the lowered position, and the holding member 811 is returned to the lifted position. In the extraction container 9 in the inverted posture, the neck portion 90b and the lid unit 91 are positioned on the lower side.

In S47, permeation-type coffee liquid extraction is performed, and a coffee beverage is delivered into the cup C. Here, the switching valve 10a is switched to allow the pouring part 10c and the passage portion 810a of the operation unit 81C to communicate with each other. Both the valves 903 and 913 are brought into the open state. Further, the electromagnetic valve 73b is opened for a predetermined time (for example, 10000 ms), and the inside of the extraction container 9 is set to a predetermined atmospheric pressure (for example, 1.7 atm (0.7 atm in gauge pressure)). In the extraction container 9, a coffee beverage in which the coffee liquid is dissolved in the hot water passes through a filter provided in the lid unit 91 and is delivered into the cup C. The filter regulates the leakage of a residue of the ground beans. Thus, the extraction process ends.

In the present embodiment, the extraction efficiency of the coffee liquid can be improved by using the immersion-type extraction in S14 and the permeation-type extraction in S17 in combination. When the extraction container 9 is in the upright posture, the ground beans accumulate from the body portion 90e to the bottom portion 90f. On the other hand, when the extraction container 9 is in the inverted posture, the ground beans accumulate from the shoulder portion 90d to the neck portion 90b. A cross-sectional area of the body portion 90e is larger than a cross-sectional area of the neck portion 90b, and a deposition thickness of the ground beans in the inverted posture is larger than a deposition thickness in the upright posture. That is, the ground beans accumulate relatively thinly and widely when the extraction container 9 is in the upright posture, and accumulate relatively thickly and narrowly when the extraction container 9 is in the inverted posture.

In the present embodiment, since the immersion-type extraction in S14 is performed when the extraction container 9 is in the upright posture, the hot water and the ground beans can be brought into contact over a wide range, and the extraction efficiency of the coffee liquid can be improved. However, in this case, the hot water and the ground beans tend to partially come into contact with each other. On the other hand, since the permeation-type extraction in S17 is performed when the extraction container 9 is in the inverted posture, the hot water passes through the accumulated ground beans while being in contact with more of the ground beans. The hot water comes into contact with the ground beans more evenly, and the extraction efficiency of the coffee liquid can be further improved.

Returning to (A) of Figure 11, after the extraction process of S3, a discharge process of S4 is performed. Here, a process related to cleaning in the extraction container 9 is performed. The extraction container 9 is cleaned by returning the extraction container 9 from the inverted posture to the upright posture and supplying water (purified water) to the extraction container 9. Then, the inside of the extraction container 9 is pressurized, and the water in the extraction container 9 is discharged to the waste tank T together with a residue of the ground beans.

Thus, one coffee beverage production process is completed. Thereafter, the same process is repeated for each production instruction. The time required for producing one coffee beverage is, for example, about 60 seconds to 90 seconds.

### <7. Summary of Device Configuration>

As described above, the beverage production device 1 includes the bean processing device 2 and the extraction device 3 as a production part, and more specifically, the bean processing device 2 includes the reservoir device 4 and the pulverizing device 5, and the extraction device 3 includes the fluid supply unit 7, the drive unit 8, the extraction container 9, and the switching unit 10 (see Figures 2, 3, etc.). The pulverizing device 5 receives one cup of roasted coffee beans from the reservoir device 4, and performs two-stage grinding by the grinders 5A and 5B. At this time, waste such as chaff is separated from the ground beans by the separation device 6. After the ground beans are put into the extraction container 9, the pouring of hot water into the extraction container 9 by the fluid supply unit 7, the posture inversion of the extraction container 9 by the drive unit 8, the liquid feeding from the extraction container 9 to the cup C by the switching unit 10, and the like are performed to provide a cup of beverage.

A part of the production part is covered by the cover part 102 configured as a transparent cover whose entire body is a transmissive portion, and can be visually recognized by a user (for example, an administrator of the beverage production device 1, a beverage consumer, or the like) from the outside of the beverage production device 1. In the present embodiment, of the production part, although the plurality of canisters 40, which are a part of the reservoir device 4, are exposed, and the other elements are substantially accommodated in the housing 100, the entire production part may be accommodated in the housing 100 as another embodiment. In other words, the cover part 102 may be provided so as to cover at least a part of the production part.

Since at least a part of the production part is covered with the cover part 102 so as to be visually recognized from the outside of the beverage production device 1, for example, when the user is an administrator of the beverage production device 1, the administrator may perform the operation inspection of the device together with the production preparation of a beverage. When the user is a beverage purchaser, the purchaser may wait for the completion of the production of a beverage while enhancing the expectation for the beverage. For example, the extraction container 9 of the extraction device 3 can be visually recognized from the outside of the beverage production device 1 via the cover part 102, and among several processes for producing a beverage, an extraction step having a relatively high degree of interest for a user can be observed. The drive unit 8 functions as a posture changing unit that changes a posture of the extraction container 9, and as described above, the extraction container 9 is a movable portion that can be vertically inverted in the production part. Therefore, an inverting operation of the extraction container 9 is relatively likely to attract the user, and by allowing the user to observe the inverting operation, the user may be able to enjoy the inverting operation.

Next, a contrivance to allow the user to easily select a preferred beverage will be described. In the following description, components having the same names as those described above may be denoted by the same reference numerals as those used above.

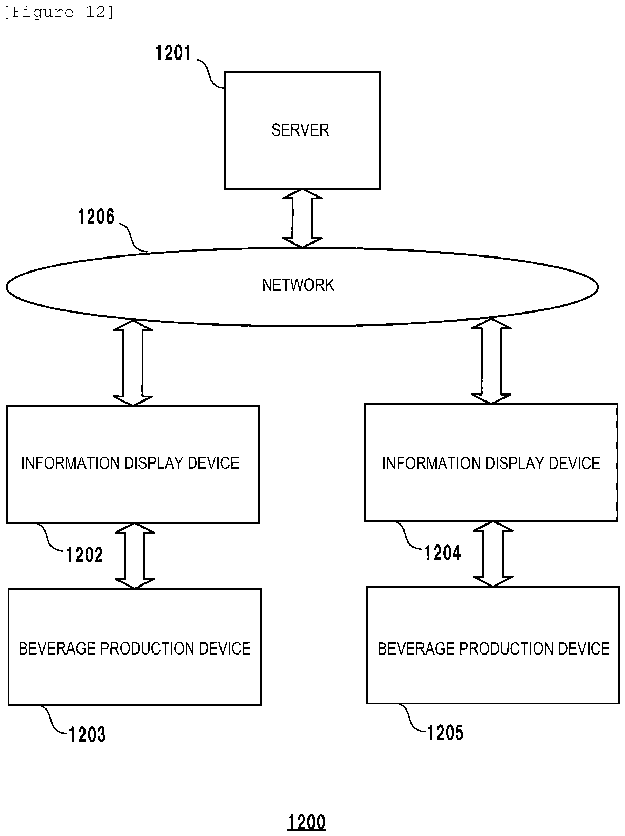

First, with reference to Figure 12, a communication system (hereinafter, referred to simply as a system) including the beverage production device 1 will be described. Figure 12 shows a general configuration of a system 1200 including the beverage production device 1. The system 1200 includes a server 1201, information display devices 1202 and 1204, and beverage production devices 1203 and 1205. The information display devices 1202 and 1204 according to the present embodiment rank and display beverage information that can instruct the beverage production devices 1203 and 1205 to product. The beverage production devices 1203 and 1205 correspond to the beverage production device 1, and the information display devices 1202 and 1204 correspond to the information display device 12. The server 1201 and the information display devices 1202 and 1204 are communicably connected to each other over a network 1206, such as the Internet. The information display devices 1202 and 1204 and the beverage production devices 1203 and 1205 are located at a shop that provides coffee beans or beverage, for example, and the information display devices 1202 and 1204 may be capable of short-range radio communication based on Bluetooth (registered trademark) or the like.

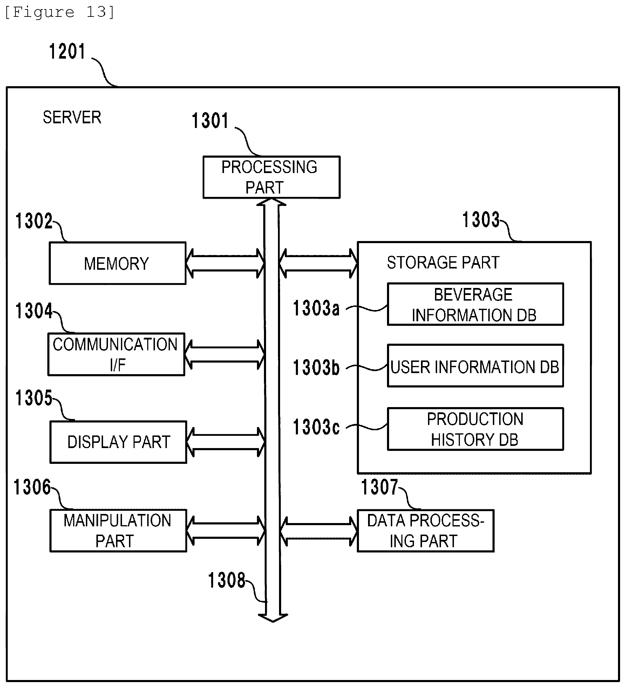

Figure 13 is a configuration diagram of the server 1201. A processing part 1301 includes a CPU, for example, and controls the server 1201 in a centralized manner. In the present embodiment, the operation of the server 1201 is achieved by the processing part 1301 loading a program stored in a storage part 1303 to a memory 1302 and executing the program. The memory 1302 is also used as a working memory for the CPU of the processing part 1301. The storage part 1303 stores a basic control program, data and a parameter that allow the server 1201 to operate. Various databases are constructed in the storage part 1303. For example, the storage part 1303 stores a beverage information database (DB) 1303a, user information DB 1303b, and production history DB 1303c (hereinafter, also referred to as DB 1303a to 1303c) to be described later, and stores an application that can provide the above services, for example.

A communication interface (I/F) 1304 is configured to the medium of the network 1206, such as whether the medium is wired or wireless. A display part 1305 is a display, for example, and displays a user interface screen to an administrator of the server 1201, for example. A manipulation part 1306 is a keyboard or a mouse, for example, and can receive a manipulation of the administrator.

A data processing part 1307 includes, for example, at least one of a CPU and a GPU, and performs extraction of data based on a data acquisition request for DBs 1303a to 1303c described later, addition of data based on a data update request, and the like. The parts shown in Figure 13 can be connected to each other by a bus 1308.

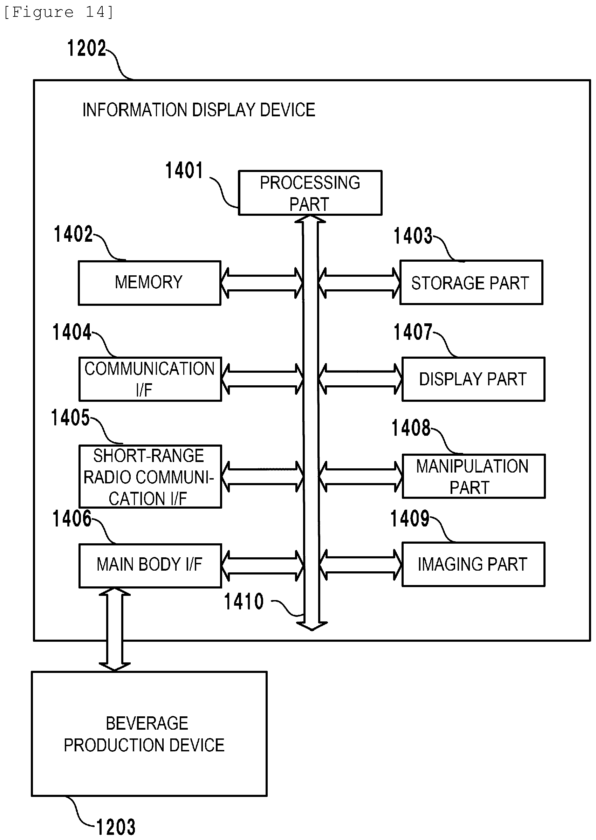

Figure 14 shows a configuration of the information display device 1202. As described above, the information display device 1202 corresponds to the information display device 12. A processing part 1401 includes a CPU, for example, and controls the information display device 1202 in a centralized manner. In the present embodiment, the operation of the information display device 1202 is achieved by the processing part 1401 loading a program stored in a storage part 1403 to a memory 1402 and executing the program, for example. The memory 1402 is also used as a working memory for the CPU of the processing part 1401. The storage part 1403 stores a basic control program, data and a parameter that allow the information display device 1202 to operate.

A communication I/F 1404 is configured to the medium of the network 1206, such as whether the medium is wired or wireless, and is configured to be capable of communicating with the server 1201. A short-range radio communication I/F 1405 performs a communication according to a different communication scheme than that of the communication I/F 1404, such as Bluetooth (registered trademark). In the present embodiment, the information display device 1202 may be able to communicate with another information display device 1204 that is installed in the same shop and is close to the information display device 1202 via the short-range radio communication I/F 1405.

A display part 1407 is a touch panel and displays a user interface screen that allows the user to use the beverage production device 1203. A manipulation part 1408 can receive a manipulation from the user and includes a hardware key for entry or the like. When the display part 1407 is a touch panel, the manipulation part 1408 may be implemented as a software key on the touch panel. In one example, the display part 1407 may be a display part (for example, permeation-type touch panel display unit constituting the cover part 102, the information display device 12, or the like) provided in the beverage production device, a mobile terminal (for example, a smartphone, a mobile phone, or a tablet) carried by a user, a mobile terminal (for example, a smartphone, a mobile phone, or a tablet) operable by an administrator such as a store clerk, a PC screen, a POS terminal in a shop in which the beverage production device is installed, a signage, or the like, or may be a screen of a POS terminal in which various code readers such as a cash register and/or a bar code are integrated. A display part of the POS terminal may be used as the display part 1407 to display various ranking displays, and a recipe or the like may be selected by a touch operation. Information related to beverage production to be performed by the beverage production device desired by the user and may be displayed with various codes such as a QR code (registered trademark) or other images may be displayed on paper. The display of the paper may be read by a camera provided in the beverage production device, and the beverage may be prepared by specifying information related to beverage production from the read display. In addition, the POS terminal and the beverage production device may be connected by a signal line (for example, the Internet or the like) or wirelessly (for example, the Internet or the like). The recipe or the like may be selected by the touch operation on the display part of the POS terminal, and the information related to beverage production to be performed by the beverage production device desired by the user may be transmitted to the beverage production device by a signal to cause the beverage production device desired by the user to produce the beverage. At this time, the information may or may not pass through the server.

An imaging part 1409 is a camera and generates image data of a static image. The imaging part 1409 can take a photograph of beans brought to the shop by the user or of a two-dimensional code displayed on the display part of the mobile terminal, for example. By taking a photograph of a two-dimensional code displayed on the display part of the mobile terminal, the information display device 1202 becomes able to communicate with the mobile terminal according to a communication scheme different from the communication schemes of the communication I/F 1404 and the short-range radio communication I/F 1405. A main body I/F 1406 is an interface part to the beverage production device 1203 and transmits coffee bean choice information or extraction recipe information set by the user via the display part 1407 and the manipulation part 1408 to the beverage production device 1203, for example. The parts shown in Figure 14 can be connected to each other by a bus 1410.

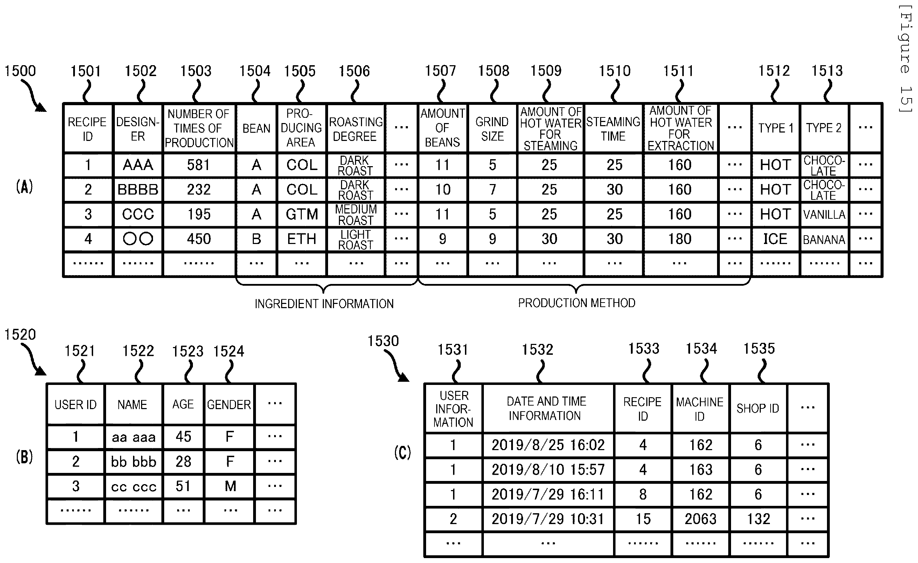

(A) to (C) of Figure 15 are diagrams showing examples of data stored in the DBs 1303a to 1303c stored in the storage part 1303 of the server 1201. (A) of Figure 15 shows data 1500 stored in a beverage information DB 1303a. The data 1500 includes a recipe ID 1501, designer information 1502 indicating a designer of a recipe, number-of-times-of-production information 1503 indicating the number of times of production in which beverage information has been selected by a user in the past, ingredient information, a production method, and types 1512 and 1513. The ingredient information includes bean information 1504 indicating a type of a bean, producing area information 1505 indicating a producing area of a bean, and roasting degree information 1506 indicating a roasting degree of a bean. The production method includes an amount of beans used in one extraction 1507, a grind size of beans 1508, an amount of hot water for steaming 1509, steaming time 1510, and an amount of hot water for extraction 1511. The type 1512 is type information indicating whether a beverage is a hot beverage or an iced beverage, and the type 1513 is type information indicating the flavor of the beverage. In the present embodiment, although the number-of-times-of-production information 1503 is described as the number of times a beverage corresponding to the number-of-times-of-production information 1503 has been produced by a plurality of beverage production devices, the number-of-times-of-production information 1503 may be stored for each of the beverage production devices.

(B) of Figure 15 shows exemplary data 1520 of a user information DB 1303b. A user may be a shop, or a clerk or a customer of the shop. The data 1520 includes ID information 1521 indicating a user identifier, name information 1522 indicating the name of a user, age information 1523 indicating the age of a user, and gender information 1524 indicating the gender of a user. For example, the data 1520 may further include information corresponding to an address of a user, nickname information of a user, and photograph data of a user.

(C) of Figure 15 shows exemplary data 1530 of a production history DB 1303c. The data 1530 includes user information 1531 on a user who has instructed production, date and time information 1532 on the production date and time, a recipe ID 1533 corresponding to the produced beverage, a machine ID 1534 corresponding to a beverage production device which has produced the beverage, and a shop ID 1535 corresponding to a shop in which the beverage production device is installed. For example, the data 1530 may further include price information corresponding to the price of the produced beverage.

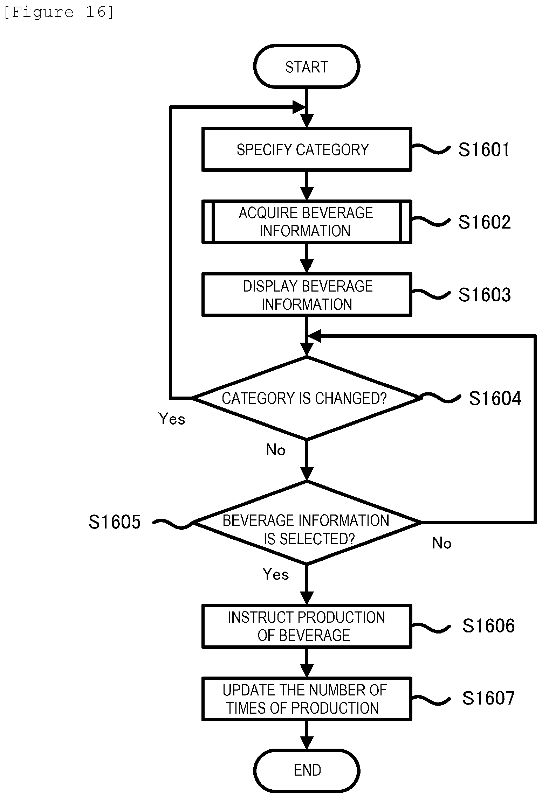

Next, processing executed by the information display device 1202 to display beverage information will be described with reference to Figure 16. The process shown in Figure 16 is achieved by the processing part 1401 loading a program (application) stored in the storage part 1403 to the memory 1402 and executing the program in a case where the activation process of the information display device 1202 and the beverage production device 1203 is completed. First, the processing part 1401 specifies a category for displaying beverage information (S1601). As described later, the category may be specified based on an operation input by the user via the manipulation part 1408, or may be specified by the processing part 1401 of the information display device 1202 reading a set value stored in the memory 1402 or the storage part 1403. The processing part 1401 then acquires beverage information from the server 1201 based on the specified category (S1602). In the present embodiment, the processing part 1401 transmits information indicating the specified category to the server 1201, and the server 1201 extracts beverage information from the beverage information DB 1303a based on the received information indicating the category, and transmits the beverage information to the information display device 1202. However, in one example, the information display device 1202 may have beverage information in the storage part 1403, and read the beverage information from the storage part 1403 based on the specified category.

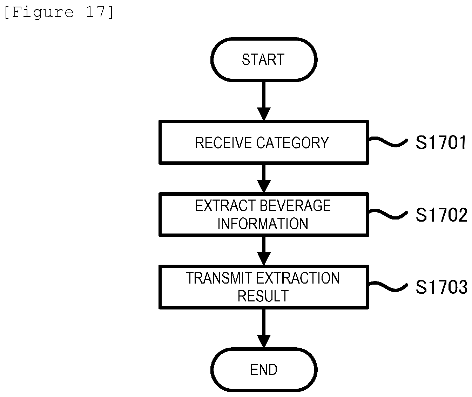

Here, an example of processing executed by the server 1201 to transmit beverage information to the information display device 1202 will be described with reference to Figure 17. The process shown in Figure 17 is achieved by the processing part 1301 loading a program (application) stored in the storage part 1303 to the memory 1302 and executing the program in a case where the activation process of the server 1201 is completed. First, the processing part 1301 receives a category from the information display device 1202 (S1701).

The processing part 1301 then extracts beverage information from the beverage information DB 1303a based on the received category (S1702). For example, in a case where the received category is the bean information 1504 of the ingredient information, the data processing part 1307 sorts the beverage information DB for each type of beans, calculates the number of times of production of a recipe having the same bean information, and extracts the type of the bean and the number of times of production. A recipe having the largest number of times of production is extracted for each type of beans. Next, the processing part 1301 transmits the extracted type of beans and the number of times of production to the information display device 1202 (S1703).

In S1702, the processing part 1301 may extract a predetermined number (for example, five) of pieces of beverage information whose number of times of production is large. In another example, the processing part 1301 may extract information including beverage information recommended to the user, which is stored in the storage part 1303. Alternatively, in a case where the user information of the user who has requested the beverage information is acquired from the information display device 1202, the beverage information may be extracted including beverage information of a beverage which is frequently instructed to be produced by the user. That is, in S1702, the beverage information may be extracted including beverage information other than the beverage information with the largest number of times of production.

The description returns to Figure 16. The processing part 1401 displays the acquired beverage information on the display part 1407 (S1603).

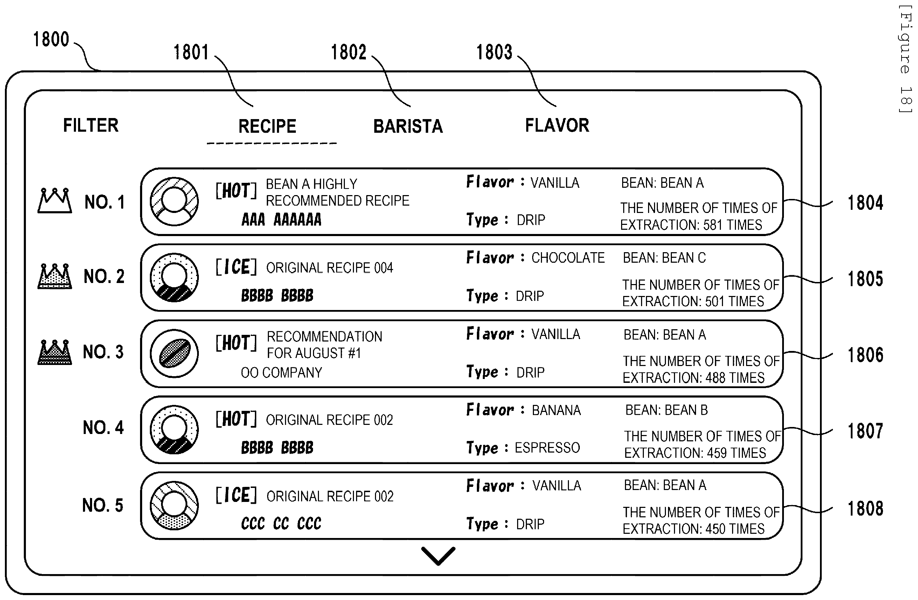

Here, an example of the beverage information displayed on the display part 1407 will be described with reference to Figure 18. A screen 1800 of the display part 1407 is an example of a screen displayed when the "recipe" is designated as a category.

In the upper part of the screen 1800, a recipe 1801, a barista 1802, and a flavor 1803 are displayed as selectable categories. The recipe 1801 is a category for acquiring beverage information based on the number of times of production for each recipe in the beverage information DB 1303a. The barista 1802 is a category for acquiring beverage information based on the number of times of production of the beverage information DB 1303a for each designer. The flavor 1803 is a category for acquiring beverage information based on the number of times of production for the type 2 1513 of the beverage information DB 1303a. Note that parameters of any beverage information such as the bean information 1504 and the producing area information 1505 in beverage information DB 1303a may be selectable as categories.

In the example of Figure 18, since the recipe 1801 is selected, the information display device 1202 displays beverage information for each recipe, and recipes 1804 to 1808 are displayed according to ranking. Here, the ranking display indicates that a predetermined number of recipes are displayed in descending order of the number of times of extraction (the number of times of production) of the beverage selected and produced by the user in the past. For example, the recipe 1804 corresponds to beverage information of a recipe ID 1 in (A) of Figure 15, and other information such as the designer information 1502, the bean information 1504, the type 1512, and the type 1513 is also displayed. In a case where the recommended beverage information is acquired in S1602 in the ranking display of S1603, the recommended beverage information is also displayed.

The beverage information may be displayed in a plurality of display orders including ranking display and non-ranking display, and in the case of the non-ranking display, the beverage information may be displayed in order of name. For example, in a case where a "name" field is prepared in each row of (A) of Figure 15, and a name of a recipe ID "1" being "recipe A", a name of a recipe ID "2" being "recipe C", and a name of a recipe ID "3" being "recipe B" are registered in the server as recipes that can be selected by the user, and in a case of displaying recipe information in order of name, the "recipe A", the "recipe B", and the "recipe C" are displayed in this order from the upper part of the screen. Here, it is assumed that the higher the name is positioned on the upper part of the screen, the higher the ranking. The same applies hereinafter unless otherwise specified.

In the case of the non-ranking display, the beverage information may be displayed in the order according to order information registered corresponding to the beverage information. For example, in a case where the "name" field and an "order information" field are prepared in each row of (A) of Figure 15, and the name of the recipe ID "1" being the "recipe A" and the "order information" thereof being "3", the name of the recipe ID "2" being the "recipe C" and the "order information" thereof being "2", and the name of the recipe ID "3" being the "recipe B" and the "order information" thereof being "1" are registered in the server as the recipes that can be selected by the user, and in the case of the non-ranking display of the recipe information, the "recipe B", the "recipe C", and the "recipe A" may be displayed in this order from the upper part of the screen.

In the case of the non-ranking display, the beverage information is displayed in the order according to the order information registered corresponding to the beverage information, and in a case where the order information is the same, the beverage information is displayed in order of the name of the beverage information. For example, in the case where the "name" field and the "order information" field are prepared in each row of (A) of Figure 15, and the name of the recipe ID "1" being the "recipe A" and the "order information" thereof being "3", the name of the recipe ID "2" being the "recipe C" and the "order information" thereof being "3", and the name of the recipe ID "3" being the "recipe B" and the "order information" thereof being "1" are registered in the server as the recipes that can be selected by the user, and in the case of the non-ranking display of the recipe information, the "recipe B", the "recipe A", and the "recipe C" may be displayed in this order from the upper part of the screen.

The ranking display may be enabled in a form that takes into account a result of an administrator operation. The administrator operation is, for example, an operation that enables a change or the like on a management screen displayed when an administrator password is entered. For example, a "priority" field is prepared in each row of (A) of Figure 15, a "priority" of the recipe ID "1" is set to "A", a "priority" of the recipe ID "2" is set to "C", and a "priority" of the recipe ID "3" is set to "C" by the administrator operation, and the number of times of a recipe selected by the user during a certain period is 10 times for the recipe ID "1", 5 times for the recipe ID "2", and 12 times for the recipe ID "3". In this case, the recipe ranking may be displayed in the order of recipe ID "3", recipe ID "1", and recipe ID "2" from the upper part of the screen without considering the priority (administrator operation), and the recipe ranking may be displayed in the order of recipe ID "1", recipe ID "3", and recipe ID "2" from the upper part of the screen in consideration of the priority (administrator operation). Here, it is assumed that the priority A has the highest priority, and the priority decreases in alphabetical order of B and C.

The priority may be set not only for each recipe by the administrator operation, but also for each category, such as the priority for each recipe and the priority for each bean, by the administrator operation. For example, the "priority" of the recipe ID "1" is set to "A", the "priority" of the recipe ID "2" is set to "C", the "priority" of the recipe ID "3" is set to "C", and the "priority" of the recipe ID "4" is set to "C" by the administrator operation. Then, as the "priority" for each bean, the priority of a bean "A" is set to "B" and the priority of a bean "B" is set to "A" by the administrator operation, and the number of times of a recipe selected by the user in a certain period is 10 times for the recipe ID "1", 5 times for the recipe ID "2", 12 times for the recipe ID "3", and 1 time for the recipe ID "4". In this case, the recipe ranking may be displayed in the order of recipe ID "1", recipe ID "3", recipe ID "2", and recipe ID "4" from the upper part of the screen in consideration of the priority (administrator operation), and the bean ranking may be displayed in the order of bean "B" and bean "A" from the upper part of the screen in consideration of the priority (administrator operation).

In the example using Figure 15, an example is shown in which ranking display is performed based on number-of-times-of-selection information of a user in a certain period collected from beverage production devices installed in the world, but the present invention is not limited thereto. The ranking display may be performed based on number-of-times-of-selection information in a certain period of a user collected from one or a plurality of beverage production devices installed in the world, based on number-of-times-of-selection information in a certain period of a user collected from one or a plurality of beverage production devices installed in Japan, based on number-of-times-of-selection information of a user collected from beverage production devices installed in a certain area of a certain shop (for example, one or a plurality of beverage production devices installed on a first floor in a five-story shop), or based on number-of-times-of-selection information of a user collected from beverage production devices for giving production instructions.

In the examples using (A) to (C) of Figure 15, an example is shown in which the ranking display is performed based on the number-of-times-of-selection information of a user in a certain period collected from the beverage production device, but the present invention is not limited thereto. The ranking display may be performed according to information collected from sources other than the beverage production device, for example, an amount of products sold during a period of an independently managed website placed on the Internet. For example, an amount of variety of coffee beans sold during a period of an electronic commerce (EC) site may be stored in a server or the like, and coffee beans of coffee to be produced by a beverage production device may be displayed according to ranking on a screen according to the amount. Specifically, in a case where a bean "B" is sold twice as much as a bean "A" during the period of the EC site, a recipe using the bean "B" may be preferentially displayed over a recipe using the bean "A" (for example, the recipe in (A) of Figure 15 is displayed in the order of recipe ID "4", recipe ID "1", recipe ID "2", and recipe ID "3" from the upper part of the screen). Of course, the ranking may be displayed by using both the number-of-times-of-selection information of a user in a certain period collected from the beverage production device and the information collected from sources other than the beverage production device. For example, in a case where the bean "B" is sold twice as much as the bean "A" during the period of the EC site, and the number of the recipe of the beverage production device selected by the user during a certain period is 10 for the recipe ID "1", 5 for the recipe ID "2", 12 for the recipe ID "3", and 1 for the recipe ID "4", the recipe ID "4", the recipe ID "3", the recipe ID "1", and the recipe ID "2" may be displayed in this order from the upper part of the screen.

The description returns to Figure 16. The processing part 1401 confirms whether a category for displaying the beverage information on the display part 1407 is changed (S1604). For example, if the user selects the barista 1802 or the flavor 1803 in Figure 18, the processing part 1401 determines that the category is changed (Yes in S1604), and returns the processing to S1601. If none of the recipe 1801, the barista 1802, and the flavor 1803 is selected (No in S1604), the processing part 1401 determines whether the beverage information displayed next is selected (S1605). For example, if any one of recipes 1804 to 1808 in Figure 18 is selected, the processing part 1401 determines that the beverage information is selected (Yes in S1605), and instructs the beverage production device 1203 to produce a beverage corresponding to the selected beverage information (S1606). For example, in S1606, the processing part 1401 instructs the beverage production device 1203 to produce a beverage by transmitting values of production methods 1507 to 1511 of Figure 15 via a main body I/F 1406. If the beverage information is not selected (No in S1605), the processing part 1401 returns the processing to S1604 and waits for the change of the category or the selection of the beverage information. The user who designated the category in S1601 may be different from the user who selects the beverage information in S1605.

Subsequently, after the beverage production is instructed, the information display device 1202 notifies the server 1201 that the beverage has been produced (S1607). In one example, when the server 1201 receives the notification that the beverage has been produced from the information display device 1202, the server 1201 increments the number of times of production of the recipe corresponding to the produced beverage by 1. That is, the beverage information DB 1303a also operates as a storage part for the number of times of selection of a beverage. In one example, the information display device 1202 may transmit user information indicating an instruction to produce a beverage, date and time information, and information on the beverage production device 1203 that has produced a beverage to the server 1201, and the server 1201 may update the history information by adding records (1531 to 1535) to the production history DB 1303c. That is, the production history DB 1303c may also operate as a storage part that stores the number of times of selection of a beverage for each user. In this way, the ranking display can be updated by collecting information indicating that the beverage has been produced from at least one information display device or beverage production device and updating the number of times of production.

Here, an example of processing in a case where it is determined that the category is changed in S1604 of Figure 16 will be described. Here, the processing in a case where the barista 1802 of Figure 18 is selected will be described. In this case, the processing part 1401 determines that the "barista" is selected as the category (S1601), and transmits a signal indicating that the category is the barista to the server 1201. When receiving the signal (S1701), the server 1201 extracts the beverage information from the beverage information DB 1303a (S1702). In S1702, the server 1201 controls the data processing part 1307 to extract the beverage information by collecting data of the beverage information DB 1303a for each designer. For example, the data processing part 1307 sums up the number of times of production of the recipe having the same designer information 1502, and calculates the number of times of production for each designer. In addition, the production method (1507 to 1511) of the recipe having the largest number of times of production is extracted for each designer. That is, a combination of the number of times of production of a beverage produced by selecting a recipe and a representative recipe of a designer is extracted for each designer, and transmitted to the information display device 1202 (S1703).

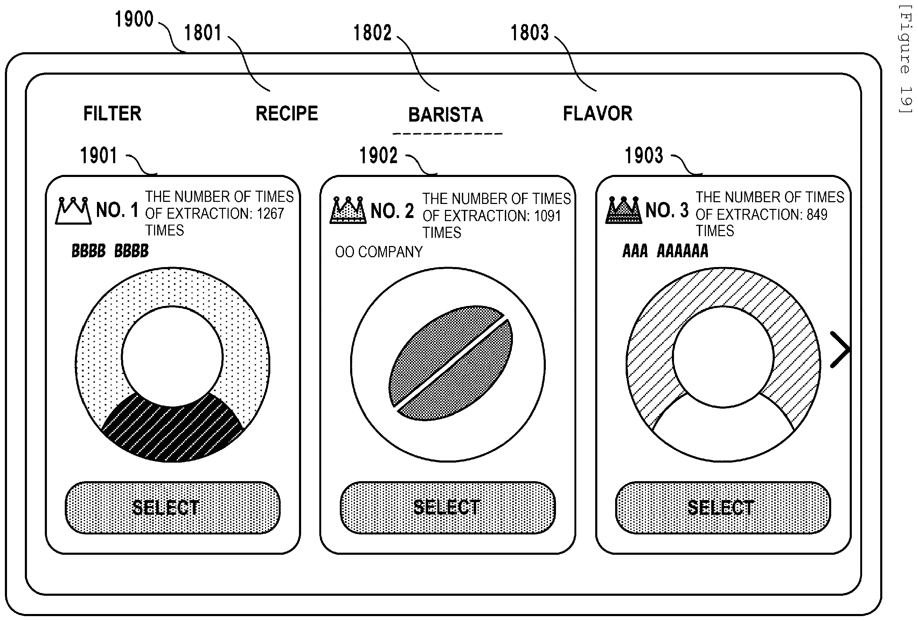

Figure 19 shows a screen 1900 displayed on the display part 1407 in a case where the category is the barista (designer). On the screen, in addition to the categories (1801 to 1803), beverage information 1901 to 1903 for each designer is displayed according to ranking. For example, the beverage information 1901 indicates that a beverage corresponding to a recipe created by a designer "BBBB BBBB" has been produced 1267 times, and the beverage information 1902 indicates that a beverage corresponding to a recipe created by a designer "OO Company" has been produced 1091 times. When a selection button of the beverage information 1901 is pressed, the processing part 1401 determines that the beverage information has been selected (Yes in S1605), and instructs the beverage production device 1203 to produce a beverage corresponding to a recipe having the largest number of times of production among recipes of the designer "BBBB BBBB" (S1606). In one example, a designer can set a recommended recipe. In a case where the category is a designer and the designer is selected, the beverage production device 1203 may be instructed to produce a beverage corresponding to the recommended recipe.

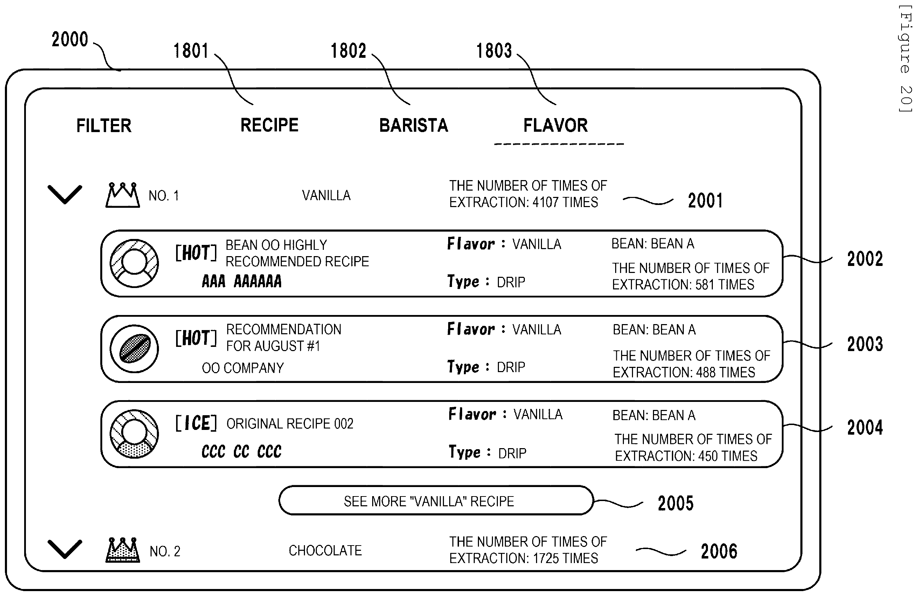

Figure 20 shows a screen 2000 displayed on the display part 1407 in a case where the category is type 2 (flavor). On the screen, in addition to the categories (1801 to 1803), beverage information 2001 and 2006 for each flavor is displayed according to ranking. For example, the beverage information 2001 indicates that a beverage having a flavor of "vanilla" has been produced 4107 times, and the beverage information 2006 indicates that a beverage having a flavor of "chocolate" has been produced 1725 times. When the beverage information whose flavor is "vanilla" is selected, a plurality of pieces of beverage information whose flavor is "vanilla" may be displayed for each recipe (2002 to 2004), for example. In one example, the recipes 2002 to 2004 may also be displayed according to ranking, that is, displayed in descending order of the number of times of production. In this way, by displaying the information according to ranking in a hierarchical manner, the user can easily select a favorite beverage. The user can confirm other recipes by pressing a button 2005 for "see more recipes of 'vanilla'".

As described above, according to the present embodiment, it is possible to provide a device that allows a user who is served a beverage to easily select a beverage to be produced based on a predetermined category of the beverage.

### <Other Embodiments>

In the present embodiment, description has been made assuming that there is one category for displaying beverage information, but in one example, a plurality of categories may be designated to display beverage information. For example, in a case where a barista (designer) and a flavor are designated as categories, the number of times of production of one or more recipes in which the barista and the flavor are the same may be calculated and the beverage information may be displayed. Accordingly, since the beverage information can be displayed by freely combining categories emphasized by the user, it is possible to provide a device that allows a user who is served a beverage to easily select a beverage to be produced.

As exemplified above, display modes of the ranking display may be different for each category. For example, in a case of a category A (for example, ranking display according to the recipe in Figure 18), the higher ranking is displayed in the upper part of the screen, and if it is desired to display the lower part of the screen and the information on the lower ranking as the ranking goes down, a search is performed using vertical scrolling. In a case of another category B (for example, ranking display according to the barista in Figure 19), the higher ranking is displayed in the left part of the screen, and if it is desired to display the right part of the screen and the information on the lower ranking as the ranking goes down, a search is made using horizontal scrolling. Accordingly, in addition to the character information, the operation mode is changed, which may make it easy to understand which category of ranking display the user is looking at. As another example, for different display modes, for example, in the case of the category A (for example, ranking display diagram according to the recipe in Figure 18), a certain number (five in Figure 18) of options may be displayed at a time, and in the case of another category B (for example, ranking display according to the barista in Figure 19), another number (three in Figure 19) of options may be displayed at a time.

(A) of Figure 15 is an example of the beverage information DB 1303a that can be registered by the administrator, but the administrator, the user, or a person (for example, a barista) requested by the administrator may create a recipe using the screen of the additional drawing and add the recipe to the beverage information DB 1303a.

In this case, some fields such as the "priority" field, the "order information" field, the "name" field, and the like may not be registered by the user or the barista, and may be registered and corrected only by the administrator by the administrator operation. Of course, these fields may be registered and corrected by the user.

In (A) of Figure 15, not all recipes registered in the beverage information DB 1303a that can be registered by the administrator can be used by the user for beverage production, and a field for setting permission/non-permission such as a "permission" field may be provided for each recipe. Only a recipe with a value of "permission" in the "permission" field may be used by the user for beverage production, and a recipe with a value of "non-permission" may not be used by the user for beverage production. In addition, only the recipe with a value of "permission" in the "permission" field may be displayed for the user to select, and the recipe with a value of "non-permission" may be not displayed in the user selection display. Specifically, a "shop" field is prepared in each row of (A) of Figure 15. In a case where the value of the "shop" field of the recipe ID "1" is registered as "shop A", the value of the "shop" field of the recipe ID "2" is registered as "shop A", and the value of the "shop" field of the recipe ID "3" is registered as "shop B" by the administrator operation, the information of the recipe ID "1" and the information of the recipe ID "2" are displayed as recipes selectable by the user in the shop A, and the information of the recipe ID "2" is displayed as recipes selectable by the user in the shop B, so that the user can select the recipes. In another example, restrictions on selectable recipes based on the registered contents of the "permission" field and the "shop" field may be applied to various examples of ranking display.

### <Summary of Embodiments>

The above embodiments disclose at least the following devices.

1. A control device (for example, 1202 and 1203) according to the above embodiment includes:
   a first reception unit configured to receive from a user designation of a category of a beverage to be produced by a beverage production part;
   an acquisition unit configured to acquire beverage information corresponding to the category received by the first reception unit from a storage part;
   a display unit configured to display the beverage information acquired by the acquisition unit;
   a second reception unit configured to receive designation of one piece of beverage information among the beverage information displayed by the display unit from a user; and
   an output unit configured to output a beverage production instruction to a beverage production part based on the one piece of beverage information selected by the second reception unit, in which
   the display unit displays a plurality of pieces of beverage information corresponding to the category according to ranking.

According to the embodiment, it is possible to provide a device that allows a user who is served a beverage to easily select a beverage to be produced.

2. In the control device,
the display unit performs ranking display by displaying the plurality of pieces of beverage information according to the number of times selected by the user in the past.

According to the embodiment, it is possible to provide a device that allows a user who is served a beverage to easily select a beverage to be produced based on the ranking display.

3. In the control device,
the first and second reception units receive designation from a plurality of users.

According to the embodiment, it is possible to provide a device that allows a user who is served a beverage to easily select a beverage to be produced based on designation from a plurality of users.

4. In the control device,
the acquisition unit acquires user information including at least one of an age and a gender of a user of a beverage production device from the storage part, and
the display unit displays the beverage information in consideration of the user information.

According to the embodiment, it is possible to provide a device that allows a user who is served a beverage to easily select a beverage to be produced based on information of the user.

5. In the control device,
the ranking display is performed based on information collected from a plurality of the beverage production parts.

According to the embodiment, it is possible to provide a device that allows a user who is served a beverage to easily select a beverage to be produced.

6. In the control device,
the beverage information includes at least one of information on an ingredient for producing a beverage, information on a production recipe related to a beverage production method, and information on at least one designer of the production recipe.

According to the embodiment, it is possible to provide a device that allows a user who is served a beverage to easily select a beverage to be produced based on at least one of the information on the ingredient, the information on the production recipe, and the information on the designer.

7. In the control device,
the instruction is given to the beverage production part of the beverage production device.

According to the embodiment, it is possible to provide a device that allows a user who is served a beverage to easily select a beverage to be produced.

8. A method according to the embodiment includes:
a first reception step of receiving from a user designation of a category of a beverage to be produced by a beverage production part;
an acquisition step of acquiring beverage information corresponding to the category received in the first reception step from a storage part;
a display step of displaying the beverage information acquired in the acquisition step;
a second reception step of receiving designation of one piece of beverage information among the beverage information displayed in the display step from a user; and
an output step of outputting a beverage production instruction to a beverage production part based on the one piece of beverage information selected in the second reception step, in which
in the display step, a plurality of pieces of beverage information corresponding to the category are displayed according to ranking.

According to the embodiment, it is possible to provide a device that allows a user who is served a beverage to easily select a beverage to be produced.

9. A program according to the embodiment causes a computer to function as each unit of the control device according to any one of the embodiments 1 to 7.

According to the embodiment, it is possible to provide a device that allows a user who is served a beverage to easily select a beverage to be produced.

Next, a contrivance to convey information on a beverage to a user in an easy-to-understand manner will be described.

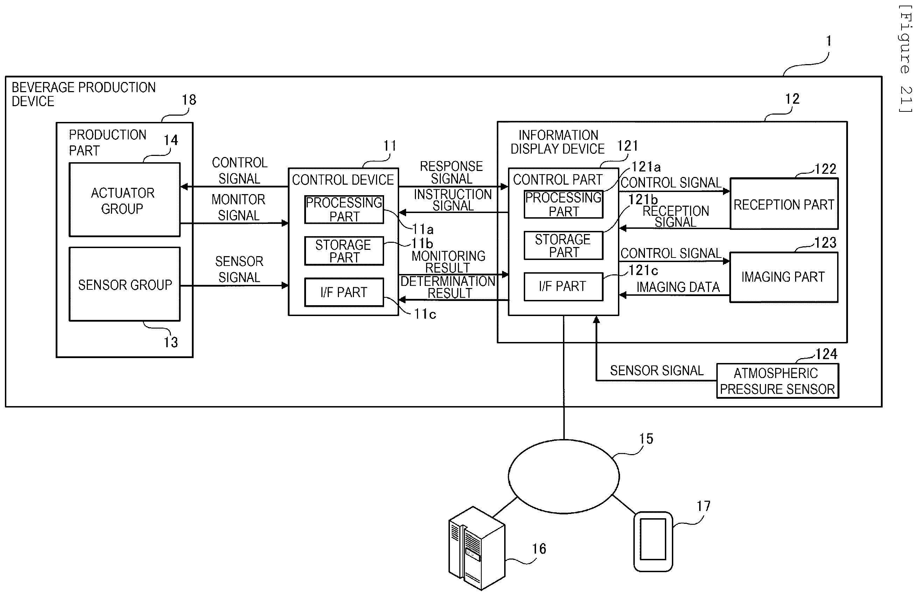

Figure 21 is a block diagram of the beverage production device 1.

The control device 11 shown in Figure 21 is the same as the control device 11 shown in Figure 10, and includes the processing part 11a, the storage part 11b, and the I/F part 11c as shown in Figure 10. A production part 18 shown in Figure 21 is a combination of the actuator group 14 and the sensor group 13 shown in Figure 10, and produces a coffee beverage by driving the actuator group 14. It should be noted that the production of the coffee beverage referred to herein is broadly defined, and includes each process (steps S11 to S16) in the extraction process S3 in addition to the permeation-type extraction (step S17) shown in Figure 11 in which the coffee beverage is finally produced. Further, the preheating process S1, the grinding process (step S2), and the discharge process S4 shown in Figure 11 are also included.

The information display device 12 shown in Figure 21 is the same as the information display device 12 shown in Figure 10, and specifically, is a touch panel type display, and is capable of receiving an operation of an administrator of the device or a beverage consumer in addition to displaying various types of information. That is, in the information display device 12, the display screen becomes a reception part 122. The information display device 12 also includes a control part 121 and an imaging part 123. Similar to the control device 11, the control part 121 includes a processing part 121a, a storage part 121b, and an I/F part 121c. The processing part 121a controls the reception part 122 and the imaging part 123. The imaging part 123 is a camera and generates imaging data of a still image and imaging data of a moving image. The control part 121 receives a reception signal corresponding to an operation from the reception part 122. Upon receiving the reception signal, the control part 121 transmits an instruction signal for instructing execution of a process corresponding to the reception signal to the control device 11. In the control device 11, the processing part 11a transmits a control signal to the actuator group 14 in the production part 18 in response to the instruction signal to control the driving of the actuator group 14. The control device 11 transmits a response signal indicating that the driving of the actuator group 14 is completed to the control part 121 of the information display device 12. In the control part 121, the processing part 121a transmits, to the reception part 122, a control signal instructing to perform an operation reception display indicating reception of an operation, a completion display based on reception of the response signal, and the like. The control part 121 receives imaging data from the imaging part 123 and stores the imaging data in the storage part 121b.

The I/F part 121c of the control part 121 includes an input and output interface that inputs and outputs a signal between an external device and the processing part 121a. In the beverage production device 1 shown in Figure 21, the I/F part 121c of the information display device 12 includes a communication interface capable of performing data communication with the server 16 via the communication network 15 such as the Internet. The server 16 shown in Figure 21 can communicate with the mobile terminal 17 such as a smartphone via the communication network 15.

Further, the beverage production device 1 shown in Figure 21 includes an atmospheric pressure sensor 124. The atmospheric pressure sensor 124 detects the pressure of the atmosphere at a place where the beverage production device 1 is installed, and outputs a detection result as a sensor signal. The control part 121 of the information display device 12 acquires the sensor signal.

On the other hand, the control device 11 acquires a monitor signal indicating a driving state or the like from the actuator group 14. The control device 11 also acquires a sensor signal from the sensor group 13 in the production part 18. The control device 11 monitors a production status of the coffee beverage in the production part 18 by acquiring the monitor signal and the sensor signal, and transmits a monitoring result based on the monitor signal and the sensor signal to the control part 121. The monitoring result may be the monitor signal or the sensor signal itself. Alternatively, in a case where the monitor signal or the sensor signal represents a certain value, the monitoring result may be obtained by converting the certain value into another value, or the information obtained from the certain value may be the monitoring result. For example, information indicating whether the certain value exceeds a threshold may be used as the monitoring result. However, it is not preferable to increase a processing load of the processing part 11a to obtain the monitoring result based on the monitor signal and the sensor signal.

As described above, the response signal and the monitoring result are transmitted from the control device 11 to the control part 121 of the information display device 12. The response signal and the monitoring result correspond to a log and are stored in the storage part 121b of the control part 121. A part of the log is transmitted from the control device 11 to the control part 121 at predetermined intervals (for example, intervals of 500 milliseconds).

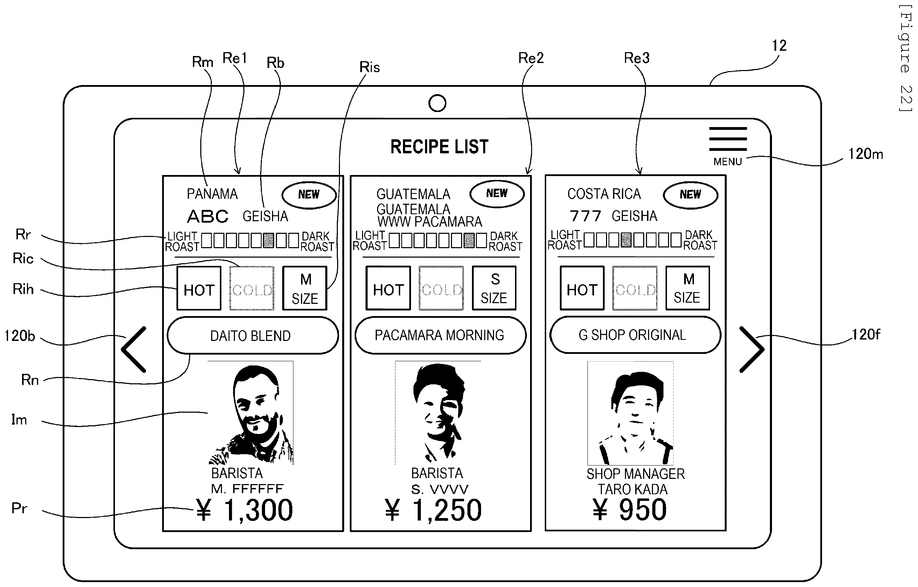

Figure 22 shows the information display device 12 displaying a recipe list.

The recipe list is displayed on a display part of the information display device 12 shown in Figure 22. A display screen of the recipe list may be a home screen of the display part of the information display device 12, or may be a selection screen selected from menu items expanded by tapping a menu button 120m displayed at the upper right.

In the recipe list shown in Figure 22, three recipes are simply displayed. When a previous page icon 120b displayed at the left end is tapped, three recipes on the previous page are simply displayed, and when a next page icon 120f displayed at the right end is tapped, three recipes on the next page are simply displayed. In Figure 22, a recipe Re1 having a recipe name "Daito Blend" is simply displayed on the left side, a recipe Re2 having a recipe name "Pacamara Morning" is simply displayed in the center, and a recipe Re3 having a recipe name "G Shop Original" is simply displayed on the right side. All of the three recipes Re1, Re2, and Re3 have just been created, and the display of "NEW" indicating a new product is displayed at the upper right corner.

The recipe will be described again, although there are parts overlapping with the above description. The recipe includes information on various production conditions for producing a beverage, bean information, recipe creator information, and the like. That is, the recipe is used for a part or all of the steps of the beverage production. The recipe is managed as a database as shown in Figure 15 in the server 1201 (corresponding to the server 16 shown in Figure 21) shown in Figure 13. The recipe is stored in storage part 121b of the information display device in each beverage production device 1. In the storage part 121b, as in the storage part 1303 of the server 1201, the recipe may be managed as a database, or may be simply stored. The storage part 121b may keep storing the recipe, or may acquire a recipe from the server 16 before the beverage is produced, store the recipe only while the beverage is being produced, and delete the recipe from the storage part 121b after the beverage is produced. Alternatively, only a part of the information of the recipe (for example, bean information or recipe creator information) may be stored in the storage part 121b, the remaining information of the recipe (for example, information on production conditions) may be acquired from the server 16 before the beverage is produced, and the remaining information may be deleted from the storage part 121b after the beverage is produced. The recipe stored in the storage part 121b of the information display device is encrypted.

The bean information and the creator information included in the recipe are displayed when the user selects a beverage. The information on production conditions is parameters (set values) used in a part or all of the steps of the beverage production. The processing part 11a of the control device 11 shown in Figure 21 refers to the storage part 121b of the information display device 12 and controls the actuator group 14 shown in Figure 21 according to the parameters. For example, according to the parameters, the processing part 11a controls opening and closing of various valves shown in Figure 3, controls the number of rotations of the rotary blade of the pulverizing device 5, controls driving of the heater 72a, and controls driving of the compressor 70.

In each of the recipes Re1,Re2, and Re3, a producing area display Rm indicating a producing area of a bean is displayed on the upper left corner. Below the producing area display Rm, a name display Rb representing the name of the bean is displayed. Below the name display Rb, a roasting degree display Rr indicating a roasting degree of the bean is graphically displayed. Below the roasting degree display Rr, icons Rih and Ric indicating the type 1 (whether the beverage is a hot beverage or an iced beverage) described with reference to Figure 15 are displayed. An icon indicating the type 2 (type information indicating a flavor of a beverage) described with reference to Figure 15 may also be displayed. In any of the recipes Re1,Re2, and Re3 shown in Figure 22, the icon Rih of the hot beverage lights up, and the icon Ric of the iced beverage is grayed out. A size icon Ris representing a size of a cup is also displayed at the right end. A recipe name display Rn is displayed at the center of the recipe in the vertical direction, and an image Im is displayed below the recipe name display Rn together with the name of the recipe creator. The image Im is an image obtained by imaging a recipe creator (designer in (A) of Figure 15). In the recipe Re1 of "Daito Blend" on the left side, the face image Im is displayed together with the name of the barista "M.FFFFFF". In the recipe Re2 of "Pacamara Morning" in the center, the face image Im is displayed together with the name of the barista "S. VVVV" . In the recipe Re3 of "G Shop Original" on the right side, the face image Im is displayed together with the name of the G shop manager "Taro Kada". At the bottom, the price Pr of the coffee beverage of the recipe name is displayed.

When the displayed recipe is tapped, details of the recipe are displayed.

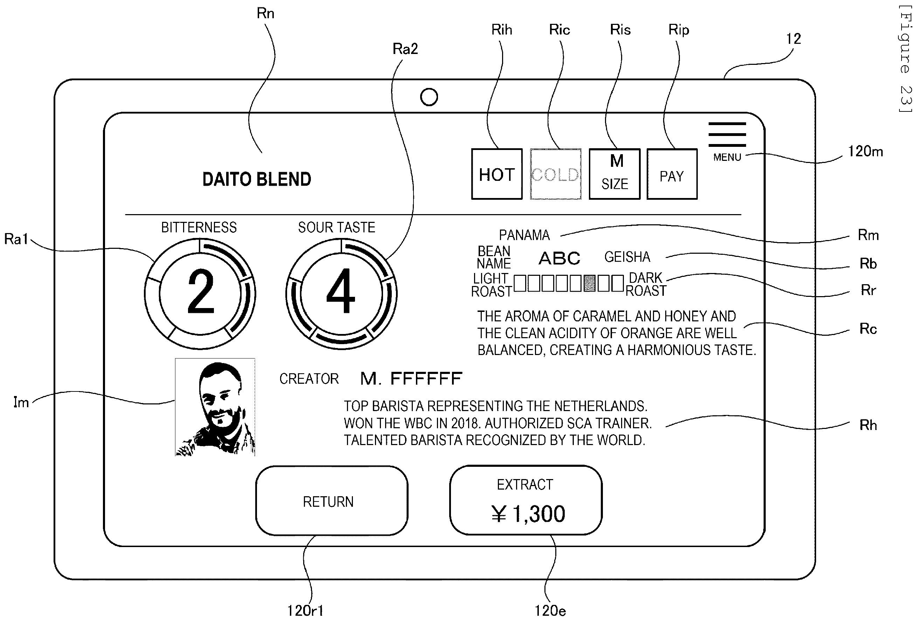

Figure 23 shows a screen displayed when the recipe Re1 of the "Daito Blend" on the left side of the display screen shown in Figure 22 is tapped.

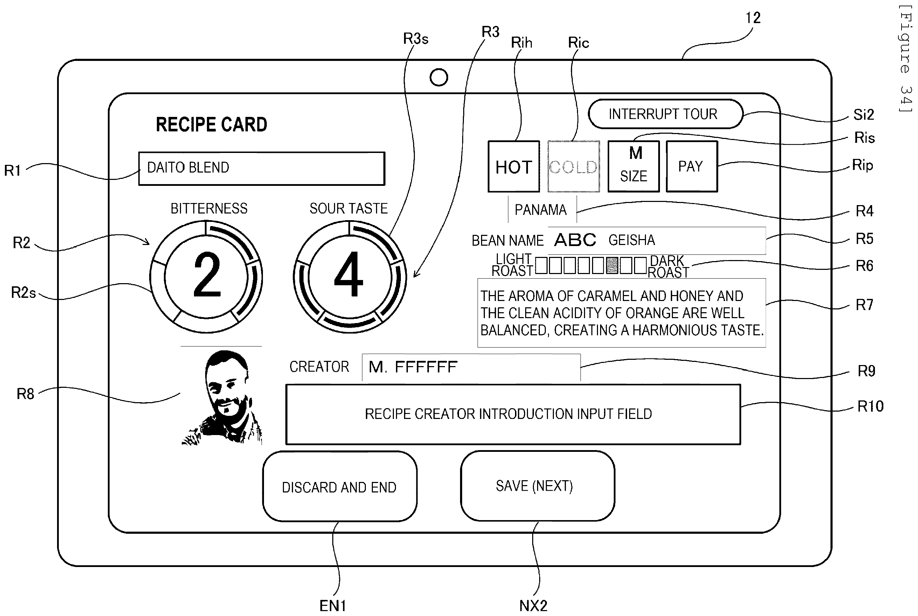

Recipe information based on a recipe card (see Figure 34) to be described later is displayed on the display part of the information display device 12 shown in Figure 23. Here, the recipe information of "Daito Blend" is displayed. In comparison with the simply displayed recipe Re1 shown in Figure 22, taste details of a bitterness display Ra1 and the sour taste display Ra2 are graphically displayed. A comment Rc of the recipe creator is also displayed. Further, in addition to the image Im, an introduction Rh of the recipe creator is also displayed on the screen. The image Im shown in Figure 23 is an image obtained by imaging the recipe creator. In addition, a pay icon Rip indicating that the recipe is a pay recipe is also displayed at the upper right. The pay icon Rip shown in Figure 23 indicates that charging has been performed. The recipe of "Daito Blend" is a recipe that is generally disclosed as a pay recipe with a production restriction that cannot be used for producing a coffee beverage without charging. The general disclosure here means that, for example, the recipe information as shown in Figure 23 is automatically transmitted to the information display devices 12 located around the world via the server 1201 shown in Figure 13, and the outline of the recipe can be known only on a shop management screen of each information display device 12 (the same applies to the following description). However, all parameters necessary for production are not disclosed. The general disclosure is not limited to the shop management screen. The recipe may be disclosed on a screen that can be seen by a customer of a shop, or the recipe information disclosed on the server 1201 may be seen from each shop instead of being automatically transmitted (the same applies to the following description). The pay recipe is displayed on the display screen of the recipe list shown in Figure 22 only when the shop side or the like charges and releases the production restriction. The recipe whose production restriction is released can display the pay icon Rip indicating a pay recipe for a customer on the display screen of the recipe information of Figure 23, and give a sense of premium to the customer. Even in the pay recipe whose production restriction is not released, the pay icon Rip may be displayed on the display screen of the recipe list shown in Figure 22. However, in this case, the display screen of the recipe information is not displayed, or even if the display screen is displayed, an extraction icon 120e to be described later is not displayed, and extraction is not possible.

The menu button 120m is prepared at the upper right of the screen, and a return icon 120r1 and the extraction icon 120e are prepared at the lower end of the screen. When the return icon 120 r1 is tapped, the screen returns to the recipe list screen shown in Figure 22. In the extraction icon 120e, the price of the coffee beverage of the recipe name is displayed. The price of the coffee beverage may be included in the recipe of the coffee beverage or may be stored separately from the recipe. For example, the price may be stored in the storage part 121b in association with the recipe.
When the extraction icon 120e is tapped, transaction information is transmitted to a Point of sale (POS) system (not shown), and the POS system executes a transaction process. In beverage production device 1, the coffee production process shown in Figure 11 is started.

Next, the creation of the recipe will be described. The recipe is created using a recipe management application installed in the information display device 12.

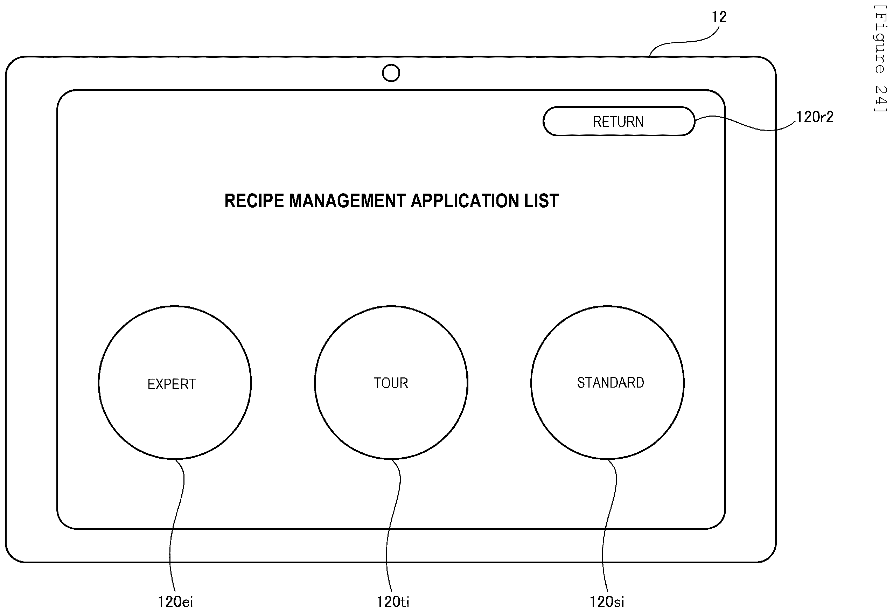

Figure 24 shows the information display device 12 displaying a recipe management application list.

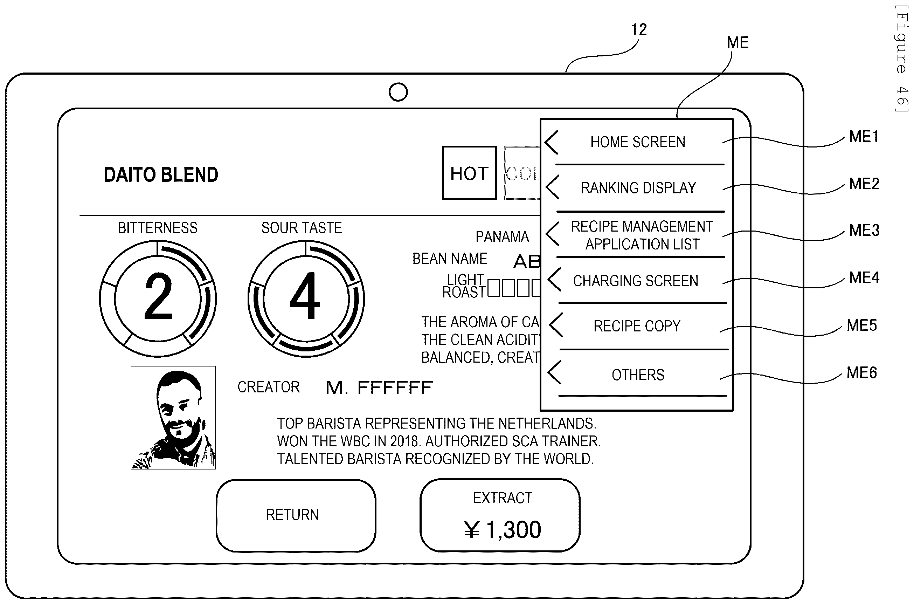

The recipe management application list is displayed on the display part of the information display device 12 shown in Figure 24. A display screen of the recipe management application list is a screen selected from menu items expanded by tapping the menu button 120m displayed on the information display device 12 shown in Figure 22 (see Figure 46). When a return icon 120r2 displayed at the upper right is tapped, the screen returns to a screen on which the recipe list is displayed as shown in Figure 22.

In the information display device 12, three recipe management applications such as an expert, a tour, and a standard are installed, and these recipe management applications are executed by the processing part 121a shown in Figure 21. On the display screen of the information display device 12 shown in Figure 24, an expert icon 120ei, a tour icon 120ti, and a standard icon 120si are displayed. The recipe management applications of the expert and the standard will be described later, and the creation of a new recipe by the recipe management application of the tour will be described here. In order to start up the recipe management application of the tour, the tour icon 120ti displayed in the center is tapped.

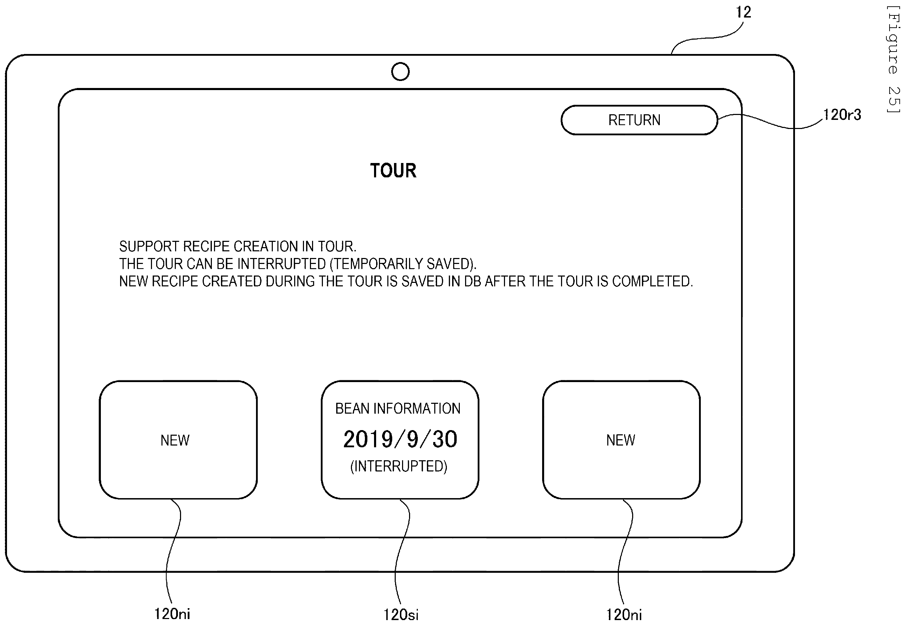

Figure 25 shows a startup screen of the recipe management application of the tour.

In the recipe management application of the tour, a recipe is created according to the progress of the interactive mode. Hereinafter, the creation of the new recipe will be referred to as the tour after the application name. The startup screen displayed on the display part of the information display device 12 shown in Figure 25 displays that the recipe creation can be interrupted even in the middle of the tour and the completed recipe is stored in the storage part 1303 of the server 1201 (corresponding to the server 16 shown in Figure 21) described with reference to Figure 13 or the database constructed in the storage part 121b of the information display device 12. Two new creation icons 120ni and an interruption icon 120si are displayed below the startup screen. When the interruption icon 120si shown in Figure 25 is tapped, the tour interrupted by inputting or selecting the bean information is resumed. When the new creation icon 120ni is tapped, the tour is started. When a return icon 120r3 displayed at the upper right is tapped, the screen returns to the screen on which the recipe management application list shown in Figure 24 is displayed.

The tour includes five stages, and the last fifth stage is the completion of the tour, that is, the completion of a new recipe. The first stage is to set an extraction method, which is to set parameters related to the production method shown in (A) of Figure 15. The second stage is to input or select bean information, which is to set parameters related to the ingredient information shown in (A) of Figure 15. The third stage is to input or select barista information, which is to set parameters stored in the user information DB 1303b shown in (B) of Figure 15. The fourth stage is to create a recipe card.

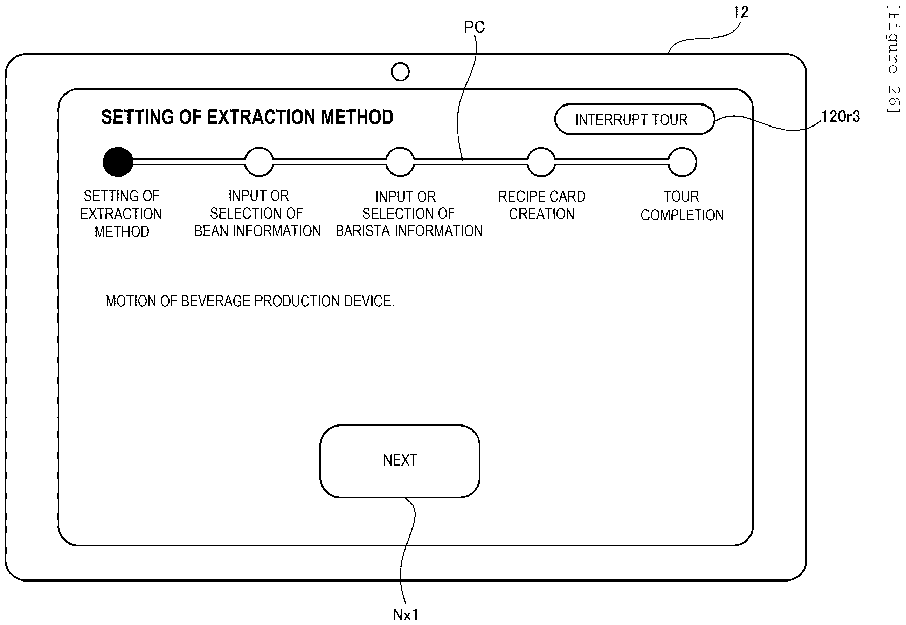

Figure 26 shows an explanatory screen for setting of an extraction method in the first stage.

The display part of the information display device 12 shown in Figure 26 displays a display screen on which the setting of the extraction method is displayed in characters. A progress degree chart PC is displayed on the display screen so as to know a progress state of the tour. From the progress degree chart PC shown in Figure 26, it can be seen at a glance that the current stage is the first stage. As an explanatory text for the setting of the extraction method in the first stage, "motion of beverage production device" is displayed. Although the explanatory text is described so as to be easily understood by the user, the "motion of beverage production device" is determined by various parameters related to the production method. The recipe includes various parameters related to the production method, and a collection of various parameters related to the production method ("production method" shown in (A) of Figure 15) corresponds to the parameters constituting the recipe. Therefore, the explanatory text "motion of beverage production device" for the setting of the extraction method corresponds to an explanation for the parameter.

In the explanatory screen shown in Figure 26, when an interruption icon Si1 arranged at the upper right corner is tapped, the tour is interrupted. When a next icon Nx1 arranged at the bottom is tapped, the screen shifts to an input screen of the parameters related to the production method.

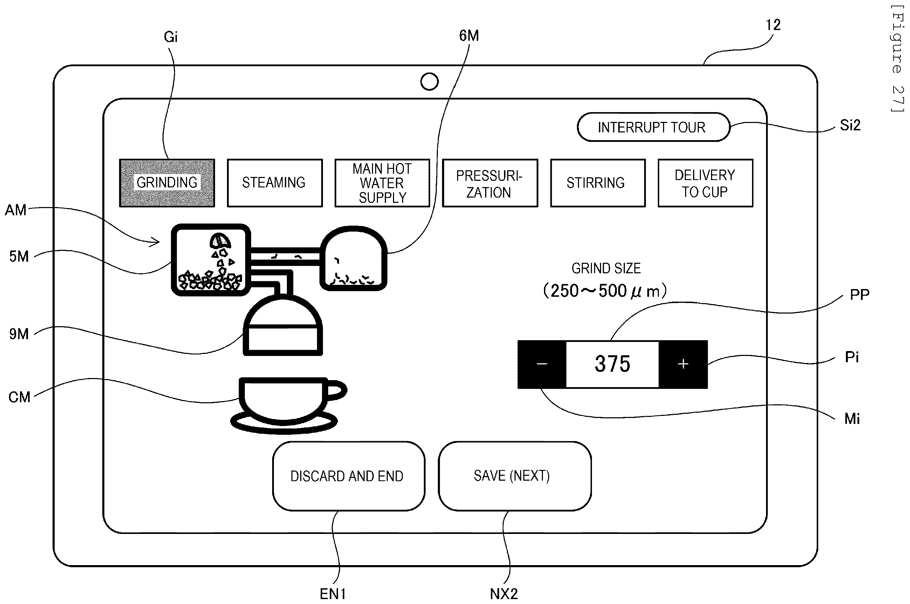

Figure 27 shows a screen for inputting a grind size of beans, which is one of parameters for grinding.

The input of the parameters related to the production method in the tour is divided into six steps of grinding, steaming, main hot water supply, pressurization, stirring, and delivery to cup. In the input of the parameters for grinding, an amount (g) of beans, a grind size (µm) of beans, and chaff removal strength (chaff removal rate) (%) are input. On the display part of the information display device 12 shown in Figure 27, it is notified that the parameters for grinding are currently being input by changing the color of a grinding icon Gi. An animation AM representing a part of the beverage production device 1 shown in Figure 1 in a schematic diagram is displayed on the left side of the screen. In the animation AM, a schematic diagram 5M of the pulverizing device 5 shown in Figure 2, a schematic diagram 6M of the separation device 6, a schematic diagram 9M of the extraction container 9, and a schematic diagram CM of the cup C shown in Figure 3 are displayed. In the screen shown in Figure 27, a state in which coffee beans are being pulverized in the schematic diagram 5M of the pulverizing device 5 is displayed, and it is also notified by the animation AM that the parameters for grinding are being input. In addition, in the display part of the information display device 12 shown in Figure 27, the input of the amount of beans is finished, and the grind size of beans is being input. It is displayed on the right side of the screen that an input possible range of the grind size is 250 um or more and 500 um or less, and below the range, a minus icon Mi and a plus icon Pi are displayed with a parameter display PP interposed therebetween, the parameter being a current input value. When the minus icon mi is tapped once, the parameter display PP becomes a value decremented by 1, and when the plus icon pi is tapped once, the parameter display PP becomes a value incremented by 1. The user taps the minus icon Mi or the plus icon Pi to input a desired value for the grind size parameter within the input possible range.

A screen for receiving input of the parameters shown in Figure 27 does not display the explanation of the parameters. However, for example, the explanatory text "motion of beverage production device" shown in Figure 26 may be displayed on the screen shown in Figure 27, and an explanatory text "ground size of beans in pulverizing device" of an individual parameter may be displayed.

In the input screen of the parameters, an interruption icon Si2 is arranged at the upper right corner, and an end icon EN1 and a save icon NX2 are arranged at the bottom. When the interruption icon Si2 is tapped, the tour is interrupted, and the parameters input or selected on the displayed screen are stored in the storage part 1303 of the server 1201 (corresponding to the server 16 shown in Figure 21) or the database constructed in the storage part 121b of the information display device 12 (the same applies to the following description). When the end icon EN1 is tapped, the tour can be ended without saving the parameters input or selected on the displayed screen in the database (the same applies to the following description). When the save icon NX2 is tapped, the parameters input or selected on the displayed screen are saved in the database as set values, and the screen is shifted to the next screen (the same applies to the following description). The screen subsequent to the screen shown in Figure 27 is an input screen of parameters for steaming. In the input of the parameter for steaming, an amount of hot water for steaming (g) and steaming time (seconds) for steaming beans are input.

The description of an input screen of parameters after the steaming is omitted, but in the input of parameters in the main hot water supply, an amount of hot water for extraction (amount of hot water for pouring) (g) which is the total amount of hot water, the amount of first main hot water supply (g), and waiting time (seconds) after the first main hot water supply are input. In the input of parameters for pressurization, an extraction pressure (bar), extraction time (seconds), a pressure (bar) at the first decompression, and waiting time (seconds) after the first decompression are input. In the input of parameters for stirring, stationary time before rotation (seconds), a shaking pattern, and stationary time after rotation (seconds) are input. In the input of parameters for delivery to cup, a delivery pressure (bar) is input. There are other parameters related to the production method, and in the tour, a smaller number of parameters are input than the number of parameters used to create a new recipe by the recipe management application of the expert to be described later. On the other hand, in the tour, a larger number of parameters are input than the number of parameters used to create a new recipe by the recipe management application of the standard to be described later. In the tour, the same number of parameters as the number of parameters used to create a new recipe by the recipe management application of the standard may be input, or a smaller number of parameters may be input.

When the setting of the extraction method is completed, a response sentence "the setting of the extraction method is completed" may be displayed or an explanatory sentence "the setting of the motion of the beverage production device is completed" may be displayed on the display part of the information display device 12. Note that the display of "motion of beverage production device" shown in Figure 26 may not be performed first, and an explanatory text "the setting of the motion of the beverage production device is completed" may be displayed after completion.

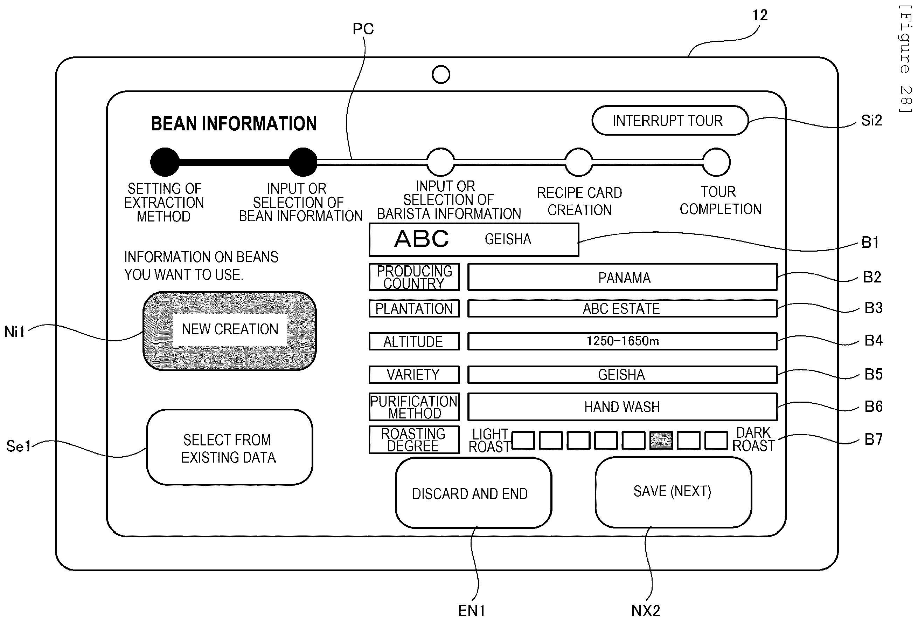

Figure 28 shows a screen for input of bean information in the second stage.

The display part of the information display device 12 shown in Figure 28 displays a display screen on which the bean information is displayed in characters. The progress degree chart PC is also displayed on the display screen, and it can be seen at a glance that the current stage is the second stage. As an explanatory text for the input or selection of the bean information in the second stage, "information on beans you want to use" is displayed. Here, the explanatory text is described so as to be easily understood by the user, but the "information on beans you want to use" is determined by various parameters related to the ingredient information. The recipe includes various parameters related to the ingredient information, and a collection of various parameters related to the ingredient information ("ingredient information" shown in (A) of Figure 15) corresponds to the parameters constituting the recipe. Therefore, the explanatory text "information on beans you want to use" for the input or selection of the bean information also corresponds to an explanation for the parameter.

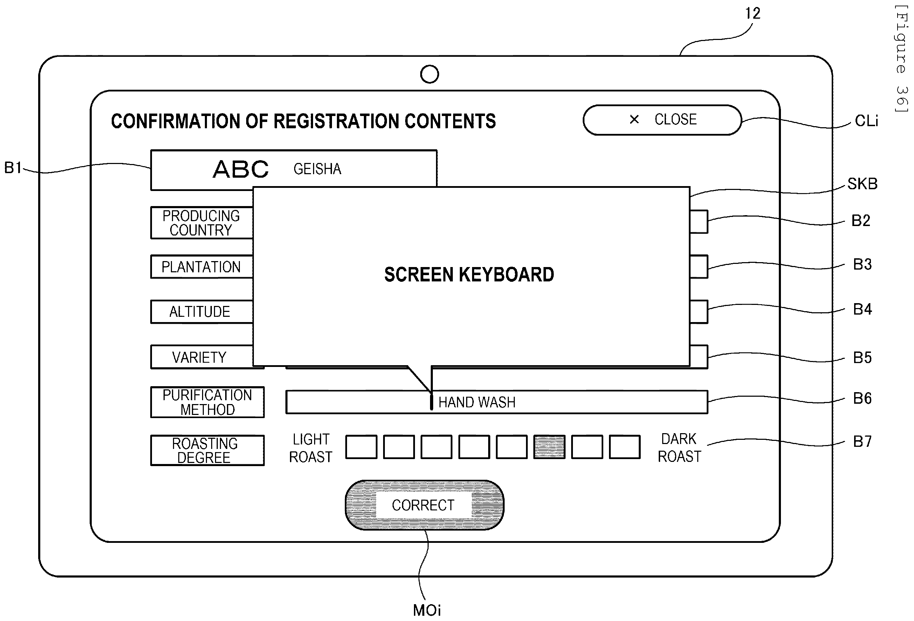

In the screen shown in Figure 28, a new creation icon Ni1 and a selection icon Se1 are arranged on the left side. The new creation icon Ni1 shown in Figure 28 is changed in color, notifying that the new creation icon Ni1 is tapped. When the new creation icon Ni1 is tapped, new creation is performed for the bean information. On the screen shown in Figure 28, an input field B1 for inputting a name of beans, an input field B2 for inputting a producing country of the beans, an input field B3 for inputting a plantation in which the beans are harvested, an input field B4 for inputting an altitude in which the beans are harvested, an input field B5 for inputting a variety of beans, and an input field B6 for inputting a purification method of the beans are displayed. In Figure 28, the input to all the input fields B1 to B6 is completed. When any one of the input fields to be input is tapped, a software keyboard (screen keyboard) appears on the display screen (see Figure 36), enabling character input. Below the input fields, a plurality of cells are arranged in a horizontal line, and there is provided a roasting degree display portion B7 that indicates the roasting degree of beans by a position of the tapped cell, in which cells on the left side indicate light roast and cells on the right side indicate dark roast.

As described above, on the screen shown in Figure 28, the display of the explanation of the parameter "information on beans you want to use" and the display for receiving the input of the parameters such as the input fields B1 to B6 for inputting the bean information and the roasting degree display portion B7 are displayed together. The display of the explanation of the parameter "motion of beverage production device" related to the production method shown in Figure 26 and the display for receiving the input of the parameters related to the production method shown in Figure 27 are displayed on different screens (at different timings), but may be displayed on the same screen (simultaneously) as the screen shown in Figure 28. The display of the explanation of the parameters shown in Figure 28 and the display for receiving the input of the parameters related to the ingredient information may be displayed on different screens (at different timings).

Also in the screen shown in Figure 28, the interruption icon Si2 is arranged at the upper right corner, and the end icon EN1 and the save icon NX2 are arranged at the bottom.

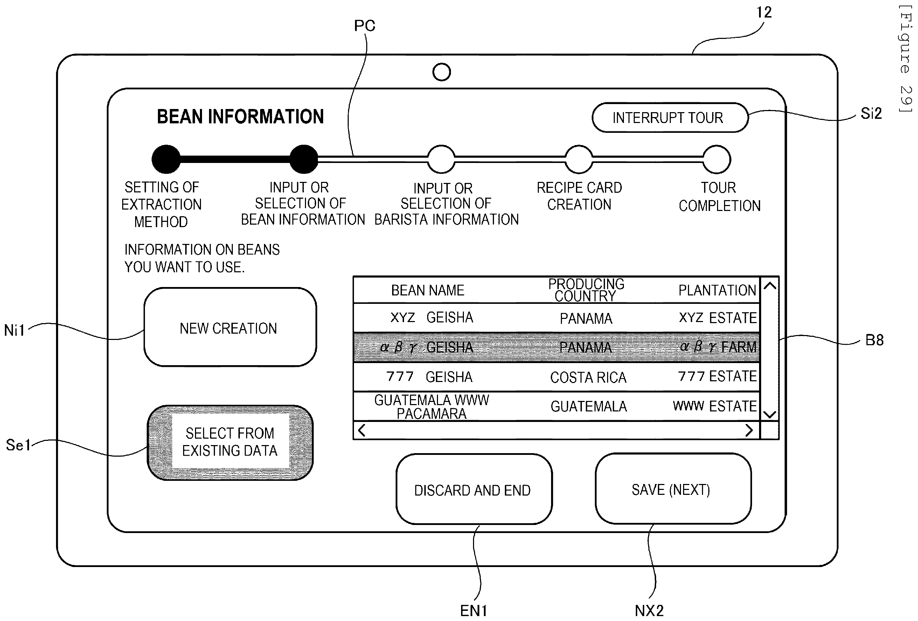

Figure 29 shows a screen for selection of the bean information in the second stage.

The progress degree chart PC is also displayed on the display part of the information display device 12 shown in Figure 29, and it can be seen at a glance that the current stage is the second stage. The explanation of the parameter "information on beans you want to use" is also displayed. In the screen shown in Figure 29, the color of the selection icon Se1 of the new creation icon Ni1 and the selection icon Se1 is changed, notifying that the selection icon Se1 is tapped. When the selection icon Se1 is tapped, the bean information is selected from existing data. The existing data is data including parameters such as a name of beans, a producing country of the beans, a plantation in which the beans are harvested, an altitude in which the beans are harvested, a variety of beans, a purification method of the beans, and a roasting degree of the beans. On the screen shown in Figure 29, an existing data display B8 is displayed in which the existing data is displayed in each row. In the existing data display B8 shown in Figure 29, the color of the second existing data from the top (existing data whose bean name is "αβγ Geisha") is changed, notifying that the existing data is selected. When the save icon NX2 shown in Figure 29 is tapped, each parameter included in the existing data selected on the displayed screen is saved in the database as a set value, and the screen shifts to a screen for input or selection of the barista information in the third stage.

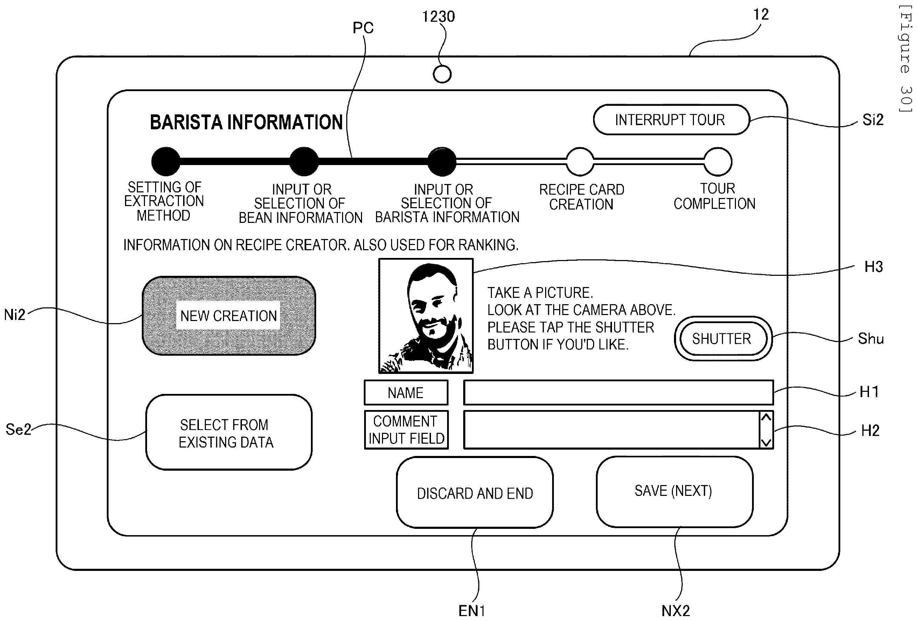

Figure 30 shows a screen for input of the barista information in the third stage.

The display part of the information display device 12 shown in Figure 30 displays a display screen on which the barista information is displayed in characters. The progress degree chart PC is also displayed on the display screen, and it can be seen at a glance that the current stage is the third stage. As an explanatory text for the input or selection of the barista information in the third stage, "Information on recipe creator. Also used for ranking." is displayed. "Also used for ranking" means that a parameter input or selected here is displayed in the ranking display described with reference to Figure 19. The recipe includes various parameters related to the recipe creator, and a collection of various parameters related to the recipe creator (one of which is the "designer" shown in (A) of Figure 15) corresponds to the parameters constituting the recipe. Therefore, the explanatory text "Information on recipe creator. Also used for ranking." for the input or selection of the barista information also corresponds to an explanation for the parameter.

Also in the screen shown in Figure 30, a new creation icon Ni2 and a selection icon Se2 are arranged on the left side. The new creation icon Ni2 shown in Figure 30 is changed in color, notifying that the new creation icon Ni2 is tapped. When the new creation icon Ni2 is tapped, new creation is performed for the barista information. On the screen shown in Figure 30, a character input field H1 for inputting a name of the recipe creator and a character input field H2 for inputting a comment of the recipe creator are displayed. In Figure 30, no input is made in the character input fields H1 and H2. When any one of the input fields to be input is tapped in the same manner as in the input of the bean information described above, a software keyboard (screen keyboard) appears on the display screen (see Figure 36), enabling character input. Further, on the screen shown in Figure 30, an image captured by a camera 1230 provided in the information display device 12 is displayed in an image input field H3. Next to the image input field H3, a sentence is displayed that prompts the user to tap a shutter button Shu to take a photograph and confirm a taken image.

As described above, on the screen shown in Figure 30, the display of the explanation of the parameter "Information on recipe creator. Also used for ranking." and the display for receiving the input of the parameters of the character input fields H1 and H2 for inputting the barista information and the image input field H3 are displayed together.

Also in the screen shown in Figure 30, the interruption icon Si2 is arranged at the upper right corner, and the end icon EN1 and the save icon NX2 are arranged at the bottom. When the save icon NX2 shown in Figure 30 is tapped, in addition to the name of the recipe creator, the comment of the recipe creator and the taken image input to the image input field H3 and confirmed by tapping the shutter button Shu are also saved in the database as the set values of the parameters and included in the recipe. Although the taken image may be stored separately from the recipe, the taken image is also stored in association with the recipe in this case.

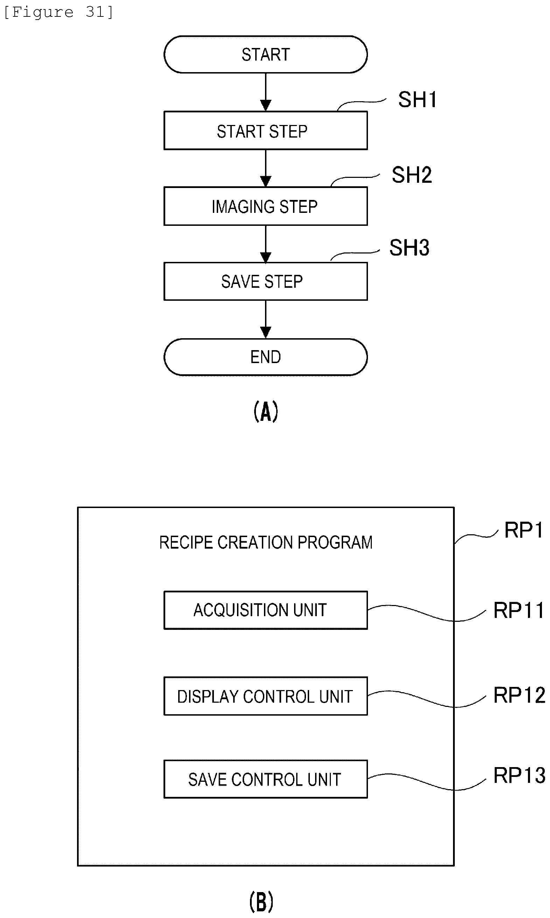

(A) of Figure 31 is a flowchart showing a recipe creation method in the screen for the input of the barista information shown in Figure 30.

In the recipe creation method, first, a start step (step SH1) of displaying the screen for the input of the barista information shown in Figure 30 on the display part of the information display device 12 is executed. As described above, the screen for the input of the barista information shown in Figure 30 corresponds to a recipe creation display screen used when creating a recipe, including the input of the parameters such as the name of the recipe creator and the comment of the recipe creator.

Next, in a state in which the screen for the input of the barista information shown in Figure 30 is displayed, an imaging step (step SH2) of imaging by the camera 1230 is executed. That is, the taken image is confirmed by tapping the shutter button Shu while displaying the image taken by the camera 1230 in the image input field H3 provided on the screen shown in Figure 30. In Figure 30, the recipe creator is imaged, but instead of the recipe creator, a person who introduces a recipe may be imaged, or a person who drinks a beverage of the recipe may be imaged. In addition, not only a person but also an object (for example, coffee beans in bean information of the recipe) may be imaged. Further, by pressing the shutter button Shu for a long time, not only a still image but also a moving image may be imaged. For example, the taken image may be a moving image for describing a plantation of coffee beans in the bean information of the recipe.

Subsequently, a save step (Step SH3) is executed by tapping the save icon NX2. In the saving step (Step SH3), the image taken in the imaging step (Step SH2) is stored in the storage part 1303 of the server 1201 (corresponding to the server 16 shown in Figure 21) described with reference to Figure 13 or the storage part 121b of the information display device 12 provided with the camera 1230 in association with the parameters such as the name of the recipe creator or the comment of the recipe creator.

The recipe creation technique described above can be used as software.

(B) of Figure 31 is a schematic diagram showing an outline of a recipe creation program.

A recipe creation program RP1 shown in (B) of Figure 31 is executed in the information display device 12 including the processing part 121a for executing the program, the camera 1230 for taking an image, and the display screen, and causes the information display device 12 to operate as a recipe creation device. The recipe creation program RP1 constructs, on the information display device 12, an acquisition unit RP11 configured to acquire a recipe used for a part or all of steps of beverage production, a display control unit RP12 configured to display a part or all of the recipe acquired by the acquisition unit RP11 on the display screen, and a save control unit RP13 configured to store the image taken by the camera 1230 in association with the recipe.

The save control unit RP13 saves the image taken by the camera 1230 in the storage part 1303 of the server 1201 (corresponding to the server 16 shown in Figure 21) or the storage part 121b of the information display device 12 in association with the recipe.

In the above description, described is "a beverage production device including:
an acquisition unit [for example, the information display device 12 or the processing part 121a] configured to acquire a recipe used for a part or all of steps of beverage production;
a processing unit (for example, the control device 11 or the processing part 11a) configured to execute a process [for example, a process of controlling opening and closing of various valves shown in Figure 3, a process of controlling a rotary blade in the pulverizing device 5, a process of controlling driving of the heater 72a, a process of controlling driving of the compressor 70, and the like] for producing a beverage with reference to parameters [for example, an amount of beans, a grind size of beans, an amount of hot water for steaming, steaming time, an amount of hot water for extraction (amount of hot water for pouring), an amount of first main hot water supply, an amount of second main hot water supply, an amount of pressurized hot water supply, extraction pressure, extraction time, stationary time before rotation, stationary time after rotation, delivery time, delivery pressure, a name of beans, a producing country of beans, a roasting degree of beans, a recipe creator, and the like] included in the recipe acquired by the acquisition unit;
a production unit [for example, the actuator group 14 shown in Figure 21 (the pulverizing device 5 and the extraction device 3 shown in Figure 3)] configured to operate in accordance with the process executed by the processing unit to produce a beverage; and
an imaging unit [for example, the camera 1230] configured to take an image, in which
the image taken by the imaging unit is saved in association with the recipe [for example, is saved in the storage part 1303 of the server 1201 (corresponding to the server 16 shown in Figure 21) or the storage part 121b of the information display device 12]".

It should be noted that the term "to produce a beverage" as used herein is broadly defined, and includes preparation before final production, production of an intermediate, and the like in addition to final production of a beverage.

Further, there may be a plurality of types of the production units, and the recipe may include parameters for each of the plurality of types of production units, or there may be the plurality of types of parameters for one production unit, and the recipe may include the plurality of types of parameters for one production unit.

The recipe may be downloaded from a server via a communication network. The restriction in this case may be prohibition of downloading.

The beverage production device may include an acquisition part "for example, the information display device 12 or the I/F part 11c" configured to acquire a recipe including a parameter, a processing part "for example, the actuator group 14 or the production part 18" configured to execute a process for producing a beverage, and a control part "for example, the control device 11 or the processing part 11a" configured to control the processing part according to the parameter included in the recipe acquired by the acquisition part.

The image saved in association with the recipe may be a still image or a moving image. For example, the image may be a moving image for describing the beverage (more specifically, a moving image for describing a plantation of coffee beans as an ingredient of the beverage).

The image saved in association with the recipe may be an image of a person or an image of an object (for example, coffee beans).

Described is also "the beverage production device including:
a display unit [for example, a display part of the information display device 12] configured to display a part or all of the recipe, in which
the display unit displays an image saved in association with the recipe in a state in which a part or all of the recipe is displayed [for example, displays the image Im in recipe information shown in Figure 23, or displays the image Im in the simply displayed recipes Re1, Re2, and Re3 shown in Figure 22]".

Described is also "the beverage production device including:
a display unit [for example, a display part of the information display device 12] configured to display a selection display [for example, a display of a recipe list shown in Figure 22] for selecting one beverage from a plurality of beverages, in which
the processing unit executes [for example, by tapping the extraction icon 120e shown in Figure 23] a process for producing a beverage with reference to a parameter included in a recipe of a beverage [for example, a beverage displayed with recipe information shown in Figure 23] selected in the selection display,
the display unit displays an image saved in association with a recipe of each beverage displayed in the selection display [for example, displays the image Im in the simply displayed recipes Re1, Re2, and Re3 shown in Figure 22]".

The display unit may display an image saved in association with a recipe of each beverage displayed in the selection display as an introducer of the recipe or as a person drinking the beverage.

Described is also "the beverage production device, in which
the display unit displays an image saved in association with a recipe of each beverage displayed in the selection display as a creator of the recipe [for example, displays the image Im together with a name of a barista in the simply displayed recipes Re1, Re2, and Re3 shown in Figure 22]".

Described is also "the beverage production device, in which
the production unit [for example, the extraction device 3 shown in Figure 3] is configured to process an extraction target,
the recipe includes information on the extraction target [for example, bean information], and
the display unit also displays the information on the extraction target [for example, a producing area display Rm, a name display Rb, and an roasting degree display Rr] included in a recipe of each beverage displayed in the selection display".

Described is also "the beverage production device, in which
the display unit also displays a price [for example, a price Pr of a coffee beverage] of each beverage displayed in the selection display".

The price of the beverage may be included in the recipe of the beverage or may be stored in the storage part separately from the recipe.

Described is also "the beverage production device, in which
the display unit displays a recipe creation display [for example, a creation display of a new recipe made by the recipe management application of the tour (Figures 24 to 37)] used when creating the recipe,
the imaging unit takes an image in a state in which the display unit displays the recipe creation display [for example, a state in which an input screen of barista information shown in Figure 30 is displayed), and
the image taken by the imaging unit in the state in which the display unit displays the recipe creation display is saved in association with a recipe completed using the recipe creation display [for example, is saved in the storage part 1303 of the server 1201 (corresponding to the server 16 shown in Figure 21) or the storage part 121b of the information display device 12]".

Described is also "the beverage production device including:
a storage unit configured to store the recipe [for example, the storage part 121b of the information display device 12], in which
the acquisition unit [for example, the processing part 121a of the information display device 12] acquires the recipe from the storage unit".

The beverage production device described above may be the beverage production device including "an acquisition unit configured to acquire a recipe used for a part or all of steps of beverage production;
a processing unit configured to execute a process for producing a beverage with reference to a parameter included in the recipe acquired by the acquisition unit;
a production unit configured to operate in accordance with the process executed by the processing unit to produce a beverage; and
an imaging unit configured to take an image, in which
the image taken by the imaging unit is included in the recipe and saved", and
the features of the beverage production device described above can be applied to the beverage production device.

The beverage production device described above may be "a device including: an acquisition unit configured to acquire a recipe used for a part or all of steps of beverage production; and an imaging unit configured to take an image, in which the image taken by the imaging unit is saved in association with the recipe", and the features of the beverage production device described above can be applied to the device.

Further, in the above description, described is "a recipe creation method [for example, the recipe creation method shown in Figure 31] including parameters [for example, an amount of beans, a grind size of beans, an amount of hot water for steaming, steaming time, an amount of hot water for extraction (amount of hot water for pouring), an amount of first main hot water supply, an amount of second main hot water supply, an amount of pressurized hot water supply, extraction pressure, extraction time, stationary time before rotation, stationary time after rotation, delivery time, delivery pressure, a name of beans, a producing country of beans, a roasting degree of beans, a recipe creator, and the like] for preparing a beverage in a beverage production device [for example, beverage production device 1] including a display unit [for example, a display part of the information display device 12] and an imaging unit [for example, the camera 1230], the recipe creation method including:
a starting step [for example, step SH1 shown in Figure 31] of starting, on the display unit, display of a recipe creation display used when creating the recipe, including input of the parameter;
an imaging step [for example, step SH2 shown in Figure 31] of taking an image by the imaging unit in a state in which the recipe creation display is displayed on the display unit; and
a save step [for example, step SH3 shown in Figure 31] of storing the image taken in the imaging step in a storage part in association with a recipe completed using the recipe creation display".

The imaging in the imaging step is performed by displaying a character display [for example, "Take a picture. Look at the camera above. Please tap the shutter button if you'd like." displayed on the input screen of the barista information shown in Figure 30] instructing imaging in the recipe creation display.

The imaging in the imaging step may image a person or an object. In a case of imaging a person, the person may be a person related to the currently created recipe, for example, a creator of the recipe or an introducer of the recipe. In a case of imaging an object, the object may be an ingredient (for example, coffee beans) of a beverage of the currently created recipe.

The storage unit in the saving step may be a storage unit in the beverage production device, or may be a server to be connected via a communication network.

Described is also "a recipe creation program [for example, the recipe creation program RP1 shown in (B) of Figure 31] executed in a device [for example, the information display device 12] including a processing part [for example, the processing part 121a] for executing the program and an imaging unit [for example, the camera 1230] for taking an image, the recipe creation program causing the device to operate as a recipe creation device, in which the recipe creation program is configured to construct, on the device:
an acquisition unit [for example, the acquisition unit RP11 shown in (B) of Figure 31] configured to acquire a recipe used for a part or all of steps of beverage production; and
a save control unit [for example, the save control unit RP13 shown in (B) of Figure 31] configured to save the image taken by the imaging unit in association with the recipe".

Described is also "the recipe creation program, in which the device includes a display unit [for example, the display part of the information display device 12], and
a display control unit [for example, the display control unit RP12 shown in (B) of Figure 31] configured to display a part or all of the recipe acquired by the acquisition unit on the display unit is constructed on the device".

In the above description, all of the constituent elements expressed as "unit" can be replaced with "part".

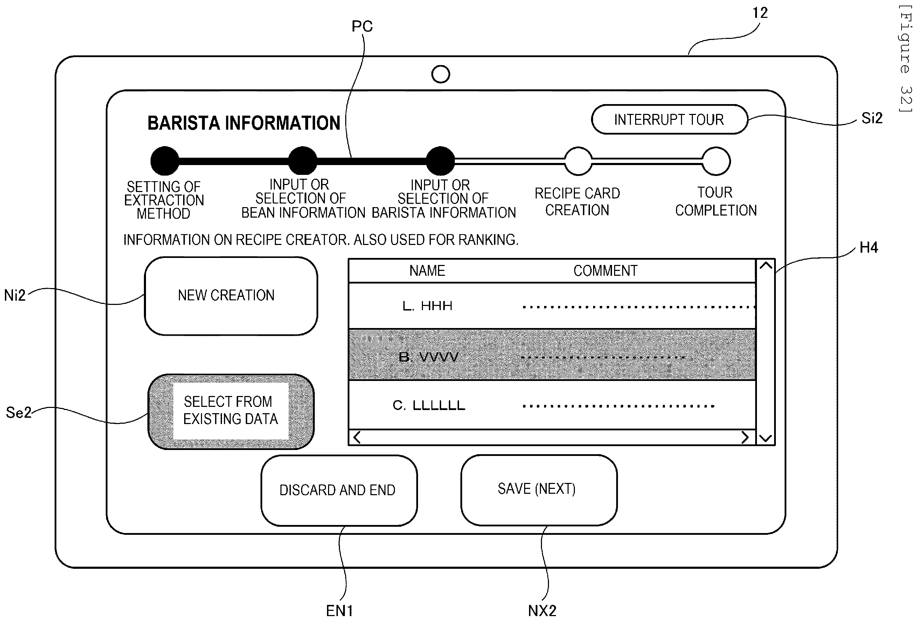

Figure 32 shows a screen for selection of the barista information in the third stage.

The progress degree chart PC is also displayed on the display part of the information display device 12 shown in Figure 32, and it can be seen at a glance that the current stage is the third stage. The explanation of the parameter "Information on recipe creator. Also used for ranking." is also displayed. In the screen shown in Figure 32, the color of the selection icon Se2 of the new creation icon Ni2 and the selection icon Se2 is changed, notifying that the selection icon Se2 is tapped. When the selection icon Se2 is tapped, the barista information is selected from existing data. The existing data includes parameters such as the name of the recipe creator, the comment of the recipe creator, and the taken image. On the screen shown in Figure 32, an existing data display H4 is displayed in which the existing data is displayed in each row. In the existing data display H4 shown in Figure 32, the color of the second existing data from the top (existing data whose recipe creator name is "B.VVVV") is changed, notifying that the existing data is selected. In the screen shown in Figure 32, the taken image is not displayed in the existing data display H4, but when a swipe operation is performed toward the right side, the taken image is displayed for each row. When the save icon NX2 shown in Figure 32 is tapped, each parameter included in the existing data selected on the displayed screen is saved in the database as a set value, and the screen shifts to a screen for recipe card creation in the fourth stage.

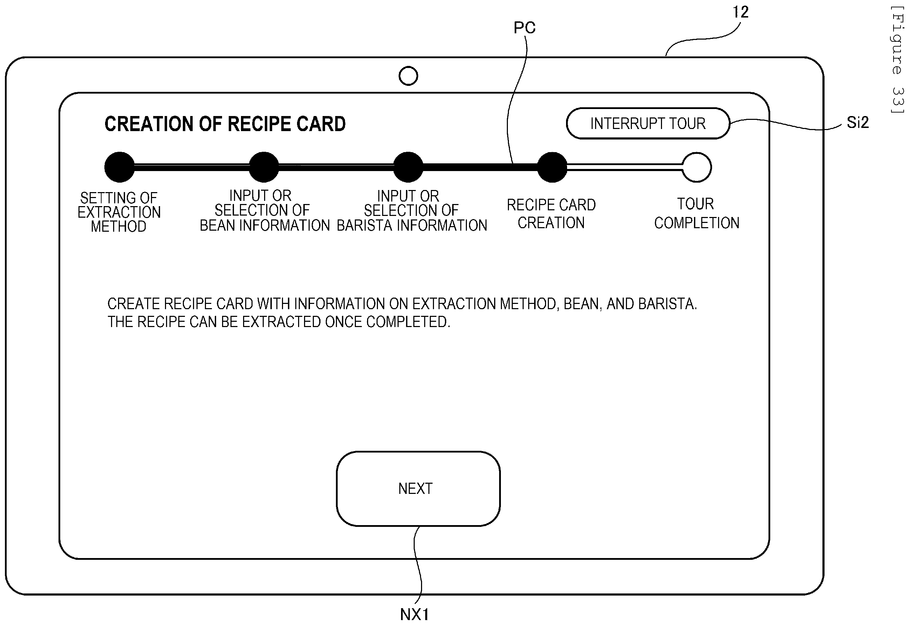

Figure 33 shows a start screen for recipe card creation in the fourth stage.

The display part of the information display device 12 shown in Figure 33 displays a display screen on which recipe card creation is displayed in characters. The progress degree chart PC is also displayed on the display screen, and it can be seen at a glance that the fourth stage has been reached. The screen shown in Figure 33 is a start screen for explaining that a recipe card is created. In the start screen, when an interruption icon Si1 arranged at the upper right corner is tapped, the tour is interrupted. When a next icon Nx1 arranged at the bottom is tapped, the screen shifts to an input screen of a recipe card.

Figure 34 shows an input screen of a recipe card.

The recipe card is a source of the recipe information described with reference to Figure 23. The recipe card displays a part of the parameters input so far, and also displays an input field of the parameters that can be input on the input screen. A recipe name input field R1 for inputting a recipe name is provided below the character display of the recipe card. The recipe name is a parameter input on the input screen of the recipe card. Below the recipe name input field R1, there are provided a bitterness display portion R2 that graphically represents bitterness of the coffee beverage produced in accordance with the recipe, and a sour taste display portion R3 that graphically represents a sour taste. Both the bitterness display portion R2 and the sour taste display portion R3 represent bitterness or sour taste at five levels by five cells R2s and R3s arranged on the circumference. When any cell is tapped, the number of the level corresponding to the position of the tapped cell is displayed in the center. In addition, the display mode of each cell changes clockwise up to the tapped cell.

Two icons Rih and Ric indicating the type 1 (whether the beverage is a hot beverage or an iced beverage) described with reference to Figure 15 are displayed on the upper right. When any one icon is tapped, the one icon lights up, and the other icon is grayed out. In Figure 34, the icon Rih indicating a hot beverage is tapped to light up, and the icon Ric indicating an iced beverage is grayed out. A size icon Ris representing a size of a cup is also displayed. When the size icon Ris is tapped, the type of the icon changes in the order of espresso size, S size, M size, L size, espresso size, S size, and so on. In Figure 34, the size icon Ris is M size. In addition, a pay icon Rip indicating that the recipe is a pay recipe is also displayed at the right end. When tapped, the pay icon Rip lights up. When tapped again, the pay icon Rip is grayed out. Further, when tapped, the pay icon Rip is changed to a disclosure prohibition icon, and when tapped once again, the pay icon Rip lights up, which is performed repeatedly. The recipe creator turns on the pay icon Rip in a case where the recipe creator wants to make a recipe public as a pay recipe with a production restriction that the recipe cannot be used for producing a coffee beverage without charging. The pay icon Rip shown in Figure 34 is turned on. On the other hand, when it is desired to make a recipe public as a free recipe so as to be widely enjoyed in any store, the pay icon Rip is turned off. In a case where it is not desired to be used for producing a coffee beverage even if the charging is performed, the disclosure prohibition icon is displayed.

Below these icons, some of the parameters of the bean information already set in the input or selection of the bean information described with reference to Figures 28 and 29 are displayed. That is, a bean producing country display field R4, a bean name display field R5, and a roasting degree display portion R6 are provided and displayed.

Further, a comment display field R7 is provided below the above fields. The comment display field R7 displays the comment of the recipe creator set in the input or selection of the barista information described with reference to Figure 30 or Figure 32.

An image display portion R8 is provided below the bitterness display portion R2, and a recipe creator name display field R9 is provided beside the image display portion R8. In the image display portion R8, the taken image set in the input or selection of the barista information described with reference to Figure 30 or Figure 32 is displayed, and in the recipe creator name display field R9, the name of the recipe creator similarly set in the input or selection of the barista information is displayed.

A recipe creator introduction input field R10 is prepared below the recipe creator name display field R9. The introduction of the recipe creator is a parameter input on the input screen of the recipe card. Also in the case of inputting characters in the recipe name input field R1 or the case of inputting characters in the introduction input field R10, when the input field is tapped, a software keyboard (screen keyboard) appears on the display screen (see Figure 36), enabling character input.

As described above, the parameters input on the input screen of the recipe card shown in Figure 34 for the first time are the recipe name in the recipe name input field R1, the introduction of the recipe creator in the introduction input field R10, the bitterness of the coffee beverage in the bitterness display part R2, the sour taste of the coffee beverage in the sour taste display part R3, the type 1 with the icon Rih of the hot beverage and the icon Ric of the iced beverage, the size of the coffee beverage according to the size icon Ris, and whether the recipe is charged according to the pay icon Rip, or the disclosure prohibition according to the disclosure prohibition icon. The type 2 (type information indicating a flavor of a beverage) described with reference to Figure 15 may be input on the input screen.

Also in the input screen shown in Figure 34, the interruption icon Si2 is arranged at the upper right corner, and the end icon EN1 and the save icon NX2 are arranged at the bottom. When the save icon NX2 shown in Figure 34 is tapped, the recipe name and the introduction of the recipe creator are saved in the database as the set values of the parameters and included in the recipe. In addition, the bitterness and the sour taste of the coffee beverage are saved in the database as type 3 following the type 2 shown in (A) of Figure 15, the distinction between the hot and the iced beverages is saved in the database as the type 1, the size of the coffee beverage is saved in the database as type 4, and the distinction between paid recipes and non-paid recipes and the disclosure prohibition are saved in the database as type 5, which are included in the recipe. The screen shifts to a confirmation screen of registration contents.

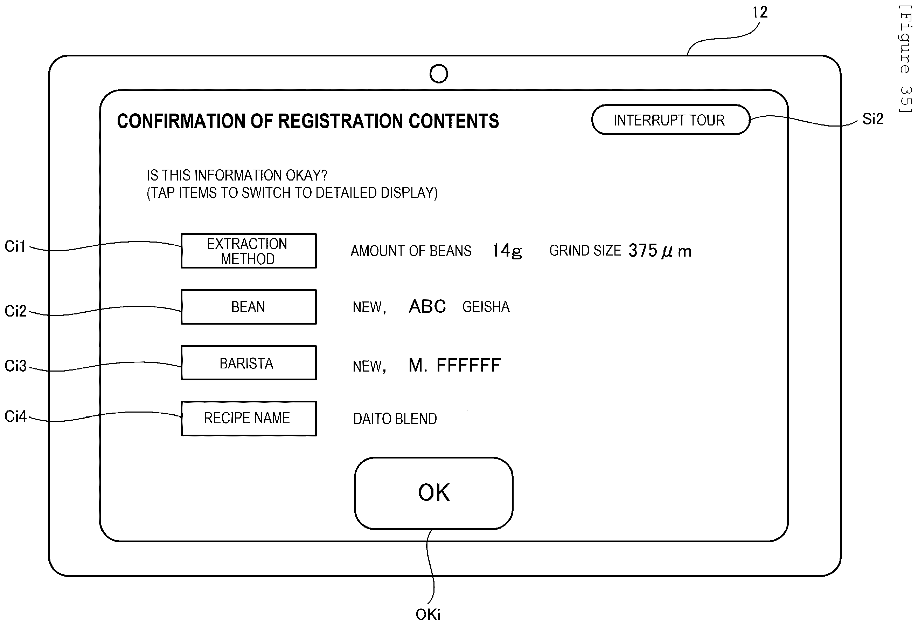

Figure 35 shows a confirmation screen of registration contents.

The display part of the information display device 12 shown in Figure 35 displays an extraction method icon Ci1, a bean information icon Ci2, a barista information icon Ci3, and a recipe name icon Ci4 corresponding to the first to fourth stages of the tour, respectively. Values of the amount of beans and the grind size, which are input and set in the database in the setting of the extraction method described with reference to Figure 27, are displayed beside the extraction method icon Ci1. The name of the bean set in the database in the input or selection of the bean information described with reference to Figures 28 and 29 are displayed beside the bean information icon Ci2. Whether the bean information is newly created or selected from existing data is also displayed, and in Figure 35, "new" indicating that the bean information is newly created is displayed. The name of the recipe creator set in the database in the input or selection of the barista information described with reference to Figures 30 and 32 is displayed beside the barista icon Ci3. In this case as well, whether the barista information is newly created or selected from existing data is also displayed, and in Figure 35, "new" indicating that the barista information is newly created is displayed. The recipe name input on the input screen of the recipe card described with reference to Figure 34 is displayed beside the recipe name icon Ci4. As also displayed on the confirmation screen shown in Figure 35, when the extraction method icon Ci1, the bean information icon Ci2, the barista information icon Ci3, and the recipe name icon Ci4 are tapped, the screen is switched to a detailed display.

Figure 36 shows a detailed display screen displayed by tapping the bean information icon Ci2 shown in Figure 35.

On the screen of the detailed display shown in Figure 36, the same display as the display for receiving the input of the parameters such as the input fields B1 to B6 for inputting the bean information and the roasting degree display portion B7 displayed in the input screen of the bean information shown in Figure 28 is displayed. In Figure 36, a software keyboard (screen keyboard) SKB appears by tapping the input field B6 for inputting a purification method of beans), enabling character input. When a correction icon MOi prepared at the bottom is tapped, contents corrected on the detailed display screen are overwritten in the database and saved. On the other hand, in a case where the confirmation is finished and the correction is not performed, when a close icon CLi prepared in the upper right is tapped, the screen of the detailed display shown in Figure 36 returns to the confirmation screen of the registration content shown in Figure 35.

Also in the confirmation screen shown in Figure 35, the interruption icon Si2 is arranged at the upper right corner. An OK icon OKi is arranged at the bottom. When the OK icon OKi is tapped, the screen shifts to a recipe registration completion screen.

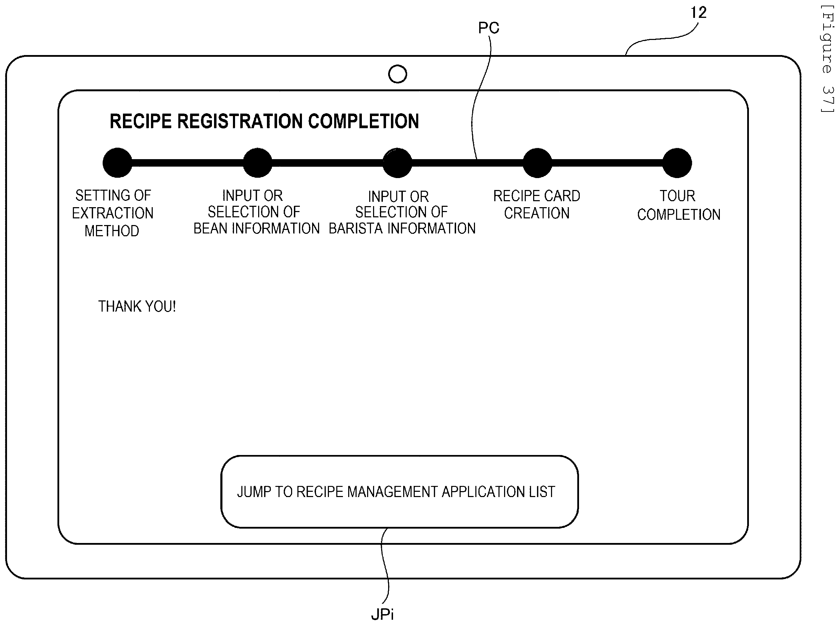

Figure 37 shows a recipe registration completion screen.

The display part of the information display device 12 shown in Figure 37 displays a display screen on which recipe registration completion is displayed in characters. The progress degree chart PC is also displayed on the display screen, and it can be seen at a glance that the tour completion of the fifth stage has been reached. A jump icon JPi is arranged at the bottom of the recipe registration completion screen. When the jump icon JPi is tapped, the screen shifts to a screen on which the recipe management application list shown in Figure 24 is displayed.

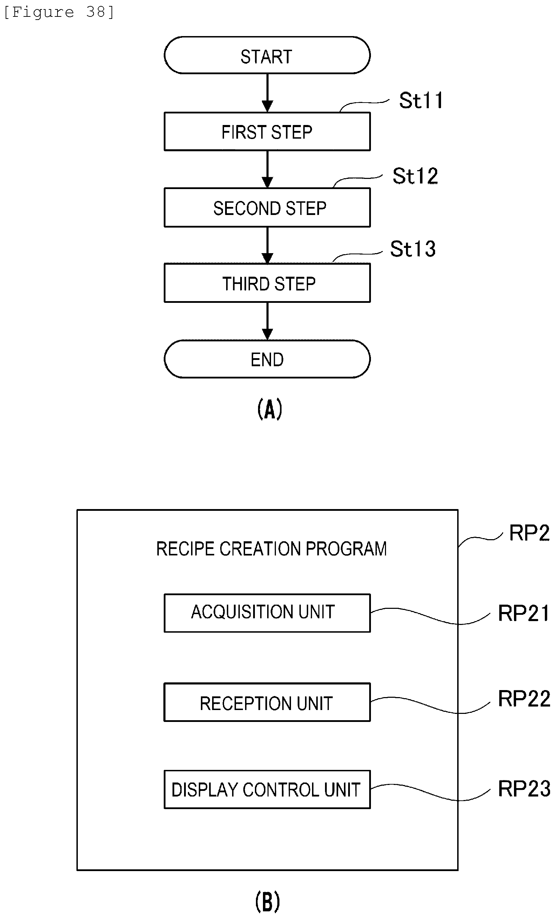

A summary of the characteristic points of the recipe creation method in the tour described above is as shown in (A) of Figure 38.

(A) of Figure 38 is a flowchart showing a characteristic recipe creation method in the tour.

In the recipe creation method shown in (A) of Figure 38, first, a first step St11 is executed. In the first step St11, the parameters related to the production method shown in (A) of Figure 15 are explained on the display part of the information display device 12. Specifically, "motion of beverage production device" is displayed in characters on the explanatory screen shown in Figure 26. Next, the input of various parameters of the production method is received. Specifically, as shown in Figure 27, the screen for receiving the input of a parameter such as a grind size of beans is displayed. In the first step St11, the description of the parameters and the input reception of the parameters are performed on different screens.

Next, the second step St12 is executed. The second step St12 is a step relating to bean information. The bean information corresponds to the ingredient information shown in (A) of Figure 15. In the second step St12, the input screen of the bean information shown in Figure 28 is displayed. On the input screen, the display of the explanation of the parameter "information on beans you want to use" and the display for receiving the input of the parameters such as the input fields B1 to B6 for inputting the bean information and the roasting degree display portion B7 are displayed on the same screen.

Finally, the third step St13 is executed. The third step St13 is a step relating to the barista information. The barista information corresponds to information on the designer or the like shown in (A) of Figure 15. In the third step St13, the input screen of the barista information shown in Figure 30 is displayed. On the input screen, the display of the explanation of the parameter "Information on recipe creator. Also used for ranking." and the display for receiving the input of the parameters of the character input fields H1 and H2 for inputting the barista information and the image input field H3 are displayed on the same screen.

In the recipe creation method described above, when the input of a parameter is received and the process proceeds to the next step, the received parameter is saved. In the recipe creation method, only some of parameters that can be input in the recipe creation of the expert to be described later are input and saved. Parameters other than those input here are automatically input by the processing part 121a shown in Figure 21 according to the input parameter values or standard values, and then the recipe is completed. For example, in the input of the parameters of the production method in the second step St12 shown in (A) of Figure 38, only the amount of hot water for extraction (amount of hot water for pouring) which is the total amount of hot water and the amount of first main hot water supply are input, and the amount of second main hot water supply and the like are not input. However, the processing part 121a shown in Figure 21 calculates the amount of second main hot water supply from the input amount of hot water for extraction and the input amount of first main hot water supply, and stores the amount of second main hot water supply in the storage part 1303 of the server 1201 (corresponding to the server 16 shown in Figure 21) described using Figure 13 or the storage part 121b of the information display device 12.

The recipe creation technique described above can be used as software.

(B) of Figure 38 is a schematic diagram showing an outline of a recipe creation program.

A recipe creation program RP2 shown in (B) of Figure 38 is executed in the information display device 12 including the processing part 121a for executing the program and the display screen, and causes the information display device 12 to operate as a recipe creation device. The recipe creation program RP2 constructs, on the information display device 12, an acquisition unit RP21 configured to acquire a recipe used for a part or all of steps of beverage production, a reception unit RP22 configured to receive an input of a parameter included in the recipe on the display screen, and a display control unit RP23 configured to display a part or all of the recipe acquired by the acquisition unit RP21 on the display screen, and causes the information display device 12 to execute a recipe creation operation of receiving an explanation of a first parameter included in the recipe by the display screen and an input of the first parameter by the reception unit, and then receiving an explanation of a second parameter included in the recipe by the display unit and an input of the second parameter by the reception unit.

In the above description, described is "a beverage production device including:
an acquisition unit [for example, the information display device 12 or the processing part 121a] configured to acquire a recipe used for a part or all of steps of beverage production;
a processing unit (for example, the control device 11 or the processing part 11a) configured to execute a process [for example, a process of controlling opening and closing of various valves shown in Figure 3, a process of controlling a rotary blade in the pulverizing device 5, a process of controlling driving of the heater 72a, a process of controlling driving of the compressor 70, and the like] for producing a beverage with reference to parameters [for example, an amount of beans, a grind size of beans, an amount of hot water for steaming, steaming time, an amount of hot water for extraction (amount of hot water for pouring), an amount of first main hot water supply, an amount of second main hot water supply, an amount of pressurized hot water supply, extraction pressure, extraction time, stationary time before rotation, stationary time after rotation, delivery time, delivery pressure, a name of beans, a producing country of beans, a roasting degree of beans, a recipe creator, and the like] included in the recipe acquired by the acquisition unit;
a production unit [for example, the actuator group 14 shown in Figure 21 (the pulverizing device 5 and the extraction device 3 shown in Figure 3)] configured to operate in accordance with the process executed by the processing unit to produce a beverage;
a reception unit [for example, the reception part 122 shown in Figure 21] configured to receive an input of a parameter included in the recipe; and
a display unit [for example, the display part of the information display device 12] configured to display information, in which
the beverage production device is configured to execute a recipe creation operation [for example, creation of a new recipe by the recipe management application in the tour] of receiving an explanation [for example, an explanation of "motion of beverage production device" displayed on the screen shown in Figure 26] of a first parameter [for example, the parameter related to the production method shown in (A) of Figure 15] included in the recipe by the display unit and an input [for example, an input on the screen shown in Figure 27] of the first parameter by the reception unit, and then receiving an explanation [for example, an explanation of "information on beans you want to use" displayed on the screen shown in Figure 28] of a second parameter [for example, the parameter related to the ingredient information shown in (A) of Figure 15] included in the recipe by the display unit and an input of the second parameter [for example, an input on the screen shown in Figure 28] by the reception unit".

It should be noted that the term "to produce a beverage" as used herein is broadly defined, and includes preparation before final production, production of an intermediate, and the like in addition to final production of a beverage.

Further, there may be a plurality of types of the production units, and the recipe may include parameters for each of the plurality of types of production units, or there may be the plurality of types of parameters for one production unit, and the recipe may include the plurality of types of parameters for one production unit.

The recipe may be downloaded from a server via a communication network. The restriction in this case may be prohibition of downloading.

The beverage production device may include an acquisition part "for example, the information display device 12 or the I/F part 11c" configured to acquire a recipe including a parameter, a processing part "for example, the actuator group 14 or the production part 18" configured to execute a process for producing a beverage, and a control part "for example, the control device 11 or the processing part 11a" configured to control the processing part according to the parameter included in the recipe acquired by the acquisition part.

Described is also "the beverage production device, in which
the display unit displays, when the reception unit receives the input of the parameter, a display [for example, a display PP of the parameter as a current input value shown in Figure 27] indicating that the input of the parameter is received".

The display indicating that the input of the parameter is received may be an input value of the parameter or may be a display indicating that "the input is received".

Described is also "the beverage production device, in which
a display of the explanation of the first parameter by the display unit and a display indicating that the input of the first parameter is received by the display unit are simultaneously displayed (for example, displayed on the screen as shown in Figure 28)".

Described is also "the beverage production device, in which
the display of the explanation of the first parameter by the display unit and the display indicating that the input of the first parameter is received by the display unit may be displayed at different timings [for example, the display of the explanation of the parameter related to the production method shown in Figure 26 and the display of the input of the parameter related to the production method shown in Figure 27 are displayed on different screens]".

The display of the explanation of the first parameter may be displayed first, and the display indicating that the input of the first parameter is received may be displayed later. Alternatively, on the contrary, the display indicating that the input of the first parameter is received may be displayed first, and the display of the explanation of the first parameter may be displayed later.

A display of the explanation of the second parameter by the display unit and a display indicating that the input of the second parameter by the display unit is received may be displayed simultaneously or at different timings. The display of the explanation of the first parameter and the display indicating that the input of the first parameter is received may be simultaneously displayed, while the display of the explanation of the second parameter and the display indicating that the input of the second parameter is received may be displayed at different timings.

Described is also "the beverage production device, in which
the recipe creation operation is an operation executed from start of recipe creation to completion of the recipe through a plurality of stages (for example, 5 stages), and
the display unit displays a progress degree indicating to which stage of the plurality of stages the recipe creation operation is currently proceeding [for example, displays the progress degree chart PC shown in Figure 28 or the like]".

The recipe creation operation may be an operation performed in a certain stage among the plurality of stages, or may be an operation performed across two stages among the plurality of stages.

The beverage production device described above may be "a device including: an acquisition unit configured to acquire a recipe used for a part or all of steps of beverage production; a reception unit configured to receive an input of a parameter included in the recipe; and a display unit configured to display information, in which the device is configured to execute a recipe creation operation of receiving an explanation of a first parameter included in the recipe by the display unit and an input of the first parameter by the reception unit, and then receiving an explanation of a second parameter included in the recipe by the display unit and an input of the second parameter by the reception unit", and the features of the beverage production device described above can be applied to the device.

Further, in the above description, described is "a recipe creation method including a process [for example, a process of controlling opening and closing of various valves shown in Figure 3, a process of controlling a rotary blade in the pulverizing device 5, a process of controlling driving of the heater 72a, a process of controlling driving of the compressor 70, and the like] for producing a beverage with reference to parameters [for example, an amount of beans, a grind size of beans, an amount of hot water for steaming, steaming time, an amount of hot water for extraction (amount of hot water for pouring), an amount of first main hot water supply, an amount of second main hot water supply, an amount of pressurized hot water supply, extraction pressure, extraction time, stationary time before rotation, stationary time after rotation, delivery time, delivery pressure, a name of beans, a producing country of beans, a roasting degree of beans, a recipe creator, and the like] for producing a beverage in the beverage production device provided with the reception unit [for example, the reception part 122 shown in Figure 21] and the display unit [for example, the display part of the information display device 12], the recipe creation method including:
a first step [for example, the first step St11 shown in Figure 38] of displaying an explanation of a first parameter [for example, the parameter related to the production method shown in (A) of Figure 15] included in the recipe by the display unit [for example, displaying the explanation "motion of beverage production device" displayed on the screen shown in Figure 26] and receiving an input of the first parameter by the reception unit [for example, receiving the input on the screen shown in Figure 27]; and
a second step [for example, the second step St12 shown in Figure 38] of displaying an explanation of a second parameter [for example, the parameter related to the ingredient information shown in (A) of Figure 15] included in the recipe by the display unit [for example, displaying the explanation "information on beans you want to use" displayed on the screen shown in Figure 28] and receiving an input of the second parameter by the reception unit [for example, receiving the input on the screen shown in Figure 28]".

Described is also "the recipe creation method, in which
the first step is a step of performing, by the display unit, a display [for example, a display PP of the parameter as a current input value shown in Figure 27] indicating that the input of the first parameter is received when the reception unit receives the input of the first parameter, and
the second step is a step of performing, by the display unit, a display [for example, a display of the input fields B1 to B6 and the roasting degree display portion B7 shown in Figure 28] indicating that the input of the second parameter is received when the reception unit receives the input of the second parameter".

Described is also "the recipe creation method, in which
at least one of the first step and the second step is a step in which an input of a parameter is received in a state in which an explanation of the parameter is displayed [for example, displayed on the same screen as shown in Figure 28]."

Described is also "the recipe creation method, in which
at least one of the first step and the second step is a step in which an explanation of a parameter is displayed first, and an input of the parameter is received after an explanation display of the parameter is completed [for example, the display of the explanation of the parameter related to the production method shown in Figure 26 is displayed, and after the display of the explanation is completed, the display indicating that the input of the parameter related to the production method shown in Figure 27 is received is displayed]".

For example, the first step may be a step of receiving the input of the first parameter in a state in which the explanation of the first parameter is displayed, and the second step may be a step of receiving the input of the second parameter in a state in which the explanation of the second parameter is displayed. The first step may be a step in which the explanation of the first parameter is displayed first, and the input of the first parameter is received after an explanation display of the first parameter is completed, and the second step may be a step in which the explanation of the second parameter is displayed first, and the input of the second parameter is received after an explanation display of the second parameter is completed. The first step may be a step of receiving the input of the first parameter in a state in which the explanation of the first parameter is displayed, and the second step may be a step in which the explanation of the second parameter is displayed first, and the input of the second parameter is received after an explanation display of the second parameter is completed. The first step may be a step in which the explanation of the first parameter is displayed first, and the input of the first parameter is received after an explanation display of the first parameter is completed, and the second step may be a step of receiving the input of the second parameter in a state in which the explanation of the second parameter is displayed.

Described is also "a recipe creation program [for example, the recipe creation program RP1 shown in (B) of Figure 38] executed in a device [for example, the information display device 12] including a processing part [for example, the processing part 121a] for executing the program and a display unit [for example, the display part of the information display device 12], the recipe creation program causing the device to operate as a recipe creation device, in which the recipe creation program is configured to construct, on the device:
an acquisition unit [for example, the acquisition unit RP21 shown in (B) of Figure 38] configured to acquire a recipe used for a part or all of steps of beverage production;
a reception unit [for example, the reception unit RP22 shown in Figure (B) of Figure 38] configured to receive an input of a parameter included in the recipe; and
a display control unit [for example, the display control unit RP23 shown in (B) of Figure 38] configured to cause the display unit to display a part or all of the recipe acquired by the acquisition unit, and causes the device to execute a recipe creation operation of receiving an explanation of a first parameter included in the recipe by the display unit and an input of the first parameter by the reception unit, and then receiving an explanation of a second parameter included in the recipe by the display unit and an input of the second parameter by the reception unit".

In the above description, all of the constituent elements expressed as "unit" can be replaced with "part".

Next, the recipe management application of the expert will be described. When the expert icon 120ei shown in Figure 24 is tapped, the display part of the information display device 12 displays a table in which the parameter name and a set value thereof are displayed in each row, and the software keyboard (screen keyboard) SKB shown in Figure 36.

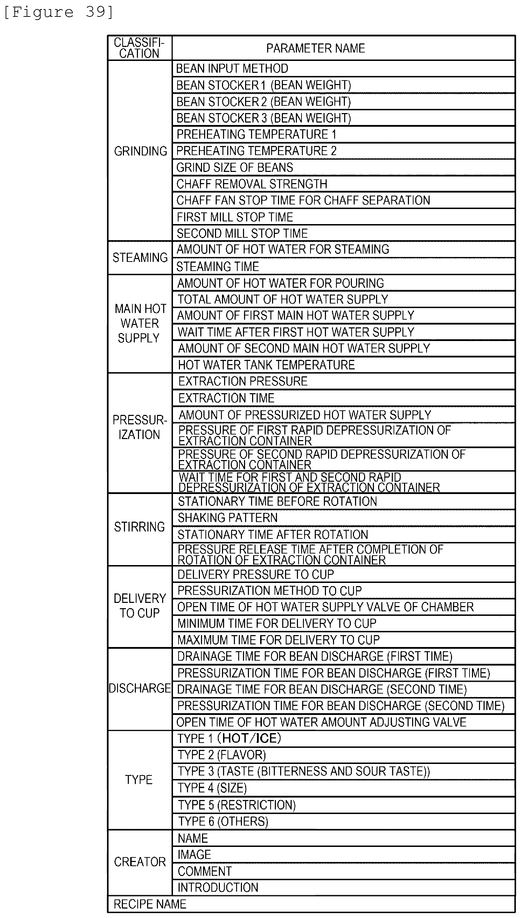

Figure 39 shows parameter names that can be input in the recipe creation of the expert.

In the recipe creation using the recipe management application of the expert, even parameters that cannot be input in the recipe creation using the recipe management application of the tour can be input. The parameter names shown in Figure 39 are an example of the parameter names that can be input in the recipe creation of the expert, and more parameters may be input.

In the recipe creation of the expert, each parameter excluding the parameter of the image of the creator is directly input by operating the screen keyboard SKB. The image of the creator is an image taken by the camera 1230 provided in the information display device 12. The input is not limited to the direct input by operating the screen keyboard SKB, and the selection input from a pulldown list may be used.

In the recipe creation of the expert, an assist function capable of switching on and off is provided. When the assist function is turned off, the recipe is not completed unless all the parameters shown in Figure 39 are input. On the other hand, when the assist function is turned on, if a parameter required to be input is input, the remaining parameters are automatically input by the processing part 121a shown in Figure 21 according to the input parameter values or standard values, and then the recipe is completed.

Information on a restriction on the recipe is set in the type 5 shown in Figure 39. In the type 5, information on a pay recipe represented by the pay icon Rip and information on disclosure prohibition are also set. In addition, information on a recipe with display restriction, information of a recipe with duplication prohibition, and information on a recipe with alteration prohibition, which will be described in detail later, are also set. When the information on the restriction on the recipe set in the type 5 is set once, the setting content is not allowed to be changed unless a change condition is satisfied. On the other hand, if the change condition is satisfied, the setting content may be automatically changed, or the setting content may be changed by an operation of the user.

Next, restrictions on recipes will be described.

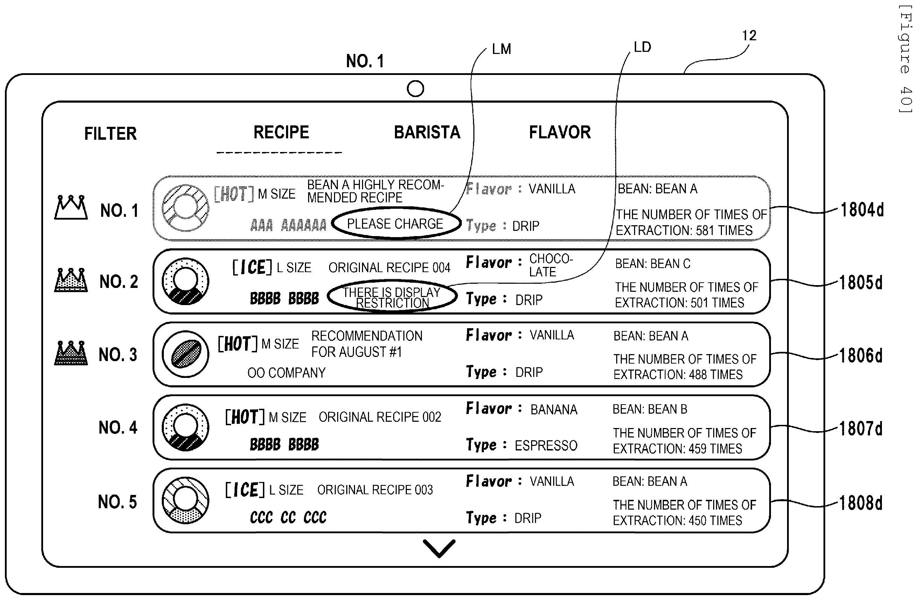

Figure 40 shows a display screen on which five recipes are ranked.

In the display screen shown in Figure 40, similar to the display screen shown in Figure 18, a simple display 1804d of "Bean A highly recommended recipe" is displayed in the first place in the ranking, and a simple display 1805d of "original recipe 004" is displayed in the second place in the ranking. In the third place, a simple display 1806d of "recommendation for August #1" is displayed. In each simple display, an image Im taken by the camera 1230 provided in the information display device 12 is displayed when a recipe is created. The image Im may be an image taken by a device other than the camera 1230 provided in the information display device 12, and is not limited to the image taken when a recipe is created. In the simple display 1804d of the "Bean A highly recommended recipe", an image of a recipe creator (individual) having a name of AAA AAAAAAA is displayed. In the simple display 1806d of "recommendation for August #1", the recipe creator is the OO company (corporation), and an image of coffee beans is displayed.

In the display screen shown in Figure 40, unlike the display screen shown in Figure 18, the simple display 1804d of "Bean A highly recommended recipe" in the first place is displayed in a gray-out display mode, and a character display LM "please charge" is added. Although the simple display 1805d of the "original recipe 004" in the second place is not in a gray-out display mode, a character display LD of "there is display restriction" is added. The simple display of recipes ranked third and below is the same as that of the display screen shown in Figure 18.

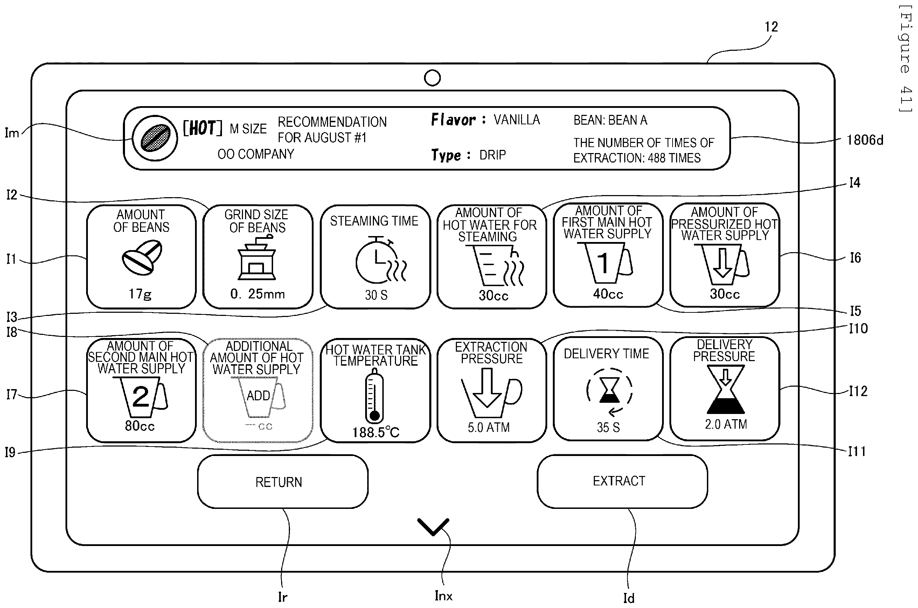

Figure 41 shows a display screen displayed when a simple display 1806d of "recommendation for August #1" in the third place shown in Figure 40 is tapped.

In the display part of the information display device 12 shown in Figure 41, the simple display 1806d of "recommendation for August #1" is displayed in the upper part, and icons representing a plurality of parameters are displayed side by side below the simple display 1806d. In the display screen shown in Figure 41, twelve icons I1 to 112 are vertically displayed in two tiers. When a next page icon Inx displayed at the center of the bottom of the display screen is tapped, a next page in which icons representing a plurality of parameters are arranged is displayed. That is, icons representing the thirteenth and subsequent parameters can be displayed. In each icon, a parameter name is displayed above a graphic symbolizing the content of the parameter in an easy-to-understand manner, and a parameter (set value) is displayed below the graphic. Among these icons, an icon I8 of an additional amount of hot water supply is displayed in a gray-out display mode, and no specific value is displayed. The icon displayed in the gray-out display mode indicates that no parameter is set. Instead of the icon displayed in the gray-out display mode, other icons in which parameters are set may be displayed. In the display screen shown in Figure 41, the details of the content of the recipe are displayed by displaying eleven icons. However, the content is part of the recipe rather than all of the recipe. The display screen shown in Figure 41 is a display screen having a display mode different from that of the display screen shown in Figure 23.

At the bottom of the display screen shown in Figure 41, a return icon Ir and an extraction icon Id are prepared. When the return icon Ir is tapped, the screen returns to the ranking display screen shown in Figure 40. When the extraction icon Id is tapped, the screen is switched to a transaction screen on which the price of the coffee beverage of the recipe name is displayed, transaction information is transmitted to a Point of sale (POS) system (not shown), and the POS system executes a transaction process. In beverage production device 1, the coffee production process shown in Figure 11 is started.

When the icons representing eleven parameters are tapped, an input window appears and the parameters (set values) can be changed.

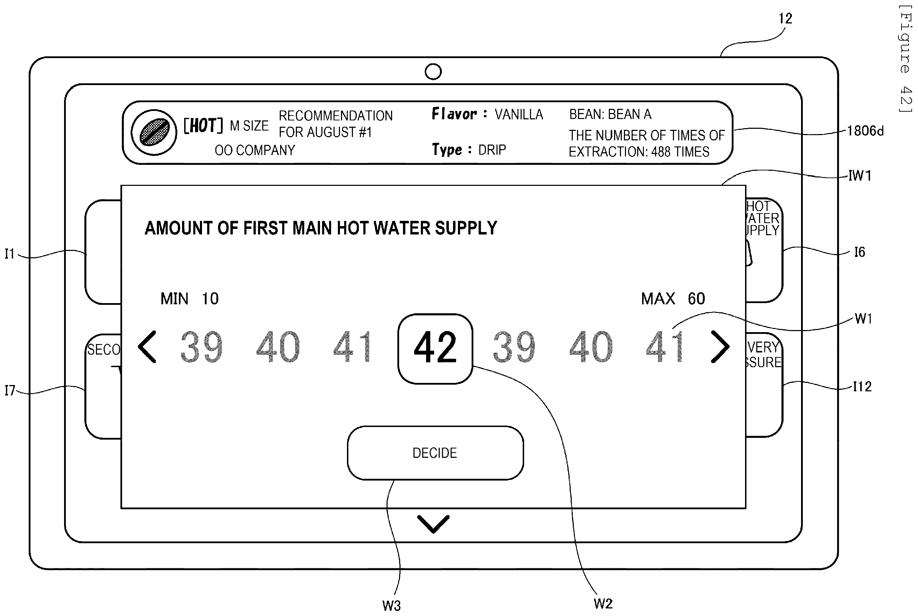

Figure 42 shows a display screen displayed when an icon I5 of an amount of first main hot water supply.

An input window IW1 is displayed on the display part of the information display device 12 shown in Figure 42 so as to overlap icons I1 to 112 representing twelve parameters. In the input window IW1, a maximum value (MAX 60) and a minimum value (MIN 10) in a correctable range are displayed, and a numerical sequence W1 in which numerical values between the maximum value and the minimum value are arranged at interval of 1 is displayed. An input frame W2 is arranged at the center of the numerical sequence W1, and 42 is located in the input frame W2 in the input window IW1 shown in Figure 42. The numerical sequence W1 can be moved by a swipe operation, and a numerical value in the input frame W2 can be changed. When a decision icon W3 prepared in the lower part is tapped, the numerical value located in the input frame W2 is stored in the database as a parameter (set value), and the input window IW1 disappears. In this way, the parameters stored in the database until then are overwritten with new parameters, and the correction of the parameters is completed.

The operation of causing the input window IW1 to appear from the screen on which the icons representing the plurality of parameters are displayed side by side and inputting the parameter (set value) described above is an operation of correcting the parameter, but the same applies to the creation of a new recipe. That is, also in the creation of a new recipe performed by the recipe management application of the standard, which is started by tapping the standard icon 120si shown in Figure 24, the parameters (set values) are input and stored in the database by the same operation. For example, the icons I1 to 112 representing twelve parameters shown in Figure 41 are also displayed on the creation screen of the new recipe in the standard. Here, an icon for which no parameter is set is displayed in a gray-out display mode like the icon I8 of the additional amount of hot water supply shown in Figure 41, and no specific value is displayed. In the input of the parameter, when the icon is tapped, the input window IW1 as shown in Figure 42 appears, and the parameter can be changed by a swipe operation. When the decision icon W3 is tapped in a state in which a parameter desired by the recipe creator is located in the input frame W2, the numerical value located in the input frame W2 is stored in the database as a parameter (set value), and the input window IW1 disappears. In this way, a new parameter is set.

By tapping the next page icon Inx displayed at the center of the bottom of the display screen, it is possible to input the thirteenth and subsequent parameters. For example, by tapping the next page icon Inx once or a plurality of times, it is possible to display an icon with the image of the recipe creator as a parameter. In the input window IW1 of the icon, the image input field H3 shown in Figure 30 may be displayed. In the creation of a new recipe in the standard, it is essential to input the twelve parameters displayed on the display screen corresponding to the first page shown in Figure 41, but parameters displayed on display screens of the second and subsequent pages are freely input. The parameters that have not been input on the display screens of the second and subsequent pages are automatically input by the processing part 121a shown in Figure 21 according to the input parameter values or standard values, and then the recipe is completed. The completed recipe is stored in the storage part 1303 of the server 1201 (corresponding to the server 16 shown in Figure 21) described with reference to Figure 13 or the storage part 121b of the information display device 12.

Next, a description will be made in a case where the simple display 1804d of "Bean A highly recommended recipe" in the first place displayed in the gray-out display mode shown in Figure 40 is tapped. Even if the simple display 1804d of "Bean A highly recommended recipe" displayed in the gray-out display mode is tapped, there is no change on the display screen. That is, the screen is not switched to the screen for displaying the details of the content of the recipe shown in Figure 41, and the tap operation is not received. The recipe of "Bean A highly recommended recipe" in the first place shown in Figure 40 is a recipe with a production restriction that cannot be used for producing a coffee beverage without charging. The production restriction can protect the interests of the creator of the recipe. The tap operation is received, and then the screen may be switched to a display screen indicating that the recipe is a pay recipe that cannot be used for producing a coffee beverage without charging. The character display LM "please charge" shown in Figure 40 corresponds to the display notifying a condition for releasing the restriction.

A charging screen (not shown) is prepared in the menu items expanded by tapping the menu button 120m prepared at the upper right of the display screen shown in Figure 22 (see Figure 46). On the charging screen, a charging process can be performed for the recipe of "Bean A highly recommended recipe". As a specific example, the charging process is performed in a settlement process using a credit card, and the fact that the charging process is performed is transmitted to the server 1201 (corresponding to the server 16 shown in Figure 21) described with reference to Figure 13. In the recipe management database constructed in the storage part 1303 of the server 1201, the recipe restrictions are managed.

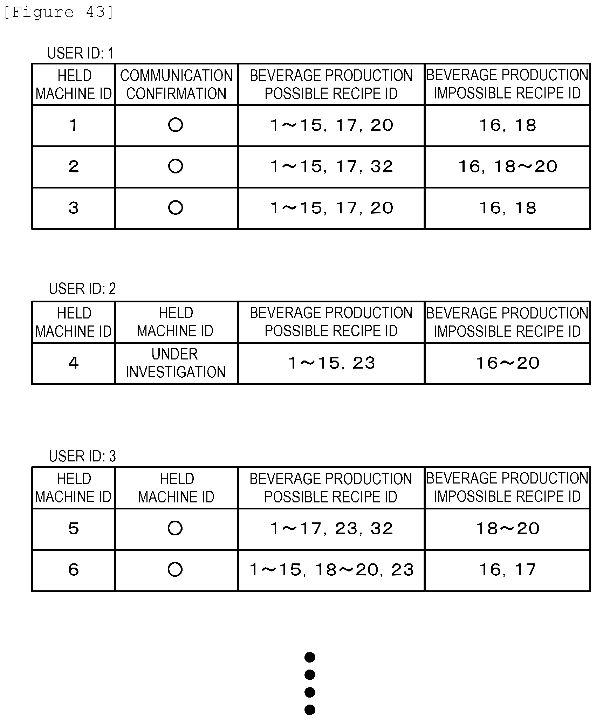

Figure 43 shows data for managing recipe restrictions, which is stored in the storage part 1303 of the server 1201.

As described above, the information on the pay recipe is recorded in the type 5 in each recipe. Each recipe is databased in the beverage information DB 1303a shown in Figure 13. In the beverage information DB 1303a, recipe IDs are managed. The user information DB 1303b shown in Figure 13 manages user IDs. The production history DB 1303c shown in Figure 13 manages machine IDs.

The storage part 1303 of the server 1201 manages a machine ID held for each user ID, and the server 1201 periodically checks whether the communication with the beverage production device 1 of each machine ID is possible. In the data shown in Figure 43, the communication with the beverage production device 1 (hereinafter, referred to as an ID4 machine) with a machine ID of 4 held by a person (hereinafter, referred to as an ID2 person) with a user ID of 2 cannot be performed, and therefore, a serviceman of an operating company that operates the server 1201 contacts the ID2 person and records that the reason why communication was not possible is under investigation.

In the storage part 1303 of the server 1201, usable recipes and unusable recipes are managed by recipe IDs for each machine ID. For example, recipes of recipes ID 1 to ID 20 are recipes stored in all beverage production devices 1 from the beginning of sales. In beverage production device 1, the recipe is encrypted and stored in the storage part 121b of the information display device. Among the recipes of the recipes ID 1 to ID 20, the recipes of recipes ID 1 to ID 15 are usable recipes without any restriction. The recipes of recipe IDs 16 to 20 are recipes with production restrictions that cannot be used for producing a coffee beverage without charging. Even if the recipe with the production restriction is stored in beverage production device 1, the recipe cannot be used for producing a coffee beverage unless a production restriction release code is input. The production restriction release code is a code generated for each machine ID, and is a code that becomes invalid even when input to the beverage production device 1 of another machine ID.

For example, in a case where a person with a user ID of 1 (hereinafter, referred to as an ID1 person) performs a charging process for the recipe ID 16 with the beverage production device 1 with a machine ID of 2 (hereinafter, referred to as an ID2 machine), the fact that the charging process for the recipe ID 16 has been performed with the ID2 machine is transmitted to the server 1201. The server 1201 received the fact deletes the recipe ID 16 from beverage production impossible recipes IDs in the ID2 machine, and adds the recipe ID 16 to beverage production possible recipes IDs in the ID2 machine. Then, the server 1201 transmits a production restriction release code for the recipe with recipe ID 16 to the ID2 machine, and the production restriction release code is input in the ID2 machine which receives the production restriction release code, so that a coffee beverage can be produced according to the recipe with recipe ID 16.

In the recipe with the production restriction, only data that can be simply displayed as shown in Figure 40 is stored in beverage production device 1, and the data of the entire recipe is transmitted from the server 1201 instead of the production restriction release code by performing the charging process, so that a coffee beverage can be produced according to the recipe.

To supplement the data shown in Figure 43, the ID1 person creates the recipe ID 32 with the ID2 machine. At the time of recipe creation, the recipe ID 32 is registered as a recipe with a production restriction that cannot be used for producing a coffee beverage without charging. In the ID2 machine, since the recipe ID 32 is a recipe created with the machine, a coffee beverage can be produced using the recipe, and the recipe ID 32 is registered as the beverage production possible recipe ID in the management in the storage part 1303 of the server 1201. However, even in other machines of the ID1 person (beverage production device 1 with machine ID 1 and beverage production device 1 with machine ID 3), the recipe ID 32 is not registered as the beverage production possible recipe ID. For other machines having the same user ID, recipe data of the recipe ID 32 may be transmitted via the server 1201 to enable production of a coffee beverage. The recipe ID 32 created by the ID1 person is generally disclosed as a recipe with a production restriction. For example, the data that can be displayed simply as shown in Figure 40 and the recipe information shown in Figure 23 are generally disclosed, but all parameters necessary for producing a coffee beverage are not disclosed. A person with a user ID of 3 (hereinafter, referred to as an ID3 person) views the general disclosure of the recipe with recipe ID 32, performs a charging process for the recipe ID 32 in the beverage production device 1 with machine ID 5 (hereinafter, referred to as an "ID5 machine"), and can produce a coffee beverage using the recipe with recipe ID 32 in the ID5 machine.

The ID2 person creates a recipe ID 23 with the ID4 machine. At the time of recipe creation, the recipe ID 23 is registered as a recipe having no production restriction. The recipe ID 23 is also generally disclosed, and the ID3 person downloads the recipe ID 23 from the server 1201 to each of two machines (ID5 machine and beverage production device 1 with machine ID 6) held by himself/herself, and can produce a coffee beverage using the recipe.

Even in the case of a recipe capable of producing a coffee beverage, the coffee beverage may not be produced unless a communication confirmation code is input every predetermined period. Alternatively, the production process itself of the beverage production device 1 may not be executed unless the communication confirmation code is input every predetermined period. The communication confirmation code is transmitted from the server 1201 when the server 1201 periodically checks whether or not communication with the beverage production device 1 of each machine ID is possible. In this way, even in a case where the beverage production device 1 goes missing together with the user, the value of the beverage production device 1 and the value of the recipe can be protected. In the above example, the configuration with restrictions has been described so that a coffee beverage cannot be produced in a state in which the information on the recipe is downloaded to the beverage production device 1. However, for example, the information on the recipe necessary for the production of the coffee beverage may not be completely downloaded, or the information may be erased once downloaded, so that the coffee beverage cannot be produced.

In the above example, the configuration in which the production restriction is released by charging has been described, but conditions other than charging may be used as the conditions for releasing the production restriction. The production restriction may be released when any one of the conditions is satisfied, or the production restriction may be released when a plurality of conditions are satisfied. For example, while the production restriction can be released by charging, the production restriction may be released without charging when the number of days of disclosure of the recipe has passed the set number of days or the set date and time has passed, or within the set period of time. In addition, the production restriction may be released by charging only when the number of days of disclosure of the recipe has passed the set number of days or the set date and time has passed, or within the set period of time. In addition, a state in which the production restriction is not made may be changed to a state in which the production restriction is made depending on the conditions. For example, the production restriction may be made when the number of times of production according to the recipe reaches the set number or the set date and time has passed, or within the set period of time.

Next, a description will be made in a case where the simple display 1805d of "original recipe 004" in the second place shown in Figure 40 is tapped.

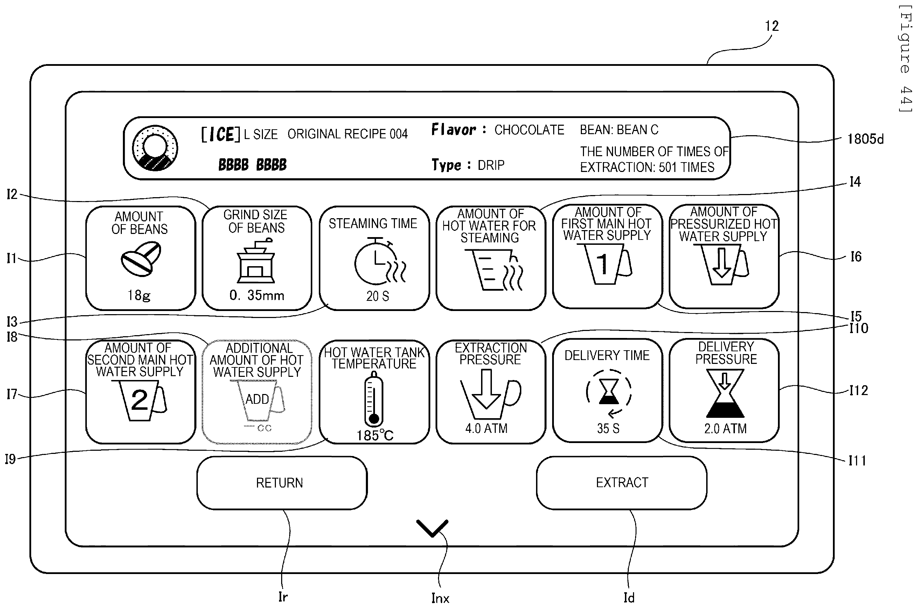

Figure 44 shows a display screen displayed when the simple display 1805d of "original recipe 004" in the second place shown in Figure 40 is tapped.

In the display part of the information display device 12 shown in Figure 44, the simple display 1805d of "original recipe 004" is displayed in the upper part, and icons representing a plurality of parameters are displayed side by side below the simple display 1805d. In the display screen shown in Figure 44, twelve icons I1 to I12 are vertically displayed in two tiers. By tapping the next page icon Inx displayed at the center of the bottom of the display screen, it is possible to display the next page on which icons representing the thirteenth and subsequent parameters are displayed.

In the simple display 1805d of "original recipe 004" in the second place shown in Figure 40, a character display LD "there is display restriction" is added. In the display screen shown in Figure 44, parameters (set values) are not displayed for icons I4 to I7 of parameters related to the amount of hot water. The character display LD "there is display restriction" displayed on the ranking display screen of Figure 40 suggests that there is a restriction that the parameters related to the amount of hot water are not displayed. Even if the user tries to check the parameters related to the amount of hot water in other display modes, the parameters related to the amount of hot water are not displayed in any display mode. The display restriction is a restriction for protecting the confidentiality of the recipe, particularly the confidentiality of the production conditions, and the recipe can be used. That is, even when the extraction icon Id shown in Figure 40 is tapped, the screen is switched to a transaction screen on which the price of the coffee beverage of the recipe name is displayed, transaction information is transmitted to a Point of sale (POS) system (not shown), and the POS system executes a transaction process. In beverage production device 1, the coffee production process shown in Figure 11 is started. Although some of the parameters constituting the recipe are subject to the display restriction, all the parameters may be subject to the display restriction. The display restriction may be applied to all the parameters in the production method shown in (A) of Figure 15.

The display restriction of some or all of the parameters of the recipe can be set by the recipe creator at the time of recipe creation. The information on the recipe with the display restriction is set to the type 5. It should be noted that even if a charge is made, the display restriction may be applied on the recipe with the production restriction that cannot be used for producing a coffee beverage without charging. For the display restriction of the parameter on the recipe usable for the production of the coffee beverage, the display restriction may be released by charging. Further, in addition to charging, for example, the display restriction may be released when the number of times of production reaches a set value. As an example of the display restriction, parameters of the amount of beans and the amount of hot water supply may be displayed, and other parameters may not be displayed. In addition, as another example, only the grind size of beans may not be displayed, and other parameters may be displayed. That is, displayable parameters may be set (unset parameters may not be displayed), or non-displayable parameters may be set (unset parameters may be displayed). In a case where a recipe is duplicated to create a new recipe, the display restriction may be set as in the case of creating a normal recipe. In this case, for example, a range of the display restriction that can be set at the time of duplication may be set at the time of creating an original recipe so that the same restriction as a recipe of a duplication source is imposed at the time of duplication.

In addition to the production restriction and the display restriction described above, the restrictions on the recipe includes an alteration restriction in which a range of alteration is restricted and a duplication restriction in which a range of duplication is restricted. The alteration restriction and the duplication restriction can also be set by the recipe creator at the time of recipe creation. Information on a recipe with an alteration restriction and information of a recipe with a duplication restriction are set to the type 5. It should be noted that even if a charge is made, the alteration restriction and the duplication restriction may be applied on the recipe with the production restriction that cannot be used for producing a coffee beverage without charging. Various restrictions may be released by charging. Further, in addition to charging, for example, various restrictions may be released when the number of times of production reaches a set value.

Also in a case where the content of the recipe with the alteration restriction is displayed, the icons I1 to I12 representing the plurality of parameters shown in Figure 41 are displayed.

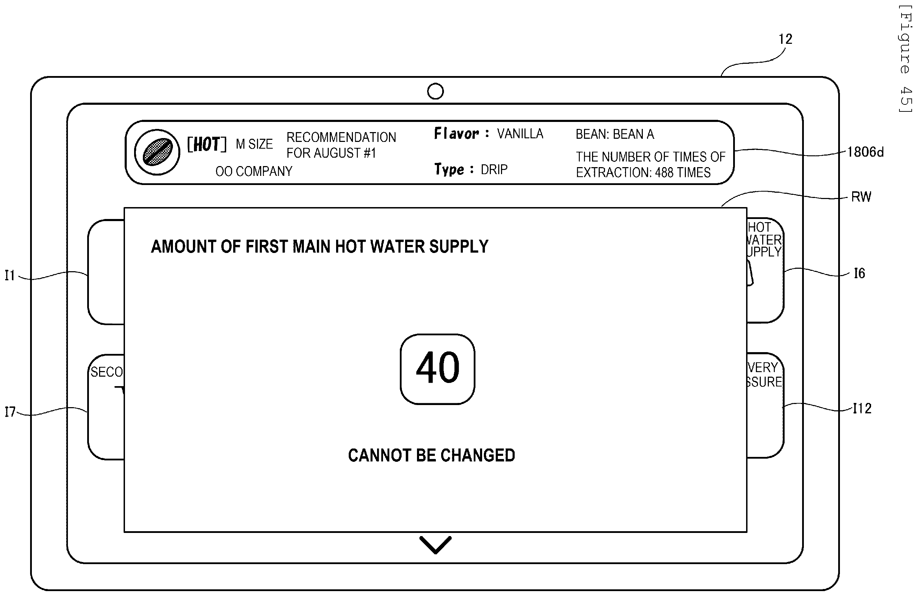

Figure 45 shows a screen when the icon I5 of the amount of first main hot water supply of a recipe whose alteration is prohibited as an alteration restriction is tapped.

Unlike the display part of the information display device 12 shown in Figure 42, on the display part of the information display device 12 shown in Figure 45, the input window IW1 is not displayed, and a change prohibition window RW appears instead. In the change prohibition window RW, the numerical sequence W1 shown in Figure 42 is not displayed, only a value (here, 40) of a parameter that is already set is displayed, and a character display "cannot be changed" is displayed. After the change prohibition window RW is displayed for a predetermined time, the change prohibition window RW automatically disappears, and the display part of the information display device 12 returns to the display screen shown in Figure 41. The alteration restriction is intended to ensure that the recipe of the recipe creator is faithfully reproduced. For example, in a case where a recipe created by a world-famous barista is corrected without the permission of the barista to sell a coffee beverage, the coffee beverage does not reproduce the coffee beverage brewed by the world-famous famous barista, and the reputation of the barista may be damaged due to the difference in taste or aroma. The alteration restriction also has a meaning of preventing such a situation.

Some of the parameters constituting the recipe are subject to the alteration restriction, and all the parameters may be subject to the alteration restriction. The alteration restriction may be applied to some or all of the parameters in the production method shown in (A) of Figure 15. As an example, the parameters of the amount of beans and the amount of hot water supply may not be changed, and other parameters may be changed. Further, as another example, only the amount of beans can be changed, and other parameters cannot be changed. That is, changeable parameters may be set (unset parameters may not be changed), or unchangeable parameters may be set (unset parameters may be changed). For example, although the additional amount of hot water supply is grayed out in the example of Figure 41, a valid or invalid state of the parameter in an initial state of the recipe may be changed, such as by setting a numerical value to the parameter. Further, the present invention is not limited to the configuration in which the change is permitted or prohibited for the entire range of the parameter, and a changeable range of the parameter may be limited. In a case where the recipe is duplicated, a range of the alteration restriction that can be set at the time of duplication may be set at the time of creating an original recipe so that the same restriction as a recipe of a duplication source is imposed.

Figure 46 shows a state in which menu items are expanded by tapping the menu button 120m provided on the upper right of the display screen shown in Figure 23.

A menu item ME displayed on the display part of the information display device 12 shown in Figure 46 includes an item ME1 for returning to the home screen (for example, the display screen of the recipe list shown in Figure 22), an item ME2 for displaying the ranking display (for example, the ranking display shown in Figures 18 to 20), an item ME3 for displaying the recipe management application list shown in Figure 24, an item ME4 for displaying the charging screen, a recipe copy item ME5 for duplicating a recipe of the currently displayed recipe information (here, the recipe of "Daito Blend"), and an item ME6 for other items. Among these items, the recipe copy item ME5 is displayed in a gray-out display mode. Even if the recipe copy item ME5 is tapped, values of the parameters included in the recipe of "Daito Blend" cannot be copied. That is, in the recipe of "Daito Blend", duplication is prohibited by the duplication restriction. The copy of the recipe is used in a case where a new recipe is created with reference to the copied recipe. For example, it is convenient that the recipe can be copied in a case where it is desired to correct the recipe previously created by himself/herself while leaving the recipe as it is. However, similarly to the alteration of the recipe, in a case where an act of creating a new recipe with reference to recipes other than an own recipe, particularly a recipe created by a famous barista, is regarded as theft of the recipe, such an act should be prohibited. The duplication restriction may be used as means for prohibiting such an act.

As described with reference to Figure 45, some recipes have alteration restrictions, but some parameters may be actively encouraged to be corrected. For example, depending on the environment in which the beverage production device 1 is installed, it may be better to correct the parameters. In the beverage production device 1, the atmospheric pressure in the extraction container 9 is controlled according to the recipe, but the extraction container in extraction container 9 varies depending on an altitude of the place where the beverage production device 1 is installed, and thus the desired pressure may not be obtained. Therefore, the beverage production device 1 shown in Figure 21 corrects the pressure of a pressurized fluid supplied to extraction container 9 according to a sensor signal from the atmospheric pressure sensor 124.

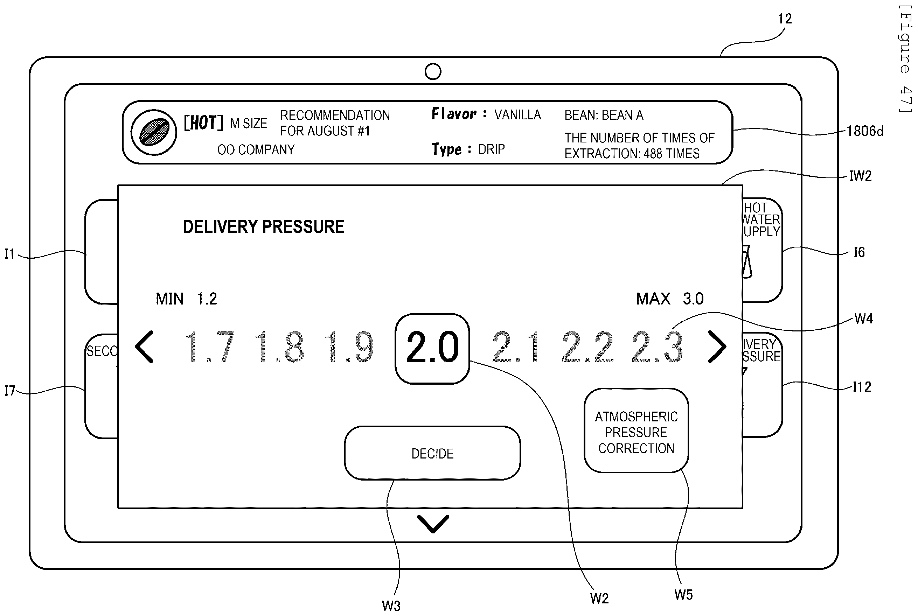

Figure 47 shows a display screen for correcting a parameter of delivery pressure by air pressure from the compressor 70.

When the icon I12 of the delivery pressure shown in Figure 41 is tapped, an input window IW2 shown in Figure 47 appears on the display part of the information display device 12. Similar to the input window IW1 shown in Figure 42, in the input window IW2 shown in Figure 47, a maximum value (MAX 3.0) and a minimum value (MIN 1.2) in a correctable range are displayed, and a numerical sequence W4 in which numerical values between the maximum value and the minimum value are arranged at interval of 0.1 is displayed. An input frame W2 is arranged at the center of the numerical sequence W4, and 2.0 is located in the input frame W2 in the input window IW2 shown in Figure 47. The user can move the numerical sequence W4 by a swipe operation, and can change a numerical value in the input frame W2 to a desired value within the correctable range. Further, in the input window IW2 shown in Figure 47, an atmospheric pressure correction icon W5 is prepared at the lower right. When the atmospheric pressure correction icon W5 is tapped, the atmospheric pressure correction according to the altitude of the place where the beverage production device 1 is installed is performed. The atmospheric pressure decreases as the altitude of the installation place of the beverage production device 1 increases. Therefore, for example, in a case where the pressure management of the beverage production device 1 is based on the atmospheric pressure at an altitude of 0 m, in the atmospheric pressure correction as well, a parameter value is corrected to be lower as the altitude of the installation place of the beverage production device 1 becomes higher than 0 m. On the other hand, the parameter value is corrected to be higher as the altitude of the installation place of the beverage production device 1 is lower than 0 m.

In the installation environment of the beverage production device 1, the temperature and humidity may also affect the taste and aroma of the coffee beverage. The amount of hot water for steaming, the steaming time, the hot water tank temperature, and the like may be corrected according to the temperature of the installation environment. In addition, the amount of hot water for steaming, the steaming time, and the like may be corrected according to the humidity of the installation environment. Furthermore, the installation environment includes the hardness and pH of water in an area where the beverage production device 1 is installed. The amount of beans, the amount of hot water for pouring, and the like may be corrected according to the hardness and pH of water.

In the above example, it can also be said that the beverage production device 1 is a combination of a device for producing ground beans of coffee and a device for producing a coffee beverage from the ground beans. The recipe defines parameters of the operation of the devices, but it can also be said that the recipe is a combination of a recipe for the device for producing ground beans and a recipe for the device for producing a coffee beverage from the ground beans. The various restrictions on the parameters of the recipe are not limited to the configuration of the present embodiment, and can be applied to a device (for example, the pulverizing device 5) for producing ground beans of coffee using the recipe, and a device for producing a coffee beverage from the ground beans using the recipe.

In the above description, described is "a beverage production device including:
an acquisition unit [for example, the information display device 12 or the processing part 121a] configured to acquire a recipe used for a part or all of steps of beverage production;
a processing unit (for example, the control device 11 or the processing part 11a) configured to execute a process [for example, a process of controlling opening and closing of various valves shown in Figure 3, a process of controlling a rotary blade in the pulverizing device 5, a process of controlling driving of the heater 72a, a process of controlling driving of the compressor 70, and the like] for producing a beverage with reference to parameters [for example, an amount of beans, a grind size of beans, an amount of hot water for steaming, steaming time, an amount of hot water for extraction (amount of hot water for pouring), an amount of first main hot water supply, an amount of second main hot water supply, an amount of pressurized hot water supply, extraction pressure, extraction time, stationary time before rotation, stationary time after rotation, delivery time, delivery pressure, a name of beans, a producing country of beans, a roasting degree of beans, a recipe creator, and the like] included in the recipe acquired by the acquisition unit; and
a production unit [for example, the actuator group 14 shown in Figure 21 (the pulverizing device 5 and the extraction device 3 shown in Figure 3)] configured to operate in accordance with the process executed by the processing unit to produce a beverage, in which
the acquisition unit is configured to acquire a recipe with a restriction [for example, a restriction of coffee beverage production prohibition, a partial or entire display restriction, an alteration restriction, a duplication restriction, and the like]."

It should be noted that the term "to produce a beverage" as used herein is broadly defined, and includes preparation before final production, production of an intermediate, and the like in addition to final production of a beverage.

Further, there may be a plurality of types of the production units, and the recipe may include parameters for each of the plurality of types of production units, or there may be the plurality of types of parameters for one production unit, and the recipe may include the plurality of types of parameters for one production unit.

The recipe with a restriction may be downloaded from a server via a communication network. The restriction in this case may be prohibition of downloading.

The beverage production device may include an acquisition part "for example, the information display device 12 or the I/F part 11c" configured to acquire a recipe including a parameter, a processing part "for example, the actuator group 14 or the production part 18" configured to execute a process for producing a beverage, and a control part "for example, the control device 11 or the processing part 11a" configured to control the processing part according to the parameter included in the recipe acquired by the acquisition part.

Described is also "the beverage production device, further including:
a storage unit configured to store the recipe with a restriction [for example, the storage part 121b of the information display device 12], in which
the acquisition unit [for example, the processing part 121a of the information display device 12] acquires the recipe with a restriction from the storage unit".

Described is also "the beverage production device, in which
the restriction is that a beverage cannot be produced using the recipe [for example, a use restriction that the recipe cannot be used without charging] [for example, the simple display 1804d of "bean A highly recommended recipe" in the first place, which is displayed in a gray-out display mode shown in Figure 40 and to which the character display LM "please charge" is added]".

Described is also "the beverage production device, further including:
a display unit [for example, the display part of the information display device 12], in which
the restriction is that a part [for example, a parameter related to the amount of hot water] or all of information representing the recipe is not displayed on the display unit [for example, a parameter (set value) is not displayed on the icons I4 to I7 of the parameters related to the amount of hot water shown in Figure 44]".

Described is also "the beverage production device, in which
the restriction is to prohibit creating a duplicate of the recipe [for example, the recipe copy item ME5 displayed in a gray-out display mode shown in Figure 46]".

Described is also "the beverage production device, in which
the recipe with a restriction becomes a recipe without the restriction by charging [for example, the recipe with recipe ID 32 that can be used in the beverage production device with machine ID 5 held by a person with a user ID of 3 in Figure 43]".

Described is also "the beverage production device, in which
the restriction is to prohibit alteration of a part or all of contents of the recipe [for example, the change prohibition window RW shown in Figure 45 appears and the character display "cannot be changed" is displayed]".

Described is also "the beverage production device, in which
the parameter is adjustable [for example, correction by tapping the atmospheric pressure correction icon W5 shown in Figure 47] according to an installation environment of the beverage production device [for example, an altitude]".

The installation environment includes temperature, humidity, and hardness and pH of water in an installation area.
Described is also "the beverage production device, in which the recipe is encrypted [for example, the recipe stored in the storage part 121b of the information display device is encrypted]".

The beverage production device described above may be "a device including: an acquisition unit configured to acquire a recipe used for a part or all of steps of beverage production, in which the acquisition unit is configured to acquire a recipe with a restriction", and the features of the beverage production device described above can be applied to the device. The device may be a beverage production device such as a coffee maker having a hot water supply function. Alternatively, the device may be an electronic device (for example, a mobile terminal) having no production function. Further, the device may be the pulverizing device 5.

In the above description, all of the constituent elements expressed as "unit" can be replaced with "part".

Next, an example in which comments are set for the parameters in the recipe described above will be described.

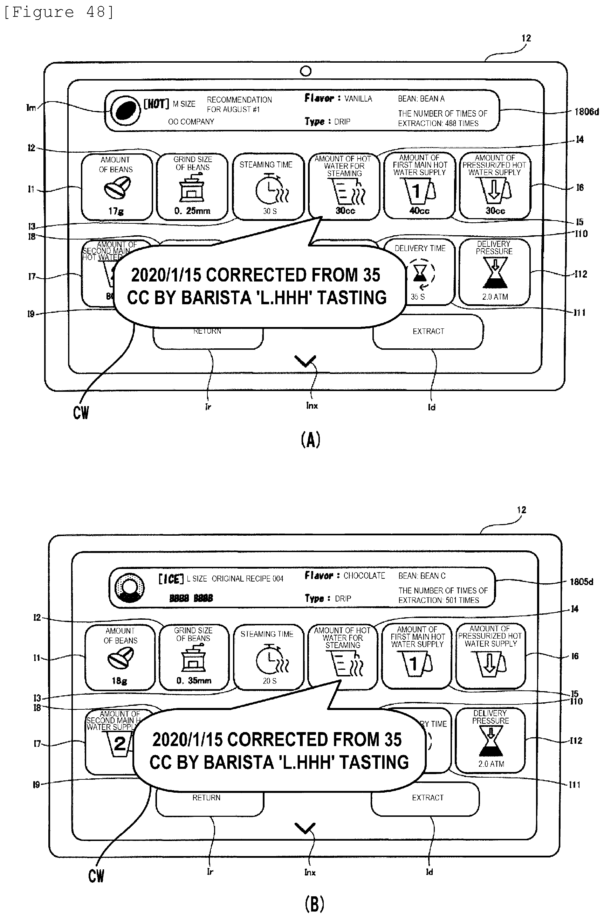

(A) of Figure 48 shows an example of a state in which a comment is displayed on the display screen of the recipe shown in Figure 41. In the example, the recipe information includes comment information for a parameter, and the comment information is displayed by double-tapping an icon corresponding to the parameter. (A) of Figure 48 shows a state in which the corresponding comment information is displayed by double-tapping the icon I4 of the amount of hot water for steaming from the state shown in Figure 41. Specifically, from a state in which the icons I1 to I12 representing the twelve parameters are displayed on the display part of the information display device 12, a comment window CW is displayed so as to overlap a part of the display. The comment information is not limited to the configuration that can be input by the recipe creator, and may be configured to be input by a user who downloads the recipe information.

In the comment window CW, a comment "2020/1/15 corrected from 35 cc by barista 'L.HHH' tasting" is displayed as a comment on the amount of hot water for steaming. As described above, by using the comment on the recipe, it is possible to get a better understanding of the recipe, and to display information for adjusting the parameters according to the preference. In a case where there is a continuation of the comment, the continuation can be displayed by scrolling by performing a swipe operation. By tapping the comment window CW, the comment window CW can be closed. For a parameter that does not include comment information, nothing is displayed even if the icon is double-tapped, but "no comment" may be displayed.

In the example of Figure 44, regarding the icons I4 to I7 of the parameters related to the amount of hot water, the parameters (set values) are set to be hidden. In the case where the parameters are set to be hidden, corresponding comments are not displayed even if the icons are double-tapped. However, as shown in (B) of Figure 48, even in the case where the parameter is set to be hidden, the corresponding comment may be displayed when the icon is double-tapped. (B) of Figure 48 shows a state in which the comment window CW is displayed, similar to (A) of Figure 48, by double-tapping the icon I4 of the amount of hot water for steaming in which the parameter is set to be hidden, from the state shown in Figure 44. By displaying the corresponding comment even in a state in which the parameter is set to be hidden, the user who views the comment may be interested in the set value of the parameter, and it may be possible to prompt a charge to release the hidden display.

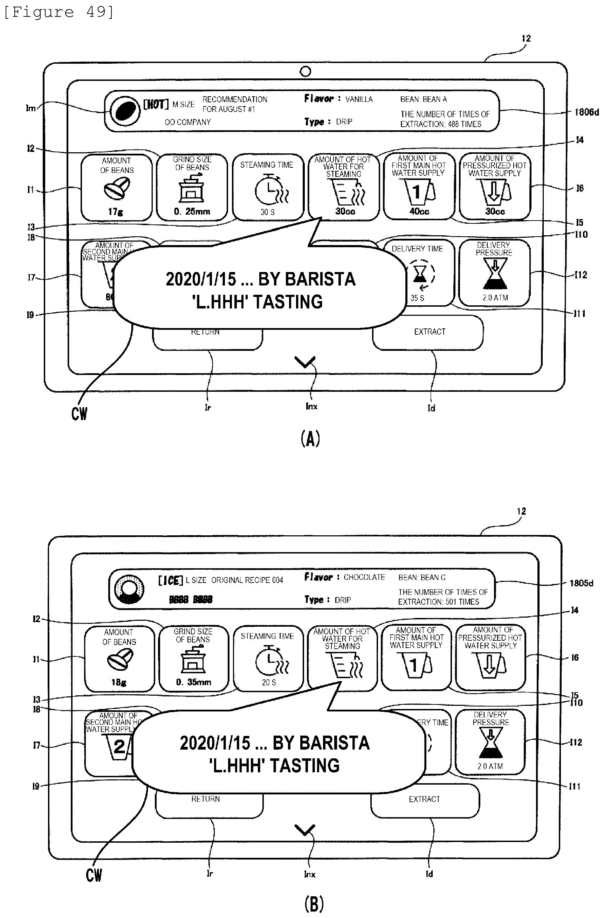

As in the examples of (A) and (B) of Figure 48, the comment corresponding to the parameter may be set in accordance with the display and non-display of the parameter, or may be set separately from the display and non-display of the parameter. In addition, when a comment is displayed, a restriction may be imposed on the displayed content so that only a part of the comment is displayed. For example, (A) of Figure 48 describes the example in which both a parameter and a comment corresponding to the parameter are displayed, and (A) of Figure 49 describes an example in which a restriction is imposed on the content displayed with respect to the comment. In the example of (A) of Figure 49, the comment window CW is displayed similarly to (A) of Figure 48, but only a part of the comment described in (A) of Figure 48 is displayed. (B) of Figure 48 describes the example in which the comment corresponding to the parameter is displayed in a state in which the parameter is not displayed, and (B) of Figure 49 describes an example in which a restriction is imposed on the content displayed with respect to the comment. In the example of (B) of Figure 49, the comment window CW is displayed similarly to (B) of Figure 48, but only a part of the comment described in (B) of Figure 48 is displayed. As for the non-display of the comment or the restriction on the display content, it may be possible to release these states by charging so that the comment can be displayed.

The parameter to which the comment is attached is not particularly limited. For example, the comment may be attached only to a specific parameter (for example, the amount of hot water, presence or absence of steaming, and the particle size), or conversely, the comment may not be attached only to a specific parameter. For example, only a part of the comment may be displayed only for a specific parameter, or conversely, only a part of the comment may not be displayed only for a specific parameter. In a case where a plurality of comments are attached to the same parameter, each comment may be set to be displayed, hidden, or partially displayed. Further, for example, it is possible to set the comment to be displayed or not to be displayed according to the content of the parameter, such as setting a comment to be displayed only when the parameter is equal to or less than a specific value. In a case where a recipe is duplicated to create a new recipe, it may be possible to set whether a comment can be attached or to set a restriction range related to display of a comment as in the case of creating a normal recipe. In this case, for example, a setting content of the comment at the time of duplication may be set at the time of creating an original recipe so that the same restriction as a recipe of a duplication source is imposed at the time of duplication.

In the above example, the configuration in which the recipe information includes the comment information on the parameter has been described, but for example, the comment information may be stored separately from the recipe information, and a method and a storage area for storing the comment information are not limited to the above example. By managing the recipe information and the comment information with the same device, it is possible to easily manage the information.

In the above example, it can also be said that the beverage production device 1 is a combination of a device for producing ground beans of coffee and a device for producing a coffee beverage from the ground beans. The recipe defines parameters of the operation of the devices, but it can also be said that the recipe is a combination of a recipe for the device for producing ground beans and a recipe for the device for producing a coffee beverage from the ground beans. The configuration of the comment of the recipe is not limited to the configuration of the present embodiment, and can be applied to a device (for example, the pulverizing device 5) for producing ground beans of coffee using the recipe, and a device for producing a coffee beverage from the ground beans using the recipe.

In the above description, described is "a coffee beverage production device (for example, the beverage production device 1) for producing a coffee beverage by acquiring recipe information used for a part or all of steps of coffee production and referring to parameters included in the recipe information, the coffee beverage production device including:
a storage part (for example, the storage part 121b of the information display device 12) configured to store comments related to the parameters".

Described is also "the coffee beverage production device, in which
display ranges of the comments stored in the storage part are set (for example, Figures 48 and 49)".

Described is also "the coffee beverage production device, in which the recipe information is acquired from the storage part".

Described is also "the coffee beverage production device, in which the recipe information is subject to restrictions in use (for example, Figure 40)".

Described is also "the coffee beverage production device, in which
a coffee beverage is not produced using the recipe information with a restriction that is to prohibit production of a coffee beverage (for example, Figure 43)".

Described is also "the coffee beverage production device, in which
display of information beyond a range of a restriction on display content among the recipe information with the restriction is restricted (for example, Figure 44)".

Described is also "the coffee beverage production device, in which
information beyond a range of a restriction on duplication among the recipe information with the restriction is not duplicated (for example, Figure 46)".

Described is also "the coffee beverage production device, in which
recipe information beyond a range of a restriction on alteration among the recipe information with the restriction is not altered (for example, Figure 45)".

Described is also "the coffee beverage production device, in which
restrictions on the recipe information are released by charging".

Described is also "the coffee beverage production device, in which
the parameters are adjusted according to an installation environment (for example, Figure 47)".

Described is also "the coffee beverage production device, in which
the recipe information is encrypted".

Described is "a coffee production system including an external device (for example, the server 16 or the mobile terminal 17) capable of communicating with the coffee beverage production device (for example, Figure 10)".

Described is "a coffee beverage production method including:
a recipe acquisition step of acquiring recipe information used for a part or all of steps of coffee production; and
a beverage production step of producing a coffee beverage with reference to parameters included in the recipe information".

Described is also "the coffee beverage production method, further including:
a recipe display step of displaying the recipe information between the recipe acquisition step and the beverage production step".

Described is also "the coffee beverage production method, in which
in the recipe display step, comments on the parameters are displayed (for example, Figures 48 and 49)".

Described is also "the coffee beverage production method, in which
the recipe information is subject to restrictions in use (for example, Figure 40)".

Described is also "the coffee beverage production method, in which
the beverage production step is not executed for the recipe information with a restriction that is to prohibit production of a coffee beverage (for example, Figure 43)".

Described is also "the coffee beverage production method, in which
display of information beyond a range of a restriction on display content among the recipe information with the restriction is restricted in the recipe display step (for example, Figure 44)".

Described is also "the coffee beverage production method, further including:
a recipe creation step of creating the recipe information before the recipe acquisition step, in which
in the recipe creation step, the recipe information is duplicated to create new recipe information, and
information beyond a range of a restriction on duplication among the recipe information with the restriction is not duplicated in the recipe creation step (for example, Figure 46)".

Described is also "the coffee beverage production method, further including:
a recipe change step of changing the recipe information between the recipe acquisition step and the beverage production step, in which
recipe information beyond a range of a restriction on alteration among the recipe information with the restriction is not altered in the recipe change step (for example, Figure 45)".

Described is also "the coffee beverage production method, in which
restrictions on the recipe information are released by charging".

Described is also "the coffee beverage production method, further including:
a parameter adjustment step (for example, Figure 47) of adjusting the parameters according to an installation environment between the recipe acquisition step and the beverage production step".

Described is also "the coffee beverage production method, in which
the recipe information is encrypted".

Next, a contrivance of error determination will be described.

As described above, logs such as the response signal and the monitoring result are transmitted from the control device 11 shown in Figure 21 to the control part 121 of the information display device 12, and are stored in the control part 121. A part of the logs is transmitted from the control device 11 to the control part 121 at predetermined intervals (for example, intervals of 500 milliseconds).

The control part 121 of the information display device 12 shown in Figure 21 performs error determination. The control part 121 stores reference values, conditions, and the like for performing error determination. For example, if a value represented by the acquired monitor signal or sensor signal is equal to or greater than a reference value, the control part 121 determines that an error has occurred, or conversely determines that no error has occurred. Further, the recipe is also stored in the control part 121. The control part 121 may determine whether an error has occurred based on the information sent from the control device 11 and the production conditions. Alternatively, it may be determined whether an error has occurred using a plurality of monitoring results.

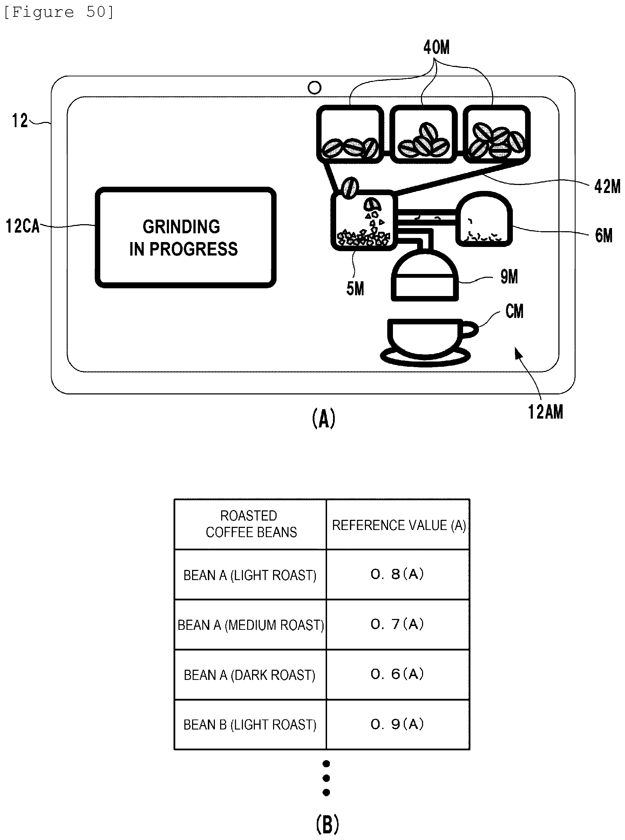

(A) of Figure 50 shows a display screen displayed on the information display device 12 during execution of a grinding process (step S2) shown in Figure 11.

An animation 12AM constituted with a schematic diagram of the beverage production device 1 shown in Figure 1 is displayed on the right half of the display screen. In the animation 12AM, a schematic diagram 40M of the canister 40 shown in Figure 2, a schematic diagram 42M of the collective conveying portion 42, a schematic diagram 5M of the pulverizing device 5 shown in Figure 2, a schematic diagram 6M of the separation device 6, a schematic diagram 9M of the extraction container 9, and a schematic diagram CM of the cup C shown in Figure 3 are displayed. The animation 12AM is displayed so as to show which process is currently performed in accordance with the actual coffee beverage production processing. In the display screen shown in (A) of Figure 50, a state in which coffee beans are being pulverized in the schematic diagram 5M of the pulverizing device 5 is displayed. On the left side of the display screen, a character display area 12CA for displaying the currently performed process in characters is provided. In the display screen shown in (A) of Figure 50, the characters "grinding in progress" are displayed in the character display area 12CA.

(B) of Figure 50 shows a table of reference values for error determination stored in the control part 121 of the information display device 12 shown in Figure 21.

As described above, the pulverizing device 5 is provided with a motor as a drive source, a rotary blade driven by the motor, and the like, and the size (particle size) of roasted coffee beans to be pulverized can be changed by changing the number of rotations of the rotary blade. A current value of the motor is higher when the rotary blade is pulverizing the roasted coffee beans than when the rotary blade is idling. The hardness of the roasted coffee beans varies depending on the type of the roasted coffee beans and the roasting degree of the roasted coffee beans. The current value of the motor becomes higher as the hardness of the roasted coffee beans is higher when the roasted coffee beans are pulverized. In the table shown in (B) of Figure 50, the reference value of the value of the motor during pulverizing the roasted coffee beans is defined for each of the types of beans (bean A, bean B, and so on) and three stages of roasting degrees (light roast, medium roast, and dark roast). The reference value of the current value is a cumulative value (for example, a cumulative value every 250 milliseconds) of the current value in a certain period (for example, 10 seconds).

(B) of Figure 50 shows the table including the roasted coffee beans and the reference values for the sake of clarity, but in practice, the information such as the type of beans and the three stages of the roasting degree is summarized as various production conditions (recipes) for producing the coffee beverage, and the reference value of the current value of the motor is also included in the recipe.

The control device 11 acquires a monitor signal including a value representing a current value of the motor at a predetermined interval (for example, an interval of 250 ms) while grinding is performed. Every time the control device 11 acquires the monitor signal, the control device 11 transmits a value representing the current value of the motor included in the monitor signal to the control part 121 of the information display device 12 as a monitoring result (log).

The control part 121 of the information display device 12 recognizes the currently used recipe from the reception operation in the reception part 122. Therefore, the control part 121 can acquire, from the recipe, which type of roasted coffee beans is being ground, and can also acquire, from the recipe, a reference value of the current value of the motor corresponding to the roasted coffee beans that are currently being ground. Every time the monitoring result is transmitted, the control part 121 adds the value transmitted as the monitoring result, and calculates a cumulative value (for example, a cumulative value every 250 milliseconds) of the current value in a certain period (for example, 10 seconds). When the cumulative value is calculated, it is confirmed whether the cumulative value is less than the reference value. If the cumulative value is less than the reference value, the pulverizing device 5 has not pulverized the roasted coffee beans, and it is determined that a "no bean error" has occurred. In the production of the coffee beverage, the extraction container 9 is pressurized at the time of the final permeation-type extraction (step S17 shown in Figure 11) to promote the delivery of the coffee beverage. If the production of the coffee beverage is continued in a state in which there is no roasted coffee beans, there is no resistance due to the deposition of the ground beans at the time of delivery, and the hot water jets out from the extraction container 9 with considerable force, which is dangerous. For this reason, when it is determined that the "no beans error" has occurred, the control part 121 transmits the determination result to the control device 11, and the control device 11 transmits a control signal for stopping the rotation of the motor of the pulverizing device 5 to the production part 18. As a result, the motor of the pulverizing device 5 stops rotating. When it is determined that the "no beans error" has occurred, the control part 121 transmits a control signal for instructing to perform an error display to the reception part 122.

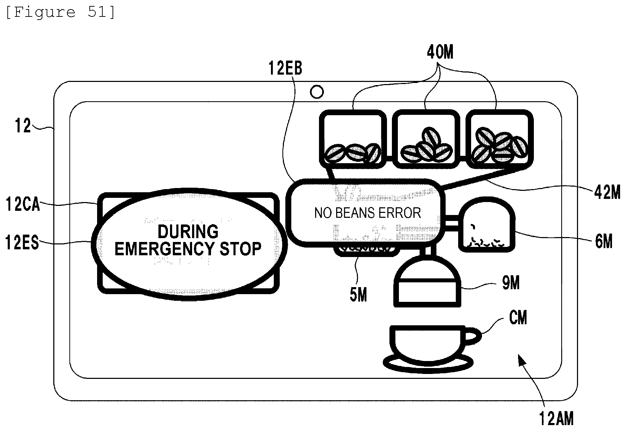

Figure 51 shows an example of an error display displayed on the information display device 12 during execution of the grinding process.

The error display is displayed so as to overlap the display screen shown in (A) of Figure 50. That is, on the display screen of the information display device 12 shown in Figure 51, an error display 12EB in which the characters "no beans error" are written is displayed so as to overlap the schematic diagram 5M of the pulverizing device 5. In addition, a character display 12ES of "during emergency stop" is displayed so as to overlap the character display area 12CA in which the characters "grinding in progress" is displayed.

When the control part 121 determines that the "no beans error" has occurred, the beverage production device 1 maintains a stop state until an instruction to produce a coffee beverage is issued again from the beginning.

In the example, the determination is made based on the current value, but is not limited to the current value. The determination may be made based on a value of an electrical parameter, for example, a value of power consumption. Although the determination is made based on the cumulative value in a certain period, the determination may be made based on a maximum value, a minimum value, or an average value in a certain period.

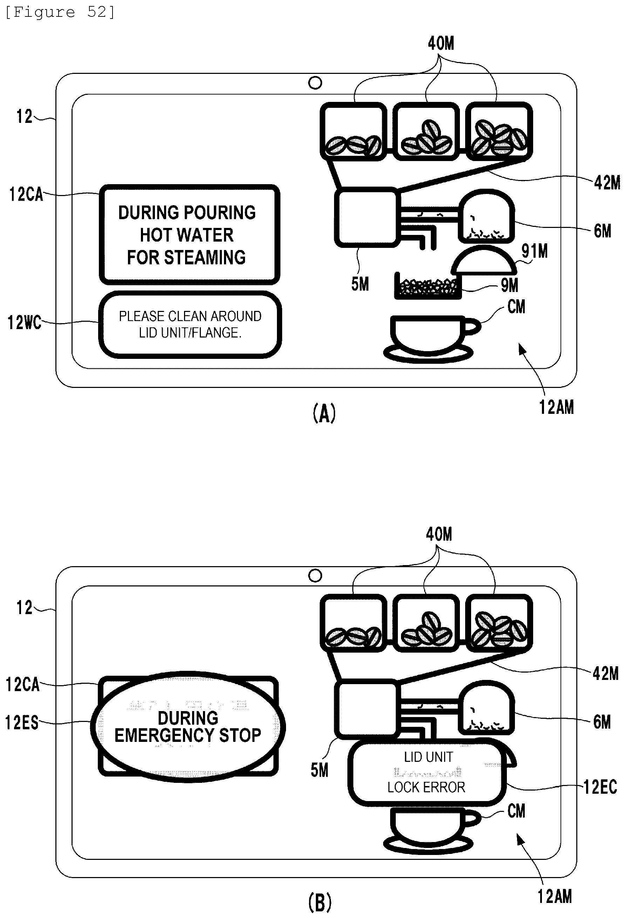

Figure 52 shows a display screen displayed on the information display device 12 during execution of the hot water pouring process for steaming (step S11) shown in Figure 11.

In the hot water pouring process for steaming, the ground beans are put into the container main body 90 in a state in which the lid unit 91 is opened, the lid unit 91 is closed, and then hot water in an amount less than one cup is poured into the extraction container 9 in order to steam the ground beans.

Also on the display screen of the information display device 12 shown in Figure 52, the animation 12AM constituted with a schematic diagram of the beverage production device 1 shown in Figure 1 is displayed on the right half of the display screen. Here, the animation 12AM displays a state in which the ground beans are put in a schematic diagram 90M of the container main body 90 in a state in which a schematic diagram 91M of the lid unit 91 is opened, and then the schematic diagram 91M of the lid unit 91 is closed. In a character display area 12CA on the left side of the display screen, the characters "during pouring hot water for steaming" are displayed.

As described with reference to the enclosing diagram of Figure 9, the extraction container 9 is provided with the pair of gripping members 821 that are opened and closed in the left-right direction by the driving force of the motor 822. When the pair of gripping members 821a are in a closed state, the gripping members 821a are fitted into the flange portion 911c of the lid unit 91 and the flange portion 90c of the container main body 90 so as to vertically sandwich the flange portion 911c and the flange portion 90c, and the lid unit 91 is airtightly locked with respect to the container main body 90, as indicated by the solid line in the enclosing diagram of Figure 9. On the other hand, in order to open the lid unit 91, it is necessary to bring the pair of gripping members 821a into an open state. The extraction container 9 is provided with an open state detection sensor for detecting that the pair of gripping members 821a are in the open state and a closed state detection sensor for detecting that the pair of gripping members 821a are in the closed state. When the hot water pouring process for steaming is started, the control device 11 outputs a control signal for moving the pair of gripping members 821a to a position in the open state to the production part 18. The control device 11 confirms that the pair of gripping members 821a have reached the position in the open state by acquiring a sensor signal indicating that the pair of gripping members 821a have been detected from the open state detection sensor. When the period of time required to input the ground beans elapses, the control device 11 outputs a control signal for moving the pair of gripping members 821a located at the position in the open state to a position in the closed state to the production part 18. Also in an initial operation executed when the beverage production device 1 is powered on, the pair of gripping members 821a located at the position in the open state are moved to the position in the closed state. In the initial operation, the control device 11 measures the time (arrival time) from the output of the control signal for moving the pair of gripping members 821a to the position in the closed state to the acquisition of a sensor signal indicating that the pair of gripping members 821a have been detected from the closed state detection sensor, and transmits the arrival time to the control part 121 of the information display device 12. The control part 121 stores the arrival time as reference time. In this way, every time the power is turned on, the reference time as a reference value is updated to the time corresponding to a state of the extraction container 9 at the time of turning on the power. That is, some of various production conditions (recipes) for producing a coffee beverage are corrected according to individual differences of the beverage production device 1. The state of the extraction container 9 varies depending on a condition of the motor 822 that moves the pair of gripping members 821a, a meshing condition of a power transmission mechanism (for example, a gear train), a magnitude of rotational resistance, and the like, and thus a coffee beverage can be produced more accurately by correcting a part of the recipe.

Also in the hot water pouring process for steaming, the control device 11 measures the time (arrival time) from the output of the control signal for moving the pair of gripping members 821a to the position in the closed state to the acquisition of the sensor signal indicating that the pair of gripping members 821a have been detected from the closed state detection sensor, and transmits the arrival time to the control part 121 as a monitoring result. If the arrival time transmitted as the monitoring result is longer than the reference time by predetermined time or more, the control part 121 determines that an error related to the lid unit 91 has occurred. The predetermined time may be 0 seconds, but a certain amount of time is given in consideration of an error. For example, in a case where the reference time is 300 milliseconds and the time of the monitoring result is 500 milliseconds or more, the pair of gripping members 821a is in the closed state, but it takes 200 milliseconds for the gripping members 821a to be in the closed state. This is considered to be caused by adhesion of residues of the ground beans or the like to the flange portion 911c of the lid unit 91 or the flange portion 90c of the container main body 90, and the control part 121 determines that a cleaning error has occurred. When it is determined that the cleaning error has occurred, the control part 121 transmits a control signal for instructing to perform a warning display to the reception part 122. On the other hand, since the lid unit 91 is locked, the control signal for stopping the hot water pouring process for steaming is not transmitted to the production part 18, and the hot water pouring process for steaming is continued. The control part 121 need not to transmit a determination result to the control device 11.

In the display screen shown in (A) of Figure 52, a warning display 12WC for prompting cleaning is displayed below the character display area 12CA in which the characters "during pouring hot water for steaming" are displayed so as not to overlap the character display area 12CA.

In a case where the reference time is 300 milliseconds and the control device 11 cannot acquire the sensor signal indicating that the pair of gripping members 821a have been detected from the closed state detection sensor even after 700 milliseconds elapses in the hot water pouring process for steaming, the control device 11 transmits a timeout result to the control part 121 as the monitoring result. In this case, the pair of gripping members 821a are not in the closed state and the lid unit 91 is not locked, and thus the control part 121 determines that a lock error of the lid unit 91 has occurred. When it is determined that the lock error of the lid unit 91 has occurred, the control part 121 transmits the determination result to the control device 11, and the control device 11 transmits a control signal for stopping the hot water pouring process for steaming to the production part 18. As a result, the hot water pouring process for steaming is stopped, and the hot water pouring for steaming is not performed in the extraction container 9. When it is determined that the lock error of the lid unit 91 has occurred, the control part 121 transmits a control signal for instructing to perform an error display to the reception part 122.

(B) of Figure 52 shows an example of an error display displayed on the information display device 12 during execution of the hot water pouring process for steaming.

On the display screen of the information display device 12 shown in (B) of Figure 52, an error display 12EC in which characters "lid unit lock error" are written is displayed so as to overlap the schematic diagram 91M of the lid unit 91 and the schematic diagram 90M of the container main body 90. In addition, a character display 12ES of "during emergency stop" is displayed so as to overlap the character display area 12CA in which the characters "during pouring hot water for steaming" is displayed.

When the control part 121 determines that a lock error of the lid unit 91 has occurred, the beverage production device 1 maintains a stop state until the beverage production device 1 is switched to a manual mode. In the manual mode, an administrator of the beverage production device 1 manually performs an operation of discharging the ground beans put into the container main body 90 from container main body 90. The administrator also investigates the cause of the pair of gripping members 821a not being in the closed state.

Although the control device 11 measures the arrival time in the example, the control part 121 of the information display device 12 may measure the arrival time. In this case, the control part 121 acquires, from the control device 11, a log indicating that a control signal for moving the pair of gripping members 821a to the position in the closed state is output. In addition, the control part 121 can acquire, from the control device 11, a log indicating that a sensor signal indicating that the pair of gripping members 821a are detected is acquired from the closed state detection sensor.

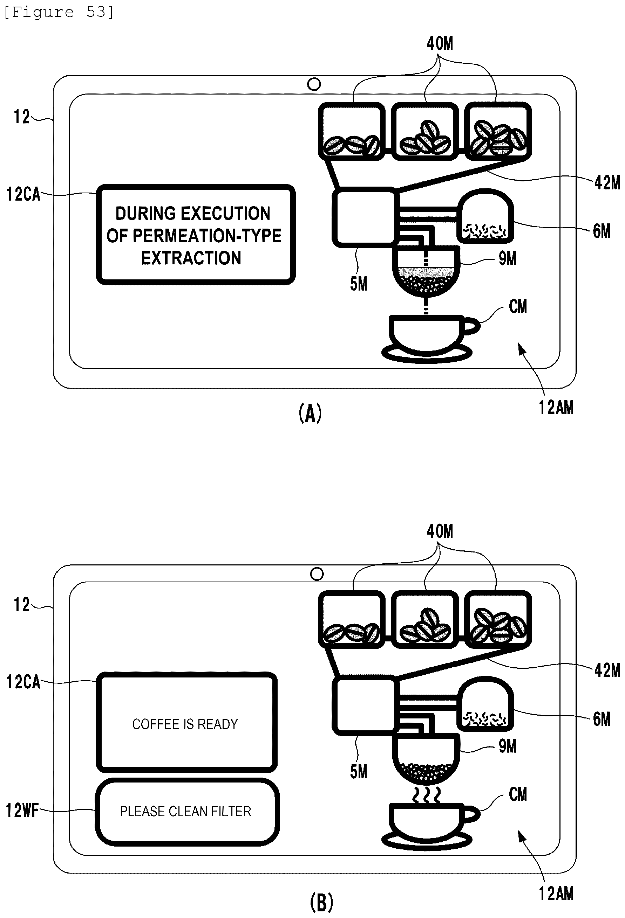

(A) of Figure 53 shows a display screen displayed on the information display device 12 during execution of the permeation-type extraction process (step S17) shown in Figure 11.

In the permeation-type extraction process, in the inverted extraction container 9, the coffee beverage in which the coffee liquid is dissolved in the hot water passes through the filter provided in the lid unit 91 and is delivered into the cup C.

Also on the display screen of the information display device 12 shown in (A) of Figure 53, the animation 12AM constituted with a schematic diagram of the beverage production device 1 shown in Figure 1 is displayed on the right half of the display screen. From the schematic diagram 9M of the extraction container 9 in an inverted state, a state in which the coffee beverage is delivered to the schematic diagram CM of the cup C is displayed. In a character display area 12CA on the left side of the display screen, the characters "during execution of permeation-type extraction" are displayed.

In a period in which the permeation-type extraction process is executed, open and closed states of the electromagnetic valves 72i, 73b, or the like are controlled by the control device 11 so that the atmospheric pressure in the extraction container 9 is maintained at a target value. When a valve opening control signal for opening the electromagnetic valves is output, the control device 11 transmits a monitoring result (log) indicating that the valve opening control signal is output to the control part 121 of the information display device 12. The valve opening control signal corresponds to one of those representing a supply state of a fluid supplied to the extraction container 9. The control part 121 counts the number of times of pressurization to the extraction container 9 based on the number of times of reception of the monitoring result. A reference value of the number of times of pressurization is also included in various production conditions (recipes) for producing a coffee beverage. The control part 121 confirms whether a count value is below the reference value (for example, 20 times), and if the count value is below the reference value, the control part 121 determines that a filter clogging error in which the filter is clogged and the delivery of the coffee beverage is hindered has occurred. When it is determined that the filter clogging error has occurred, the control part 121 transmits a control signal for instructing to perform a warning display to the reception part 122. Further, the permeation-type extraction process is completed, and thus it is not necessary to transmit the control signal for stopping the permeation-type extraction process to the production part 18, and the control part 121 need not to transmit the determination result to the control device 11.

(B) of Figure 53 shows a display screen displayed on the information display device 12 when the permeation-type extraction process (step S17) shown in Figure 11 is completed.

Also on the display screen of the information display device 12 shown in (B) of Figure 53, the animation 12AM constituted with a schematic diagram of the beverage production device 1 shown in Figure 1 is displayed on the right half of the display screen. Here, the extraction from the extraction container 9 in an inverted state is completed, and the schematic diagram CM of the cup C shows a state in which the steam is rising. In a character display area 12CA on the left side of the display screen, the characters "coffee is ready" are displayed. A warning display 12WF for prompting cleaning of the filter is displayed below the character display area 12CA so as not to overlap the character display area 12CA.

Although the control part 121 of the information display device 12 counts the number of times of pressurization, the control device 11 may count the number of times and transmit a count value as a monitoring result to the control part 121. In this case, when the permeation-type extraction process is completed, monitoring results until the permeation-type extraction process is completed are collectively transmitted to the control part 121.

Although the error determination in the three processes has been described above, any error determination is not performed by the control device 11 that controls the production part 18, but is performed by the control part 121 of the information display device 12, and thus the processing load on the control device 11 is reduced.

The error determination in processes other than the processes described here may be performed by the control part 121 of the information display device 12. In this way, the processing load on the control device 11 can be further reduced.

In the above description, described is "a beverage production device [for example, the beverage production device 1] including:
a first control part [for example, the control part 121] configured to control a reception part [for example, the reception part 122] for receives an operation; and
a second control part [for example, the control device 11] configured to control a production part [for example, the production part 18] for preparing a beverage, in which
the second control part monitors a production status of the beverage in the production part and transmits a monitoring result (for example, a log) to the first control part, and
the first control part determines whether an error has occurred in the production part based on the monitoring result".

Described is also "the beverage production device [for example, the beverage production device 1], further including:
a first control part [for example, the control part 121] configured to receive an operation;
a processing part [for example, the production part 18] configured to execute a process for preparing a beverage; and
a second control part [for example, the control device 11] configured to monitor a processing status in the processing part and transmit a monitoring result to the first control part, in which
the first control part determines whether an error has occurred in the processing part based on the monitoring result".
That is, the production part can be replaced with the processing part, and the same applies to the following description.

Described is also "the beverage production device [for example, the beverage production device 1], further including:
a first control part [for example, the control part 121] configured to receive an operation;
a processing part [for example, the production part 18] configured to execute a process for preparing a beverage; and
a second control part [for example, the control device 11] configured to transmit information on the processing part to the first control part, in which
the first control part determines whether an error has occurred in the processing part based on the information".

That is, the monitoring result can be replaced with the information on the processing part, and the same applies to the following description.

The production part may be built in a main body, and the reception part may be attached to an outer peripheral surface of the main body. Further, the reception part may be movably attached to the outer peripheral surface of the main body, or may be attached to the outer peripheral surface of the main body such that an orientation thereof can be adjusted. The second control part may also be built in the main body. The first control part may be separate from the reception part or may be integrated with the reception part.

"The production part produces a beverage" is broadly defined, and includes preparation before final production, production of an intermediate, and the like in addition to final production of a beverage.

The error may be an error in which a beverage cannot be produced, a preventive error in which a beverage can be produced at the present time but a beverage cannot be produced eventually if the device is left as it is, or an error in which a beverage can continue to be produced even if the device is left as it is (for example, an error completely unrelated to the production of a beverage).

Described is also "the beverage production device, in which
the second control part transmits a monitoring result [for example, a count value of the number of times of pressurization] until production of a beverage in the production part is completed to the first control part when the production is completed [for example, the permeation-type extraction process is completed]".

Described is also "the beverage production device, in which
the second control part transmits a monitoring result [for example, a current value of a motor] during production of a beverage in the production part to the first control part at a predetermined cycle [for example, a cycle of 250 milliseconds] during the production".

Described is also "the beverage production device, in which
the first control part instructs execution of an error notification [for example, the error display 12EB of "no beans error" shown in Figure 51 and the error display 12EC of "lid unit lock error" shown in (B) of Figure 52] when a determination result indicates that an error has occurred in the production part".

Described is also "the beverage production device, in which
the first control part transmits, to the second control part, a determination result [for example, the determination result] indicating that an error [for example, the no beans error or the lid unit lock error] has occurred in the production part, and
when the determination result is received, the second control part stops the production of a beverage in the production part [for example, the example shown in Figure 51 or the example shown in (B) of Figure 52]".

Described is also "the beverage production device, in which
the production part [for example, the pulverizing device 5] pulverizes an extraction target,
the second control part monitors a value [for example, a cumulative value, a maximum value, a minimum value, or an average value for a certain period of a current value or a power consumption value] that varies based on a resistance when the production part pulverizes the extraction target, and,
the first control part determines that an error [for example, the no beans error] has occurred in the production part if the value is below a reference value".

The second control part may transmit a monitoring result related to the value to the first control part, and the monitoring result related to the value may represent the value or may represent whether the value is below the reference value.

The production part may be electrically driven to pulverize the extraction target, and the second control part may monitor, as the value, a value of an electrical parameter (for example, a current value or a value of power consumption) when the production part pulverizes the extraction target.

Further, the extraction target may be beans or leaves.

Described is also "the beverage production device, in which
the first control part performs the determination using, as the reference value, a reference value [for example, reference values (reference values included in the recipe) shown in the table of (B) of Figure 50)] that varies depending on hardness of the extraction target".

Described is also "the beverage production device, in which
the production part has a moving member [for example, the pair of gripping members 821a] that moves from a first position [for example, a position in an open state] to a second position [for example, a position in a closed state],
the second control part monitors arrival time until the moving member arrives at the second position from the first position, and
the first control part determines that an error [for example, the lid unit lock error] has occurred in the production part when the arrival time exceeds reference time [for example, 700 milliseconds]".

The second control part may transmit a monitoring result related to the arrival time to the first control part, and the monitoring result related to the arrival time may indicate the arrival time or may indicate whether the arrival time exceeds the reference time.

The first control part may set the reference time based on the arrival time of the moving member in an initial operation executed when the beverage production device is powered on.

Described is also "the beverage production device, in which
the production part [for example, the extraction device 3] supplies a fluid [for example, steam generated in reservoirs 725 and 726 or air from the compressor 70] [for example, the electromagnetic valve 72i and the electromagnetic valve 73b], and delivers a beverage produced from a liquid and an extraction target by pressure of the fluid,
the second control part monitors a supply state of the fluid [for example, the number of times of opening the electromagnetic valve (the number of times of pressurization)], and
the first control part determines, based on the monitoring result, whether an error in which delivery of the beverage is hindered [for example, a filter clogging error] has occurred".

The second control part may transmit a monitoring result related to the supply state to the first control part.

The production part may include a supply pipe for supplying a fluid, a valve provided in the supply pipe, and an extraction container in which a liquid and an extraction target are accommodated and to which the supply pipe is connected. Furthermore, the extraction container may include a filter through which the beverage passes, and the first control part may determine whether an error such as clogging of the filter has occurred based on the monitoring result.

Next, recipe correction based on a log such as a response signal or a monitoring result transmitted from the control device 11 to the control part 121 of the information display device 12 will be described.

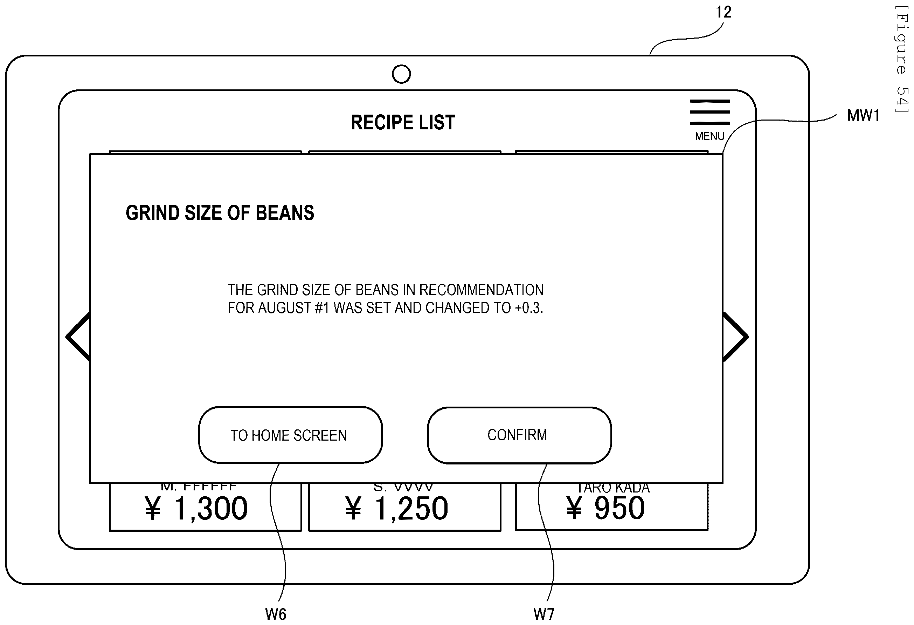

Figure 54 shows a state in which a correction report window MW1 is displayed on the display screen of the recipe list shown in Figure 22.

In the example described with reference to Figures 54 to 59, the display screen of the recipe list shown in Figure 22 corresponds to the home screen. As described above with reference to Figure 50, in a case where the grinding process (step S2) shown in Figure 11 is performed, the control part 121 of the information display device 12 monitors the current value of the motor at the time of pulverizing the roasted coffee beans. The cumulative value of the current value does not fall below the reference value based on the standard beverage production device 1 shown in (B) of Figure 50, but if the cumulative value of the current value approaches a predetermined range, it can be estimated that it is difficult to finely pulverize beans to the value of the current grind size of beans with the pulverizing performance of the pulverizing device 5 of the beverage production device 1. Therefore, the control part 121 makes a correction to change the value of the grind size of beans to a large value. That is, the control part 121 corrects the parameter based on the log of the current value. For example, as a result of executing the grinding process (step S2) in accordance with the recipe of "recommendation for August #1", in the case where the cumulative value of the current value approaches the predetermined range with respect to the reference value, the control part 121 corrects the value of the grind size of beans in the recipe to a value obtained by adding 0.3 to the value, and temporarily stores the corrected value. The value to be added may be a predetermined value. Alternatively, the value to be added may be a value corresponding to a difference between the cumulative value of the current value and the reference value. That is, a larger value may be added as the difference is smaller. When the display on the display part returns to the home screen, the control part 121 displays a correction report window MW1 shown in Figure 54 on the display part, and notifies that the parameter of the grind size of beans have been changed. A return icon W6 and a confirmation icon W7 are prepared at the bottom of the correction report window MW1. When the return icon W6 is tapped, the correction report window MW1 disappears, and the screen returns to the home screen of the recipe list. The value obtained by adding 0.3 is overwritten on the parameter of the grind size of beans in the recipe of "recommendation for August #1" stored in the storage part 121b of the information display device 12. Alternatively, the database of the beverage production device 1 managed by the server 16 is corrected. When the confirmation icon W7 is tapped, an input window IW3 appears on the display part of the information display device 12.

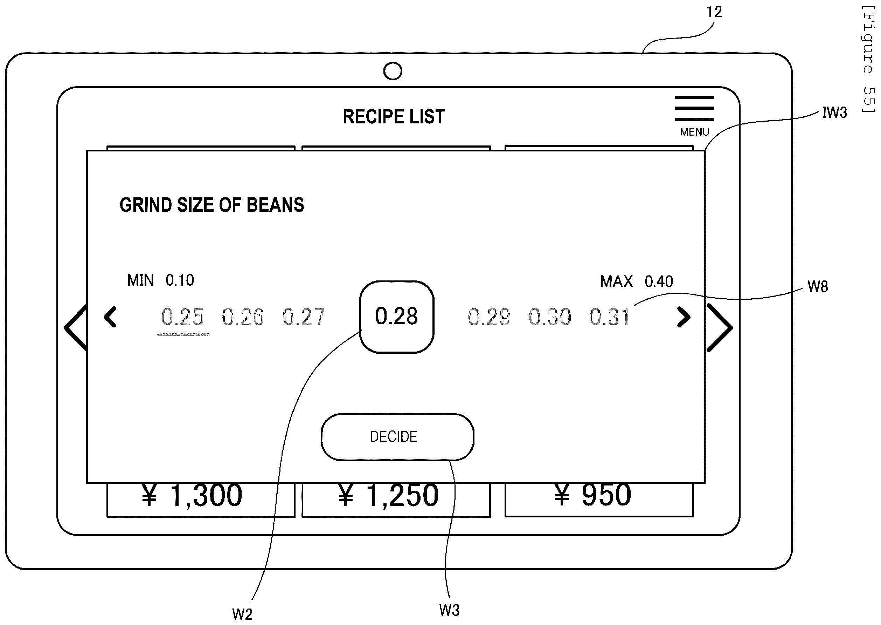

Figure 55 shows a display screen displayed when the confirmation icon W7 shown in Figure 54 is tapped.

In the display part of the information display device 12 shown in Figure 55, the correction report window MW1 shown in Figure 54 disappears, and an input window IW3 is displayed instead. Similar to the input window IW1 shown in Figure 42, in the input window IW3 shown in Figure 55, a maximum value (MAX 0.40) and a minimum value (MIN 0.10) in a correctable range are displayed, and a numerical sequence W8 in which numerical values between the maximum value and the minimum value are arranged at interval of 0.01 is displayed. An input frame W2 is arranged at the center of the numerical sequence W8, and 028 is located in the input frame W2 in the input window IW3 shown in Figure 55. The user can move the numerical sequence W8 by a swipe operation, and can change a numerical value in the input frame W2 to a desired value within the correctable range. The value of the parameter before the correction performed by the control part 121 based on the log is 0.25, and the value of 0.25 is underlined in the numerical sequence W8 to indicate that the value is the value before the correction. When the decision icon W3 prepared in the lower part is tapped, the numerical value located in the input frame W2 is stored as a parameter of the grind size of beans in the recipe of "recommendation for August #1" stored in the storage part 121b of the information display device 12. Alternatively, the database of the beverage production device 1 managed by the server 16 is corrected. When the decision icon W3 is tapped, the input window IW3 disappears and the screen returns to the home screen of the recipe list.

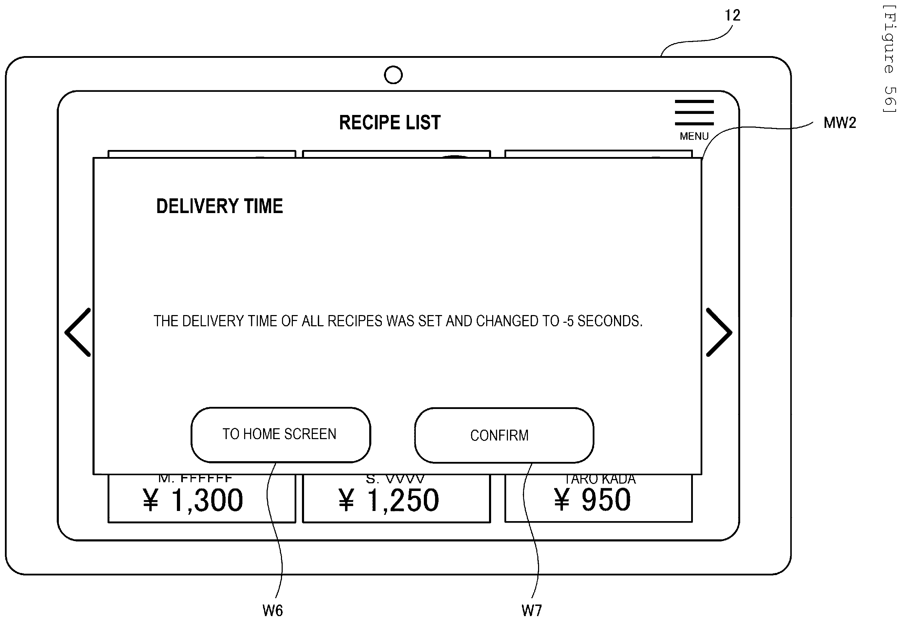

Figure 56 shows a state in which a correction report window MW1 different from the correction report window MW1 shown in Figure 54 is displayed on the display screen of the recipe list.

As described with reference to Figure 53, in a case where the permeation-type extraction process (step S17) shown in Figure 11 is executed, the control part 121 of the information display device 12 monitors the count value of the number of times of pressurization. Even though the delivery of the coffee beverage from the extraction container 9 is completed, the valve opening control signal is repeatedly output during the delivery time set by the parameter, and the pressurization is repeated. When the delivery of the coffee beverage from the extraction container 9 is completed, the device is in an idling state, and the number of times of pressurization per unit time increases. The parameter of the delivery time is set on the basis of a state when the filter is clogged to a certain extent after the time has passed since the beverage production device 1 started operating. When the filter is clogged, it takes a long time to complete the delivery of the coffee beverage from the extraction container 9. Therefore, the delivery time is set to be slightly longer. After the warning display 12WF prompting cleaning of the filter is displayed and the filter is cleaned as shown in (B) of Figure 53, the delivery time set by the parameter becomes too long. In a case where the count value of the number of times of pressurization reaches a predetermined number of times that greatly exceeds a reference number of times for confirming clogging of the filter to a certain extent, it is considered that the delivery of the coffee beverage is completed and the idling state is repeated many times. Therefore, in a case where the count value of the number of times of pressurization reaches the predetermined number of times, the control part 121 makes a correction to change the value of the delivery time to a value of shorter time. That is, the control part 121 corrects the parameter based on the log of the output of the valve opening control signal. The correction of the parameter of the delivery time is not a correction limited to a specific recipe, but is a correction for all recipes targeted for the beverage production device 1. When the display on the display part returns to the home screen, the control part 121 displays a correction report window MW2 shown in Figure 56 on the display part, and notifies that the parameter of the delivery time has been changed for all recipes. The return icon W6 and the confirmation icon W7 are also prepared at the bottom of the correction report window MW2. When the return icon W6 is tapped, the correction report window MW2 disappears, and the screen returns to the home screen of the recipe list. The parameters of the delivery time in all recipes stored in the storage part 121b of the information display device 12 are overwritten with a value obtained by subtracting 5 seconds. Alternatively, the database of the beverage production device 1 managed by the server 16 is corrected. When the confirmation icon W7 is tapped, an input window IW4 appears on the display part of the information display device 12.

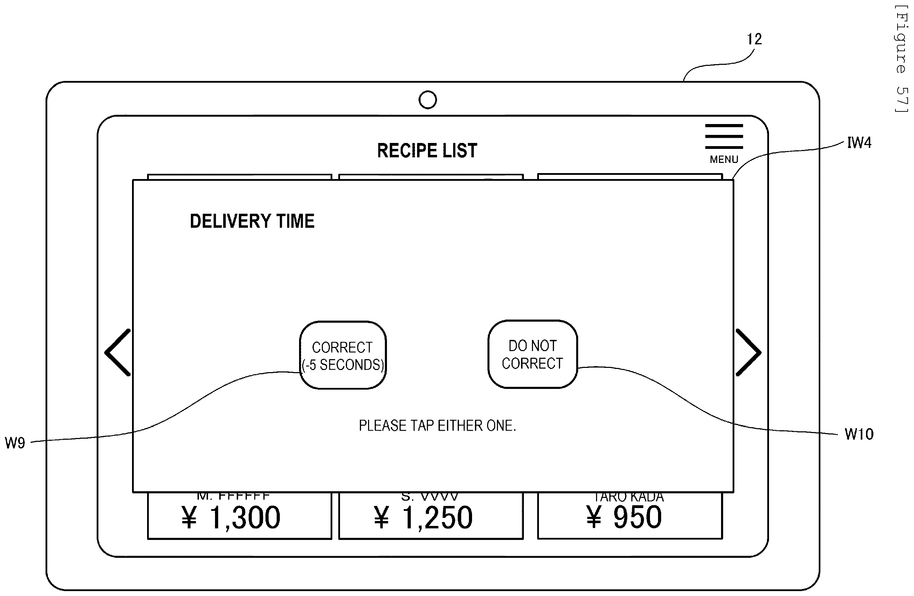

Figure 57 shows a display screen displayed when the confirmation icon W7 shown in Figure 55 is tapped.

In the display part of the information display device 12 shown in Figure 57, the correction report window MW2 shown in Figure 56 disappears, and an input window IW4 is displayed instead. In the input window IW4 shown in Figure 57, a correction icon W9 and a cancel icon W10 are displayed, and the user is prompted to tap one of the icons. When the correction icon W9 is tapped, the parameters of the delivery time in all recipes stored in the storage part 121b of the information display device 12 are overwritten with a value obtained by subtracting 5 seconds. Alternatively, the database of the beverage production device 1 managed by the server 16 is corrected. When the cancel icon W10 is tapped, the change of the parameter of the delivery time is canceled for all recipes, and the delivery time remains the original value. In addition, whether the correction icon W9 is tapped or the cancel icon W10 is tapped, the input window IW4 disappears and the screen returns to the home screen of the recipe list. Also in a case where the predetermined time elapses without any icon being tapped, the input window IW4 disappears and the screen returns to the home screen of the recipe list. In this case, the parameter of the delivery time is corrected. However, the original value may be maintained without modification.

In a case where the parameter of the delivery time is corrected to shorter time, the cycle time (time until the completion of the discharge process S4 shown in Figure 11) for producing a coffee beverage can be shortened.

The count value of the number of times of pressurization does not fall below the reference number of times for checking clogging of the filter, but if the count value approaches a predetermined range, it can be estimated that clogging starts to occur in the filter which has been clean. Therefore, the control part 121 makes a correction to change a parameter of the delivery pressure based on the air pressure from the compressor 70 to a large value. That is, the control part 121 also corrects the parameter based on the log of the output of the valve opening control signal. The correction of the parameter of the delivery pressure is not limited to a specific recipe, but is a correction for all recipes targeted for the beverage production device 1, similar to the above delivery time. When the display on the display part returns to the home screen, the control part 121 displays a correction report window on the display part, and notifies that the parameter of the delivery pressure has been changed for all recipes.

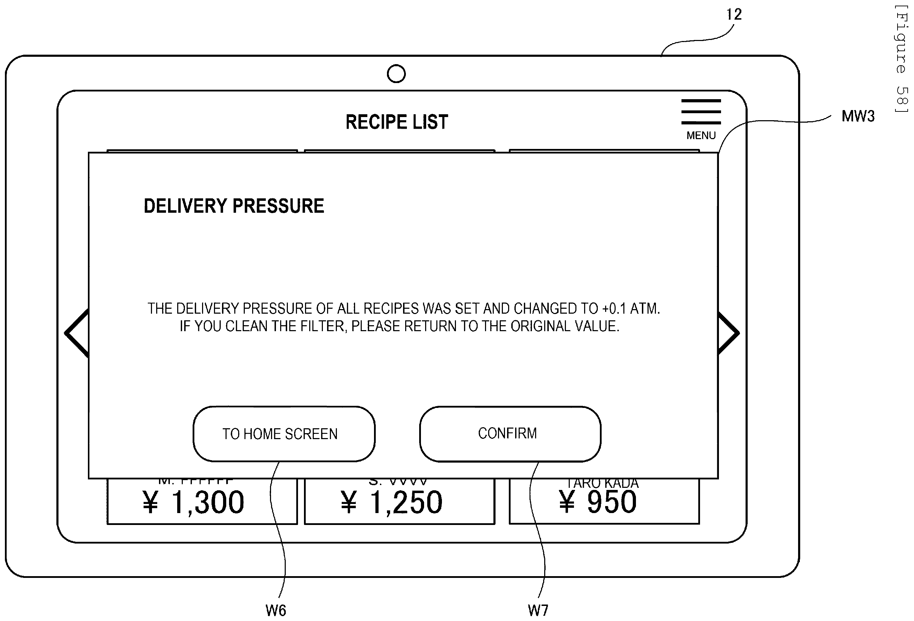

Figure 58 shows an example in which a correction report window notifying that the parameter of the delivery pressure has been changed is displayed.

In the correction report window MW3 shown in Figure 58, the change of the parameter of the delivery pressure is notified, and it is recommended to return to the original value when the filter is cleaned. The return icon W6 and the confirmation icon W7 are also prepared at the bottom of the correction report window MW3. When the return icon W6 is tapped, the correction report window MW3 disappears, and the screen returns to the home screen of the recipe list. The parameters of the delivery pressure in all recipes stored in the storage part 121b of the information display device 12 are overwritten with a value obtained by adding 0.1 atm. Alternatively, the database of the beverage production device 1 managed by the server 16 is corrected. When the confirmation icon W7 is tapped, an input window IW5 appears on the display part of the information display device 12.

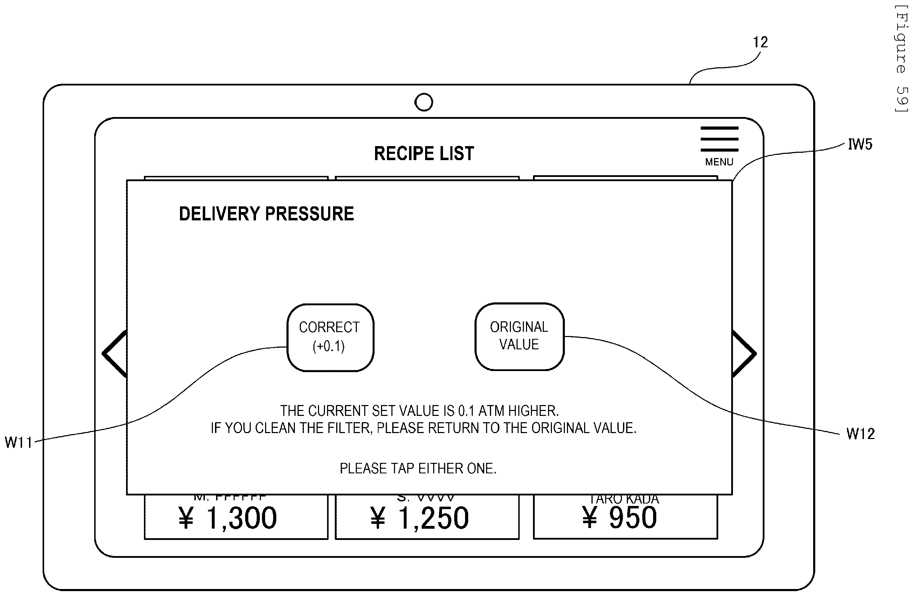

Figure 59 shows a display screen displayed when the confirmation icon W7 shown in Figure 58 is tapped.

In the display part of the information display device 12 shown in Figure 59, the correction report window MW3 shown in Figure 58 disappears, and an input window IW5 is displayed instead. A correction icon W11 and a cancel icon W12 are displayed in the input window IW5 shown in Figure 59. Also here, it is recommended to return to the original value when the filter is cleaned, and the user is prompted to tap one of the icons. When the correction icon W11 is tapped, the parameters of the delivery pressure in all recipes stored in the storage part 121b of the information display device 12 are overwritten with a value obtained by adding 0.1 atm. Alternatively, the database of the beverage production device 1 managed by the server 16 is corrected. When the cancel icon W12 is tapped, the change of the parameter of the delivery pressure is canceled for all recipes, and the delivery pressure remains the original value. In addition, whether the correction icon W11 is tapped or the cancel icon W12 is tapped, the input window IW5 disappears and the screen returns to the home screen of the recipe list. Also in a case where the predetermined time elapses without any icon being tapped, the input window IW5 disappears and the screen returns to the home screen of the recipe list. In this case, the parameter of the delivery pressure is corrected. However, the original value may be maintained without modification.

In a case where the parameter of the delivery pressure is corrected to a high pressure, it is possible to reduce the difficulty in delivering the coffee beverage.

In the correction of the parameter based on the log, the confirmation icon W7 is prepared, and the user can confirm the correction. However, the correction may be made without confirmation of the user, or the correction itself may be made without notifying the user.

In addition, a recipe for extracting coffee from other coffee beans (for example, coffee beans from Costa Rica) may be corrected based on history information when coffee is brewed from certain coffee beans (for example, coffee beans from Panama) in the log. For example, in a case where it is determined that the coffee delivery time is longer than a threshold value by referring to the history information when coffee is brewed from certain coffee beans (for example, coffee beans from Panama), the filter clogging may occur gradually as described above. For this reason, the coffee may be brewed based on history information (log) by a beverage production operation partly different from the recipe, such as by increasing the coffee delivery pressure by 5% in the recipe not only when the coffee is brewed from certain coffee beans (for example, coffee beans from Panama) but also when the coffee is brewed from other coffee beans (for example, coffee beans from Costa Rica), instead of following the recipe.

In the case where the coffee is brewed by the beverage production operation partially different from the recipe based on the history information (log), information on the beverage production operation partially different from the recipe may be included in the extracted history information (log) or may be accumulated in association with the history information (log).

In a case where the coffee is brewed by making a part of the beverage production operation different from the recipe based on the history information (log), it may be notified that the coffee is not brewed in accordance with the recipe, in a mode different from the mode when the coffee is brewed by the beverage production operation in accordance with the recipe. For example, in the case where the coffee is brewed by the beverage production operation in accordance with the recipe, the time until the coffee is brewed is displayed in black numbers, while in the case where the coffee is brewed by the beverage production operation partially different from the recipe based on the history information (log), the time until the coffee is brewed may be displayed in red numbers.

In addition, the types of parameters corrected based on the log are not limited to the grind size of beans, the delivery time, and the delivery pressure described here.

In the above description, described is "a beverage production device including:
an acquisition unit [for example, the information display device 12 or the processing part 121a] configured to acquire a recipe used for a part or all of steps of beverage production;
a processing unit [for example, the control device 11 or the processing part 11aJ configured to execute a process for producing a beverage with reference to parameters [for example, an amount of beans, a grind size of beans, an amount of hot water for steaming, steaming time, an amount of hot water for extraction (amount of hot water for pouring), an amount of first main hot water supply, an amount of second main hot water supply, an amount of pressurized hot water supply, extraction pressure, extraction time, stationary time before rotation, stationary time after rotation, delivery time, delivery pressure, a name of beans, a producing country of beans, a roasting degree of beans, a recipe creator, and the like] included in the recipe acquired by the acquisition unit; and
a production unit [for example, the actuator group 14 shown in Figure 21 (the pulverizing device 5 and the extraction device 3 shown in Figure 3)] configured to operate in accordance with the process executed by the processing unit to produce a beverage, in which
the processing unit is configured to execute a process for producing a beverage with reference to parameters [for example, the grind size of beans in the example shown in Figure 54, the delivery time in the example shown in Figure 56, and the delivery pressure shown in Figure 58] corrected based on logs [for example, the response signal and the monitoring result transmitted from the control device 11 to the control part 121 of the information display device 12] related to at least one of the processing unit and the production unit".

It should be noted that the term "to produce a beverage" as used herein is broadly defined, and includes preparation before final production, production of an intermediate, and the like in addition to final production of a beverage.

Further, there may be a plurality of types of the production units, and the recipe may include parameters for each of the plurality of types of production units, or there may be the plurality of types of parameters for one production unit, and the recipe may include the plurality of types of parameters for one production unit.

The recipe may be downloaded from a server via a communication network. The restriction in this case may be prohibition of downloading.

The beverage production device may include an acquisition part "for example, the information display device 12 or the I/F part 11c" configured to acquire a recipe including a parameter, a processing part "for example, the actuator group 14 or the production part 18" configured to execute a process for producing a beverage, and a control part "for example, the control device 11 or the processing part 11a" configured to control the processing part according to the parameter included in the recipe acquired by the acquisition part.

Described is also "the beverage production device further including:
a second processing unit [for example, the processing part 121a of the information display device 12] configured to acquire the logs, in which
the second processing unit corrects the parameters referred to by the processing unit based on the acquired logs [for example, the current value of the motor at the time of pulverizing the roasted coffee beans and the valve opening control signal in the permeation-type extraction process (step S17)]".

Described is also "the beverage production device further including:
a display unit [for example, the display part of the information display device 12] configured to display a selection display [for example, the display in the input window IW3 shown in Figure 55, the display in the input window IW4 shown in Figure 57, and the display in the input window IW5 shown in Figure 59] for allowing a user to select whether to correct the parameters, in which
the second processing unit displays the selection display on the display unit based on the acquired logs,
if the user selects to correct the parameters in the selection display [for example, in a case where the decision icon W3 is tapped in the state in which 028 is located in the input frame W2 shown in Figure 55, a case where the correction icon W9 is tapped shown in Figure 57, or a case where the correction icon W11 is tapped shown in Figure 59], the second processing unit corrects the parameters based on the logs, and the processing unit executes the process for producing a beverage with reference to corrected parameters, and
if the user does not select to correct the parameters in the selection display [for example, in a case where the decision icon W3 is tapped in the state in which 025 is located in the input frame W2 as shown in Figure 55, a case where the cancel icon W10 is tapped shown in Figure 57, or a case where the cancel icon W12 is tapped shown in Figure 59], the processing unit executes the process for producing a beverage with reference to uncorrected parameters".

Described is also "the beverage production device further including:
a storage unit configured to store the parameters [for example, the storage part 121b of the information display device 12], in which
the second processing unit [for example, the processing part 121a of the information display device 12] acquires the parameters from the storage unit, and
the storage unit newly stores parameters corrected by the second processing unit".

The new storage here may be overwriting or additional writing.

Described is also "the beverage production device further including:
an extraction container [for example, the extraction container 9] configured to accommodate a liquid and an extraction target, in which
the production unit [for example, the compressor 70, the pipe L1, and the electromagnetic valve 73b] repeatedly supplies the fluid to the extraction container for a predetermined time [for example, delivery time set by a parameter],
a beverage produced from the liquid and the extraction target is delivered from the extraction container by pressure of the fluid supplied from the production unit, and
the parameter is a value representing the predetermined time [for example, delivery time] [for example, Figures 56 and 57]".

Described is also "the beverage production device, in which
a log related to the production unit represents that the fluid is supplied to the extraction container [for example, the valve opening control signal of the electromagnetic valve 73b], and
as a result of counting the number of times of fluid supply [for example, the number of times of pressurization] during the predetermined time based on the log, if a count result is larger than a reference number of times, the predetermined time [for example, delivery time] is corrected to shorter time [for example, Figures 56 and 57]".

Described is also "the beverage production device further including:
an extraction container [for example, the extraction container 9] configured to accommodate a liquid and an extraction target, in which
the production unit [for example, the compressor 70, the pipe L1, and the electromagnetic valve 73b] supplies a fluid to the extraction container,
a beverage produced from the liquid and the extraction target is delivered from the extraction container by pressure of the fluid supplied from the production unit, and
the parameter is a value representing pressure of the fluid supplied from the production unit [for example, a value of the delivery pressure based on the air pressure from the compressor 70] [for example, Figures 58 and 59]".

Described is also "the beverage production device, in which
a log related to the production unit represents that the fluid is supplied to the extraction container, and
as a result of counting the number of times of fluid supply [for example, the number of times of pressurization] during the predetermined time based on the log, if a count result is smaller than a reference number of times, the predetermined time [for example, delivery pressure] is corrected to shorter time [for example, Figures 56 and 57] " .

Described is also "the beverage production device, in which
the production unit is a pulverizing unit [for example, the pulverizing device 5] for pulverizing roasted coffee beans to obtain ground beans,
the pulverizing unit is configured to adjust a grind size of the roasted coffee beans,
a log related to the production unit is a value [for example, a cumulative value, a maximum value, a minimum value, or an average value for a certain period of a current value or a power consumption value] that varies based on resistance when the pulverizing unit pulverizes the roasted coffee beans, and
the parameter is a value of the grind size [for example, Figures 54 and 55]".

In a case where the value is smaller than a threshold value based on the log, the grind size may be corrected to a large size.

In the above description, all of the constituent elements expressed as "unit" can be replaced with "part".

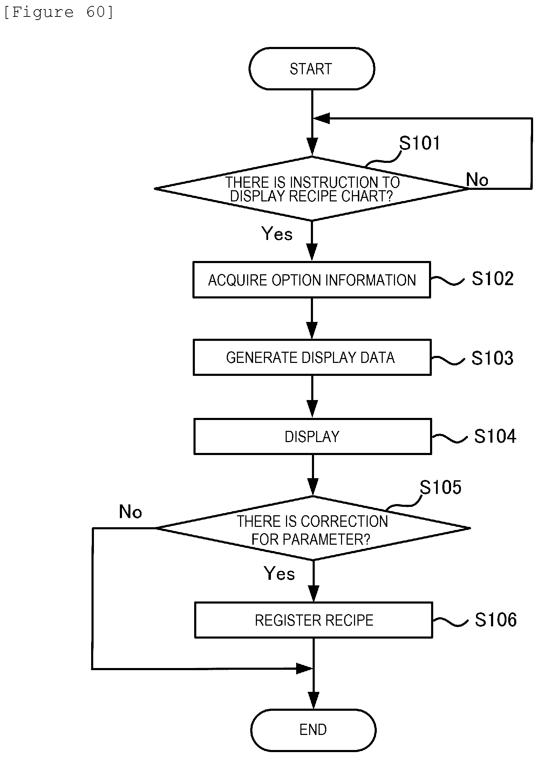

Next, another example of a display example of the recipe in the information display device 12 will be described with reference to Figures 60 to 63. Note that the reference numerals shown in Figures 60 to 63 are used only for the description using Figures 60 to 63 in principle, and even in a case where the overlapping reference numerals are shown in other figures, the reference numerals shown in Figures 60 to 63 are given priority in the description using Figures 60 to 63.

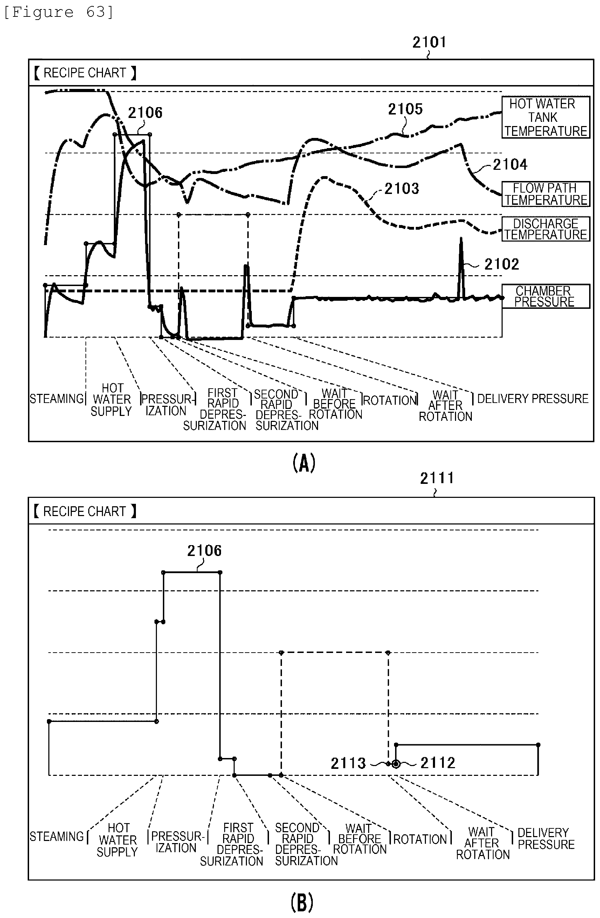

Figure 63 shows another example of the display related to the recipe displayed on the information display device 12. In the present embodiment, as shown in a screen 2101 of (A) of Figure 63, the parameters of the recipe registered in the beverage production device 1 can be displayed as a chart. In the present embodiment, the term "chart" includes the meaning of each expression form such as a diagram, a table, and a graph. In the screen 2101, charts 2102, 2103, 2104, and 2105 representing measured values in the beverage production device 1 acquired based on the recipe and a recipe chart 2106 representing values of the parameters of the recipe are displayed. In the screen 2101, the horizontal axis represents each control process of the beverage production device 1 described in Figure 11 and the like, and the vertical axis represents the magnitude of each parameter.

A chart 2102 shows a measured value of the pressure in the extraction container 9, and a chart 2103 shows a measured value of the temperature of the pouring part 10c of the coffee beverage. A chart 2104 shows a measured value of temperature of a flow path, for example, a measured value of the temperature sensor 73e provided in the pipe L3. A chart 2105 shows a measured value of the hot water temperature in the water tank 72. These measured values are not limited to those shown in (A) of Figure 63, and other values measured in the beverage production device 1 may be displayed.

A recipe chart 2106 represents parameters of the recipe registered in the beverage production device 1, and (A) of Figure 63 represents the pressure in the extraction container 9 among the parameters of the registered recipe. (A) of Figure 63 shows the pressure in the extraction container 9 as an example of the recipe chart 2106, but other parameters such as the amount of hot water in the extraction container 9 may be shown. With the screen 2101 as shown in (A) of Figure 63, the user may compare the parameters represented by the recipe with the measured values in the beverage production device 1. The user may be a staff or an administrator who provides a coffee beverage by the beverage production device 1, or a general customer who orders a coffee beverage.

Hereinafter, a process for displaying the screen 2101 of (A) of Figure 63 will be described.

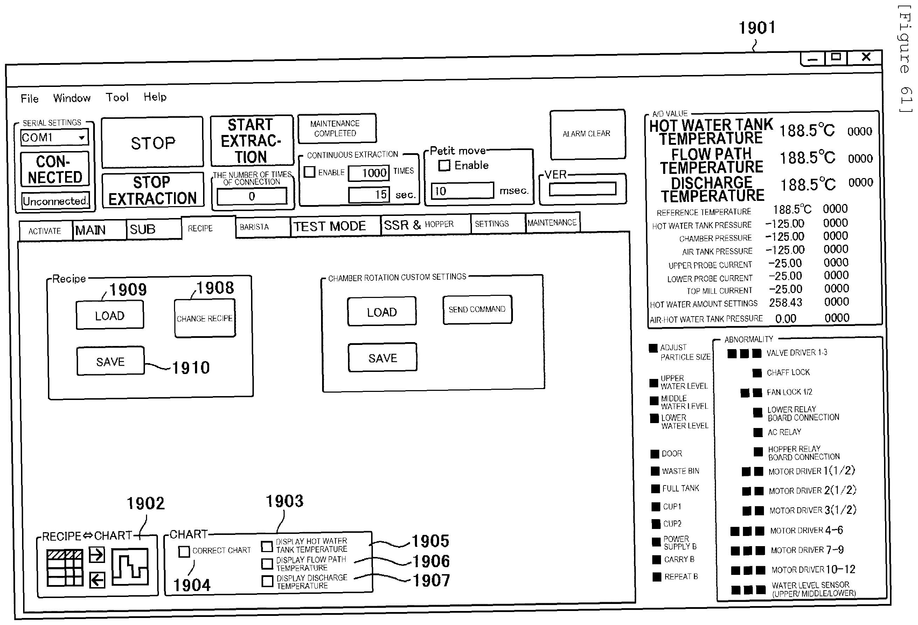

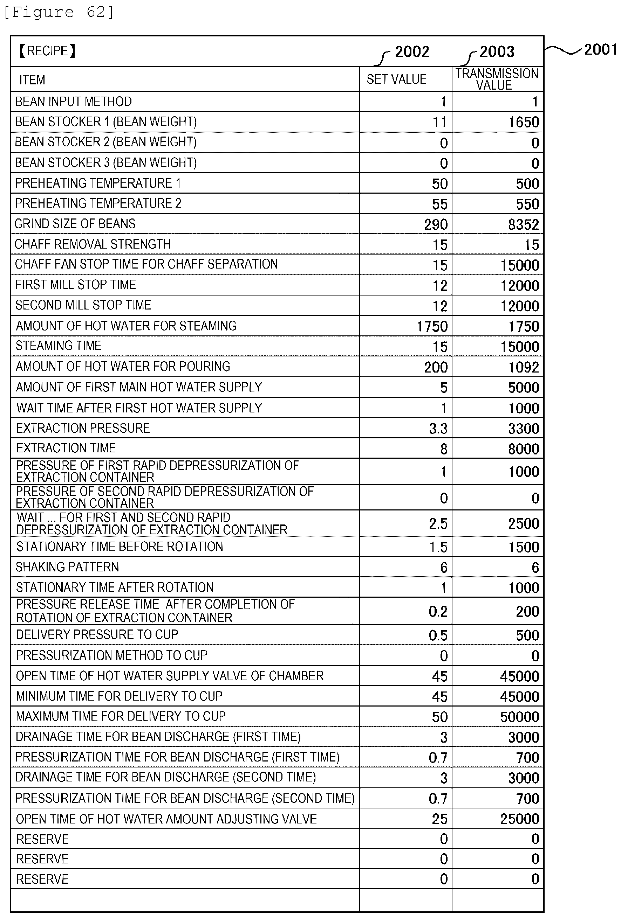

Figure 61 shows an example of a screen 1901 for displaying the screen 2101 of (A) of Figure 63. The screen 1901 is, for example, a maintenance screen viewable by an administrator of the beverage production device 1. The screen 1901 displays, for example, a status of each part such as a motor driver and a water level sensor, an execution item of a test mode, and the like. A button 1902 on the screen 1901 is an instruction button for displaying the screen 2101 based on the recipe registered in the beverage production device 1. When the button 1902 is pressed, for example, a recipe in a table format displayed as shown in Figure 62 is switched to a recipe chart 2106 on the screen 2101.

Figure 62 shows an example in which the parameters of the recipe registered in the beverage production device 1 are displayed in a table format. A recipe 2001 of Figure 62 may be acquired based on the contents set on the setting screen displayed on the mobile terminal 17 shown in Figure 10, or may be acquired based on the contents set on the screen 1901. Alternatively, the recipe 2001 of Figure 62 may be acquired based on the contents received on the information display device 12 when the coffee beverage is delivered in the beverage production device 1. For example, the recipe 2001 is acquired by pressing a load button 1909 of the screen 1901, and is displayed by pressing a recipe change button 1908. That is, the user may temporarily display the information on the registered recipe in a table format, and may display a chart on the screen 2101 by the button 1902. A set value 2002 of the recipe 2001 indicates a set value received on the setting screen, and a transmission value 2003 is a value for controlling the beverage production device 1. The set value 2002 and the transmission value 2003 are in a unit-converted relationship. For example, the transmission value 2003 for the extraction time "8" means a value converted to "8000" seconds.

A selection item 1903 of the screen 1901 receives selection of an option when the recipe is displayed in a chart. That is, a measured value for a selected item is displayed on the screen 2101 together with the recipe chart 2106. For example, in a case where an item 1905 is selected, the chart 2105 is displayed on the screen 2101. For example, in a case where an item 1906 is selected, the chart 2104 is displayed on the screen 2101. For example, in a case where an item 1907 is selected, the chart 2103 is displayed on the screen 2101. The selection item 1903 displays the number of option items corresponding to the types of measured values that can be displayed on the screen 2101.

When the button 1902 is pressed in a state in which the item 1904 is selected, only the recipe chart 2106 is displayed as in a screen 2111 of (B) of Figure 63. By such display control, the information displayed on the screen may be narrowed down, and the convenience of the correction (change of the recipe) of the parameters of the recipe by the user may be improved.

On the recipe chart 2106 of the screen 2111, the user can correct the parameters of the recipe by a touch operation or the like. As a change operation by the user, it is possible to receive a motion of a point indicated by a black circle on the recipe chart 2106, for example, a motion of a point in the time axis direction or the magnitude direction of the parameter. At this time, when the motion of one point in the magnitude direction of the parameter is received, an adjacent point is also moved in conjunction with the point in the process. For example, when a point 2112 in a "wait after rotation" step is moved in a direction in which a pressure value increases (that is, an upward direction in the figure), an adjacent point 2113 in the "wait after rotation" step is also moved in conjunction with the point 2112 in the direction in which a pressure value increases.

In the above description, when the item 1904 is selected, only the recipe chart 2106 is displayed, but items selected from the items 1905 to 1907 may be displayed together. With such a configuration, the user may change the recipe while comparing the parameters of the recipe with desired measured values. When a save button 1910 on the screen 1901 is pressed after the correction of the parameter of the recipe is received on the screen 2111, the recipe including the information on the changed parameters is registered as a changed recipe. Although the example of correcting the recipe by correcting the recipe chart 2106 has been described, the chart of the measured values 2102 to 2105 may be registered as a recipe, and may be called at the time of beverage production to be used as a recipe. The chart of the measured values 2102 to 2105 and the like may be corrected on the screen 2101 by the same method as the method (for example, a touch operation) exemplified as a correction method of the recipe chart 2106 and registered as a recipe, and may be called at the time of beverage production to be used as a recipe. Further, the chart of target pressure in the extraction container 9 has been exemplified as the recipe chart representing the values of the parameters of the recipe, but a chart of a target amount of hot water, a chart of target temperature, and a chart of target water temperature in a predetermined place (for example, the extraction container 9) in the coffee machine may be displayed as the recipe chart on the screen 2101, may be corrected by the same method as the method (for example, a touch operation) exemplified as the correction method of the recipe chart 2106 and registered as recipes, and may be called at the time of beverage production to be used as recipes.

Figure 60 is a flowchart showing a display process of the recipe chart. The process of Figure 60 is implemented by, for example, the processing part 11a loading and executing a program stored in the storage part 11b.

In S101, the processing part 11a waits for reception of an instruction to display the recipe chart 2106. Here, the instruction to display the recipe chart 2106 is, for example, pressing the button 1902. If it is determined that the instruction to display the recipe chart 2106 is received, the process proceeds to S102.

In S102, the processing part 11a acquires option information for displaying the recipe chart 2106. Here, the option information is, for example, selection information of the items 1904 to 1907 of the selection item 1903.

In S103, the processing part 11a generates display data based on the option information acquired in S102. For example, measured values of the items selected in the items 1905 to 1907 are acquired, and display data for displaying the chart is generated. Further, based on the recipe 2001 of Figure 62, display data for displaying the recipe chart 2106 is generated. In S104, the processing part 11a displays the display data generated in S103 on the information display device 12. At this time, either the screen 2101 or the screen 2111 may be controlled to be displayed according to a selection status of the selection item 1903.

In S105, the processing part 11a determines whether the recipe chart 2106 is corrected. For example, when the point 2112 is moved on the screen 2111 and the save button 1910 of the screen 1901 is pressed, it is determined that the recipe chart 2106 is corrected. If it is determined that the recipe chart 2106 is corrected, the process of Figure 60 ends. On the other hand, if it is determined that the recipe chart 2106 is corrected, the process proceeds to S106.

In S106, the processing part 11a registers a recipe including parameters corrected on the screen 2111 as a changed recipe. At this time, the changed recipe may be registered (that is, updated) instead of the recipe before the change, or may be registered together with the recipe before the change by receiving designation of a different name. After S106, the process of Figure 60 ends.

In the above description, the screens of Figures 61 to 63 are displayed on the information display device 12. However, the screens of Figures 61 to 63 may be displayed on a device different from the beverage production device 1 instead of the information display device 12. For example, the screens of Figures 61 to 63 may be displayed on a PC connected to the mobile terminal 17 or the communication network 15 shown in Figure 10. In this case, the processing part 11a transmits data (for example, an HTML file) for displaying the screens of Figures 61 to 63 to the mobile terminal 17 or the PC in the system via the communication network 15. With such a configuration, for example, a user (for example, an administrator) at a remote location can change the recipe registered in the beverage production device 1 on the PC of the user for maintenance, and transmit the content of the changed recipe to the beverage production device 1.

The display process of the recipe chart shown in Figure 60 may be executed by the processing part of the information display device 12 loading and executing the program stored in the storage part.

### <Summary of Embodiments>

The beverage production device of the above embodiment includes: a display control unit (S104) configured to display information on parameters of a registered recipe in a chart on a display part (12, 17); an reception unit (S105) configured to receive a change operation for the information on the parameters displayed by the display control unit; and a registration unit (S106) configured to register a recipe including information on parameters changed by the change operation as a changed recipe. With such a configuration, in a case where the information on the parameters of the recipe is displayed in a chart and a change operation for the information on the parameters is received, a recipe including information on the changed parameters can be registered as a changed recipe.

The change operation is a change operation for at least one of a magnitude of the parameter and a time width ((B) of Figure 63). The change operation is a change operation on a chart ((B) of Figure 63). With such a configuration, it is possible to receive a change operation for at least one of the magnitude of the parameter and the time width on the chart.

The display control unit may further display a measured value obtained based on the registered recipe on the display part ((A) of Figure 63). With such a configuration, for example, a change in pressure obtained based on the recipe can be displayed.

The beverage production device may further include an acquisition unit (1909) configured to acquire information on the parameters represented by the registered recipe. With such a configuration, for example, the information on the parameters stored in a table format can be acquired.

The display part (12) is provided in the beverage production device. The display part (17) is provided in a device different from the beverage production device. With such a configuration, the information on the parameters of the recipe can be displayed in a chart on a display part provided in the beverage production device or a display part provided in a device different from the beverage production device.

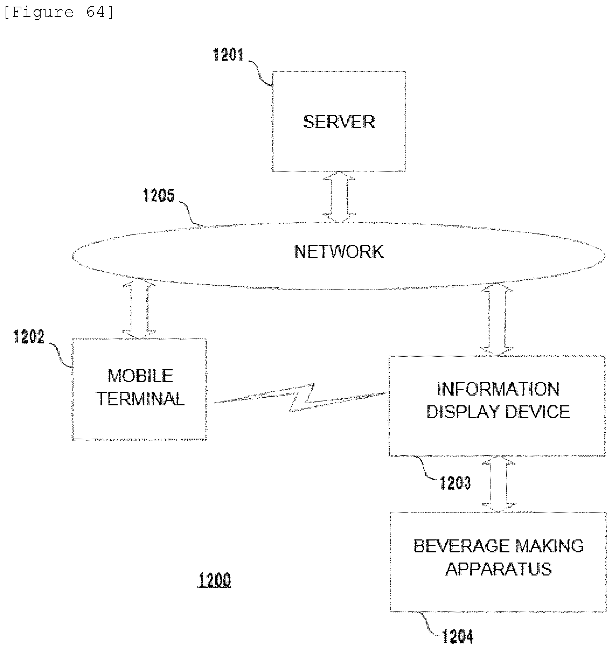

Next, with reference to Figures 64 to 106, a contrivance that allows a user who is served a beverage to easily select any one of the type of the beverage, the ingredient of the beverage, and the production method of the beverage based on desired properties related to the beverage. Note that the reference numerals shown in Figures 64 to 106 are used only for the description using Figures 64 to 106 in principle, and even in a case where the overlapping reference numerals are shown in other figures, the reference numerals shown in Figures 64 to 106 are given priority in the description using Figures 64 to 106.

First, with reference to Figure 64, an application system (hereinafter, referred to simply as a system) including the beverage production device 1 will be described. Figure 64 shows a general configuration of a system 1200 including the beverage production device 1. The system 1200 includes a server 1201, a mobile terminal 1202, an information display device 1203, and a beverage production device 1204. The beverage production device 1204 corresponds to the beverage production device 1, and the information display device 1203 corresponds to the information display device 12. The mobile terminal 1202 is a smartphone of a user, for example. The server 1201, the mobile terminal 1202 and the information display device 1203 are communicably connected to each other over a network 1205, such as the Internet. The information display device 1203 and the beverage production device 1204 are located at a shop that provides coffee beans or beverage, for example, and the information display device 1203 is capable of short-range radio communication based on Bluetooth (registered trademark) or the like with the mobile terminal 1202 of the user.

In the system 1200, the server 1201 can provide various services (functions) relating to coffee via an application downloaded to the mobile terminal 1202. The functions provided by the server 1201 include a service concerning rewards points that can be used at a shop (such as a cafe), a coffee beans online shopping service, a review service concerning purchases, such as commenting or rating, and a custom recipe service described later, for example. The services provided by the server 1201 are not limited to these but may include a cafe search service or a service for editing an image of a cup of coffee ordered by the user taken by the mobile terminal 1202 before uploading the image to the user's social media site. The user can receive various services relating to coffee, such as those described above, by clicking or otherwise activating the application downloaded from the server 1201.

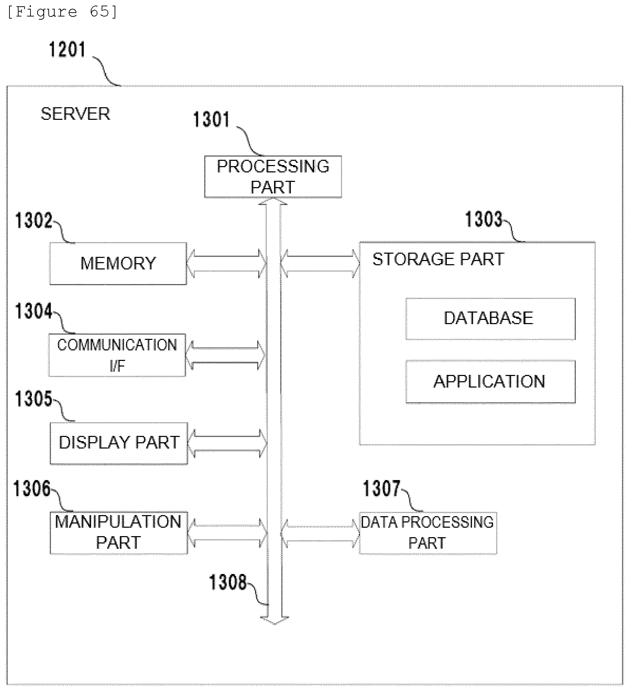

Figure 65 shows a configuration of the server 1201. A processing part 1301 includes a CPU, for example, and controls the server 1201 in a centralized manner. In this aspect, the operation of the server 1201 is achieved by the processing part 1301 loading a program stored in a storage part 1303 to a memory 1302 and executing the program. The memory 1302 is also used as a working memory for the CPU of the processing part 1301. The storage part 1303 stores a basic control program, data and a parameter that allow the server 1201 to operate. Various databases 1309 are built in the storage part 1303. For example, the databases are built based on review information or comment information transmitted from the mobile terminal 1202 of each user or information on a custom recipe. The storage part 1303 also stores various applications 1310, such as an application that can provide any of the services described above. The user can access the server 1201 via the mobile terminal 1202 to download an application to the mobile terminal 1202.

A communication interface (I/F) 1304 is configured to the medium of the network 1205, such as whether the medium is wired or wireless. A display part 1305 is a display, for example, and displays a user interface screen to an administrator who builds the databases 1309, for example. A manipulation part 1306 is a keyboard or a mouse, for example, and can receive a manipulation of the administrator.

A data processing part 1307 includes a GPU, for example, and executes processing based on big data transmitted from the mobile terminal 1202 of each user. The big data transmitted from the mobile terminal 1202 of each user may be organized as a database 1309, or the processing result in the data processing part 1307 may be organized as a database 1309. The parts shown in Figure 65 can be connected to each other by a bus 1308.

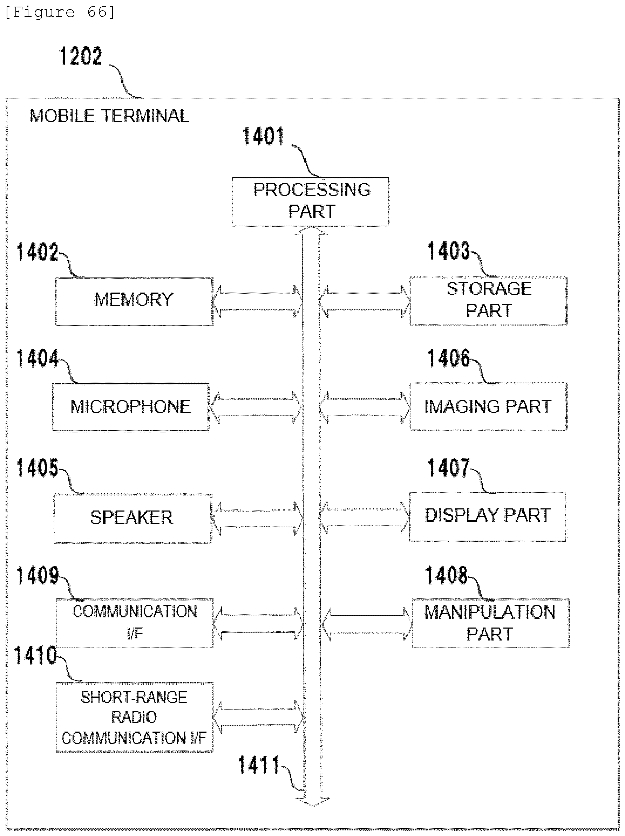

Figure 66 shows a configuration of the mobile terminal 1202. As described above, the mobile terminal 1202 is a smartphone of a user, for example. A processing part 1401 includes a CPU, for example, and controls the mobile terminal 1202 in a centralized manner. In this aspect, the operation of the mobile terminal 1202 is achieved by the processing part 1401 loading a program stored in a storage part 1403 to a memory 1402 and executing the program, for example. The memory 1402 is also used as a working memory for the CPU of the processing part 1401. The storage part 1403 stores a basic control program, data and a parameter that allow the mobile terminal 1202 to operate. The storage part 1403 also stores an application 1310 downloaded from the server 1201.

A microphone 1404 receives a voice of the user, a speaker 1405 outputs a voice of another user or reproduces a message based on predetermined sound data. An imaging part 1406 is a camera and generates image data of a static image or a moving image. A display part 1407 is a touch panel and displays an icon for activating the application 1310 or various user interface screens relating to the application 1310, for example. The display part 1407 can also receive a manipulation from the user via the touch panel. A manipulation part 1408 can receive a manipulation of the user, and is a power button or a volume button, for example.

A communication I/F 1409 is configured to the medium of the network 1205, such as whether the medium is wired or wireless. A short-range radio communication I/F 1410 performs a communication according to a different communication scheme than that of the communication I/F 1409, such as Bluetooth (registered trademark). In this aspect, the mobile terminal 1202 can communicate information on a custom recipe or the like to the information display device 1203 via the short-range radio communication I/F 1410. The parts shown in Figure 66 can be connected to each other by a bus 1411.

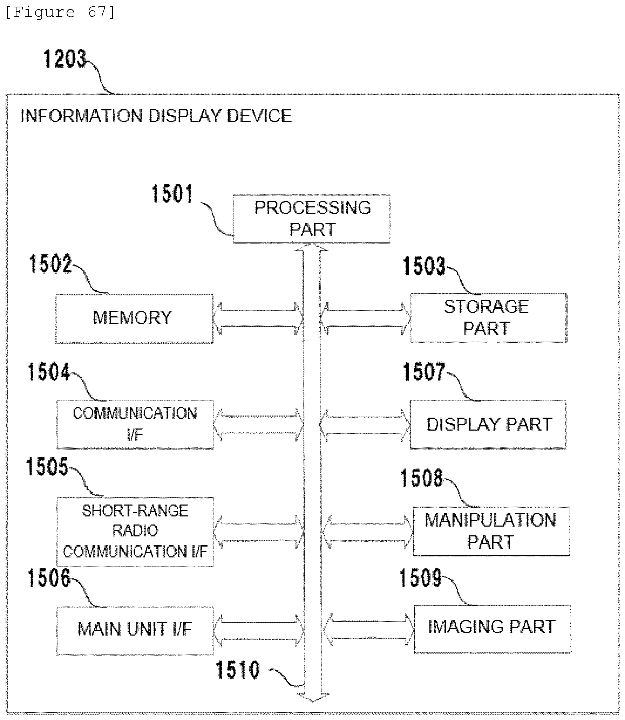

Figure 67 shows a configuration of the information display device 1203. As described above, the information display device 1203 corresponds to the information display device 12. A processing part 1501 includes a CPU, for example, and controls the information display device 1203 in a centralized manner. In this aspect, the operation of the information display device 1203 is achieved by the processing part 1501 loading a program stored in a storage part 1503 to a memory 1502 and executing the program, for example. The memory 1502 is also used as a working memory for the CPU of the processing part 1501. The storage part 1503 stores a basic control program, data and a parameter that allow the information display device 1203 to operate.

A communication I/F 1504 is configured to the medium of the network 1205, such as whether the medium is wired or wireless. A short-range radio communication I/F 1505 performs a communication according to a different communication scheme than that of the communication I/F 1504, such as Bluetooth (registered trademark). In this aspect, the information display device 1203 can receive information on a custom recipe or the like from the mobile terminal 1202 via the short-range radio communication I/F 1505.

A display part 1507 is a touch panel and displays a user interface screen that allows the user to use the beverage production device 1204. A manipulation part 1508 can receive a manipulation from the user and includes a hardware key for entry or the like. When the display part 1507 is a touch panel, the manipulation part 1508 may be implemented as a software key on the touch panel.

An imaging part 1509 is a camera and generates image data of a static image. The imaging part 1509 can take a photograph of beans brought to the shop by the user or of a two-dimensional code displayed on the display part 1407 of the mobile terminal 1202, for example. By taking a photograph of a two-dimensional code displayed on the display part 1407 of the mobile terminal 1202, the information display device 1203 becomes able to communicate with the mobile terminal 1202 according to a communication scheme different from the communication schemes of the communication I/F 1504 and the short-range radio communication I/F 1505. A main unit I/F 1506 is an interface part to the control device 11 and transmits coffee beans choice information or extraction profile information set by the user via the display part 1507 and the manipulation part 1508 to the control device 11, for example. The parts shown in Figure 67 can be connected to each other by a bus 1510.

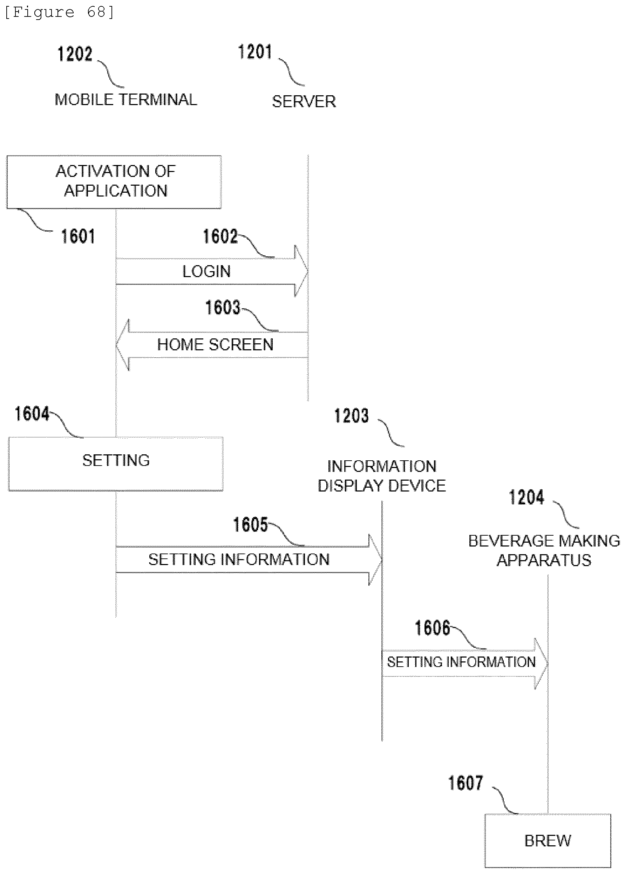

Figure 68 is a diagram for illustrating a flow of a process in which the user uses the mobile terminal 1202 to customize a recipe and uses the beverage production device 1204 to brew coffee in the system 1200.

First, the user clicks an icon displayed on the display part 1407 of the mobile terminal 1202 to activate the application 1310 that has been downloaded from the server 1201 in advance (Step 1601). Once the application 1310 is activated on the mobile terminal 1202, a login screen that allows the user to log in the server 1201 is displayed on the display part 1407 of the mobile terminal 1202. The user inputs an ID and a password obtained in advance on the login screen (Step 1602). Once the server 1201 has authenticated the user, the server 1201 returns a TOP screen of the application 1310 to the mobile terminal 1202.

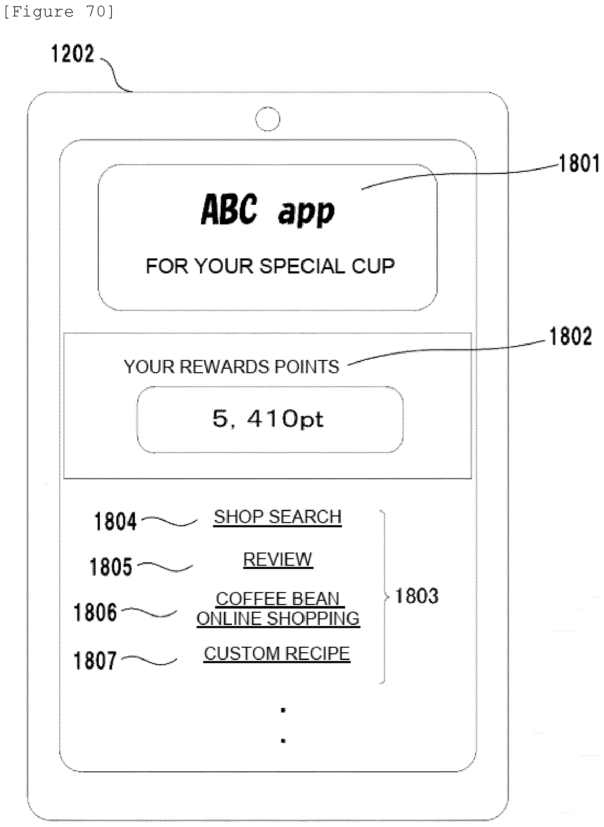

Figure 70 shows an example of the TOP screen of the application 1310 displayed on the display part 1407 of the mobile terminal 1202. In a display area 1801, the name "ABC app" of the application 1310 is displayed. In a display area 1802, the current rewards points of the user are displayed. The user can use the rewards points to purchase coffee beans on an online shop, for example. In a display area 1803, a list of services that can be provided by the application 1310 is displayed. The user can click any of display areas 1804, 1805, 1806 and 1807. Once any of the display areas is clicked, a screen of the corresponding service is displayed.

The display area 1804 shows a shop search service, which allows the user to search for a cafe participating in the rewards points program, for example. The display area 1805 shows a review service, which allows the user to make a comment on or rate a cafe the user has visited, for example. The display area 1806 shows a coffee beans online shopping service, which allows the user to browse an online shop of coffee beans and purchase coffee beans. The display area 1807 shows a custom recipe service, which allows the user to adjust an extraction profile on the mobile terminal 1202.

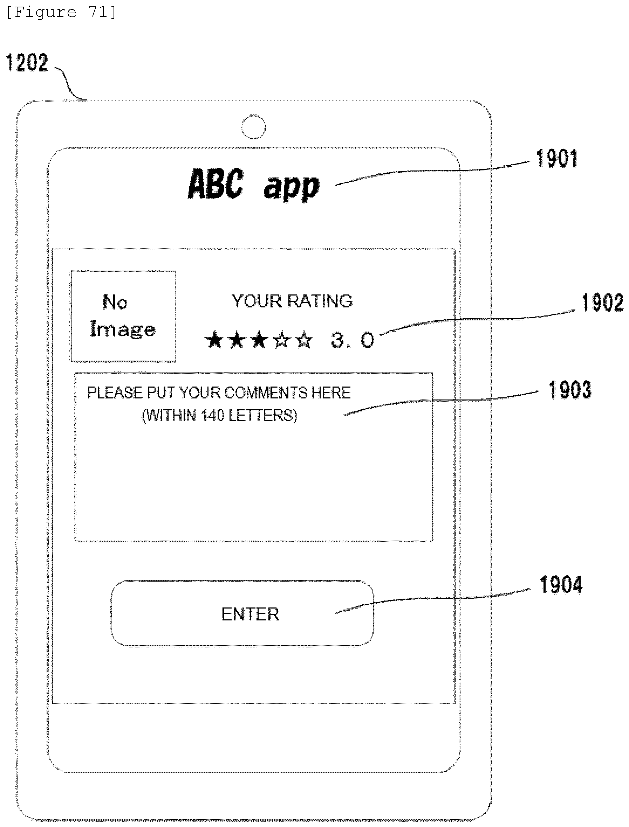

Figure 71 shows an example of a service screen displayed when the user clicks the display area 1805. In a display area 1901, the name "ABC app" of the application 1310 is displayed. In a display area 1902, rating information is displayed, and the user can rate the coffee the user has purchased at the cafe the user visited. In a display area 1903, a comment field is displayed, and the user can make a comment on the cafe the user visited. When an enter button 1904 is pressed, the comment made by the user with this review service is entered. In this aspect, once the enter button 1904 is pressed and the comment is entered, the entered comment is transmitted to the server 1201. In this way, the server 1201 collects review information from the users, and the data processing part 1307 can analyze the review information.

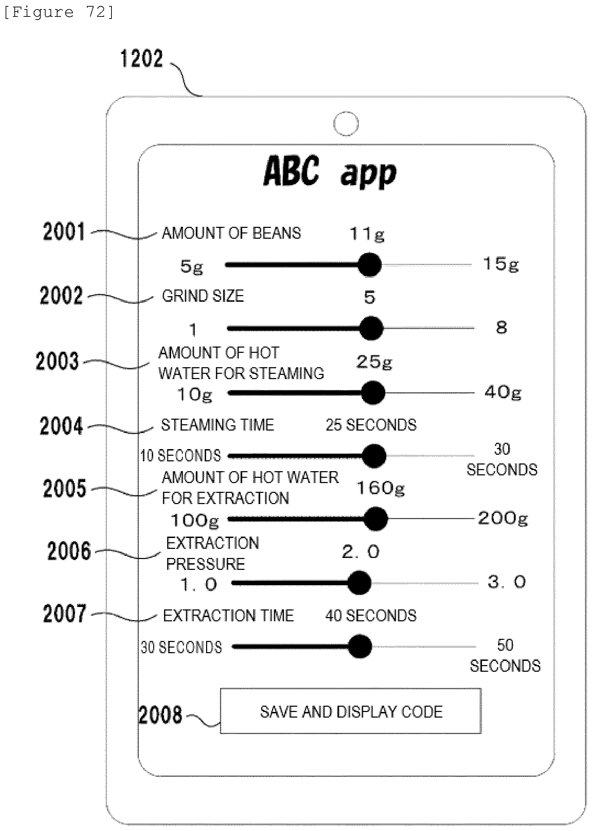

Figure 72 shows an example of a service screen displayed when the user clicks the display area 1807. The screen shown in Figure 72 allows the user to adjust the amount of hot water for extraction or the like on the mobile terminal 1202. The screen in Figure 72 shows basically the same setting items as those displayed on the information display device 1203, and the user can adjust the amount of hot water for extraction or the like to a preferable value on the mobile terminal 1202 before visiting the cafe.

A display area 2001 allows the user to adjust and set the amount of beans as desired. A display area 2002 allows the user to adjust and set the grind size as desired. A display area 2003 allows the user to adjust and set the amount of hot water for steaming as desired. A display area 2004 allows the user to adjust and set the steaming time as desired. A display area 2005 allows the user to adjust and set the amount of hot water for extraction as desired. A display area 2006 allows the user to adjust and set the extraction pressure as desired. A display area 2007 allows the user to adjust and set the extraction time as desired.

A button 2008 is a button to enter the settings in the display areas 2001 to 2007. In the case shown in Figure 72, once the button 2008 is pressed, the settings in the display areas 2001 to 2007 are saved, and a two-dimensional code is displayed. In the cafe, the user can communicate the settings in the display areas 2001 to 2007 to the information display device 1203 by holding the two-dimensional code displayed on the mobile terminal 1202 over the imaging part 1509 of the information display device 1203. The button 2008 may not be a button for displaying a two-dimensional code. For example, the button 2008 may be a button for entering and saving the settings in the display areas 2001 to 2007, and the settings in the display areas 2001 to 2007 may be transmitted to the information display device 1203 via the short-range radio communication I/F 1410.

By adjusting the parameters for brewing of a coffee beverage shown in Figure 72 on the mobile terminal 1202, the user can easily feel as if the user were a barista and brewed coffee. In this aspect, a set of parameters for brewing of a coffee beverage such as those shown in Figure 72 is referred to as an extraction profile or a recipe.

Refer back to Figure 68. Once the mobile terminal 1202 receives the TOP screen from the server 1201 in Step 1603, the user clicks the display area 1807 and adjusts and sets the extraction profile on the screen shown in Figure 72 (Step 1604). After that, as described above, the user visits the cafe and communicates setting information from the mobile terminal 1202 to the information display device 1203 (Step 1605). The setting information here is the settings in the display areas 2001 to 2007 shown in Figure 72, for example. The setting information may be communicated via a two-dimensional code or short-range radio communication.

Once the information display device 1203 has obtained the setting information, the information display device 1203 transmits the setting information to the control device 11 of the beverage production device 1204 via the main unit I/F 1506 (Step 1606). The beverage production device 1204 brews a coffee beverage based on the setting information (Step 1607).

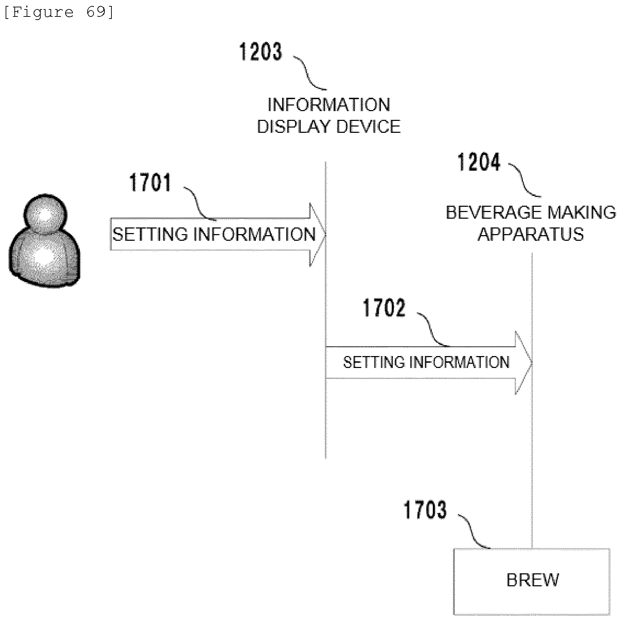

Figure 69 is a diagram for illustrating a flow of a process in which the user customizes a recipe on the information display device 1203 and the beverage production device 1204 brews coffee in the system 1200.

Although Figure 68 shows a situation where the user adjusts the extraction profile on the mobile terminal 1202, Figure 69 shows a situation where the user adjusts the extraction profile on the information display device 1203 in the cafe.

The user adjusts and sets the extraction profile on the user interface screen displayed on the display part 1507 of the information display device 1203 (Step 1701). The user interface screen displays basically the same items as those displayed on the screen shown in Figure 72. Once the information display device 1203 has obtained the setting information, the information display device 1203 transmits the setting information to the control device 11 of the beverage production device 1204 via the main unit I/F 1506 (Step 1702). The beverage production device 1204 brews a coffee beverage based on the setting information (Step 1703) .

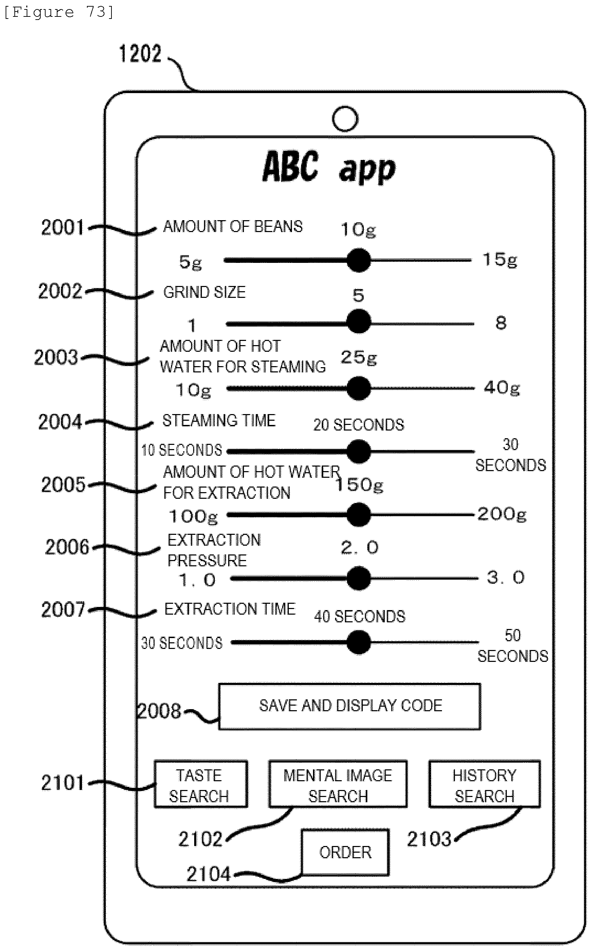

Figure 73 shows an example of a service screen displayed when the user clicks the display area 1807. The screen shown in Figure 73 allows the user to adjust any parameter of the extraction profile, such as amount of hot water for extraction, on the mobile terminal 1202. The screen in Figure 73 shows basically the same setting items as those displayed on the information display device 1203, and the user can adjust the amount of hot water for extraction or the like to a preferable value on the mobile terminal 1202 before visiting the cafe. The display areas 2001 to 2008 are the same as those shown in Figure 72, and therefore descriptions thereof will be omitted.

The service screen shown in Figure 73 includes a "taste search" button 2101, a "mental image search" button 2102, a "history search" button 2103, and an "order" button 2104. The "taste search" button 2101, the "mental image search" button 2102 and the "history search" button 2103 are pressed by the user to start a process of obtaining information (beverage information) concerning the properties, the extraction profile, the ingredients and the price of the beverage from the server 1201.

### <First Aspect>

In this aspect, a process performed by the mobile terminal 1202 when the user presses the "taste search" button 2101 will be described.

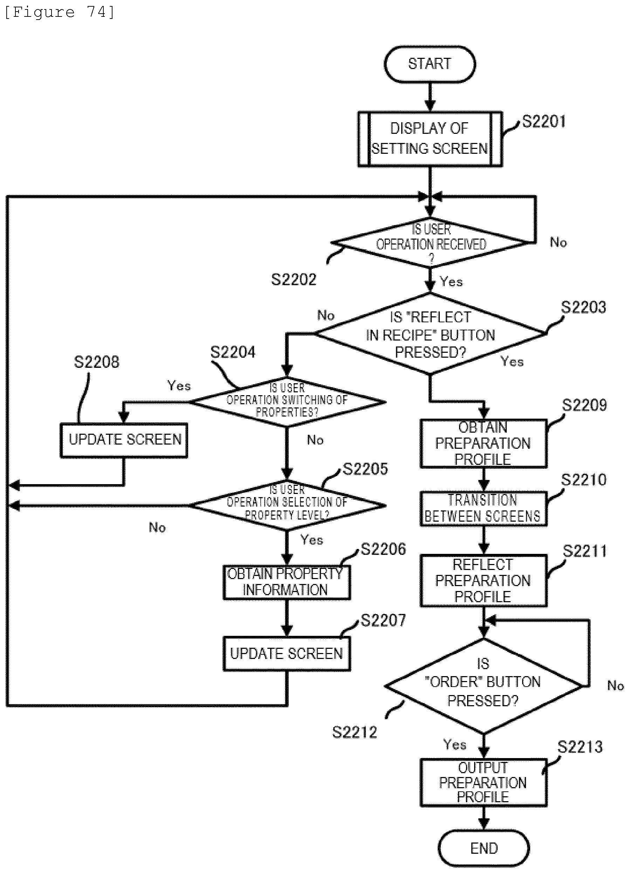

Figure 74 is a flowchart showing a process performed by the mobile terminal 1202. The process shown in Figure 74 is achieved by the processing part 1401 loading a program (application) stored in the storage part 1403 to the memory 1402 and executing the program.

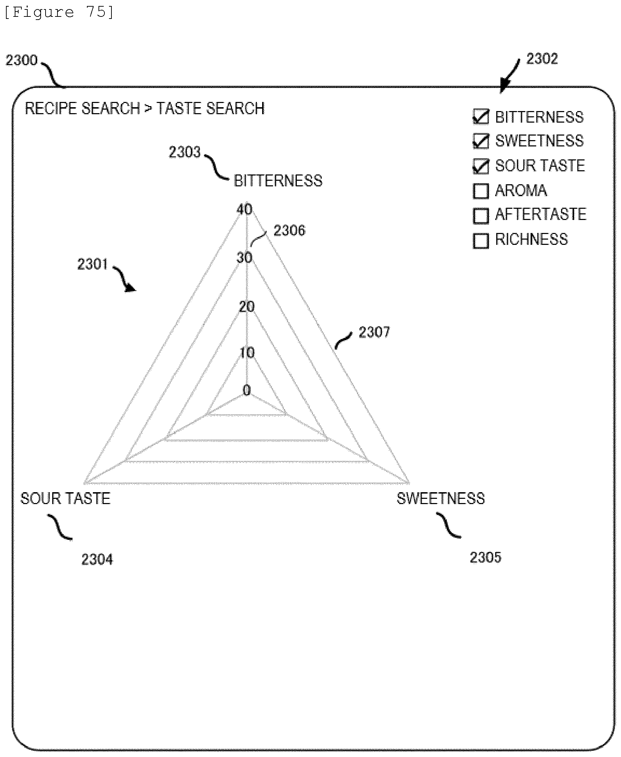

First, in Step S2201, the processing part 1401 controls the display part 1407 to display a setting screen for obtaining beverage information. The setting screen will be described in detail later with reference to Figure 75. Having displayed a setting screen 2300 shown in Figure 75 in Step S2201, the processing part 1401 proceeds to Step S2202, where the processing part 1401 waits until the processing part 1401 receives a user operation via the display part 1407, the manipulation part 1408 or the microphone 1404. When the processing part 1401 determines that the processing part has received a user operation (if Yes in Step S2202), the processing part 1401 proceeds to Step S2203, where the processing part 1401 determines whether or not the operation received in Step S2202 is a pressing of a "reflect in recipe" button. If the user operation received by the processing part 1401 is not a pressing of the "reflect in recipe" button (if No in Step S2203), the processing part 1401 proceeds to Step S2204, where the processing part 1401 determines whether or not the user operation received by the processing part 1401 is a switching of properties used for obtaining beverage information. If the user operation received by the processing part 1401 is a switching of properties (if Yes in Step S2204), the processing part 1401 proceeds to Step S2208, where the processing part 1401 updates the screen to display the switched property. If the user operation received by the processing part 1401 is not a switching of properties (if No in Step S2204), the processing part 1401 proceeds to Step S2205, where the processing part 1401 determines whether or not a selection of a property level has occurred. If the user operation received by the processing part 1401 is a selection of a property level (if Yes in Step S2205), the processing part 1401 proceeds to Step S2206, where the processing part 1401 obtains information (property information) concerning the properties from the server 1201 or the storage part 1403 of the mobile terminal 1202. The processing part 1401 then proceeds to Step S2207, where the processing part 1401 updates the screen. A process performed when it is determined in Step S2203 that the "reflect in recipe" button is pressed (if Yes in Step S2203) will be described later.

Next, Figure 75 shows an example of the setting screen displayed in Step S2201. The setting screen 2300 includes a graph area 2301 and a legend area 2302. Note that Figure 75 shows an example of the initial setting screen 2300 in which only axes are displayed in the graph area 2301.

In the example shown in Figure 75, in the legend area 2302, properties ("bitterness", "sweetness", "sour taste", "aroma", "aftertaste" and "richness") of the taste of coffee can be selected, and "bitterness", "sweetness" and "sour taste" are selected. In the following description, parameters used to obtain coffee beverage information will be referred to as "properties" unless otherwise specified. The properties selected to obtain beverage information in the initial display of the setting screen may be stored in a program as default values or may be user-configurable.

In the graph area 2301, "bitterness" 2303, "sour taste" 2304 and "sweetness" 2305 are displayed on axes of a graph (a 3-axis radar chart in this example) corresponding to the properties "bitterness", "sweetness" and "sour taste" selected by the user in the legend area 2302. On each axis, a value (level) can be selected from among a plurality of values. In this aspect, an integer value ranging from 0, the lowest level, to 40, the highest level, can be selected.

Although the description of this aspect will be made on the supposition that the level of each of "bitterness" 2303, "sour taste" 2304 and "sweetness" 2305 can be selected from 0 to 40, at least any of the lowest level and the highest level may differ between different properties. For example, the level of the property "bitterness" 2303 may be selected from 0 to 40, while the level of the property "sour taste" 2304 may be selected from 0 to 20. Furthermore, depending on the property, the level may not be indicated by a numerical value but may be indicated by "present" and "absent" or by "weak", "medium" and "strong". In short, the level of a property can be indicated in any manner as far as the level can assume a plurality of values. The selectable levels of each property may be stored in a program as default values.

Here, it is supposed that, on the setting screen 2300 in Figure 75, a point 2306, which corresponds to a level of the property "bitterness" 2303 of 30, is pressed. In this case, since the operation received in Step S2202 is not a pressing of the "reflect in recipe" button (No in Step S2203), the processing part 1401 proceeds to Step S2204. In Step S2204, it is determined whether or not the operation received in Step S2202 is a switching of properties. The "switching of properties" means changing the selected properties in the legend area 2302 in Figure 75. The operation on the point 2306 is also not a switching of properties (No in Step S2204), and therefore, the processing part 1401 proceeds to Step S2205. In Step S2205, it is determined whether or not the operation received in Step S2202 is a selection of a property level. Since the operation on the point 2306 is a selection of a property level (a level of the property "bitterness" of 30) (Yes in Step S2205), the processing part 1401 proceeds to Step S2206. In Step S2206, the mobile terminal 1202 obtains property information from the database 1309 of the server 1201 based on the property level specified by the user operation.

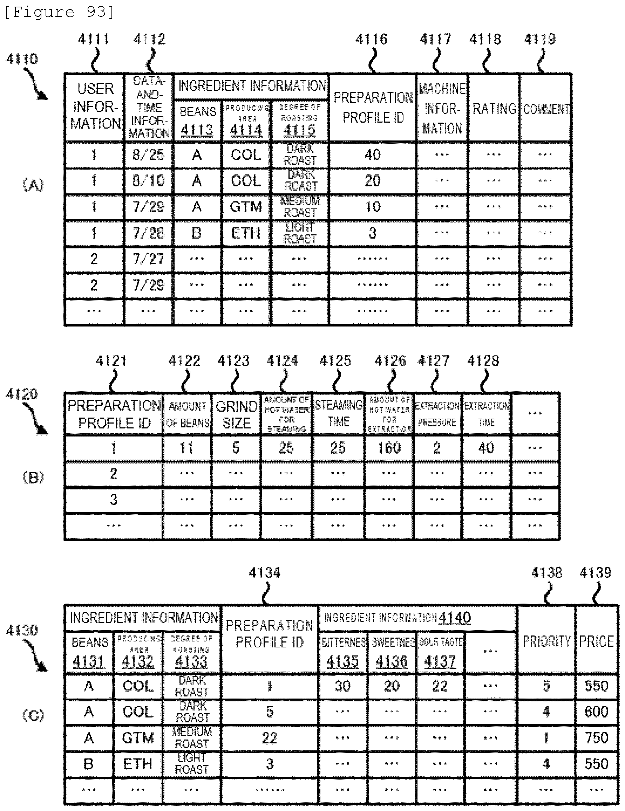

Figure 93 shows an example of data retained in the database 1309. (A) of Figure 93 shows a user information database (DB) 4110 that stores information on a beverage ordered by a user. (B) of Figure 93 shows a preparation profile DB 4120 that stores a preparation profile ID and a parameter of a preparation profile corresponding to the preparation profile ID. (C) of Figure 93 shows a property information DB 4130 that stores property information, and ingredient information and preparation profile ID corresponding to the property information.

The user information DB 4110 stores a user identifier 4111, data-and-time information 4112, bean information 4113, producing area information 4114, roasting degree information 4115, preparation profile ID 4116, machine information 4117, rating information 4118, and comment information 4119. The user identifier 4111 can be any information that allows the server 1201 to identify the user and, in an example, may include a user identifier (ID). In another example, the user identifier 4111 may include at least any of an email address of the user, an identifier of a mobile terminal or the name of the user. The data-and-time information 4112 includes information corresponding to the data and time at which the user ordered a beverage. The bean information 4113, which indicates the type of a bean, the producing area information 4114, which indicates the producing area of a bean, and the roasting degree information 4115, which indicates the roasting degree of beans, are referred to as ingredient information. The preparation profile ID 4116 stores a key used to retrieve data from the preparation profile DB 4120. The machine information 4117 stores an identifier of the machine that has prepared a beverage. The rating information 4118 and the comment information 4119 store a rating value and the comment 4119 on a beverage from the user obtained on the service screen shown in Figure 71.

The preparation profile DB 4120 includes a preparation profile including at least any of preparation profile ID 4121, amount of beans 4122, grind size 4123, amount of hot water for steaming 4124, steaming time 4125, amount of hot water for extraction 4126, extraction pressure 4127, and extraction time 4128. In an example, the preparation profile includes the items displayed in the display areas in Figure 73.

The property information DB 4130 includes bean information 4131, producing area information 4132, roasting degree information 4133, preparation profile ID 4134, bitterness 4135, sweetness 4136, sour taste 4137, priority 4138, and price 4139. The bitterness 4135, the sweetness 4136 and the sour taste 4137 are property information, and the property information in the property information DB 4130 corresponds to the properties "bitterness", "sweetness", "sour taste", "aroma", "aftertaste" and "richness" displayed in the legend area 2302 in Figure 75.

In an example, when a user has ordered a beverage or made a rating or comment on an ordered beverage in the server 1201 via the mobile terminal 1202, the data is added to the user information DB 4110. As a further alternative, an authorized user, such as a staff member or barista of a coffee shop, may add data to the property information DB 4130.

In Step S2206, the processing part 1401 transmits the property level (the level of the property "bitterness" of 30 in the example shown in Figure 75) specified by the user operation to the server 1201 to request for property information. In an example, in Step S2206, the processing part 1401 may obtain property information based on the property level (the level of the property "bitterness" of 30 in the example shown in Figure 75) specified by the user operation. Having received the property level, the server 1201 determines whether or not there is data corresponding to the property level specified by the user operation in the property information database, and searches for a data set including the property level that matches the specified property level. In this aspect, the term "data set" means a row of data stored in the property information DB 4130. In the example in Figure 93, the server 1201 locates the first row of data set (A, COL (Colombia), light roasting, 1, 30, 20, 22, 5, 550) in the property information DB 4130 in Figure 93, which matches the level of "bitterness" of 30, and transmits the data set to the mobile terminal 1202.

In an example, a data set may be determined which indicates a level of the same property as the property specified in the received data that is the closest to the level specified in the received data. That is, a data set may be determined which indicates a different level of the property than the level specified in the data transmitted from the mobile terminal 1202. Having obtained the data set from the server 1201, the mobile terminal 1202 stores the data set in the memory 1402 or storage part 1403 and proceeds to Step S2207.

In this aspect, in Step S2206, the property information obtained by the mobile terminal 1202 from the server 1201 is described as one or more data sets in the property information DB 4130. However, in an example, the mobile terminal 1202 may not obtain some data in a data set, such as priority 4138.

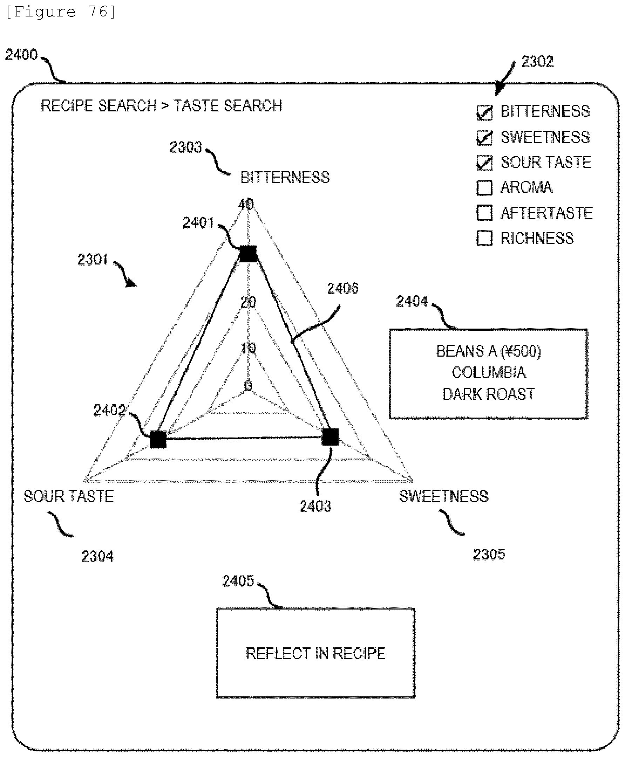

In Step S2207, the mobile terminal 1202 updates the setting screen 2300. Figure 76 shows a setting screen displayed when a data set indicating a piece of property information is obtained from the server 1201 after property levels are selected on the setting screen shown in Figure 75. A setting screen 2400 shown in Figure 76 includes the graph area 2301 and the legend area 2302 as with the setting screen shown in Figure 75. In the graph area 2301, the axes of the selected properties (bitterness, sour taste and sweetness) 2303 to 2305 are displayed, markers 2401 to 2403 indicating the levels of the properties (a level of bitterness of 30, a level of sour taste of 22, and a level of sweetness of 20) of the obtained data set are plotted on the respective axes, and the markers are connected by a line 2406. The setting screen 2400 includes an area 2404 in which ingredient information of the obtained data set is displayed, and displays a "reflect in recipe" button 2405.

In this specification, the "reflect in recipe" button 2405 is described as being displayed in Step S2207 after a predetermined number or less of data sets are obtained in Step S2206. However, in an example, the "reflect in recipe" button 2405 may be always displayed and be made available when a predetermined number or less of data sets are obtained in Step S2206.

The processing part 1401 then returns to Step S2202, and waits until the processing part 1401 receives a user operation.

Next, a setting screen will be described which is displayed when the user changes the level of bitterness from 30 to 22 by dragging the point 2401 plotted at the level of bitterness of 30 in the setting screen 2400. This user operation is also a selection of a property level, so that the processing part 1401 obtains property information again in Step S2206 in Figure 74. The description will be made on the supposition that another data set is obtained in Step S2206. In Step S2207, the processing part 1401 then updates the graph area 2301.

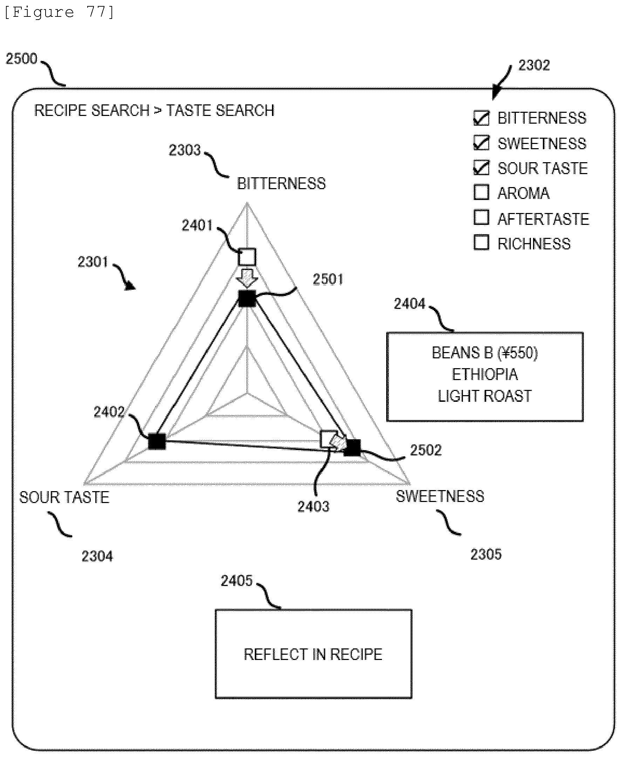

Figure 77 shows a setting screen displayed when the user has changed the level of bitterness from 30 to 22 by dragging the point 2401 plotted at the level of bitterness of 30 in the setting screen 2400. In this example, the point 2401 corresponding to the level of bitterness of 30 of the displayed properties 2406 is modified to the level of bitterness of 22 by the user operation, and the displayed points are updated to points 2501, 2402 and 2502 based on the property information newly obtained based on the level of bitterness of 22. The area 2404 displaying the ingredient information may also be updated based on the newly obtained property information. After that, the control part 1401 returns to Step S2202 again.

Next, a case will be described where the user taps "richness" in the legend area 2302 in the setting screen 2500 to check the level of the property "richness" of the current data set. In this case, the user operation corresponds to a switching of properties (Yes in Step S2204). Therefore, the processing part 1401 proceeds to Step S2208, where the processing part 1401 updates the screen.

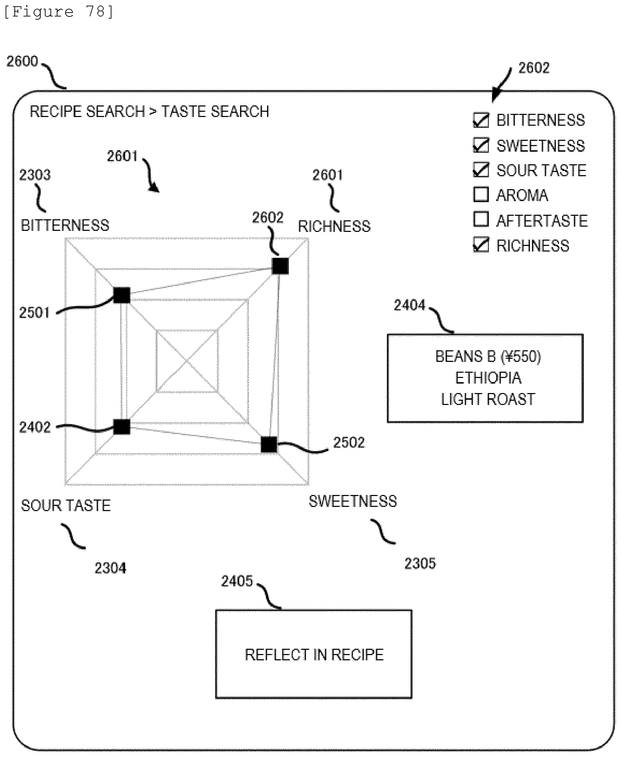

Figure 78 shows an example of a screen displayed when the user changes the properties to be used for searching for a recipe in the setting screen 2500. In this example, in a graph area 2601 of a setting screen 2600 shown in Figure 78, richness 2601 as well as bitterness 2303, sour taste 2304 and sweetness 2305 are shown by a 4-axis radar chart. As can be seen from the above examples, the levels of the properties selected by the user are indicated by a radar chart having a number of axes corresponding to the number of the selected properties. The processing part 1401 obtains the level of the property "richness" from the property information obtained in Step S2206, and plots the level on an axis of richness 2601. The processing part 1401 then returns to Step S2202, where the processing part 1401 waits until the processing part 1401 receives a user operation. Although not described, an operation of hiding a property (or reducing the number of properties) used for obtaining beverage information or an operation of displaying or hiding a plurality of properties at the same time can also be achieved in the same process.

Next, an operation of the processing part 1401 will be described which occurs when the user presses the "reflect in recipe" button 2405 on a setting screen 2600 shown in Figure 78. When the processing part 1401 determines that the processing part 1401 has accepted a user operation (if Yes in Step S2202), the processing part 1401 proceeds to Step S2203, where the processing part 1401 determines whether or not the "reflect in recipe" button has been pressed. In this example, the processing part 1401 determines that the "reflect in recipe" button has been pressed (Yes in Step S2203), and the processing part 1401 proceeds to Step S2209, where the processing part 1401 obtains a preparation profile.

In Step S2209, the processing part 1401 transmits a preparation profile ID included in the obtained property information to the server 1201 via the communication I/F 1409 or short-range radio communication I/F 1410. Having received the preparation profile ID from the mobile terminal 1202, the server 1201 obtains a preparation profile from the preparation profile DB 4120 based on the preparation profile ID, and transmits the preparation profile to the mobile terminal 1202. Having received the preparation profile, the mobile terminal 1202 proceeds to Step S2210, where the mobile terminal 1202 transitions from the setting screen 2600 to the service screen shown in Figure 73.

The processing part 1401 then proceeds to Step S2211, where the processing part 1401 reflects the obtained preparation profile in the parameters in the display areas 2001 to 2007 in the service screen. The processing part 1401 then proceeds to Step S2212, where the processing part 1401 waits until the user presses the order button 2104. Any of the parameters in the display areas 2001 to 2007 in the service screen may be able to be changed before the user presses the order button 2104.

Once the user presses the order button 2104 (if Yes in Step S2212), the processing part 1401 proceeds to Step S2213, where the preparation profile is output. In an example, the mobile terminal 1202 may transmits setting information including the preparation profile to the information display device 1203 via the short-range radio communication I/F or communication I/F 1409 (Step 1605). Alternatively, the mobile terminal 1202 may display a two-dimensional barcode, such as a QR code (registered trademark), in the display part 1407 to transmit the setting information including the preparation profile to the imaging part 1509 of the information display device 1203.

As described above, in this aspect, a level of a property relating to the taste of a beverage can be selected from among a range of levels of the property to obtain beverage information corresponding to the selected level. This allows the user to determine a beverage, a beverage ingredient or a beverage preparation profile that fits the taste of the user.

In this aspect, one or more properties relating to a beverage can be selected, and the ranges of the levels of the properties displayed can be changed according to the selection of the one or more properties. Therefore, the user can obtain beverage information in terms of a property to which the user gives high priority.

In this aspect, as beverage information, at least any of information on an ingredient and information on a preparation profile is obtained. Therefore, the beverage production device can be controlled to prepare a beverage determined based on the level(s) selected by the user.

In this aspect, at least part of the obtained property information is output to the beverage production device. Therefore, the beverage production device can be controlled to prepare a beverage determined by the user in advance.

In this aspect, at least part of beverage information is output by short-range radio communication or in the form of a two-dimensional barcode. Therefore, the beverage production device can be controlled without a direct operation.

Although an example has been described in this aspect where the levels of the properties are represented by a radar chart, the levels of the properties can also be represented in different manners. The levels of the properties can be indicated by any user-friendly means, such as a bar chart. That is, labels of the properties (such as "bitterness", "sweetness", and "sour taste") may be arranged in the row direction, and the level of each property may be represented by the number of coffee bean icons arranged in the corresponding row in the column direction.

### <Second Aspect>

In the first aspect, on the setting screen displayed in Step S2201 in Figure 74, the graph area displays only the axes of properties, and the user may select the level of a property that is not registered with the database of the server. In a second aspect, information on levels of the properties registered with the database of the server is displayed to help the user select a level of a property. Note that descriptions of the same components or processing as those in the first aspect be omitted.

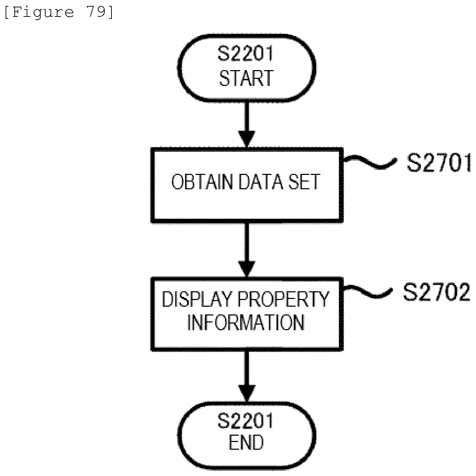

Figure 79 is a flowchart showing a process of Step S2201 according to the second aspect in detail. In Step S2701, the processing part 1401 obtains a data set stored in the property information DB 4130 of the server 1201. The processing part 1401 then proceeds to Step S2702, where the processing part 1401 displays a setting screen including the property information included in the obtained data set. The processing part 1401 then proceeds to Step S2202. The subsequent process is the same as that in the first aspect and therefore will not be further described.

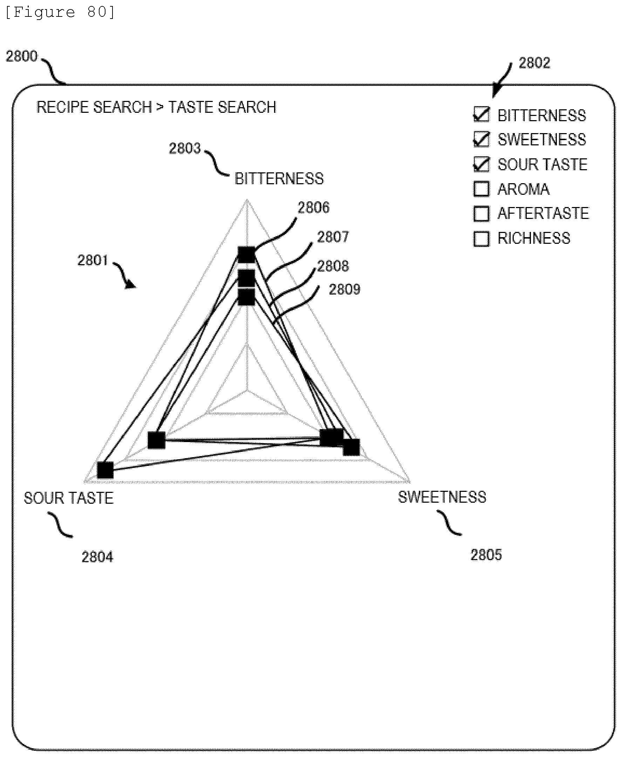

Figure 80 shows an example of a setting screen that is initially displayed in the second aspect. In the description of this example, it is supposed that the property information DB 4130 of the server 1201 stores three data sets.

In a setting screen 2800 shown in Figure 80, a graph area 2801 and a legend area 2802 are displayed. In the graph area 2801, pieces of property information 2807 to 2809 included in the three data sets stored in the property information DB 4130 of the server 1201 are plotted. Since all the data sets stored in the property information DB 4130 are plotted at the beginning, the user can understand what choices are available.

If the user taps a level of 30 (point 2806) on an axis 2803 of bitterness plotted in the graph area 2801, the processing part 1401 determines in the affirmative (Yes) in Step S2202, determines in the negative (No) in Step S2203, determines in the negative (No) in Step S2204, determines in the affirmative (Yes) in Step S2205, and then proceeds to Step S2206. After that, since the data set corresponding to the level of the property "bitterness" of 30 is only the property information 2807, the screen can be updated in Step S2207 to be the same as the screen shown in Figure 76 by hiding the property information 2808 and 2809 of the two data sets other than the relevant data set.

As described above, in this aspect, the levels of the properties registered with the database of the server can be displayed to help the user select a level of a property.

### <Third Aspect>

In the second aspect, all the data sets are displayed in the graph area 2801. However, as the number of the data sets of the property information stored in the property information DB 4130 of the server 1201 increases, the visibility of the graph area 2801 may deteriorate. In a third aspect, the data sets of the property information registered with the database of the server are processed to display a range of selectable levels of a property, thereby helping the user to select a level of the property. Note that descriptions of the same components or processing as those in the first or second aspect will be omitted.

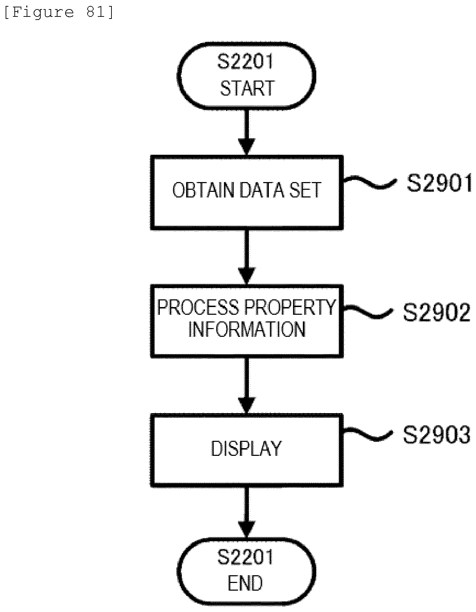

Figure 81 is a flowchart showing a process of Step S2201 according to the third aspect in detail. In Step S2901, the processing part 1401 obtains property information stored in the property information DB 4130 of the server 1201. The processing part 1401 then proceeds to Step S2902, where the processing part 1401 performs a data processing described later on the property information included in the obtained data set. The processing part 1401 then proceeds to Step S2903, where an initial display of a setting screen is provided, and the processing part 1401 then proceeds to Step S2202. The subsequent process is the same as that in the first aspect and therefore will not be further described.

The data processing in Step S2902 is a processing of specifying a range of the level of a property based on a plurality of pieces of property information. In an example, the range of the level of a property may be specified based on the minimum value and the maximum value of the level of the property in a plurality of pieces of property information. Specifically, for each of the properties, the minimum value and the maximum value of the level of the property may be obtained from the property information, and the range between the minimum value and the maximum value may be designated as the "range of selectable levels" of the property.

In another example, the range of selectable levels of a property may be generated based on a statistical numerical value, such as an average value, a median or a variance of the levels of the property in all the property information.

In an example, the processing of Steps S2901 and S2902 may be performed by the processing part 1301 of the server 1201. That is, the mobile terminal 1202 having performed the processing of Step S2201 may request the server 1201 to generate an initial display screen, and the processing part 1301 may determine the range of the level of a property based on the data in the database 1309 and transmit the range to the mobile terminal 1202. The mobile terminal 1202 can then display the received range of the level of the property.

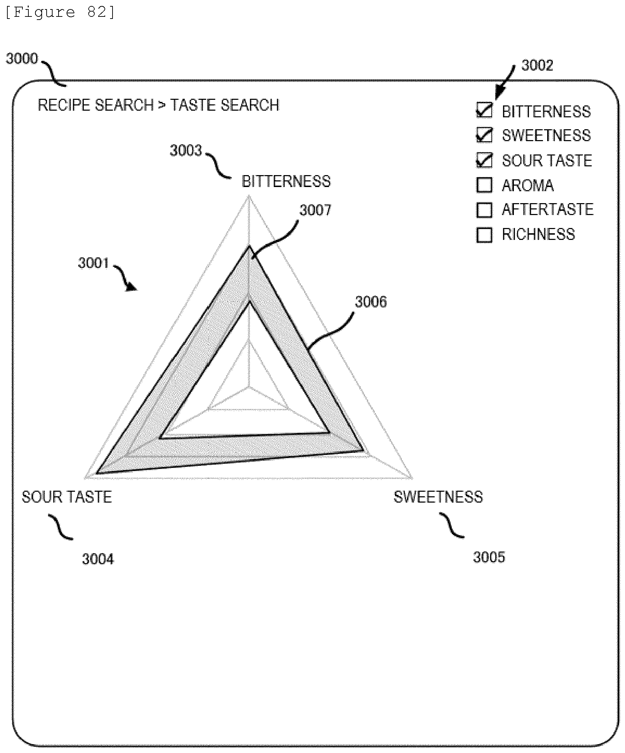

Figure 82 shows an example of a setting screen initially displayed in the third embodiment. In a setting screen 3000 shown in Figure 82, a graph area 3001 and a legend area 3002 are displayed. In the graph area 3001, an axis 3003 of the property "bitterness", an axis 3004 of property "sour taste", an axis 3005 of the property "sweetness", and a selectable range 3006 based on the range of the levels of the properties determined in Step S2902 are displayed. As can be seen, in the example shown in Figure 82, for all the data sets stored in the property information DB 4130, the level of the property "bitterness" falls within a range from 19 to 30, for example. It can also be seen that, for all the data sets, the level of the property "sour taste" falls within a range from 21 to 38.

The range of the levels of the properties generated based on the data sets stored in the property information DB 4130 displayed at the beginning can serve as a guidance for the user to select the level of a property. In addition, even if the number of the data sets of the property information stored in the property information DB 4130 increases, a good visibility of the graph area can be maintained while the user selects the level of a property.

If the user taps a level of 30 (point 3007) on the axis 3003 of bitterness plotted in the graph area 3001, the processing part 1401 determines in the affirmative (Yes) in Step S2202, determines in the negative (No) in Step S2203, determines in the negative (No) in Step S2204, determines in the affirmative (Yes) in Step S2205, and then proceeds to Step S2206. After that, when the data sets corresponding to the level of the property "bitterness" of 30 is narrowed down to one data set, the screen can be updated in Step S2207 to be the same as the screen shown in Figure 76 in which the range of the levels of the properties is hidden.

As described above, in this aspect, a range of selectable levels of a property registered with the database of the server is displayed to help the user select a level of the property. In this way, even if the number of pieces of property information registered with the database increases, a good visibility of the graph area can be maintained while helping the user select a level of a property.

Although Figure 82 shows an example in which the selectable range 3006 based on the determined range of the levels of the properties is represented by a radar chart, the present invention is not limited thereto. For example, a bar chart or the like may be used to indicate to the user that the level of the property "bitterness" falls within a range from 19 to 30. In such a case, labels of the properties (such as "bitterness", "sweetness", and "sour taste") can be arranged in the row direction, and eighteen white coffee bean icons, twelve black coffee bean icons following the white coffee bean icons and a predetermined number of white coffee bean icons following the black coffee bean icons can be arranged in the row of the property "bitterness" in the column direction. The black coffee bean icons can indicate that the level of the property "bitterness" falls within a range from 19 to 30.

### <Fourth Aspect>

In the third aspect, the ranges of the levels of the properties from all the property information stored in the database are collectively displayed in the graph area 2801. In another example, a range of the level of a property may be displayed for each type of beans to help the user to select the level of the property. In a fourth aspect, a mobile terminal will be described which obtains property information registered with the database of the server and processes and display the property information for each type of beans to help the user to select a level of a property. Note that descriptions of the same components or processing as those in the first to third aspect will be omitted.

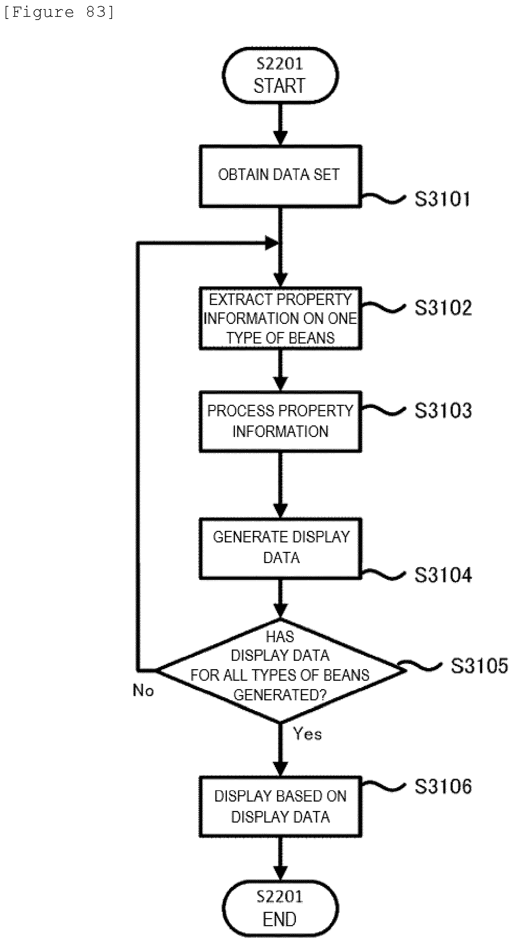

Figure 83 is a flowchart showing a process of Step S2201 performed by a processing part 1401 of a mobile terminal according to the fourth aspect in detail. In Step S3101, the processing part 1401 obtains the data sets stored in the property information DB 4130 of the server 1201. The processing part 1401 then proceeds to Step S3102, where the processing part 1401 extracts property information corresponding to one type of beans from the obtained data sets.

The processing part 1401 then proceeds to Step S3103, where the processing part 1401 processes the property information. The processing part 1401 generates display data in Step S3104, and determines in Step S3105 whether or not display data has been generated for all types of bean included in the obtained data sets. If the processing part 1401 determines that display data has not been generated for all types of bean (if No in Step S3105), the processing part 1401 returns to Step S3102, where the processing part 1401 extracts property information corresponding to another type of beans. If the processing part 1401 determines that display data has been generated for all types of bean (if Yes in Step S3105), the processing part 1401 proceeds to Step S3106, where the processing part 1401 provides an initial display of a setting screen based on all the display data generated. After that, the processing part 1401 proceeds to Step S2202. The subsequent process is the same as that in the first aspect and therefore will not be further described. As with the processing of property information in Step S2902, the processing of property information in Step S3103 may be a processing of specifying a range of the level of a property based on a plurality of pieces of property information.

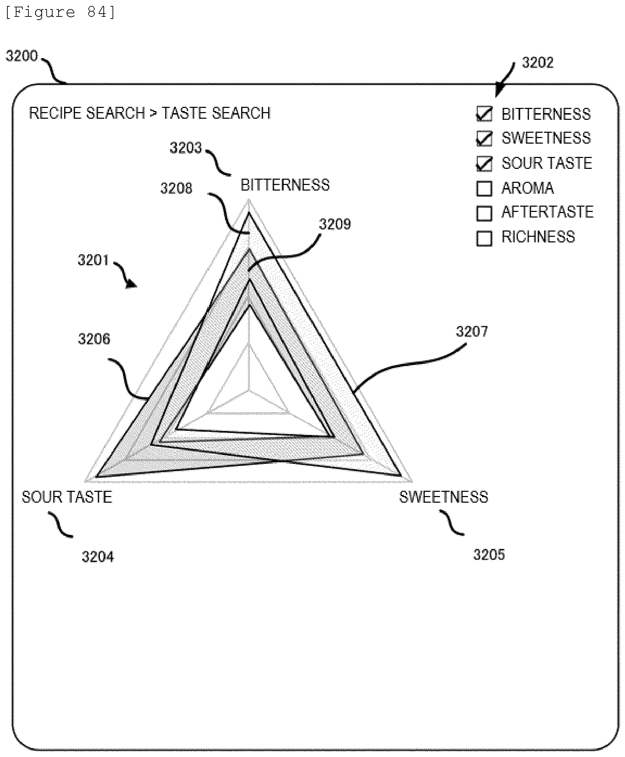

Figure 84 shows an example of the initial display of a setting screen according to the fourth aspect. In the description of the example shown in Figure 84, it is supposed that the property information DB 4130 stores data sets concerning two types of beans (bean A and bean B).

In a setting screen 3200 shown in Figure 84, a graph area 3201 and a legend area 3202 are displayed. In the graph area 3201, axes 3203 to 3205 of properties are displayed, and a range 3206 of the levels of the properties of the type "A" of beans and a range 3207 of the levels of the properties of the type "B" of beans are displayed as the display data generated in Step S3104.

The range of the levels of the properties generated based on the data sets stored in the property information DB 4130 and displayed for each type of beans at the beginning can serve as a guidance for the user to select the level of a property. Since the range of the levels of the properties is displayed for each type of beans, the user can also understand the levels of the properties specific to a particular type of beans.

Next, an operation of the processing part 1401 will be described which occurs when the user taps a point 3208 on the screen shown in Figure 84. The point 3208 is a point indicating a level of the property "bitterness" of 35. The point 3208 does not fall within the range 3206 of the levels of the properties of the bean A but falls within the range 3207 of the levels of the properties of the bean B.

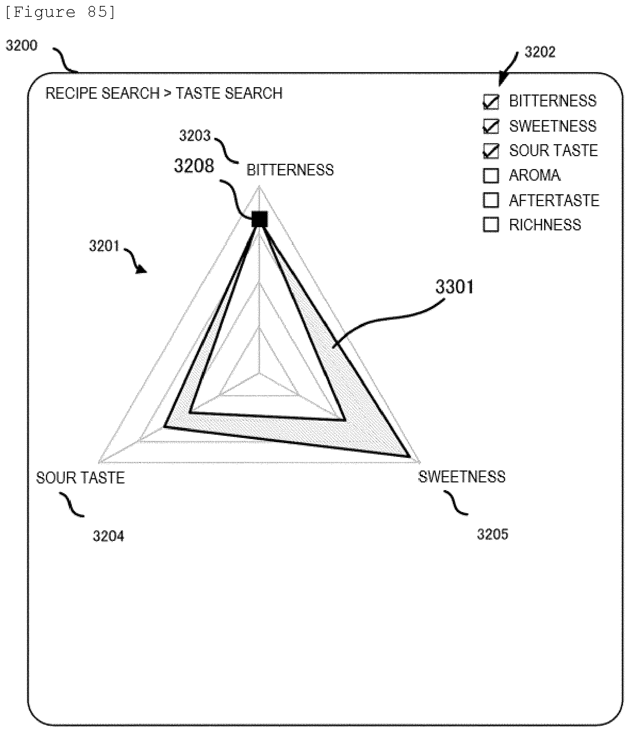

In this case, in an example, the range of the levels of the properties indicated by a data set including the selected level of the property may be displayed. Figure 85 shows an example of a setting screen displayed when the level of the property "bitterness" of 35 is tapped on the screen shown in Figure 84. In the graph area 3201 shown in Figure 85, the same axes 3203 to 3205 of properties as those shown in Figure 84 are displayed, and a range 3301 of the levels of the properties is displayed which is indicated by a data set including the same level of the property as the level at the point 3208. That is, the example shown in Figure 85 is an example where the user has selected the point 3208, and a plurality of data sets can be further selected.

Since the level of the property corresponding to the point 3208 is included in the range 3207 of the levels of the properties of the bean B but is not included in the range 3206 of the levels of the properties of the bean A, the range of the levels of the properties of the bean A is not displayed.

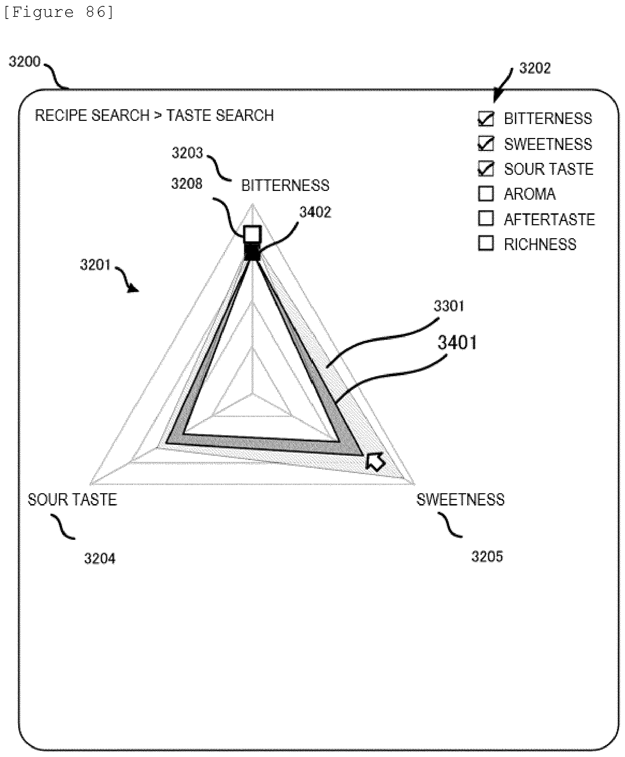

Next, with reference to Figure 86, an operation will be described which occurs when the user has moved the point 3208 by dragging on the screen shown in Figure 85. Figure 86 illustrates an operation that occurs when the level of the selected property "bitterness" is changed from the point 3208, which corresponds to a level of "bitterness" of 35, to a point 3402, which corresponds to a level of "bitterness" of 32. In this case, since the point 3402 falls outside the range 3206 of the levels of the properties of the bean A although the point 3402 falls within the range 3207 of the levels of the properties of the bean B, the range 3206 of the levels of the properties of the bean A is not displayed. If the data set indicating the same level of the property as the level indicated by the newly selected point 3402 has a different range of levels of properties, the range of the levels of the properties is changed from the range 3301 to a range 3401, for example.

Next, a setting screen will be described which is displayed when the user taps a point 3209 on the screen shown in Figure 84. The point 3209 is a point corresponding to a level of the property "bitterness" of 28, and is included in the range 3206 of the levels of the properties of the bean A and the range 3207 of the levels of the properties of the bean B. It is supposed that there are two data sets that indicate the same level of the property as the level at the point 3209.

In this case, the processing part 1401 may display the property information included in the two data sets, as well as ingredient information 3501 and 3502 included in the two data sets and a "reflect in recipe" button 3503. The user can obtain a preparation profile by pressing and selecting any of the ingredient information 3501 and 3502 and then pressing the "reflect in recipe" button 3503 (Yes in Step S2203) (S2209).

Alternatively, the level of the property "sour taste" may be further selected. In that case, a data set may be selected by tapping a point 3504 or a point 3505.

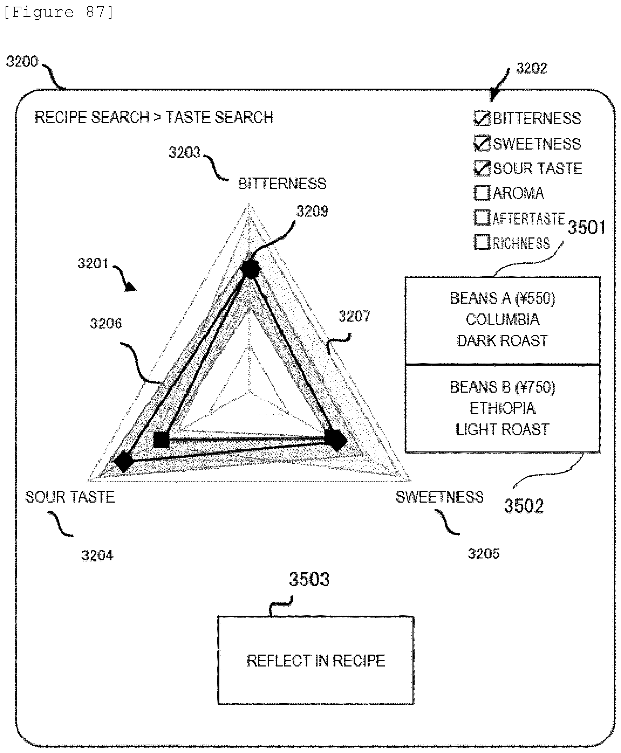

Although the range 3206 of the levels of the properties of the bean A and the range 3207 of the levels of the properties of the bean B are still displayed on the screen shown in Figure 87, the ranges 3206 and 3207 may be hidden when the two data sets including the same level of the property as the level at the point 3209 are displayed.

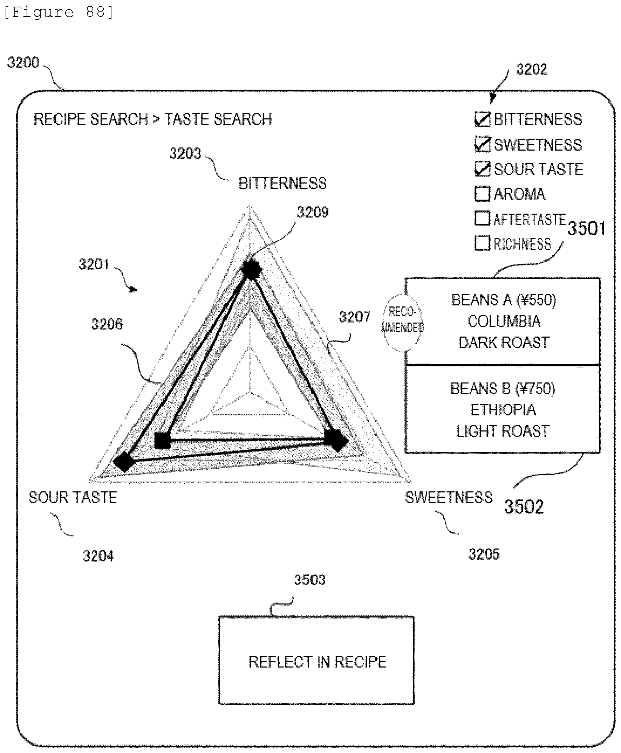

In an example, when the processing part 1401 displays a plurality of pieces of ingredient information, the processing part 1401 may recommend any beverage information based on the information included in the data sets. With reference to Figure 88, an operation of the processing part 1401 will be described which occurs when the user taps the point 3209 on the screen shown in Figure 84.

When displaying ingredient information 3501 and 3502, the processing part 1401 displays a recommendable ingredient based on at least any of priority information 4138 and price information 4139 included in the data sets. In an example, the ingredient in property information DB 4130 may store information on a stock of beans, and the processing part 1401 may display a recommendable ingredient based on the information on a stock of beans.

As described above, in this aspect, a range of the levels of the properties registered with the database of the server can be displayed for each type of beans to help the user select a level of a property.

In an example, a range of the levels of the properties may be displayed for each producing area or each roasting degree, rather than for each type of beans.

### <Fifth Aspect>

In the first to fourth aspects, the user selects a flavor to the taste of the user based on the level of any of the properties "bitterness", "sweetness", "sour taste", "aroma", "aftertaste" and "richness". In an example, the property used when the user selects a flavor to the taste of the user can be changed. In a fifth aspect, a process of changing the property used when selecting the beverage information to be obtained based on a mental image of an ideal coffee will be described.

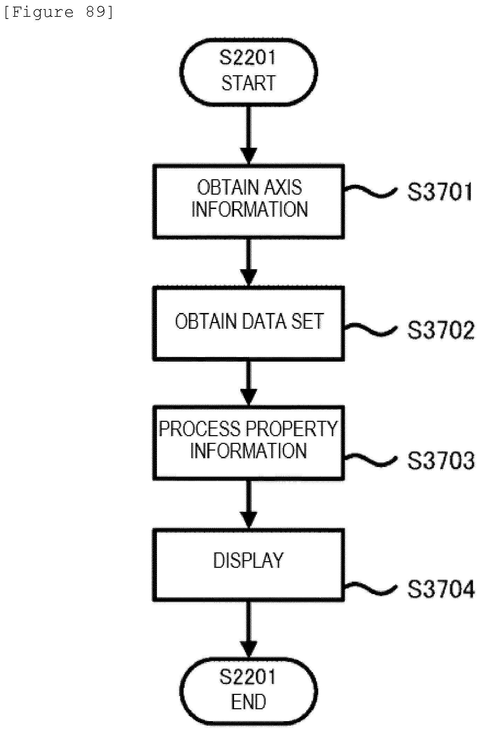

In this aspect, when the "mental image search" button 2102 in Figure 73 is pressed, the processing part 1401 of the mobile terminal 1202 performs the process shown in Figure 74. In Step S2201 in Figure 74, the process shown in Figure 89 is performed.

Figure 89 is a flowchart showing a process of providing an initial display of a setting screen according to the fifth aspect. First, in Step S3701, the processing part 1401 obtains axis information from the server 1201. The "axis information" refers to information concerning a setting item of a property used when obtaining beverage information. For example, the axis information is information concerning the setting items in the column of property information 4140 in the property information DB 4130 shown in Figure 93. The processing part 1401 then proceeds to Step S3702, where the processing part 1401 obtains a data set stored in the property information DB 4130 of the server 1201. The processing part 1401 then proceeds to Step S3702, where the processing part 1401 performs a data processing on the property information included in the obtained data set, and then proceeds to Step S3704, where the processing part 1401 provides an initial display corresponding to the obtained property information.

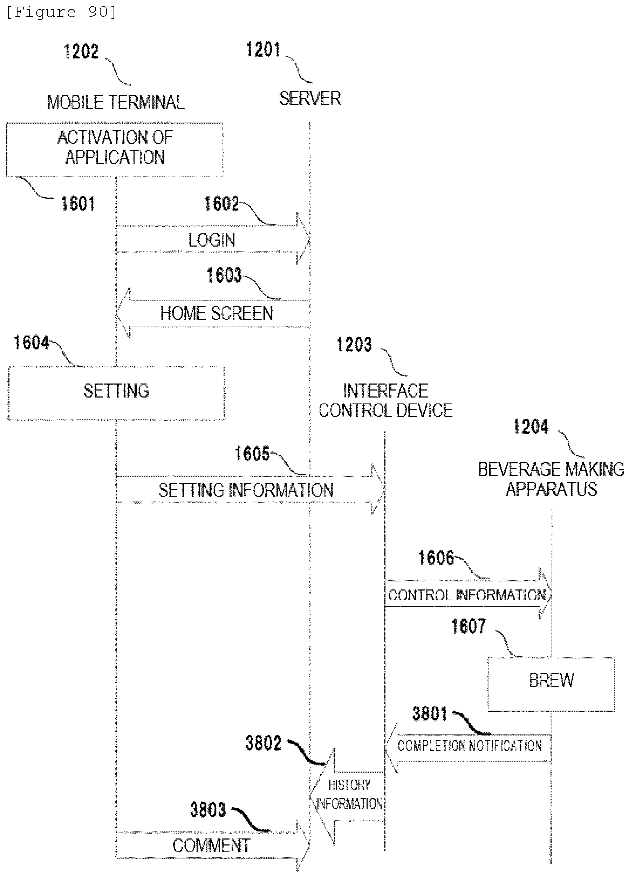

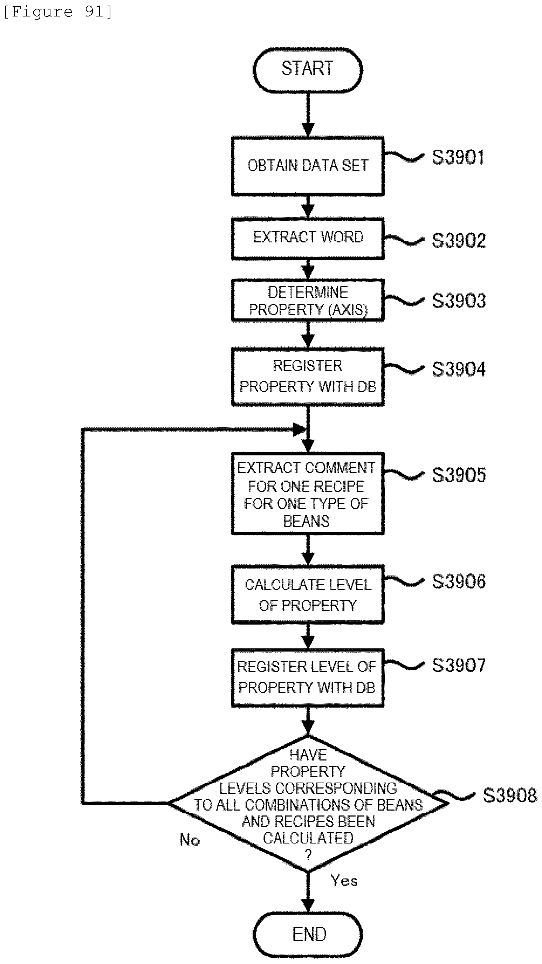

Next, with reference to Figures 90 and 91, an example of a process of changing a setting item of the property information 4140 stored in the property information DB 4130 of the server 1201 will be described. Figure 90 is a diagram for illustrating a flow of a process up to brewing of coffee and obtaining of history information. The process up to Step 1607 of brewing coffee is the same as the process shown in Figure 68 and therefore will not be further described.

Once brewing of coffee is completed, the beverage production device 1204 transmits a completion notification to the information display device 1203 (Step 3801). The information display device 1203 having received the completion notification generates history information based on the setting information received in Step 1605, and transmits the history information to the server 1201 (step 3802). In an example, the history information includes at least any of a preparation profile, a preparation profile ID, information concerning an identifier of the beverage production device 1204, ingredient information, a user identifier, and data-and-time information on the date and time when an order is accepted. The server 1201 having received the history information adds a record to the user information DB 4110 based on the history information. In an example, the record includes user information 4111, data-and-time information 4112, bean information 4113, producing area information 4114, roasting degree information 4115, a preparation profile ID 4116 and machine information 4117 in the user information DB.

In addition, the user who has have the brewed coffee may transmit a comment or rating on the beverage from the mobile terminal 1202 (Step 3803). The comment may be entered on a comment entry screen shown in Figure 71. For example, rating information in the display area 1902 shown in Figure 71 may correspond to a rating 4118 in the user information DB 4110, and comment information in the display area 1903 may correspond to a comment 4119 in the user information DB 4110.

Next, with reference to figure 91, an operation will be described in which the server 1201 having the user information DB 4110 storing the history information on the user extracts a beverage property used when the user selects a beverage. The process shown in Figure 91 is performed by the processing part 1301 of the server 1201 when a predetermined number of pieces of history information are stored in the server 1201, at regular time intervals, or at a timing indicated by a server administrator.

First, in Step S3901, the processing part 1301 obtains a data set in the user information DB 4110 from the database 1309. The processing part 1301 then proceeds to Step S3902, where the processing part 1301 analyzes the comment included in the data set and extracts a word that frequently occurs in the comment. The processing part 1301 then proceeds to Step S3903, where the processing part 1301 determines a property of the beverage to be used when the user searches for a preparation profile for the beverage based on the word that frequently occurs in the comment information. In an example, words such as "bitter" or "sour" that are similar to the terms already registered as properties with the database 1309 may be excluded even if those words frequently occur in the comment information. In an example, a color noun such as "redness" or "whiteness" that can come to mind when having coffee may be extracted to determine a property. In an example, a noun such as "blueberry" or "almond" that can come to mind when having coffee may be extracted to determine a property. That is, the processing part 1301 extracts a word that can make a contribution to a mental image of coffee according to a predetermined rule. The processing part 1301 then proceeds to Step S3904, where the processing part 1301 registers the determined property in the column of the determined property in the property information 4140 in the property information DB 4130.

The processing part 1301 then proceeds to Step S3905, where the processing part 1301 obtains comment information from data sets that are the same in at least any of the bean information 4113, the producing area information 4114, the roasting degree information 4115 and the preparation profile ID 4116. In the description of this aspect, it is supposed that comment information is obtained from data sets that are the same in all of the bean information 4113, the producing area information 4114, the roasting degree information 4115 and the preparation profile ID 4116. Although comment information is described as being obtained for all the users in this aspect, comment information may be obtained for only one user or for some users selected by age or address, for example.

The processing part 1301 then proceeds to Step S3906, where the processing part 1301 calculates the level of the determined property for the group of data sets. In an example, the ratio of the comments including the word denoting the determined property to all the comments of the group may be adopted as the level of the property. Alternatively, the level of the property may be determined based on the number of users who have used the word denoting the determined property in the comments of the group. Alternatively, a natural language processing may be used, and the level of the property may be determined based on a distance between the property and the group in a vector space or a distance between the property and a comment in a vector space.

The processing part 1301 then proceeds to Step S3907, where the processing part 1301 registers the calculated level of the property in a data set that matches the ingredient information and preparation profile ID 4134 of the group in the property information DB 4130. The processing part 1301 then proceeds to Step S3908, where the processing part 1301 determines whether or not the levels of all the properties have been calculated for all the groups of data sets.

When the processing part 1301 determines that the levels of all the properties have been calculated for all the groups (if Yes in Step S3908), the processing part 1301 ends the process shown in Figure 91. If there is a group for which the levels of the properties have not been calculated yet (if No in Step S3908), the processing part 1301 proceeds to Step S3905, where the processing part 1301 calculates the levels of the properties of the group.

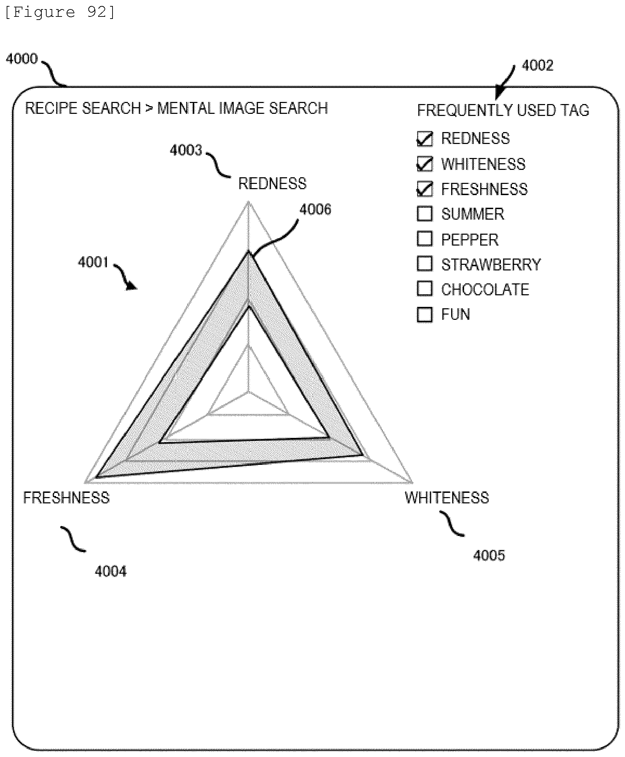

Figure 92 shows an example of a setting screen displayed on the display part 1407 of the mobile terminal 1202 having performed the process shown in Figure 89. In a setting screen 4000 shown in Figure 92, a graph area 4001 and a legend area 4002 are displayed. In the graph area 4001, an axis 4003 of a property "redness", an axis 4004 of a property "freshness", an axis 4005 of a property "whiteness", and a selectable range 4006 based on the range of the levels of the properties determined in Step S3703 are displayed. In this example, the axis information obtained by the processing part 1401 in Step S3701 is displayed in the legend area 4002, and a predetermined number of axes are displayed in the graph area 4001. As can be seen, in the example shown in Figure 92, for all the data sets stored in the property information DB 4130, the level of the property "redness" falls within a range from 19 to 30, for example.

The process after the initial display of the setting screen is the same as the process described in the first aspect and therefore will not be further described.

Although this aspect has been described on the supposition that the properties and the levels of the properties involved with a mental image of an ideal coffee used when obtaining beverage information are determined from comments from users, the properties and the levels of the properties may be determined by a barista or shop staff or by the user, as with the properties relating to the taste such as "bitterness" and "sweetness".

The levels of the properties stored in the property information DB 4130 are displayed at the beginning can serve as a guidance for the user to select the level of a property. In addition, since the properties and the levels of the properties are determined based on the comment information stored in the user information DB 4110, the user's impression of the coffee can be displayed in the form of a numerical value.

### <Sixth Aspect>

In the first to fifth aspects, a flavor to the taste of the user is selected based on characteristics of the coffee, such as the taste of the coffee or a mental image of an ideal coffee. In an example, a guidance for the user to select the level of a property may be displayed based on preference information concerning the coffee ordered by the user. In a fifth aspect, a process of displaying history information on the orders from the user in association with the properties of coffee will be described.

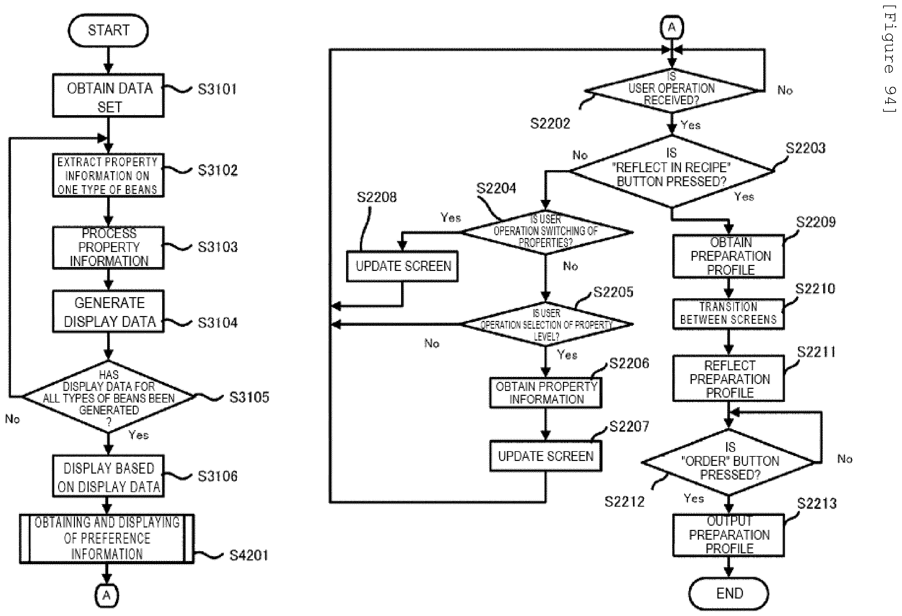

Figure 94 shows an example of a process of searching for a preparation profile based on history information and information on properties of a beverage according to the sixth aspect.

First, in Steps S3101 to S3106, as in the fourth aspect, the processing part 1401 transmits user information to the server 1201, obtains a data set from the property information DB 4130 of the server 1201, and provides a display based on the data set. The processing part 1401 then proceeds to Step S4201, where the processing part 1401 obtains data from the user information DB 4110 of the server 1201. The processing part 1401 then obtains property information corresponding to history information on the coffees having been ordered by the user from the property information DB 4130, based on the ingredient information (bean information, producing area information and roasting degree information) from the user information DB 4110 and the property information DB 4130 and the preparation profile ID. The processing part 1401 then displays the history information in the display part 1409 in such a manner that the history information overlaps on the property information stored in the property information DB 4130.

The processing part 1401 then proceeds to Step S2202. The following process is the same as the process according to any of the first to fifth aspects and therefore will not be further described.

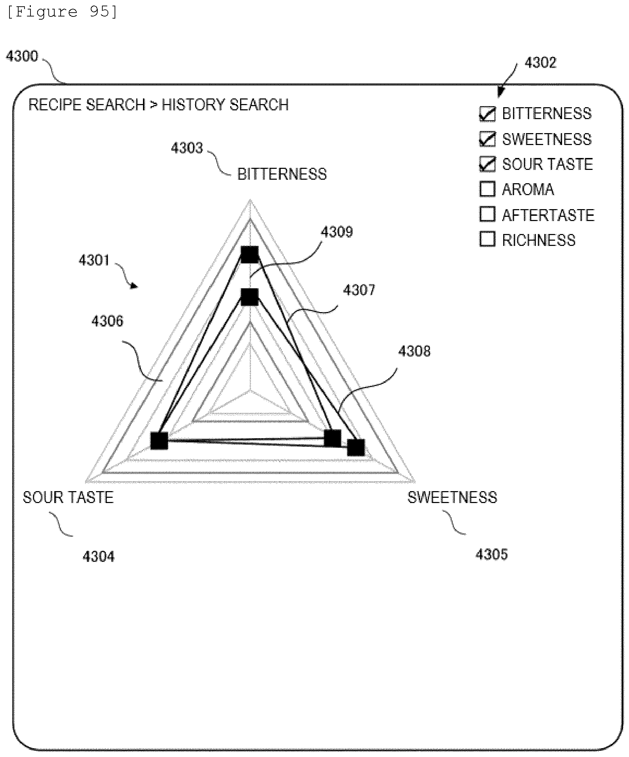

Figure 95 shows an example of a setting screen according to the sixth aspect.

In the setting screen shown in Figure 95, a graph area 4301 and a legend area 4302 are displayed. In the graph area 4301, axes 4303 to 4305 of properties, a range 4306 of the levels of the properties generated in Step S3104, and property information 4307 and 4308 corresponding to two pieces of history information as preference information generated in Step S4201 are displayed.

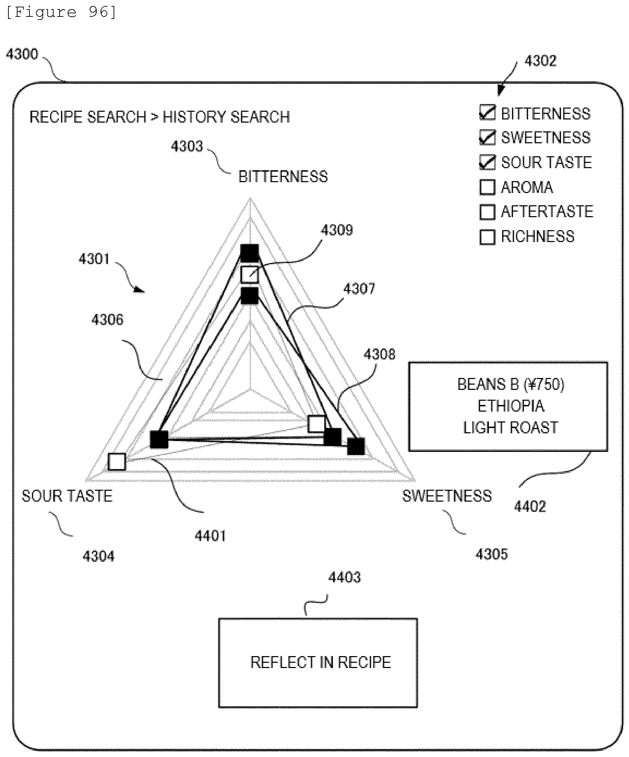

Next, with reference to Figure 96, an operation that occurs when the user taps a point 4309 will be described. In the description of this example, it is supposed that the point 4309 is not included in the property information corresponding to the history information on the user, and the property information DB 4130 stores one piece of property information that includes the level of the property corresponding to the point 4309. When the user taps the point 4309, the processing part 1401 determines the property information corresponding to the level of the property at the point 4309, and displays the property information as property information 4401 on the screen. The processing part 1401 may also display ingredient information 4402 associated with the property information 4401 and a "reflect in recipe" button 4403.

In the example shown in Figure 96, the range 4306 of the levels of the properties in the property information DB 4130 and the preference information 4307 and 4308 are still displayed after the point 4309 is tapped. In an example, however, at least any of the range 4306 and the preference information 4307 and 4308 may be hidden.

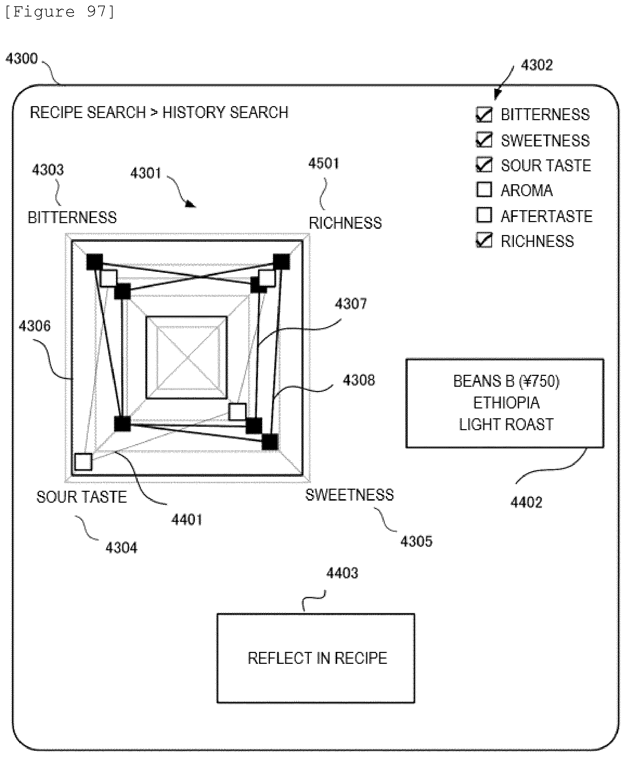

Next, Figure 97 shows a setting screen that is displayed when, in the legend area 4302 on the screen shown in Figure 96, the property "richness" is tapped to change the property displayed. In the graph area 4301 of the setting screen 4300 shown in Figure 97, an axis 4501 of richness is displayed in addition to the axis 4303 of bitterness, the axis 4304 of sour taste and the axis 4305 of sweetness shown in Figure 96. The processing part 1401 obtains the level, or a range of the level, of the property "richness" for the property information 4306, the history information 4307 and 4308 and the tapped property information 4401, and plots the level or range on an axis 2601 of "richness". The following process is the same as the process in the first to fifth aspects and therefore will not be further described.

As described above, in this aspect, the level of a property of a coffee having been ordered by the user can be displayed as preference information. This allows the user to understand the favorite taste of the user from the history of the coffees ordered by the user.

In the sixth aspect, the level of a property of a coffee ordered (purchased) by the user is displayed. In an example, however, preference information may be displayed based on the history of the levels of a property selected by the user. In the latter case, the database 1309 may store the levels of properties transmitted from a terminal to the server 1201 and a user identifier in association with each other. In such a case, the preference information displayed on the terminal does not have to include the levels of a plurality of properties such as those in the history information 4307 shown in Figure 95, but may be displayed as a point indicating the level of only one property. Furthermore, both a history of the levels of properties selected by the user and a history of the levels of the properties of beverages purchased by the user may be displayed with different markers or the like. Alternatively, the preference information may be generated based on the history of the levels of the properties selected by the user and the purchase history. For example, if the level of any property selected by the user matches the level of the property of the beverage purchased by the user, the level of the property may be hidden.

Although a range of the levels of the properties in the property information DB 4130 is displayed along with the preference information on the user in this aspect, the preference information on the user may be displayed alone.

### <Seventh Aspect>

In the sixth aspect, the history information on the user is obtained and displayed. In an example, the mobile terminal 1202 may process and display the history information on the user.

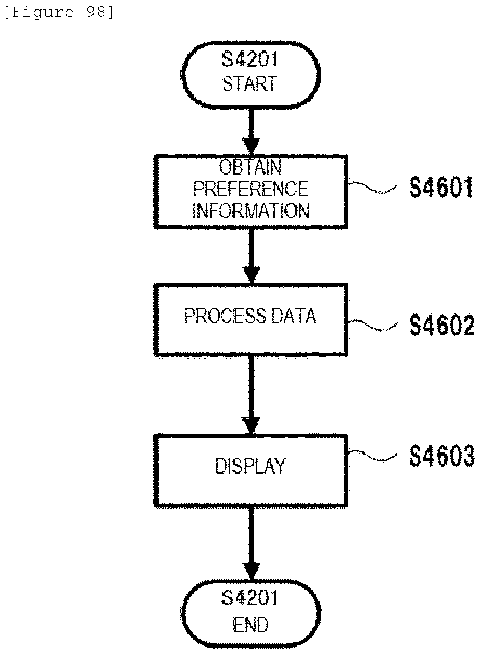

Figure 98 shows an example of a process of obtaining and displaying preference information on a user according to a seventh aspect. In Step S4601, the processing part 1401 obtains user information stored in the user information DB 4110 of the server 1201. In the seventh aspect, as in the sixth aspect, the preference information is the levels of properties of a coffee having been ordered by the user. The processing part 1401 then proceeds to Step S4602, where the processing part 1401 performs a data processing described later on the history information included in the obtained data set. The processing part 1401 then proceeds to Step S4603, where the processing part 1401 provides an initial display of a setting screen. The processing part 1401 then proceeds to Step S2202. The following process is the same as the process according to any of the first to sixth aspects and therefore will not be further described.

The data processing in Step S4602 is a processing of determining the range of the level of a property of a coffee ordered by the user in the past based on a plurality of pieces of property information corresponding to the preference information. In an example, the range of the level of a property may be determined based on the minimum value and the maximum value of the level of the property of a plurality of coffees corresponding to a plurality of pieces of preference information (history information). That is, for each of properties corresponding to all the history information, the minimum value and the maximum value of the level of the property may be obtained, and the range from the minimum value to the maximum value may be designated as the "range of levels of the property corresponding to the history information".

In another example, the range of selectable levels of a property may be generated based on a statistical numerical value, such as an average value, a median or a variance of the levels of the property corresponding to all the history information.

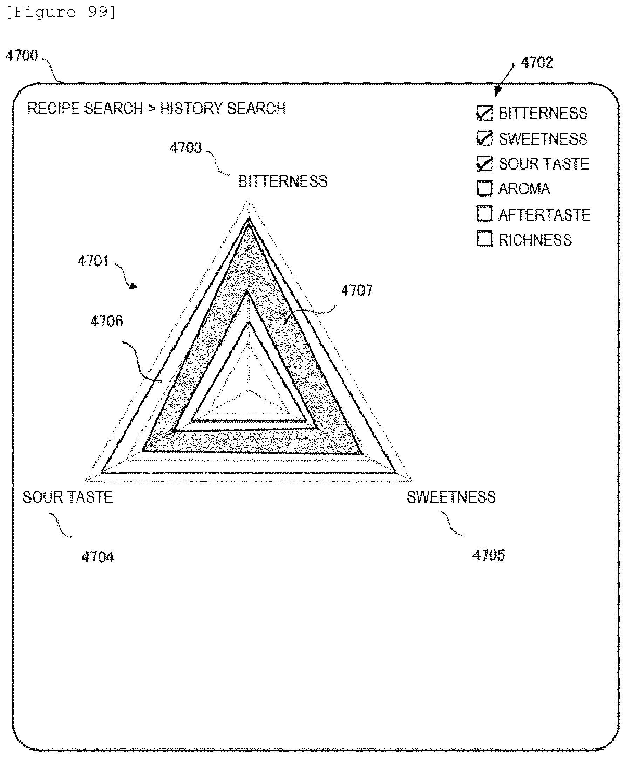

Figure 99 shows an example of an initial display of a setting screen according to the seventh aspect. In a setting screen 4700 shown in Figure 99, a graph area 4701 and a legend area 4702 are displayed. In the graph area 4701, an axis 4703 of the property "bitterness", an axis 4704 of the property "sour taste", an axis 4705 of the property "sweetness", a range 4706 of selectable levels of properties stored in the property information DB 4130 generated in Step S3104, and a range 4707 of the levels of the properties based on the history information are displayed. As can be seen, concerning the range of the levels of the properties based on the history information in the example shown in Figure 99, for example, the level of the property "bitterness" falls within a range from 20 to 35. Similarly, the level of the property of "sour taste" falls within a range from 19 to 28.

The range of the levels of properties based on the user information DB 4110 displayed at the beginning can serve as a guidance for the user to understand the favorite taste of the user. In addition, even if the number of the data sets in the user information DB 4110 increases, a good visibility of the graph area can be maintained while the user selects the level of a property.

### <Eighth Aspect>

In the seventh aspect, a range of the level of a property of a beverage included in the purchase history of a user is displayed. In an example, additional preference information may be used to display the favorite taste of the user to the user in a more understandable manner. In a seventh aspect, a process of displaying preference information based on a rating for a coffee given by the user will be described.

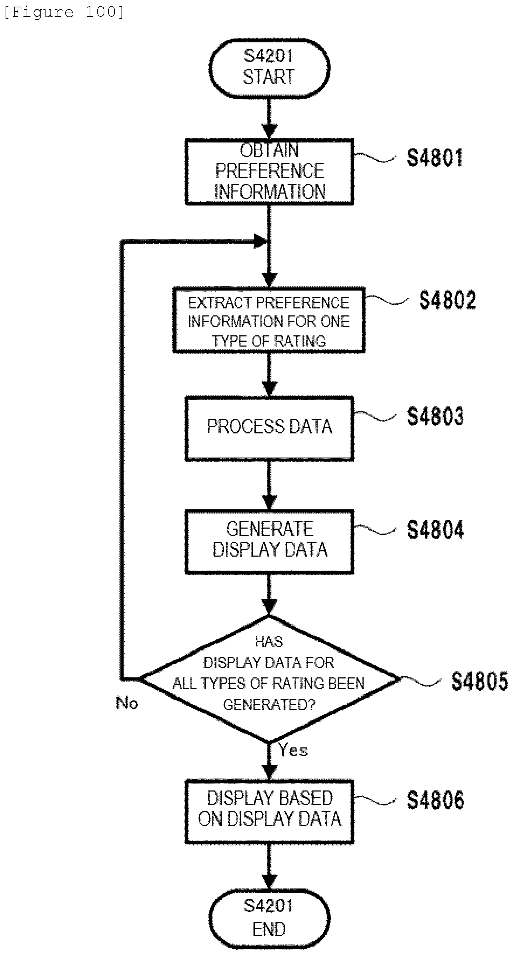

Figure 100 shows an example of a process of obtaining and displaying property information corresponding to preference information according to this aspect. In Step S4801, the processing part 1401 obtains preference information (user information) stored in the user information DB 4110 of the server 1201. The processing part 1401 then proceeds to Step S4802, where the processing part 1401 extracts preference information having the same rating information 4118 from the obtained preference information. The processing part 1401 then proceeds to Step S4803, where the processing part 1401 performs a data processing on the property information corresponding to the preference information having the same rating information 4118. In an example, property information corresponding to the preparation profile ID 4116 for the preference information having the same rating information 4118 may be determined, and the range of the level of a property corresponding to the history information having the same rating may be determined based on the minimum value and the maximum value of the level of the property. Alternatively, the range of selectable levels of a property may be generated based on a statistical numerical value, such as an average value, a median or a variance of the levels of the property corresponding to the history information.

In an example where the rating is indicated by a numerical value ranging from 1 to 5, in Step S4803, user information having a rating equal to or higher than 0 and lower than 2, user information having a rating equal to or higher than 2 and lower than 4, and user information having a rating equal to or higher than 4 may be extracted. That is, user information having different rating information 4118 may be classified into the same group. The history information can be grouped according to a predetermined condition. In this way, the user can give a detailed rating, and the rating can be displayed in a more recognizable manner.

In an example, preference information used for generation of display data may be further selected from the grouped preference information. For example, up to 100 pieces of preference information may be selected in descending order of the data-and-time information 4112. This allows the range of the levels of the properties of the user's favorite coffee to be displayed by taking the change of the user's favorite taste over time into account.

The processing part 1401 then proceeds to Step S4804, where the processing part 1401 generates display data for the range of the levels of the properties corresponding to the preference information. The processing part 1401 then proceeds to Step S4805, where the processing part 1401 determines whether display data has been generated based on the property information corresponding to the preference information for all the types of ratings. If the processing part 1401 determines that display data has not been generated for all the types of ratings (if No in Step S4805), the processing part 1401 returns to Step S4802, where the processing part 1401 extracts property information corresponding to another type of rating. If the processing part 1401 determines that display data has been generated for all the types of ratings (if Yes in Step S4805), the processing part 1401 proceeds to Step S4806, where the processing part 1401 provides an initial display of the setting screen based on all the generated display data. The processing part 1401 then proceeds to Step S4202. The following process is the same as that in the seventh aspect and therefore will not be further described.

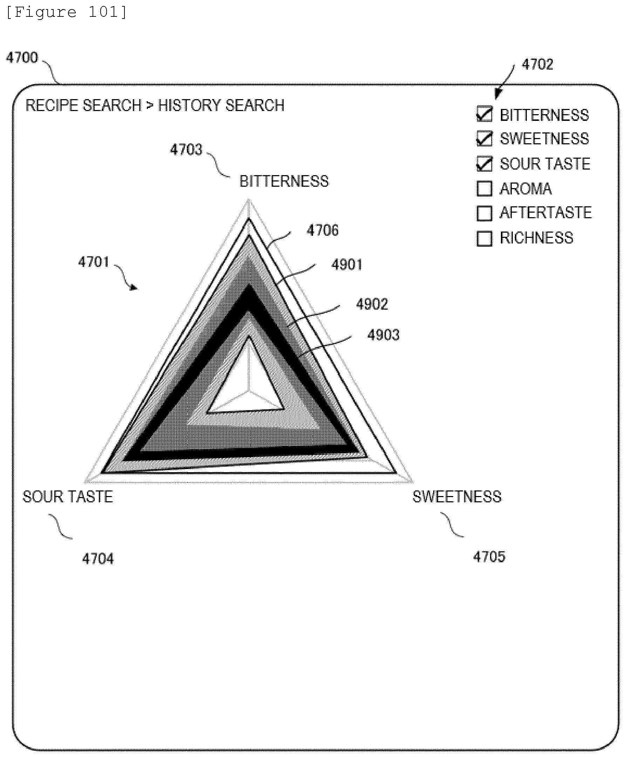

Next, Figure 101 shows an example of an initial display of the setting screen according to the eighth aspect. In the setting screen 4700 shown in Figure 101, the graph area 4701 and the legend area 4702 are displayed. In the graph area 4701, the axis 4703 of the property "bitterness", the axis 4704 of the property "sour taste", the axis 4705 of the property "sweetness", and the range 4706 of selectable levels of properties stored in the property information DB 4130 generated in Step S3104 are displayed. In the graph area 4701, a range 4901 of the levels of the properties based on history information having a rating equal to or higher than 0, a range 4902 of the levels of the properties based on history information having a rating equal to or higher than 2, and a range 4903 of the levels of the properties based on history information having a rating equal to or higher than 4 are also displayed.

The range of the levels of properties corresponding to the preference information on the user displayed at the beginning can serve as a guidance for the user to understand the favorite taste of the user.

### <Ninth Aspect>

In the sixth to eighth aspects, preference information on the user is displayed in the setting screen initially displayed. In an example, the displayed preference information on the user may be changed in the course of selection of the levels of properties by the user. In a ninth aspect, a process of changing the displayed information based on the data-and-time information on the date and time when the user ordered coffee will be described.

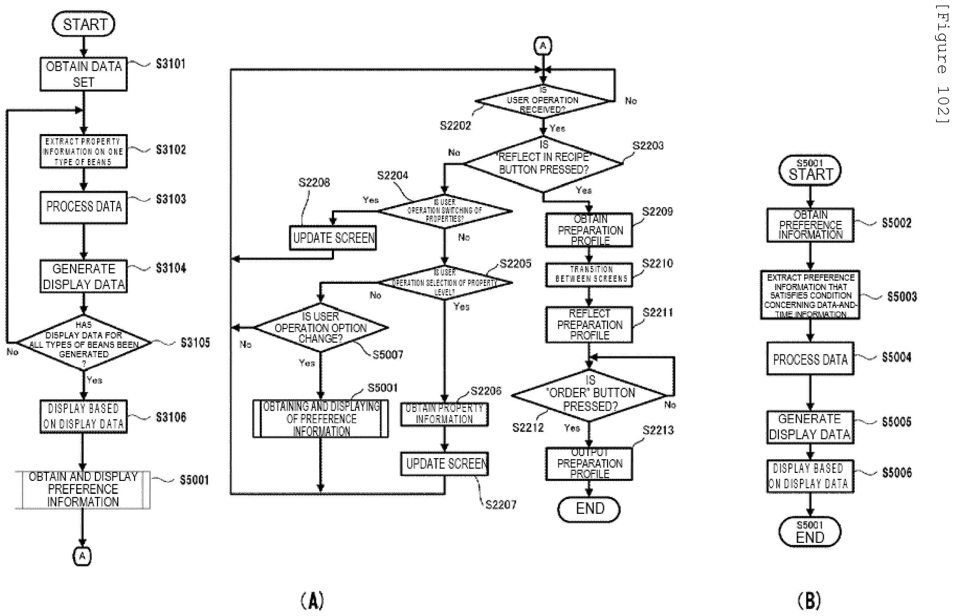

Figure 102 shows an example of a process of displaying a setting screen according to the ninth aspect.

First, in Steps S3101 to S3106 in (A) of Figure 102, as in the fourth aspect, the processing part 1401 transmits user information to the server 1201, obtains a data set from the property information DB 4130 of the server 1201, and provides a display based on the data set. The processing part 1401 then proceeds to Step S5001, where the processing part 1401 performs a process shown in (B) of Figure 102.

First, in Step S5002, the processing part 1401 obtains data from the user information DB 4110 of the server 1201. The processing part 1401 then proceeds to Step S5003, where the processing part 1401 extracts preference information that includes data-and-time information 4112 of the user information that satisfies a predetermined condition, that is, a date and time of purchase of coffee by the user that satisfies a predetermined condition. The processing part 1401 then proceeds to Step S5004, where the processing part 1401 performs a data processing on the history information. In an example, the data processing in Step S5004 may be the same as the data processing described in the seventh aspect. The processing part 1401 then proceeds to Step S5005, where the processing part 1401 generates display data and provides a display based on the display data in Step S5006.

The processing part 1401 then proceeds to Step S2202. The process from Step S2202 is the same except for the option change operation described below and therefore will not be further described.

When a period option change operation is received in Step S2202, the processing part 1401 proceeds to Step S5007, since the operation is not any of a pressing of the "reflect in recipe" button, a switching of axes, and a selection of the level of a property (No in Steps S2203, S2204 and S2205). In S5007, the processing part 1401 determines that the period option change operation is one of option changes (Yes in Step S5007), and proceeds to Step S5001, where the processing part 1401 displays the preference information again.

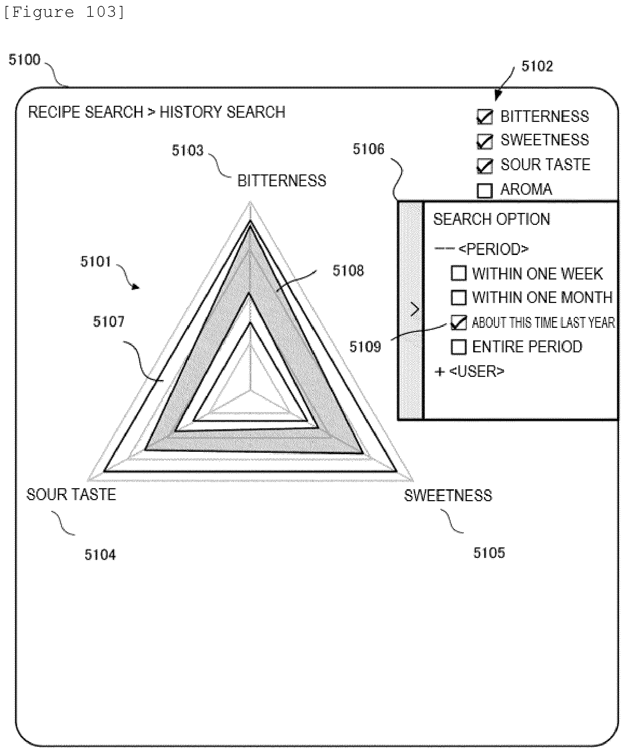

Figure 103 shows an example of an initial display of a setting screen according to the ninth aspect. In a setting screen 5100 shown in Figure 103, a graph area 5101, a legend area 5102 and an option area 5103 are displayed. In the graph area 5101, an axis 5103 of the property "bitterness", an axis 5104 of the property "sour taste", an axis 5105 of the property "sweetness", a range 5107 of the level of the property information stored in the property information DB 4130 generated in Step S3104, and a range 5108 of the levels of the properties corresponding to the preference information are displayed. In the option area 5106, as a condition of the data-and-time information for narrowing down the preference information displayed in the graph area 5101, "within one week", "within one month", "about this time last year" or "entire period" can be selected. When any of the selectable conditions of the data-and-time information is selected in the option area 5106, the processing part 1401 determines that the processing part 1401 has received a period option change operation.

In the example shown in Figure 103, "about this time last year" 5109 is selected, and property information on coffees ordered in the period from thirteen months before the data and time when the user is operating the mobile terminal to eleven months before the date and time is displayed in the range 5108, for example. This allows the user to grasp the coffees the user liked to drink last year. This allows the user to grasp the change of the user's favorite coffee taste over time.

The user can obtain property information by selecting a level of a property in the graph area 5101, for example. The operation that occurs when the user has selected a level of a property has been described in the first to eighth aspects and therefore will not be further described.

### <Tenth Aspect>

In the ninth aspect, a process of changing the preference information displayed based on the data-and-time information has been described. In an example, preference information on one or more users may be displayed. In a tenth aspect, a process of changing the preference information displayed based on the user identifier will be described. Note that descriptions of the same components or processings as those in any of the first to ninth embodiment will be omitted.

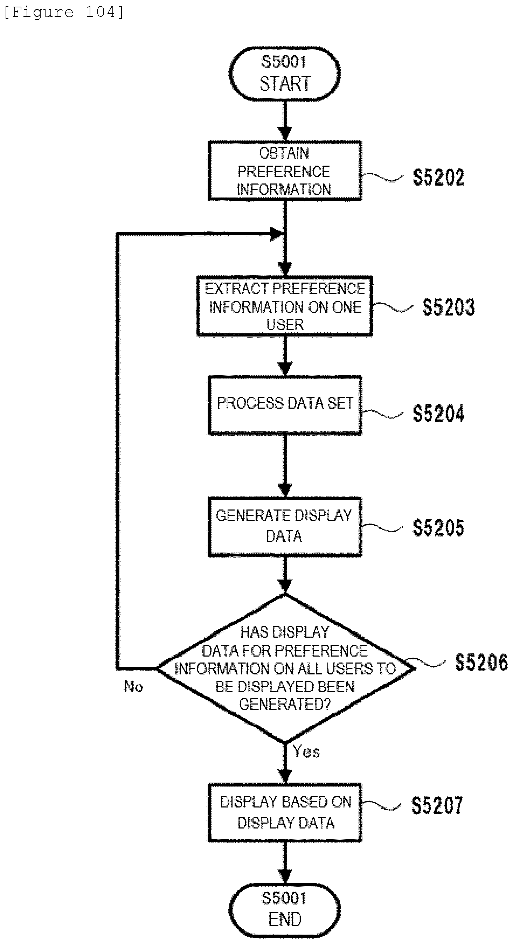

Figure 104 shows an example of a process of displaying preference information according to the tenth aspect. Figure 104 shows the process in Step S5001 in (A) of Figure 102 in detail.

First, in Step S5202, the processing part 1401 obtains preference information from the user information DB 4110 of the server 1201. The processing part 1401 then proceeds to Step S5203, where the processing part 1401 extracts preference information whose user identifier 4111 satisfies a predetermined condition. The processing part 1401 then process to Step S5204, where the processing part 1401 performs a data processing on the property information corresponding to the preference information. In an example, the data processing in Step S5204 may be the same as the data processing described in the ninth aspect. The processing part 1401 then proceeds to Step S5205, where the processing part 1401 generates display data. The processing part 1401 then proceeds to Step S5206, where the processing part 1401 determines whether or not display data has been generated for the preference information on all the users to be displayed. If the processing part 1401 determines that display data has not been generated for the preference information on all the users to be displayed (if No in Step S5206), the processing part 1401 returns to Step S5203, where the processing part 1401 extracts preference information on another user. If the processing part 1401 determines that display data has been generated for the preference information on all the users to be displayed (if Yes in Step S5206), the processing part 1401 proceeds to Step S5207, where the processing part 1401 provides a display based on the display data.

Although the preference information is displayed for each user in this aspect, the preference information may be displayed for each group of users.

As described above in the first aspect, a barista inputs property information to the property information DB 4130. Therefore, the property information DB 4130 may be treated as preference information on the barista as a user. In the latter case, only the data sets including the priority information 4138 that satisfies a predetermined condition, rather than all the data sets, may be treated as the preference information on the barista. In other words, the data sets recommended by the barista may be treated as the preference information on the barista.

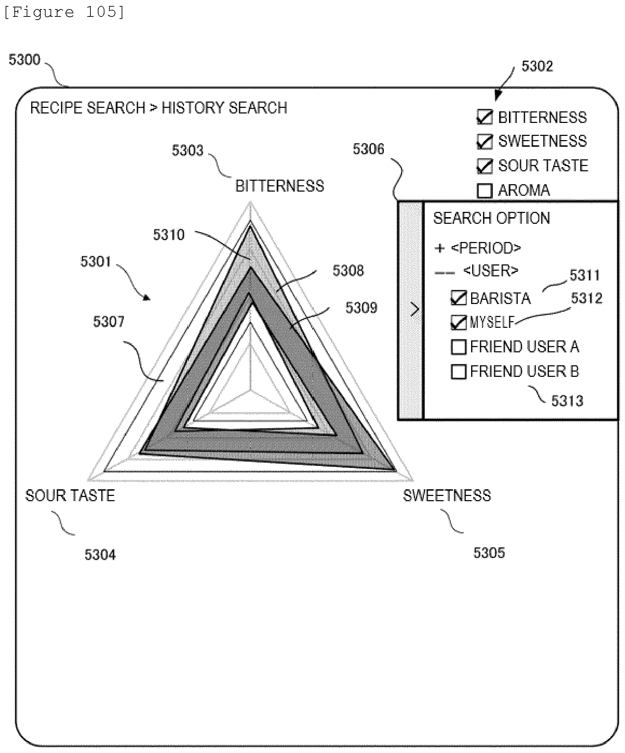

Figure 105 shows an example of an initial display of a setting screen according to the tenth aspect. In a setting screen 5300 shown in Figure 105, a graph area 5301, a legend area 5302 and an option area 5303 are displayed. In the graph area 5301, an axis 5303 of the property "bitterness", an axis 5304 of the property "sour taste", an axis 5305 of the property "sweetness", and a range 5307 of the level of the property information stored in the property information DB 4130 generated in Step S3104 are displayed. In the graph area 5301, a range 5308 of the levels of the properties based on the preference information on the barista and a range 5309 of the levels of the properties based on the preference information on the user are also displayed. In the option area 5306, as a condition of the user identifier for narrowing down the preference information displayed in the graph area 5301, any of barista 5311, myself 5312, friend user A and friend user B can be selected. When the user selected in the option area 5306 is changed, the processing part 1401 determines that the processing part 1401 has received a user option change operation, and performs the process shown in Figure 104 again. A point 5310 is a point that falls within the range 5308 of the levels of the properties corresponding to the preference information on the barista and falls outside the range 5309 of the levels of the properties corresponding to the preference information on the user.

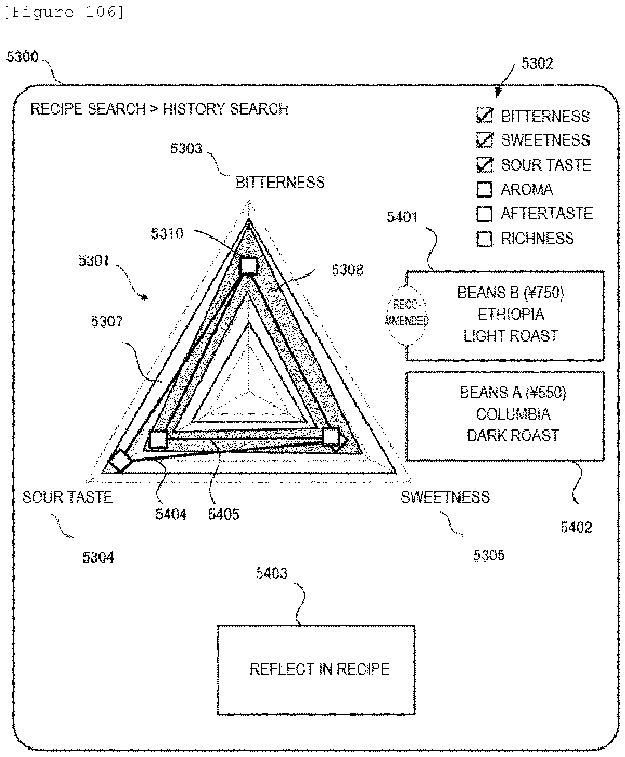

Next, with reference to Figure 106, a screen that is displayed again when the user taps the point 5310 shown in Figure 105 will be described. The same components as those in Figure 105 are denoted by the same reference numerals. In this example, it is supposed that there are two pieces of property information 5404 and 5405 that correspond to the level of the property indicated by the tapped point 5310.

As shown in Figure 106, the property information 5404 and 5405 corresponding to the level of the property at the point 5310 may be displayed in the graph area 5301, and ingredient information 5401 and 5402 corresponding to the property information 5404 and 5405 and a "reflect in recipe" button 5403 may also be displayed.

In this example, the level of the property at the tapped point 5301 falls outside the range 5309 of the levels of the properties corresponding to the preference information on the user, and therefore, the range 5309 may be hidden.

Concerning the property information 5404, the property "sour taste", which is one of the properties 5303 to 5305 displayed in the graph area 5301, falls outside the range 5308 of the levels of the properties corresponding to the preference information on the barista. On the other hand, concerning the property information 5405, all the properties 5303 to 5305 displayed in the graph area 5301 are included in the range 5308 of the levels of the properties corresponding to the preference information on the barista. Therefore, the processing part 1401 may recommend the ingredient information 5401 corresponding to the property information 5405 over the ingredient information 5402 corresponding to the property information 5404. The processing part 1401 may recommend a preparation profile based on not only the preference information on the user but also additional information such as price information.

### <Other Aspects>

The above aspects have been described in the context that a preparation profile to be output to the information display device 1203 is selected. However, the aspect can also be used for other applications. For example, the function of "reflecting in a recipe" may be replaced with a function of purchasing coffee beans online.

The first to tenth aspects can be combined in any combination. For example, the third aspect and the fifth aspect may be combined, and in the setting screen initially displayed, a range of the levels of properties of a mental image of coffee such as "redness" may be displayed in addition to the properties of the taste such as "bitterness" of the data sets stored in the property information DB 4130.

Although the operations have been described as being performed by the user via the mobile terminal, the levels of properties may be selected on the information display device 1203.

In this specification, examples have been shown in which at least any of the selectable ranges of properties and the history information (preference information) is represented by a radar chart. However, the present invention is not necessarily limited thereto. For example, when the level of the property "bitterness" falls within a range from 19 to 30, and the level of the property "bitterness" of a coffee ordered by the user in the past falls within a range from 15 to 20, a bar chart may be used to indicate the ranges of the level of bitterness with bars extending in the row direction labeled "bitterness" and "order history: bitterness", respectively. Alternatively, on a bar labeled "bitterness", a selectable range of the property and order history may be indicated by two different types of lines. Alternatively, any type of graph can be used, such as a bubble chart or a line graph.

The various aspects described above disclose at least the following devices.
1. A device (for example, 1202 and 1203) according to the above aspect includes:
   a display unit configured to display a range (for example, 2303 or 3006) of a level of a property related to a taste of a selectable beverage;
   a reception unit configured to receive selection of the level of the property by a user from the range; and
   an acquisition unit configured to acquire beverage information (for example, 2404, 2406, and a preparation profile) corresponding to the accepted level of the property.

According to this aspect, it is possible to present beverage information based on selection of a level of a property by a user.

2. In the device,
the display unit displays a range of levels of a plurality of properties related to a taste of a beverage,
a reception unit receive selection of the levels of the plurality of properties by a user from the range, and
the acquisition unit acquires beverage information corresponding to the received levels of the plurality of properties.

According to this aspect, it is possible to present beverage information based on selection of levels of a plurality of properties by a user.

3. The device further includes:
a second reception unit configured to receive selection of a property related to a taste of a beverage used for acquiring the beverage information; and
a switching unit configured to switch a display by the display unit in accordance with the selection of the property received by the second reception unit.

According to this aspect, the user can select a property used to acquire beverage information.

4. In the device,
the second reception unit receives selection of a plurality of properties related to a taste of a beverage, and
the switching unit switches a display by the display unit in accordance with the selection of the plurality of properties received by the second reception unit.

According to this aspect, the user can select a plurality of properties used to acquire beverage information.

5. In the device,
the beverage information includes at least one of information on an ingredient for preparing a beverage and information on a preparation profile.

According to this aspect, at least one of information on an ingredient for preparing a beverage and information on a preparation profile can be presented based on the selection of the level of the property by the user.

6. In the device,
the display unit displays a range of a level of a property related to a taste of a selectable beverage associated with an ingredient, and the device further includes
a determination unit configured to determine whether to cause the acquisition unit to acquire beverage information associated with one of a plurality of ingredients in a case where the selection of the level of the property received by the reception unit is included in the range of the levels of the properties associated with the plurality of ingredients.

According to this aspect, also in a case where there are a plurality of pieces of candidate beverage information to be acquired, it is possible to determine which piece of beverage information to acquire.

7. In the device,
the determination unit determines, based on a user operation, whether to cause the acquisition unit to acquire beverage information associated with any one of the plurality of ingredients.

According to this aspect, also in a case where there are a plurality of pieces of candidate beverage information to be acquired, it is possible to determine which piece of beverage information to acquire based on a user operation.

8. In the device,
the determination unit determines, irrespective of a user operation, whether to cause the acquisition unit to acquire beverage information associated with any one of the plurality of ingredients.

According to this aspect, also in a case where there are a plurality of pieces of candidate beverage information to be acquired, it is possible to determine which piece of beverage information to acquire irrespective of a user operation.

9. In the device,
the beverage is a coffee beverage, and the information on the ingredient is a type of coffee beans.

According to this aspect, it is possible to acquire beverage information on a coffee beverage based on selection of a level of a property.

10. In the device,
the preparation profile includes at least any one of an amount of roasted coffee beans, a grind size, an amount of hot water for steaming, steaming time, an amount of hot water for extraction, extraction pressure, and extraction time.

According to this aspect, it may be possible to acquire beverage information including at least any one of an amount of roasted coffee beans, a grind size, an amount of hot water for steaming, steaming time, an amount of hot water for extraction, extraction pressure, and extraction time, based on the selection of the level of the property.

11. In the device,
a property related to a taste of the beverage include any one of bitterness, sour taste, and sweetness.

According to this aspect, it is possible to acquire beverage information based on selection of a level of a property including at least any one of bitterness, sour taste, and sweetness.

12. The device further includes:
an output unit configured to output at least part of the beverage information acquired by the acquisition unit to a beverage production device for producing a beverage.

According to this aspect, the beverage production device can be controlled to produce a desired beverage by outputting at least a part of beverage information acquired based on selection of a level of a property.

13. In the device,
the output unit outputs at least part of the beverage information by short-range radio communication or in a form of a two-dimensional barcode.

According to this aspect, at least part of beverage information can be output to a beverage production device by short-range radio communication or in a form of a two-dimensional barcode without directly operating the beverage production device.

14. In the device,
the display unit indicates a lowest level, a highest level, a selectable lowest level, and a selectable highest level as a level of each property, and
the range of the level of the property is a range from the selectable lowest level to the selectable highest level.

According to this aspect, it is possible to select a level of a property for which there is corresponding beverage information.

15. In the device,
the display unit indicates a recommended lowest level and a recommended highest level as a level of each property.

According to this aspect, a range of recommended levels can be displayed.

16. The device further includes:
a second switching unit configured to switch a display of a range of a level of a property related to a taste of a selectable beverage or a level of a property related to a taste of a selectable beverage displayed by the display unit when the reception unit receives selection of the level of the property by a user from the range.

According to this aspect, in a case where the user selects a level of a property and the level of the property is still selectable, the display can be switched to allow the user to further select the level of the property.

17. A method according to the above aspect includes:
displaying a range of a level of a property related to a taste of a beverage (for example, S2201);
receiving selection of the level of the property by a user from the range (for example, S2205); and
acquiring beverage information corresponding to the received level of the property (for example, S2206).

According to this aspect, it is possible to present beverage information based on selection of a level of a property by a user.

18. A program according to the above aspect cause a computer to function as each unit of the device according to any one of the above 1 to 16.

According to this aspect, it is possible to present beverage information based on selection of a level of a property by a user.

Although only a coffee beverage has been described in the above description, but the present invention can be applied to various beverages, including teas such as Japanese tea and black tea and soups. It is also possible to distinguish between coffee beans before being ground as an extraction raw material and coffee bean powder after being ground (ground coffee beans) as an extraction target, but in a broad sense, both the coffee beans before being ground and the ground coffee beans are subject to the extraction target. In the present specification, an extraction target in a broad sense is simply referred to as an extraction target. Therefore, examples of the extraction target include coffee beans, raw coffee beans, ground coffee beans, roasted coffee beans, ground roasted coffee beans, unroasted coffee beans, ground unroasted coffee beans, coffee bean powder, instant coffee, or coffee beans in a pod, and the like, a coffee beverage and the like has been exemplified as a beverage, and a coffee liquid has been exemplified as a beverage liquid. However, the present invention is not limited to these. The extraction target may be extracted from tea leaves of Japanese tea, black tea, oolong tea or the like, ground tea leaves, vegetables, ground vegetables, fruits, ground fruits, grains, ground grains, mushrooms such as Shiitake mushroom, ground mushrooms such as Shiitake mushroom, dried heated mushrooms such as Shiitake mushroom, ground dried heated mushrooms such as Shiitake mushroom, fishes such as skipjack tuna, ground fishes such as skipjack tuna, dried heated fishes such as skipjack tuna, ground dried heated fishes such as skipjack tuna, seaweeds such as Kombu seaweed, ground seaweeds such as Kombu seaweed, dried heated seaweeds such as Kombu seaweed, ground dried heated seaweeds such as Kombu seaweed, dried heated meat such as beef, pork or chicken, ground dried heated meat, dried heated bones such as beef bones, pork bones or chicken bones, and ground dried heated bones. The beverage may be any beverage, including Japanese tea, black tea, oolong tea, vegetable juice, fruit juice, broth and soup. The beverage liquid may be any extract, including Japanese tea extract, black tea extract, oolong tea extract, vegetable extract, fruit extract, mushroom extract, fish extract, meat extract, and bone extract. In the description of the embodiments, water, purified water, hot water and cleaned water have been mentioned, and any of these words may be replaced with another word. For example, the word "water" may be replaced with the word "hot water", or the word "hot water" may be replaced with the word "water". Furthermore, all of these words may be replaced with a word "liquid", "steam", "high temperature water", "cooled water" or "cold water". For example, a description that the extraction target (such as ground roasted coffee beans) and hot water are put in the extraction container 9 may be replaced with a description that the extraction target (such as ground roasted coffee beans) and cold water (or simply, water) are put in the extraction container 9". In this case, the extraction method and the beverage production device according to the present invention can be considered as an extraction method and a beverage production device for cold brew coffee.

The present invention is not limited to the embodiments and examples described above, and the contents thereof can be combined with each other without departing from the spirit of the present invention, and may be partially changed according to an object or the like. The individual terms described in the present specification are merely used for describing the present invention, and it is needless to say that the present invention is not limited to the strict meaning of the terms, and can include equivalents thereof. For example, expressions such as "device" and "portion" may be rephrased as "unit", "module", or the like.

### Reference Signs List

1 beverage production device
2 bean processing device
3 extraction device
4 reservoir device
5 pulverizing device
6 separation device
7 fluid supply unit
9 extraction container
11 control device
11a processing part
12 information display device

## Claims

1. A coffee beverage production device for producing a coffee beverage by acquiring recipe information used for a part or all of steps of coffee beverage production and referring to parameters included in the recipe information, the coffee beverage production device comprising:
a storage part configured to store comments related to the parameters.

2. The coffee beverage production device according to claim 1, wherein
display ranges of the comments stored in the storage part are set.

3. The coffee beverage production device according to claim 1 or 2, wherein
the recipe information is acquired from the storage part.

4. The coffee beverage production device according to any one of claims 1 to 3, wherein
the recipe information is subject to restrictions in use.

5. The coffee beverage production device according to claim 4, wherein
a coffee beverage is not produced using the recipe information with a restriction that is to prohibit production of a coffee beverage.

6. The coffee beverage production device according to claim 4 or 5, wherein
display of information beyond a range of a restriction on display content among the recipe information with the restriction is restricted.

7. The coffee beverage production device according to any one of claims 4 to 6, wherein
information beyond a range of a restriction on duplication among the recipe information with the restriction is not duplicated.

8. The coffee beverage production device according to any one of claims 4 to 7, wherein
recipe information beyond a range of a restriction on alteration among the recipe information with the restriction is not altered.
